Europäisches Patentamt

(19)    European Patent Office

Office européen des brevets

(11)    **EP 1 445 891 A1**

(12)    **EUROPEAN PATENT APPLICATION**
published in accordance with Art. 158(3) EPC

(43) Date of publication:
  **11.08.2004  Bulletin 2004/33**

(51) Int Cl.⁷: **H04L 9/30**, G09C 1/00

(21) Application number: **01982747.6**

(86) International application number:
  **PCT/JP2001/009781**

(22) Date of filing: **08.11.2001**

(87) International publication number:
  **WO 2002/039664 (16.05.2002 Gazette 2002/20)**

(84) Designated Contracting States:
  **AT BE CH CY DE DK ES FI FR GB GR IE IT LI LU MC NL PT SE TR**

(30) Priority:  **08.11.2000  JP 2000345457**
       **21.12.2000  JP 2000393279**

(71) Applicant: **Hitachi, Ltd.**
  **Chiyoda-ku, Tokyo 101-8010 (JP)**

(72) Inventor: **OKEYA, Katsuyuki,**
  **Software Division, HITACHI, Ltd.**
  **Yokohama-shi, Kanagawa 244-0003 (JP)**

(74) Representative: **Strehl Schübel-Hopf & Partner**
  **Maximilianstrasse 54**
  **80538 München (DE)**

(54)    **ELLIPTIC CURVE SCALAR MULTIPLE CALCULATION METHOD AND DEVICE, AND STORAGE MEDIUM**

(57)    There is provided a method for recovering the complete coordinate of the scalar-multiplied point from partial information of the scalar-multiplied point given in a fast scalar multiplication method. Thereby, during calculation of the scalar-multiplied point in an elliptic curve defined on a finite field with characteristic of 5 or more, first the fast scalar multiplication method is used to give the partial information of the scalar-multiplied point, and the complete coordinate of the scalar-multiplied point is recovered from the result and outputted, so that the complete coordinate can be given at a high speed.

**Description**

TECHNICAL FIELD

The present invention relates to a security technique in a computer network, particularly to a cryptography processing execution method in an elliptic curve cryptosystem.

BACKGROUND ART

An elliptic curve cryptosystem is a type of a public key cryptosystem proposed by N. Koblitz, V.S. Miller. The public key cryptosystem includes information called a public key which may be opened to the public, and private information called a private key which has to be concealed. The public key is used to encrypt a given message or to verify signature, and the private key is used to decrypt the given message or to generate signature. The private key in the elliptic curve cryptosystem is carried by a scalar value. Moreover, security of the elliptic curve cryptosystem originates from difficulty in solving a discrete logarithm problem on an elliptic curve. The discrete logarithm problem on the elliptic curve is a problem of obtaining a scalar value d, when a certain point P on the elliptic curve and a scalar-multiplied point dP are given. Here, the point on the elliptic curve refers to a set of numerals which satisfy a defining equation of the elliptic curve. For all points on the elliptic curve, an operation in which a virtual point called the point at infinity is used as an identity element, that is, addition on the elliptic curve is defined. Moreover, particularly the addition of the same points on the elliptic curve is called doubling on the elliptic curve. The addition of two points on the elliptic curve is calculated as follows. A line drawn through two points intersects the elliptic curve in another point. A point which is symmetric with the intersected point with respect to an x-axis is set as a result of the addition. The doubling of the point on the elliptic curve is carried out as follows. When a tangent line in the point on the elliptic curve is drawn, the tangent line intersects the elliptic curve in another point. A point symmetric with the intersected point with respect to x-coordinate is set as a result of the doubling. A specified number of additions performed with respect to a certain point is referred to as scalar multiplication, a result of the multiplication is referred to as a scalar-multiplied point, and the number is referred to as a scalar value.

With progress of information communication network, a cryptography technique is an indispensable element for concealment or authentication with respect to electronic information. There is a demand for security of the cryptography technology and speed increase. The discrete logarithm problem on the elliptic curve is very difficult, and therefore a key length of the elliptic curve cryptosystem can be set to be relatively short as compared with an RSA cryptosystem in which difficulty of integer factorization is a ground for security. Therefore, a relatively fast cryptography processing is possible. However, in a smart card whose processing ability is limited, a server in which a large amount of cryptography processing needs to be performed, and the like, the speed is not necessarily or satisfactorily high. Therefore, it is necessary to further increase the speed of the cryptography.

An elliptic curve called a Weierstrass-form elliptic curve is usually used in the elliptic curve cryptosystem. In A. Miyaji, T. Ono, H. Cohen, Efficient elliptic curve exponentiation using mixed coordinates, Advances in Cryptology Proceedings of ASIACRYPT'98, LNCS 1514, Springer-Verlag, (1988) pp.51-65, a scalar multiplication method using a window method and the mixed coordinates mainly including Jacobian coordinates in the Weierstrass-form elliptic curve is described as a fast scalar multiplication method. In this calculation method, coordinates of the scalar-multiplied point are not omitted and are exactly indicated. That is, all values of x-coordinate and y-coordinate are given in affine coordinates, and all values of X-coordinate, Y-coordinate, and Z-coordinate are given in projective coordinates or Jacobian coordinates.

On the other hand, it is described in P.L. Montgomery, Speeding the Pollard and Elliptic Curve Methods of Factorization, Math. Comp. 48(1987) pp.243-264 that an operation can be executed at a higher speed using a Montgomery-form elliptic curve $BY^2=X^3+AX^2+X(A, B\in F_p)$ rather than using the Weierstrass-form elliptic curve. This is because with use of the Montgomery-form elliptic curve in the scalar multiplication method for repeatedly calculating a set of points $(2mP, (2m+1)P)$ or a set of points $((2m+1)P, (2m+2)P)$ from a set of points $(mP, (m+1)P)$ on the elliptic curve depending upon the value of a specified bit of the scalar value, a calculation time of addition or doubling is reduced. A calculation speed of the scalar multiplication method is higher than that of a case in which the window method is used and the mixed coordinates mainly including Jacobian coordinates are used in the Weierstrass-form elliptic curve. However, a value of y-coordinate of the point on the elliptic curve is not calculated in this method. This does not matter in many cryptography processings because the y-coordinate is intrinsically unused. However, the value of y-coordinate is also necessary in order to execute some of the cryptography processings or to conform to standards in a complete form.

A case in which characteristics of a defined field of the elliptic curve are primes of 5 or more has been described above. On the other hand, for the elliptic curve defined on a finite field having characteristics of 2, a fast scalar multiplication method for giving a complete coordinate of the scalar-multiplied point is described in J. Lopez, R. Dahab, Fast Multiplication on Elliptic Curves over GF(2$^m$) without Precomputation, Cryptographics Hardware and Embedded Systems: Proceedings of CHES'99, LNCS 1717, Springer-Verlag, (1999) pp. 316-327.

According to the conventional art, when the elliptic curve defined on the finite field with characteristics of 5 or more is used to constitute the elliptic curve cryptosystem, and the window method and mixed coordinates are used in the Weierstrass-form elliptic curve, the coordinate of the scalar-multiplied point can completely be calculated. However, the calculation cannot be performed as fast as the calculation using the scalar multiplication method of the Montgomery-form elliptic curve. With the use of the scalar multiplication method in the Montgomery-form elliptic curve, the calculation can be performed at a higher speed than with use of the window method and mixed coordinates in the Weierstrass-form elliptic curve. However, it is impossible to completely give the coordinate of the scalar-multiplied point, that is, it is impossible to calculate the y-coordinate. Therefore, when an attempt is made to speed the scalar multiplication method, the coordinate of the scalar-multiplied point cannot completely be given. When an attempt is made to completely give the coordinate of the scalar-multiplied point, a fast calculation cannot be achieved.

DISCLOSURE OF INVENTION

An object of the present invention is to provide a scalar multiplication method which can completely give a coordinate of a scalar-multiplied point at a high speed substantially equal to a speed of a scalar multiplication in a Montgomery-form elliptic curve in an elliptic curve defined on a finite field with characteristics of 5 or more. That is, the x-coordinate and y-coordinate can be calculated.

As one means for achieving the object, according to the present invention, there is provided a scalar multiplication method for calculating a scalar-multiplied point from a scalar value and a point on an elliptic curve in the elliptic curve defined on a finite field with characteristics of 5 or more in an elliptic curve cryptosystem, the method comprising: a step of calculating partial information of the scalar-multiplied point; and a step of recovering a complete coordinate from the partial information of the scalar-multiplied point.

Moreover, as one means for achieving the object, there is provided a scalar multiplication method for calculating a scalar-multiplied point from a scalar value and a point on an elliptic curve in the elliptic curve defined on a finite field with characteristics of 5 or more in an elliptic curve cryptosystem, the method comprising: a step of calculating partial information of the scalar-multiplied point; and a step of recovering a complete coordinate in affine coordinates from the partial information of the scalar-multiplied point.

Furthermore, as one means for achieving the object, there is provided a scalar multiplication method for calculating a scalar-multiplied point from a scalar value and a point on an elliptic curve in the elliptic curve defined on a finite field with characteristics of 5 or more in an elliptic curve cryptosystem, the method comprising: a step of calculating partial information of the scalar-multiplied point; and a step of recovering a complete coordinate in projective coordinates from the partial information of the scalar-multiplied point.

Additionally, as one means for achieving the object, there is provided a scalar multiplication method for calculating a scalar-multiplied point from a scalar value and a point on a Montgomery-form elliptic curve in the Montgomery-form elliptic curve defined on a finite field with characteristics of 5 or more in an elliptic curve cryptosystem, the method comprising: a step of calculating partial information of the scalar-multiplied point; and a step of recovering a complete coordinate from the partial information of the scalar-multiplied point.

Moreover, as one means for achieving the object, there is provided a scalar multiplication method for calculating a scalar-multiplied point from a scalar value and a point on a Weierstrass-form elliptic curve in the Weierstrass-form elliptic curve defined on a finite field with characteristics of 5 or more in an elliptic curve cryptosystem, the method comprising: a step of calculating partial information of the scalar-multiplied point; and a step of recovering a complete coordinate from the partial information of the scalar-multiplied point.

Furthermore, as one means for achieving the object, there is provided a scalar multiplication method for calculating a scalar-multiplied point from a scalar value and a point on a Montgomery-form elliptic curve in the Montgomery-form elliptic curve defined on a finite field with characteristics of 5 or more in an elliptic curve cryptosystem, the method comprising: a step of calculating partial information of the scalar-multiplied point; and a step of giving X-coordinate and Z-coordinate of the scalar-multiplied, point given as the partial information of the scalar-multiplied point in projective coordinates and X-coordinate and Z-coordinate of a point obtained by adding the scalar-multiplied point and the point on the Montgomery-form elliptic curve in the projective coordinates, and recovering a complete coordinate in affine coordinates.

Additionally, as one means for achieving the object, there is provided a scalar multiplication method for calculating a scalar-multiplied point from a scalar value and a point on a Montgomery-form elliptic curve in the Montgomery-form elliptic curve defined on a finite field with characteristics of 5 or more in an elliptic curve cryptosystem, the method comprising: a step of calculating partial information of the scalar-multiplied point; and a step of giving X-coordinate and Z-coordinate of the scalar-multiplied point given as the partial information of the scalar-multiplied point in projective coordinates and X-coordinate and Z-coordinate of a point obtained by adding the scalar-multiplied point and the point on the Montgomery-form elliptic curve in the projective coordinates, and recovering a complete coordinate in the projective coordinates.

Moreover, as one means for achieving the object, there is provided a scalar multiplication method for calculating a scalar-multiplied point from a scalar value and a point on a Montgomery-form elliptic curve in the Montgomery-form elliptic curve defined on a finite field with characteristics of 5 or more in an elliptic curve cryptosystem, the method comprising: a step of calculating partial information of the scalar-multiplied point; and a step of giving X-coordinate and Z-coordinate of the scalar-multiplied point given as the partial information of the scalar-multiplied point in projective coordinates, X-coordinate and Z-coordinate of a point obtained by adding the scalar-multiplied point and the point on the Montgomery-form elliptic curve in the projective coordinates, and X-coordinate and Z-coordinate of a point obtained by subtracting the scalar-multiplied point and the point on the Montgomery-form elliptic curve in the projective coordinates, and recovering a complete coordinate in affine coordinates.

Furthermore, as one means for achieving the object, there is provided a scalar multiplication method for calculating a scalar-multiplied point from a scalar value and a point on a Montgomery-form elliptic curve in the Montgomery-form elliptic curve defined on a finite field with characteristics of 5 or more in an elliptic curve cryptosystem, the method comprising: a step of calculating partial information of the scalar-multiplied point; and a step of giving X-coordinate and Z-coordinate of the scalar-multiplied point given as the partial information of the scalar-multiplied point in projective coordinates, X-coordinate and Z-coordinate of a point obtained by adding the scalar-multiplied point and the point on the Montgomery-form elliptic curve in the projective coordinates, and X-coordinate and Z-coordinate of a point obtained by subtracting the scalar-multiplied point and the point on the Montgomery-form elliptic curve in the projective coordinates, and recovering a complete coordinate in the projective coordinates.

Additionally, as one means for achieving the object, there is provided a scalar multiplication method for calculating a scalar-multiplied point from a scalar value and a point on a Montgomery-form elliptic curve in the Montgomery-form elliptic curve defined on a finite field with characteristics of 5 or more in an elliptic curve cryptosystem, the method comprising: a step of calculating partial information of the scalar-multiplied point; and a step of giving x-coordinate of the scalar-multiplied point given as the partial information of the scalar-multiplied point in affine coordinates, x-coordinate of a point obtained by adding the scalar-multiplied point and the point on the Montgomery-form elliptic curve in the affine coordinates, and x-coordinate of a point obtained by subtracting the scalar-multiplied point and the point on the Montgomery-form elliptic curve in the affine coordinates, and recovering a complete coordinate in the affine coordinates.

Moreover, as one means for achieving the object, there is provided a scalar multiplication method for calculating a scalar-multiplied point from a scalar value and a point on a Weierstrass-form elliptic curve in the Weierstrass-form elliptic curve defined on a finite field with characteristics of 5 or more in an elliptic curve cryptosystem, the method comprising: a step of calculating partial information of the scalar-multiplied point; and a step of giving X-coordinate and Z-coordinate of the scalar-multiplied point given as the partial information of the scalar-multiplied point in projective coordinates, X-coordinate and Z-coordinate of a point obtained by adding the scalar-multiplied point and the point on the Weierstrass-form elliptic curve in the projective coordinates, and X-coordinate and Z-coordinate of a point obtained by subtracting the scalar-multiplied point and the point on the Weierstrass-form elliptic curve in the projective coordinates, and recovering a complete coordinate in affine coordinates.

Furthermore, as one means for achieving the object, there is provided a scalar multiplication method for calculating a scalar-multiplied point from a scalar value and a point on a Weierstrass-form elliptic curve in the Weierstrass-form elliptic curve defined on a finite field with characteristics of 5 or more in an elliptic curve cryptosystem, the method, comprising: a step of calculating partial information of the scalar-multiplied point; and a step of giving X-coordinate and Z-coordinate of the scalar-multiplied point given as the partial information of the scalar-multiplied point in projective coordinates, X-coordinate and Z-coordinate of a point obtained by adding the scalar-multiplied point and the point on the Weierstrass-form elliptic curve in the projective coordinates, and X-coordinate and Z-coordinate of a point obtained by subtracting the scalar-multiplied point and the point on the Weierstrass-form elliptic curve in the projective coordinates, and recovering a complete coordinate in the projective coordinates.

Additionally, as one means for achieving the object, there is provided a scalar multiplication method for calculating a scalar-multiplied point from a scalar value and a point on a Weierstrass-form elliptic curve in the Weierstrass-form elliptic curve defined on a finite field with characteristics of 5 or more in an elliptic curve cryptosystem, the method comprising: a step of calculating partial information of the scalar-multiplied point; and a step of giving x-coordinate of the scalar-multiplied point given as the partial information of the scalar-multiplied point in affine coordinates, x-coordinate of a point obtained by adding the scalar-multiplied point and the point on the Weierstrass-form elliptic curve in the affine coordinates, and x-coordinate of a point obtained by subtracting the scalar-multiplied point and the point on the Weierstrass-form elliptic curve in the affine coordinates, and recovering a complete coordinate in the affine coordinates.

Moreover, as one means for achieving the object, there is provided a scalar multiplication method for calculating a scalar-multiplied point from a scalar value and a point on a Weierstrass-form elliptic curve in the Weierstrass-form elliptic curve defined on a finite field with characteristics of 5 or more in an elliptic curve cryptosystem, the method

comprising: a step of transforming the Weierstrass-form elliptic curve to a Montgomery-form elliptic curve; a step of calculating partial information of the scalar-multiplied point in the Montgomery-form elliptic curve; and a step of recovering a complete coordinate in the Weierstrass-form elliptic curve from the partial information of the scalar-multiplied point in the Montgomery-form elliptic curve.

Furthermore, as one means for achieving the object, there is provided a scalar multiplication method for calculating a scalar-multiplied point from a scalar value and a point on a Weierstrass-form elliptic curve in the Weierstrass-form elliptic curve defined on a finite field with characteristics of 5 or more in an elliptic curve cryptosystem, the method comprising: a step of transforming the Weierstrass-form elliptic curve to a Montgomery-form elliptic curve; a step of calculating partial information of the scalar-multiplied point in the Montgomery-form elliptic curve; a step of recovering a complete coordinate in the Montgomery-form elliptic curve from the partial information of the scalar-multiplied point in the Montgomery-form elliptic curve; and a step of calculating the scalar-multiplied point in the Weierstrass-form elliptic curve from the scalar-multiplied point in which the complete coordinate is recovered in the Montgomery-form elliptic curve.

Additionally, as one means for achieving the object, there is provided a scalar multiplication method for calculating a scalar-multiplied point from a scalar value and a point on a Weierstrass-form elliptic curve in the Weierstrass-form elliptic curve defined on a finite field with characteristics of 5 or more in an elliptic curve cryptosystem, the method comprising: a step of transforming the Weierstrass-form elliptic curve to a Montgomery-form elliptic curve; a step of calculating partial information of the scalar-multiplied point in the Montgomery-form elliptic curve; and a step of giving X-coordinate and Z-coordinate of the scalar-multiplied point given as the partial information of the scalar-multiplied point in the Montgomery-form elliptic curve in projective coordinates in the Montgomery-form elliptic curve, and X-coordinate and Z-coordinate of a point obtained by adding the scalar-multiplied point and the point on the Montgomery-form elliptic curve in the projective coordinates, and recovering a complete coordinate in affine coordinates in the Weierstrass-form elliptic curve.

Moreover, as one means for achieving the object, there is provided a scalar multiplication method for calculating a scalar-multiplied point from a scalar value and a point on a Weierstrass-form elliptic curve in the Weierstrass-form elliptic curve defined on a finite field with characteristics of 5 or more in an elliptic curve cryptosystem, the method comprising: a step of transforming the Weierstrass-form elliptic curve to a Montgomery-form elliptic curve; a step of calculating partial information of the scalar-multiplied point in the Montgomery-form elliptic curve; and a step of giving X-coordinate and Z-coordinate of the scalar-multiplied point given as the partial information of the scalar-multiplied point in the Montgomery-form elliptic curve in projective coordinates in the Montgomery-form elliptic curve, and X-coordinate and Z-coordinate of a point obtained by adding the scalar-multiplied point and the point on the Montgomery-form elliptic curve in the projective coordinates, and recovering a complete coordinate in the projective coordinates in the Weierstrass-form elliptic curve.

Furthermore, as one means for achieving the object, there is provided a scalar multiplication method for calculating a scalar-multiplied point from a scalar value and a point on a Weierstrass-form elliptic curve in the Weierstrass-form elliptic curve defined on a finite field with characteristics of 5 or more in an elliptic curve cryptosystem, the method comprising: a step of transforming the Weierstrass-form elliptic curve to a Montgomery-form elliptic curve; a step of calculating partial information of the scalar-multiplied point in the Montgomery-form elliptic curve; and a step of giving X-coordinate and Z-coordinate of the scalar-multiplied point given as the partial information of the scalar-multiplied point in the Montgomery-form elliptic curve in projective coordinates in the Montgomery-form elliptic curve, X-coordinate and Z-coordinate of a point obtained by adding the scalar-multiplied point and the point on the Montgomery-form elliptic curve in the projective coordinates, and X-coordinate and Z-coordinate of a point obtained by subtracting the scalar-multiplied point and the point on the Montgomery-form elliptic curve in the projective coordinates, and recovering a complete coordinate in affine coordinates in the Weierstrass-form elliptic curve.

Additionally, according to the present invention, there is provided a scalar multiplication method for calculating a scalar-multiplied point from a scalar value and a point on a Weierstrass-form elliptic curve in the Weierstrass-form elliptic curve defined on a finite field with characteristics of 5 or more in an elliptic curve cryptosystem, the method comprising: a step of transforming the Weierstrass-form elliptic curve to a Montgomery-form elliptic curve; a step of calculating partial information of the scalar-multiplied point in the Montgomery-form elliptic curve; and a step of giving X-coordinate and Z-coordinate of the scalar-multiplied point given as the partial information of the scalar-multiplied point in the Montgomery-form elliptic curve in projective coordinates in the Montgomery-form elliptic curve, X-coordinate and Z-coordinate of a point obtained by adding the scalar-multiplied point and the point on the Montgomery-form elliptic curve in the projective coordinates, and X-coordinate and Z-coordinate of a point obtained by subtracting the scalar-multiplied point and the point on the Montgomery-form elliptic curve in the projective coordinates, and recovering a complete coordinate in the projective coordinates in the Weierstrass-form elliptic curve.

Moreover, as one means for achieving the object, there is provided a scalar multiplication method for calculating a scalar-multiplied point from a scalar value and a point on a Weierstrass-form elliptic curve in the Weierstrass-form elliptic curve defined on a finite field with characteristics of 5 or more in an elliptic curve cryptosystem, the method

comprising: a step of transforming the Weierstrass-form elliptic curve to a Montgomery-form elliptic curve; a step of calculating partial information of the scalar-multiplied point in the Montgomery-form elliptic curve; and a step of giving x-coordinate of the scalar-multiplied point given as the partial information of the scalar-multiplied point in the Montgomery-form elliptic curve in affine coordinates in the Montgomery-form elliptic curve, x-coordinate of a point obtained by adding the scalar-multiplied point and the point on the Montgomery-form elliptic curve in the affine coordinates, and x-coordinate of a point obtained by subtracting the scalar-multiplied point and the point on the Montgomery-form elliptic curve in the affine coordinates, and recovering a complete coordinate in the affine coordinates in the Weierstrass-form elliptic curve.

BRIEF DESCRIPTION OF DRAWINGS

FIG. 1 is a constitution diagram of an cryptography processing system of the present invention.
FIG. 2 is a diagram showing a flow of a processing in a scalar multiplication method and apparatus according to an embodiment of the present invention.
FIG. 3 is a sequence diagram showing a flow of a processing in the cryptography processing system of FIG. 1.
FIG. 4 is a flowchart showing a fast scalar multiplication method in the scalar multiplication method according to first, second, fourteenth, and fifteenth embodiments of the present invention.
FIG. 5 is a flowchart showing the fast scalar multiplication method in the scalar multiplication method according to third and fourth embodiments of the present invention.
FIG. 6 is a flowchart showing the fast scalar multiplication method in the scalar multiplication method according to a fifth embodiment of the present invention.
FIG. 7 is a flowchart showing the fast scalar multiplication method in the scalar multiplication method according to sixth, seventh, and eighth embodiments of the present invention.
FIG. 8 is a flowchart showing the fast scalar multiplication method in the scalar multiplication method according to ninth, tenth, twentieth, and twenty-first embodiments of the present invention.
FIG. 9 is a flowchart showing a coordinate recovering method in the scalar multiplication method according to the second embodiment of the present invention.
FIG. 10 is a flowchart showing the fast scalar multiplication method in the scalar multiplication method according to eleventh and twelfth embodiments of the present invention.
FIG. 11 is a flowchart showing the coordinate recovering method in the scalar multiplication method according to the first embodiment of the present invention.
FIG. 12 is a flowchart showing the coordinate recovering method in the scalar multiplication method according to the third embodiment of the present invention.
FIG. 13 is a flowchart showing the coordinate recovering method in the scalar multiplication method according to the fourth embodiment of the present invention.
FIG. 14 is a flowchart showing the coordinate recovering method in the scalar multiplication method according to the sixth embodiment of the present invention.
FIG. 15 is a flowchart showing the coordinate recovering method in the scalar multiplication method according to the seventh embodiment of the present invention.
FIG. 16 is a flowchart showing the coordinate recovering method in the scalar multiplication method according to the eighth embodiment of the present invention.
FIG. 17 is a flowchart showing the coordinate recovering method in the scalar multiplication method according to the ninth embodiment of the present invention.
FIG. 18 is a flowchart showing the coordinate recovering method in the scalar multiplication method according to the tenth embodiment of the present invention.
FIG. 19 is a flowchart showing the coordinate recovering method in the scalar multiplication method according to the eleventh embodiment of the present invention.
FIG. 20 is a flowchart showing the coordinate recovering method in the scalar multiplication method according to the twelfth embodiment of the present invention.
FIG. 21 is a flowchart showing the coordinate recovering method in the scalar multiplication method according to a thirteenth embodiment of the present invention.
FIG. 22 is a constitution diagram of a signature generation unit according to the embodiment of the present invention.
FIG. 23 is a constitution diagram of a decryption unit according to the embodiment of the present invention.
FIG. 24 is a flowchart showing the fast scalar multiplication method in the scalar multiplication method according to the thirteenth embodiment of the present invention.

FIG. 25 is a flowchart showing the scalar multiplication method in a scalar multiplication apparatus of FIG. 2.

FIG. 26 is a flowchart showing the coordinate recovering method in the scalar multiplication method according to the fifth embodiment of the present invention.

FIG. 27 is a diagram showing a flow of a processing in the scalar multiplication method and apparatus according to the embodiment of the present invention.

FIG. 28 is a flowchart showing a signature generation method in the signature generation unit of FIG. 22.

FIG. 29 is a sequence diagram showing a flow of a processing in the signature generation unit of FIG. 22.

FIG. 30 is a flowchart showing a decryption method in the decryption unit of FIG. 23.

FIG. 31 is a sequence diagram showing a flow of a processing in the decryption unit of FIG. 23.

FIG. 32 is a flowchart showing a cryptography processing method in the cryptography processing system of FIG. 1.

FIG. 33 is a flowchart showing the scalar multiplication method in the scalar multiplication apparatus of FIG. 27.

FIG. 34 is a flowchart showing the coordinate recovering method in the scalar multiplication method according to the fourteenth embodiment of the present invention.

FIG. 35 is a flowchart showing the coordinate recovering method in the scalar multiplication method according to the fifteenth embodiment of the present invention.

FIG. 36 is a flowchart showing the coordinate recovering method in the scalar multiplication method according to a sixteenth embodiment of the present invention.

FIG. 37 is a flowchart showing the coordinate recovering method in the scalar multiplication method according to a seventeenth embodiment of the present invention.

FIG. 38 is a flowchart showing the coordinate recovering method in the scalar multiplication method according to an eighteenth embodiment of the present invention.

FIG. 39 is a flowchart showing the coordinate recovering method in the scalar multiplication method according to a nineteenth embodiment of the present invention.

FIG. 40 is a flowchart showing the coordinate recovering method in the scalar multiplication method according to the twentieth embodiment of the present invention.

FIG. 41 is a flowchart showing the coordinate recovering method in the scalar multiplication method according to the twenty-first embodiment of the present invention.

FIG. 42 is a flowchart showing the coordinate recovering method in the scalar multiplication method according to a twenty-second embodiment of the present invention.

FIG. 43 is a flowchart showing the fast scalar multiplication method in the scalar multiplication method according to the sixteenth embodiment of the present invention.

FIG. 44 is a flowchart showing the fast scalar multiplication method in the scalar multiplication method according to the seventeenth, eighteenth, and nineteenth embodiments of the present invention.

FIG. 45 is a flowchart showing the fast scalar multiplication method in the scalar multiplication method according to the twenty-second embodiment of the present invention.

BEST MODE FOR CARRYING OUT THE INVENTION

Embodiments of the present invention will be described hereinafter with reference to the drawings.

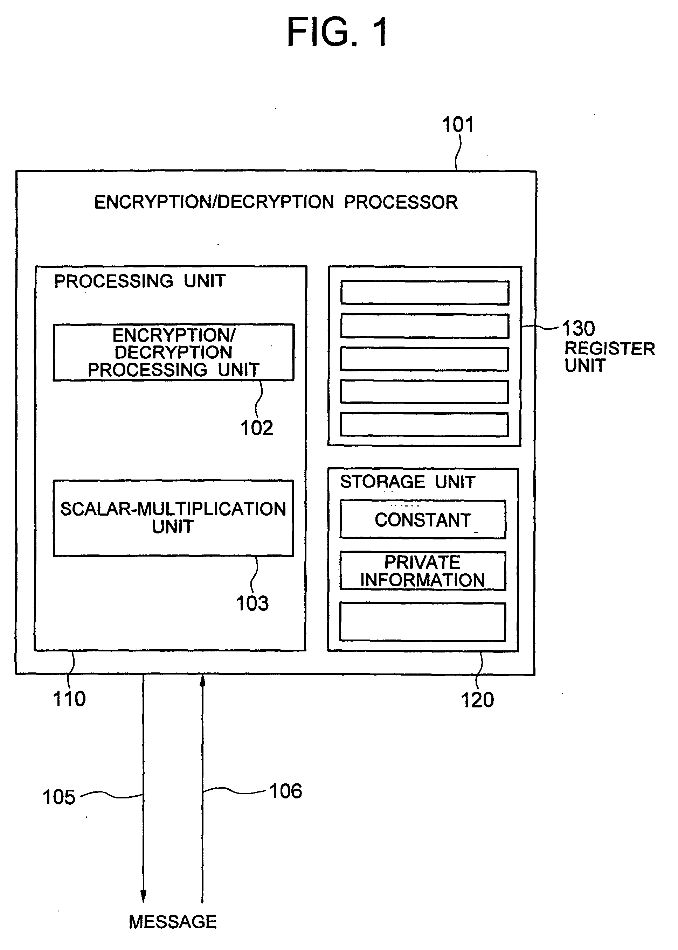

FIG. 1 shows a constitution of an encryption/decryption processing apparatus. An encryption/decryption processing apparatus 101 performs either one of encryption of an inputted message and decryption of the encrypted message. Additionally, an elliptic curve handled herein is an elliptic curve having characteristics of 5 or more.

When the inputted message is encrypted, and the encrypted message is decrypted, the following equation 1 is generally established.

$$Pm+k(aQ)-a(kQ) = Pm \qquad\qquad \text{Equation 1}$$

Here, Pm denotes a message, k denotes a random number, a denotes a constant indicating a private key, and Q denotes a fixed point. In this equation, aQ of Pm+k(aQ) indicates a public key, and indicates that the inputted message is encrypted by the public key. On the other hand, a of a(kQ) indicates the private key, and indicates that the message is decrypted by the private key.

Therefore, when the encryption/decryption processing apparatus 101 shown in FIG. 1 is used only in the encryption of the message, Pm+k(aQ) and kQ are calculated and outputted. When the apparatus is used only in the decryption, -a(kQ) is calculated from the private key a and kQ, and (Pm+k(aQ))-a(kQ) may be calculated and outputted.

The encryption/decryption processing apparatus 101 shown in FIG. 1 includes a processing unit 110, storage unit 120, and register unit 130. The processing unit 120 indicates a processing necessary for an encryption processing in functional blocks, and includes an encryption/decryption processor 102 for encrypting the inputted message and decrypting the encrypted message, and a scalar multiplication unit 103 for calculating parameters necessary for the encryption/decryption performed by the encryption/decryption processor 102. The storage unit 120 stores a constant, private information (e.g., the private key), and the like. The register unit 130 temporarily stores a result of operation in the encryption/ decryption processing, and the information stored in the storage unit 120. Additionally, the processing unit 110, and register unit 130 can be realized by an exclusive-use operation unit, CPU, and the like which perform a processing described hereinafter, and the storage unit 120 can be realized by a RAM, ROM, and the like.

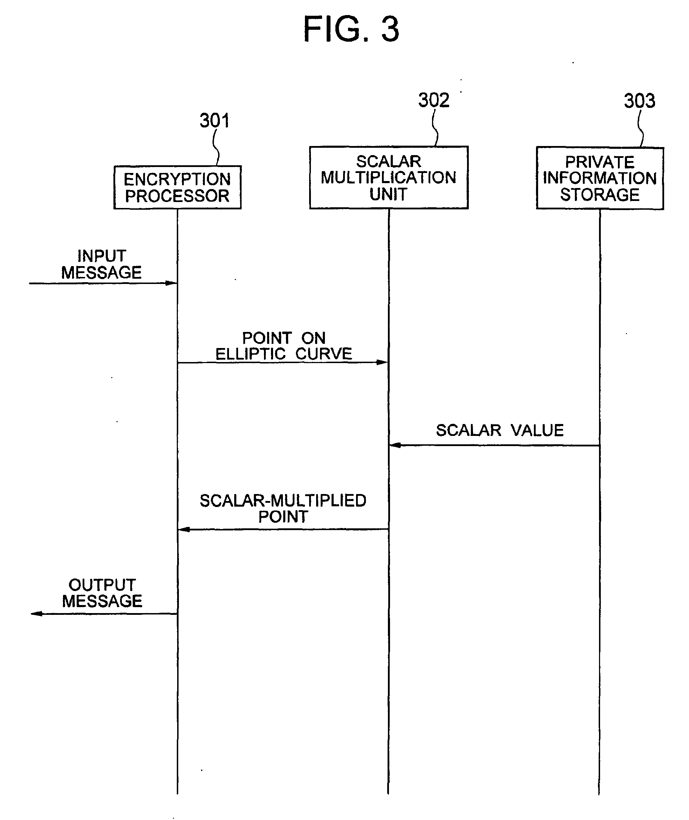

An operation of the encryption/decryption processing apparatus 101 shown in FIG. 1 will next be described. FIG. 3 shows transmission of information of each unit when the encryption/decryption processing apparatus 101 performs the encryption/decryption. The encryption/decryption processor 102 is represented as the encryption processor 102 when performing an encryption processing, and as the decryption processor 102 when performing a decryption processing.

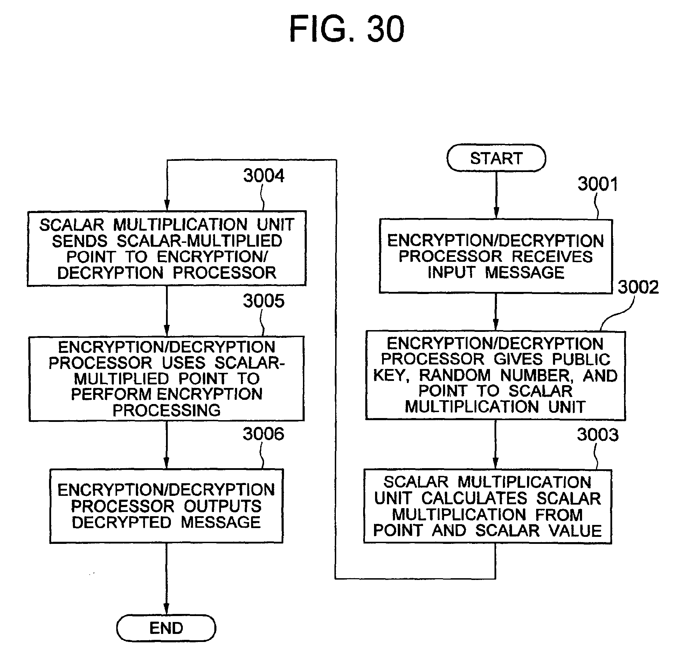

An operation for encrypting the inputted message will first be described with reference to FIG. 30.

A message is inputted into the encryption/decryption processor 102 (3001), and it is then judged whether or not a bit length of the inputted message is a predetermined bit length. When the length is longer than the predetermined bit length, the message is divided in order to obtain the predetermined bit length (it is assumed in the following description that the message is divided into the predetermined bit length). Subsequently, the encryption/decryption processor 102 calculates a value $(y1)$ of y-coordinate on an elliptic curve having a numeric value $(x1)$ represented by a bit string of the message in x-coordinate. For example, a Montgomery-form elliptic curve is represented by $By1^2=x1^3+Ax1^2+x1$, and the value of y-coordinate can be obtained from this curve. Additionally, B, A are constants. The encryption processor 102 sends a public key aQ and values of x-coordinate and y-coordinate of Q to the scalar multiplication unit 103. In this case, the encryption processor 102 generates a random number, and sends this number to the scalar multiplication unit 103 (3002). The scalar multiplication unit 103 calculates a scalar-multiplied point $(xd1, yd1)$ by the values of x-coordinate and y-coordinate of Q and the random number, and a scalar-multiplied point $(xd2, yd2)$ by the values of x-coordinate and y-coordinate of the public key aQ and the random number (3003), and sends the calculated scalar-multiplied points to the encryption processor 102 (3004). The encryption processor 102 uses the sent scalar-multiplied point to perform an encryption processing (3005). For example, with respect to the Montgomery-form elliptic curve, encrypted messages xe1, xe2 are obtained from the following equation.

$$xe1=B((yd1-y1)/(xd1-x1))^2-A-x1-xd1 \qquad\qquad \text{Equation 2}$$

$$xe2 = xd2 \qquad\qquad \text{Equation 3}$$

The encryption/decryption processing apparatus 101 outputs the message encrypted by the encryption/decryption processor 102. (3006)

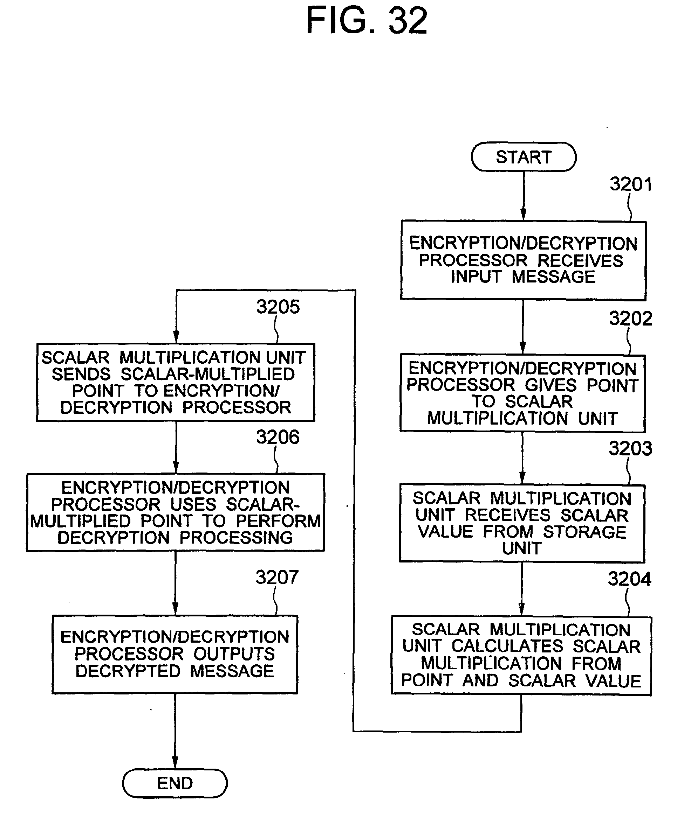

An operation for decrypting the encrypted message will next be described with reference to FIG. 32.

When the encrypted message is inputted into the encryption/decryption processor 102 (3201), the value of y-coordinate on the elliptic curve having the numeric value represented by the bit string of the encrypted message in x-coordinate is calculated. Here, the encrypted message is a bit string of xe1, xe2, and with the Montgomery-form elliptic curve, a value $(ye1)$ of y-coordinate is obtained from $Bye1^2=xe1^3+Axe1^2+xe1$. Additionally, B, A are respective constants. The encryption/decryption processor 102 sends values $(xe1, Ye1)$ of x-coordinate and y-coordinate to the scalar multiplication unit 103 (3202). The scalar multiplication unit 103 reads private information from the storage unit 120 (3203), calculates a scalar-multiplied point $(xd3, yd3)$ from the values of x-coordinate and y-coordinate and the private information (3204), and sends the calculated scalar-multiplied points to the encryption/decryption processor 102 (3205). The encryption/decryption processor 102 uses the sent scalar-multiplied point to perform a decryption processing (3206). For example, the encrypted message is a bit string of xe1, xe2, and with the Montgomery-form elliptic curve, xf1 is obtained by the following equation.

$$xf1=B((ye2+yd3)/(xe2-xd3))^2-A-xe2-xd3 \qquad\qquad \text{Equation 4}$$

This xf1 corresponds to the message x1 before encrypted.

The decryption processor 102 outputs the decrypted message xf1 (3207).

As described above, the encryption/decryption processor 102 performs the encryption or decryption processing.

A processing of the scalar multiplication unit 103 of the encryption processing apparatus 101 will next be described. Here, an example in which the encryption processing apparatus 101 performs the decryption processing will be described hereinafter.

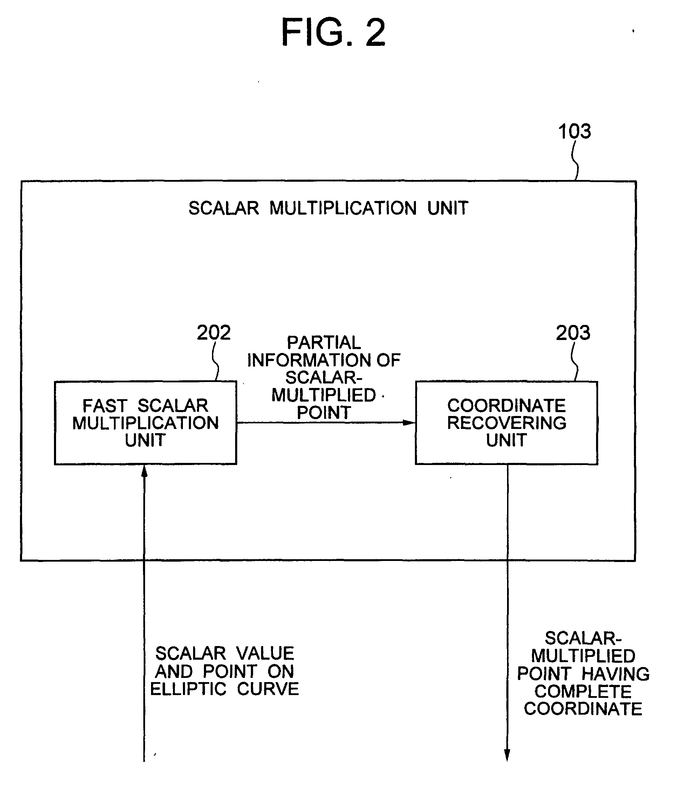

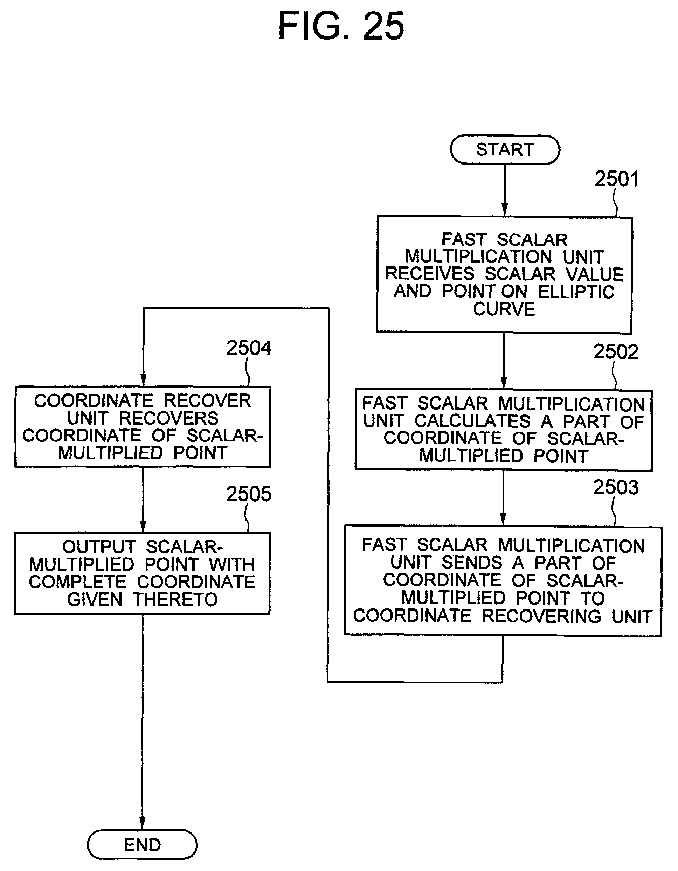

FIG. 2 shows functional blocks of the scalar multiplication unit 103. FIG. 25 shows an operation of the scalar multiplication unit 103.

A fast scalar multiplication unit 202 receives the scalar value as the private information and encrypted message, and a point on the elliptic curve as a value of Y-coordinate on the elliptic curve having the encrypted message on X-coordinate (step 2501). Then, the fast scalar multiplication unit 202 calculates some values of the coordinate of the scalar-multiplied point from the received scalar value and point on the elliptic curve (step 2502), and gives the information to a coordinate recovering unit 203 (step 2503). The coordinate recovering unit 203 recovers the coordinate of the scalar-multiplied point from information of the given scalar-multiplied point and the inputted point on the elliptic curve (step 2504). A scalar multiplication unit 103 outputs the scalar-multiplied point with the coordinate completely given thereto as a calculation result (step 2505). Here, the scalar-multiplied point with the coordinate completely given thereto means that the y-coordinate is calculated and outputted (this also applied to the following).

Some embodiments of the fast scalar multiplication unit 202 and coordinate recovering unit 203 of the scalar multiplication unit 103 will be described hereinafter.

In a first embodiment, the scalar multiplication unit 103 calculates and outputs a scalar-multiplied point $(x_d, y_d)$ with the complete coordinate given thereto as a point of affine coordinates in the Montgomery-form elliptic curve from a scalar value d and a point P on the Montgomery-form elliptic curve. The scalar value d and the point P on the Montgomery-form elliptic curve are inputted into the scalar multiplication unit 103 and then received by the fast scalar multiplication unit 202. The fast scalar multiplication unit 202 calculates $X_d$ and $Z_d$ in a coordinate of a scalar-multiplied point $dP=(X_d,Y_d,Z_d)$ represented by projective coordinates in the Montgomery-form elliptic curve, and $X_{d+1}$ and $Z_{d+1}$ in a coordinate of a point $(d+1)$ P= $(X_{d+1}, Y_{d+1}, Z_{d+1})$ on the Montgomery-form elliptic curve represented by the projective coordinates from the received scalar value d and the given point P on the Montgomery-form elliptic curve, and gives the information together with an inputted point P=(x,y) on the Montgomery-form elliptic curve represented by the affine coordinates to the coordinate recovering unit 203. The coordinate recovering unit 203 recovers coordinates $x_d$ and $y_d$ of the scalar-multiplied point $dP=(x_d,y_d)$ represented by the affine coordinates in the Montgomery-form elliptic curve from the given coordinate values $X_d$, $Z_d$, $X_{d+1}$, $Z_{d+1}$, x and y. The scalar multiplication unit 103 outputs the scalar-multiplied point $(x_d,y_d)$ with the coordinate completely given thereto in the affine coordinates as the calculation output.

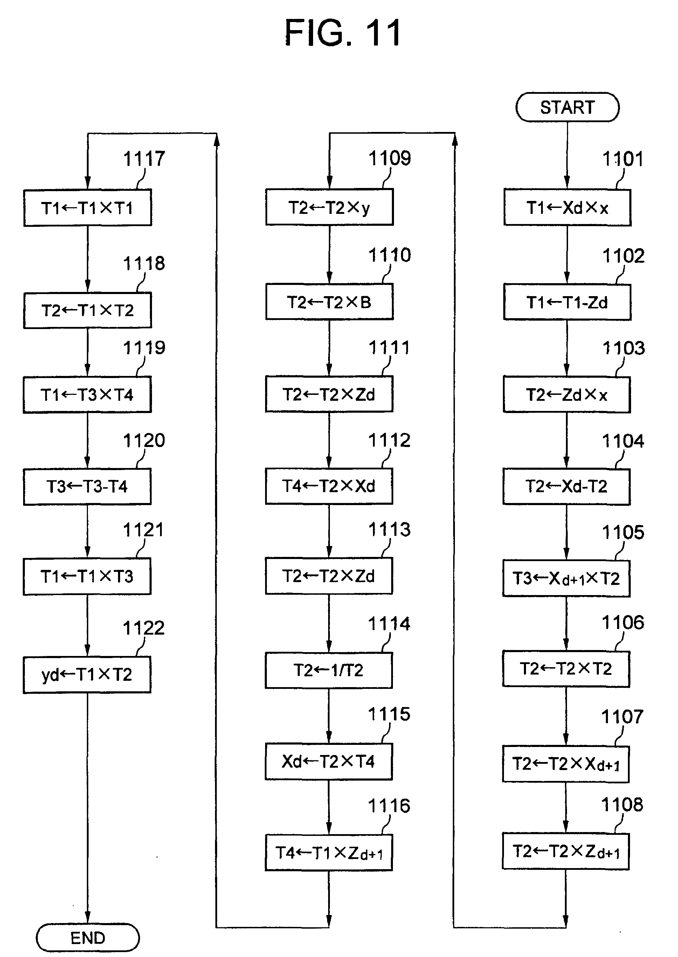

A processing of the coordinate recovering unit which outputs $x_d$, $y_d$ from the given coordinates x, y, $X_d$, $Z_d$, $X_{d+1}$, $Z_{d+1}$ will next be described with reference to FIG. 11.

The coordinate recovering unit 203 inputs $X_d$ and $Z_d$ in the coordinate of the scalar-multiplied point $dP=(X_d, Y_d,Z_d)$ represented by the proj ective coordinates in the Montgomery-form elliptic curve, $X_{d+1}$ and $Z_{d+1}$ in the coordinate of the point $(d+1)P=(X_{d+1},Y_{d+1},Z_{d+1})$ on the Montgomery-form elliptic curve represented by the projective coordinates, and (x,y) as representation of the point P on the Montgomery-form elliptic curve in the affine coordinates inputted into the scalar multiplication unit 103, and outputs the scalar-multiplied point $(x_d,y_d)$ with the complete coordinate given thereto in the affine coordinates in the following procedure. Here, the affine coordinate of the inputted point P on the Montgomery-form elliptic curve is represented by (x,y), and the projective coordinate thereof is represented by $(X_1,Y_1, Z_1)$. Assuming that the inputted scalar value is d, the affine coordinate of the scalar-multiplied point dP in the Montgomery-form elliptic curve is represented by $(x_d,y_d)$, and the projective coordinate thereof is represented by $(X_d,Y_d, Z_d)$. The affine coordinate of a point $(d-1)P$ on the Montgomery-form elliptic curve is represented by $(x_{d-1},y_{d-1})$, and the projective coordinate thereof is represented by $(X_{d-1},Y_{d-1},Z_{d-1})$. The affine coordinate of the point $(d+1)P$ on the Montgomery-form elliptic curve is represented by $(x_{d+1},y_{d+1})$, and the projective coordinate thereof is represented by $(X_{d+1}, Y_{d+1},Z_{d+1})$.

In step 1101 $X_d \times x$ is calculated, and stored in a register $T_1$. In step 1102 $T_1$-$Z_d$ is calculated. Here, $X_d x$ is stored in the register $T_1$, and $X_d x$-$Z_d$ is therefore calculated. The result is stored in the register $T_1$. In step 1103 $Z_d \times x$ is calculated, and stored in a register $T_2$. In step 1104 $X_d$-$T_2$ is calculated. Here, $Z_d x$ is stored in the register $T_2$, and $X_d$-$xZ_d$ is therefore calculated. The result is stored in the register $T_2$. In step 1105 $X_{d+1} \times T_2$ is calculated. Here, $X_d$-$xZ_d$ is stored in the register $T_2$, and $X_{d+1}(X_d$-$xZ_d)$ is therefore calculated. The result is stored in a register $T_3$. In step 1106 a square of $T_2$ is calculated. Here, $(X_d$-$xZ_d)$ is stored in the register $T_2$, and $(X_d$-$xZ_d)^2$ is therefore calculated. The result is stored in the register $T_2$. In step 1107 $T_2 \times X_{d+1}$ is calculated. Here, $(X_d$-$xZ_d)^2$ is stored in the register $T_2$, and $X_{d+1}(X_d$-$xZ_d)^2$ is therefore calculated. The result is stored in the register $T_2$. In step 1108 $T_2 \times Z_{d+1}$ is calculated. Here, $X_{d+1}(X_d$-$xZ_d)^2$ is stored in the register $T_2$, and $Z_{d+1}X_{d+1}(X_d$-$xZ_d)^2$ is therefore calculated. The result is stored in the register $T_2$. In step 1109 $T_2 \times y$ is calculated. Here, $Z_{d+1}X_{d+1}(X_d$-$xZ_d)^2$ is stored in the register $T_2$, and $yZ_{d+1}X_{d+1}(X_d$-$xZ_d)^2$ is therefore calculated. The result is stored in the register $T_2$. In step 1110 $T_2 \times B$ is calculated. Here, $yZ_{d+1}X_{d+1}(X_d$-$xZ_d)^2$ is stored in the register $T_2$, and $ByZ_{d+1}X_{d+1}(X_d$-$xZ_d)^2$ is therefore calculated. The result is stored in the register $T_2$. In step 1111 $T_2 \times Z_d$ is calculated. Here, $ByZ_{d+1}X_{d+1}(X_d$-$xZ_d)^2$ is stored in the register $T_2$, and $ByZ_{d+1}X_{d+1}(X_d$-$xZ_d)^2Z_d$ is therefore calculated. The result is stored in the register $T_2$. In step 1112 $T_2 \times X_d$ is calculated. Here, $ByZ_{d+1}X_{d+1}(X_d$-$xZ_d)^2Z_d$ is stored in the register $T_2$, and $ByZ_{d+1}X_{d+1}(X_d$-$xZ_d)^2Z_dX_d$ is therefore calculated. The result is stored in a

register $T_4$. In step 1113 $T_2 \times Z_d$ is calculated. Here, $ByZ_{d+1}X_{d+1}(X_d\text{-}xZ_d)^2Z_d$ is stored in the register $T_2$, and $ByZ_{d+1}X_{d+1}(X_d\text{-}xZ_d)^2Z_d$ is therefore calculated. The result is stored in the register $T_2$. In step 1114 an inverse element of the register $T_2$ is calculated. Here, $ByZ_{d+1}X_{d+1}(X_d\text{-}xZ_d)^2Z_d^2$ is stored in the register $T_2$, and therefore $1/ByZ_{d+1}X_{d+1}(X_d\text{-}xZ_d)^2Z_d^2$ is calculated. The result is stored in the register $T_2$. In step 1115 $T_2 \times T_4$ is calculated. Here, $1/ByZ_{d+1}X_{d+1}(X_d\text{-}xZ_d)^2Z_d^2$ is stored in the register $T_2$, and $ByZ_{d+1}X_{d+1}(X_d\text{-}xZ_d)^2Z_dX_d$ is stored in the register $T_4$. Therefore, $(ByZ_{d+1}X_{d+1}(X_d\text{-}xZ_d)^2Z_dX_d)$ /-$(ByZ_{d+1}X_{d+1}(X_d\text{-}xZ_d)^2Z_d^2)$ (=$X_d/Z_d$) is calculated. The result is stored in a register $x_d$. In step 1116 $T_1 \times Z_{d+1}$ is calculated. Here $X_dx\text{-}Z_d$ is stored in the register $T_1$, and therefore $Z_{d+1}(X_dx\text{-}Z_d)$ is calculated. The result is stored in the register $T_4$. In step 1117 a square of the register $T_1$ is calculated. Here, $(X_dx\text{-}Z_d)$ is stored in the register $T_1$, and therefore $(X_dx\text{-}Z_d)^2$ is calculated. The result is stored in the register $T_1$. In step 1118 $T_1 \times T_2$ is calculated. Here, $(X_dx\text{-}Z_d)^2$ is stored in the register $T_1$, $1/ByZ_{d+1}X_{d+1}(X_d\text{-}xZ_d)^2$ is stored in the register $T_2$, and therefore $(X_dx\text{-}Z_d)^2/ByZ_{d+1}X_{d+1}(X_d\text{-}xZ_d)^2Z_d^2$ is calculated. The result is stored in the register $T_2$. In step 1119 $T_3+T_4$ is calculated. Here $X_{d+1}(X_d\text{-}xZ_d)$ is stored in the register $T_3$, $Z_{d+1}(X_dx\text{-}Z_d)$ is stored in the register $T_4$, and therefore $X_{d+1}(X_d\text{-}XZ_d)+Z_{d+1}(X_dx\text{-}Z_d)$ is calculated. The result is stored in the register $T_1$. In step 1120 $T_3\text{-}T_4$ is calculated. Here $X_{d+1}(X_d\text{-}xZ_d)$ is stored in the register $T_3$, $Z_{d+1}(X_dx\text{-}Z_d)$ is stored in the register $T_4$, and therefore $X_{d+1}(X_d\text{-}XZ_d)\text{-}Z_{d+1}(X_dx\text{-}Z_d)$ is calculated. The result is stored in the register $T_3$. In step 1121 $T_1 \times T_3$ is calculated. Here $X_{d+1}(X_d\text{-}XZ_d)+Z_{d+1}(X_dx\text{-}Z_d)$ is stored in the register $T_1$, $X_{d+1}(X_d\text{-}xZ_d)\text{-}Z_{d+1}(X_dx\text{-}Z_d)$ is stored in the register $T_3$, and therefore $\{X_{d+1}(X_d\text{-}xZ_d)+Z_{d+1}(X_dx\text{-}Z_d)\}\{X_{d+1}(X_d\text{-}xZ_d)\text{-}Z_{d+1}(X_dx\text{-}Z_d)\}$ is calculated. The result is stored in the register $T_1$. In step 1122 $T_1 \times T_2$ is calculated. Here $\{X_{d+1}(X_d\text{-}xZ_d)+Z_{d+1}(X_dx\text{-}Z_d)\}\{X_{d+1}(X_d\text{-}xZ_d)\text{-}Z_{d+1}(X_dx\text{-}Z_d)\}$ is stored in the register $T_1$, $(X_dx\text{-}Z_d)^2/ByZ_{d+1}X_{d+1}(X_d\text{-}xZ_d)^2Z_d^2$ is stored in the register $T_2$, and therefore the following is calculated.

$$\frac{\{X_{d+1}(X_d\text{-}xZ_d)+Z_{d+1}(X_dx\text{-}Z_d)\}\{X_{d+1}(X_d\text{-}xZ_d)\text{-}Z_{d+1}(X_dx\text{-}Z_d)\}(X_dx\text{-}Z_d)^2}{ByZ_{d+1}X_{d+1}(X_d\text{-}xZ_d)^2Z_d^2} \qquad \text{Equation 5}$$

The result is stored in $y_d$. In step 1115 $(ByZ_{d+1}X_{d+1}(X_d\text{-}xZ_d)^2Z_dX_d)/(ByZ_{d+1}X_{d+1}(X_d\text{-}xZ_d)^2X_d^2)$ is stored in $x_d$, and is not updated thereafter, and the value is therefore held.

A reason why all values in the affine coordinate $(x_d,y_d)$ of the scalar-multiplied point in the Montgomery-form elliptic curve are recovered from x, y, $X_d$, $Z_d$, $X_{d+1}$, $Z_{d+1}$ given to the coordinate recovering unit 203 by the aforementioned procedure is as follows. Additionally, point (d+1)P is a point obtained by adding the point P to the point dP, and point (d-1)P is a point obtained by subtracting the point P from the point dP. Assignment to addition formulae in the affine coordinates of the Montgomery-form elliptic curve results in the following equations.

$$(A + x + x_d + x_{d+1})(x_d - x)^2 = B(y_d - y)^2 \qquad \text{Equation 6}$$

$$(A + x + x_d + x_{d-1})(x_d - x)^2 = B(y_d + y)^2 \qquad \text{Equation 7}$$

When opposite sides are individually subjected to subtraction, the following equation is obtained.

$$(x_{d-1} - x_{d+1})(x_d - x)^2 = 4By_dy \qquad \text{Equation 8}$$

Therefore, the following results.

$$y_d = (x_{d-1} - x_{d+1})(x_d - x)^2/4By \qquad \text{Equation 9}$$

Here, $x_d=X_d/Z_d$, $x_{d+1}=X_{d+1}/Z_{d+1}$, $x_{d-1}\text{-}X_{d-1}/Z_{d-1}$. The value is assigned and thereby converted to a value of the projective coordinate. Then, the following equation is obtained.

$$y_d = (X_{d-1}Z_{d+1} - Z_{d-1}X_{d+1})(X_d - Z_dx)^2 / 4ByZ_{d-1}Z_{d+1}Z_d^2 \qquad \text{Equation 10}$$

The addition formulae in the projective coordinate of the Montgomery-form elliptic curve are as follows.

$$X_{m+n} = Z_{m-n}[(X_m-Z_m)(X_n+Z_n)+(X_m+Z_m)(X_n-Z_n)]^2 \qquad \text{Equation 11}$$

$$Z_{m+n} = X_{m-n}[(X_m - Z_m)(X_n + Z_n)-(X_m + Z_m)(X_n - Z_n)]^2 \qquad \text{Equation 12}$$

Here, $X_m$ and $Z_m$ are X-coordinate and Z-coordinate in the projective coordinate of a m-multiplied point mP of the point P on the Montgomery-form elliptic curve, $X_n$ and $Z_n$ are X-coordinate and Z-coordinate in the projective coordinate of an n-multiplied point nP of the point P on the Montgomery-form elliptic curve, $X_{m-n}$ and $Z_{m-n}$ are X-coordinate and Z-coordinate in the projective coordinate of a (m-n)-multiplied point (m-n)P of the point P on the Montgomery-form elliptic curve, $X_{m+n}$ and $Z_{m+n}$ are X-coordinate and Z-coordinate in the projective coordinate of a (m+n)-multiplied point (m+n) P of the point P on the Montgomery-form elliptic curve, and m, n are positive integers satisfying m>n. In the equation when $X_m/Z_m=x_m$, $X_n/Z_n=x_n$, $X_{m-n}/Z_{m-n}=x_{m-n}$ are unchanged, $X_{m+n}/Z_{m+n}=X_{m+n}$ is also unchanged. Therefore, this functions well as the formula in the projective coordinate. On the other hand, the following equations are assumed.

$$X'_{m-n}= Z_{m+n}[(X_m - Z_m)(X_n + Z_n) + (X_m + Z_m)(X_n - Z_n)]^2 \qquad \text{Equation 13}$$

$$Z'_{m-n} = X_{m+n}[(X_m - Z_m)(X_n + Z_n) - (X_m + Z_m)(X_n - Z_n)]^2 \qquad \text{Equation 14}$$

In this equation, when $X_m/Z_m=x_m$, $X_n/Z_n=x_n$, $X_{m+n}/Z_{m+n}=x_{m+n}$ are unchanged, $X'_{m-n}/Z'_{m-n}$ is also unchanged. Moreover, since $X'_{m-n}/Z'_{m-n}=X_{m-n}/Z_{m-n}$ is satisfied, $X'_{m-n}$, $Z'_{m-n}$ may be taken as the projective coordinate of $x_{m-n}$. When m=d, n=1 are set, the above formula is used, $X_{d-1}$ and $Z_{d-1}$ are deleted from the equation of $y_d$, and $X_1=x$, $Z_1=1$ are set, the following equation is obtained.

$$y_d = \frac{\{Z_{d+1}(X_d x - Z_d) +X_{d+1}(X_d - xZ_d)\}\{Z_{d+1}(X_d x - Z_d) - X_{d+1}(X_d - xZ_d)\}(X_d x - Z_d)^2}{By Z_{d+1} X_{d+1}(X_d - xZ_d)^2 Z_d^2} \qquad \text{Equation 15}$$

Although $x_d=X_d/Z_d$, reduction to a denominator common with that of $y_d$ is performed for a purpose of reducing a frequency of inversion, and the following equation is obtained.

$$x_d = \frac{By Z_{d+1} X_{d+1} Z_d (X_d - xZ_d)^2 X_d}{By Z_{d+1} X_{d+1} Z_d (X_d - xZ_d)^2 Z_d} \qquad \text{Equation 16}$$

Here, $x_d$, $y_d$ are given by the processing of FIG. 11. Therefore, all the values of the affine coordinate $(x_d,y_d)$ are recovered.

For the aforementioned procedure, in the steps 1101, 1103, 1105, 1107, 1108, 1109, 1110, 1111, 1112, 1113, 1115, 1116, 1118, 1121, and 1122, a computational amount of multiplication on a finite field is required. Moreover, the computational amount of squaring on the finite field is required in the steps 1106 and 1117. Moreover, the computational amount of inversion on the finite field is required in the step 1114. The computational amounts of addition and subtraction on the finite field are relatively small as compared with the computational amount of multiplication on the finite field and the computational amounts of squaring and inversion, and may be ignored. Assuming that the computational amount of multiplication on the finite field is M, the computational amount of squaring on the finite field is S, and the computational amount of inversion on the finite field is I, the above procedure requires a computational amount of 15M+2S+I. This is very small as compared with the computational amount of fast scalar multiplication. For example, when the scalar value d indicates 160 bits, the computational amount of the fast scalar multiplication is estimated to be a little less than about 1500 M. Assuming S=0.8M, I=40M, the computational amount of coordinate recovering is 56.6 M, and this is very small as compared with the computational amount of the fast scalar multiplication. Therefore, it is indicated that the coordinate can efficiently be recovered.

Additionally, even when the above procedure is not taken, the values of $x_d$, $y_d$ given by the above equation can be calculated, and the values of $x_d$, $y_d$ can then be recovered. In this case, the computational amount necessary for the recovering generally increases. Moreover, when the value of B as a parameter of the elliptic curve is set to be small, the computational amount of multiplication in the step 1110 can be reduced.

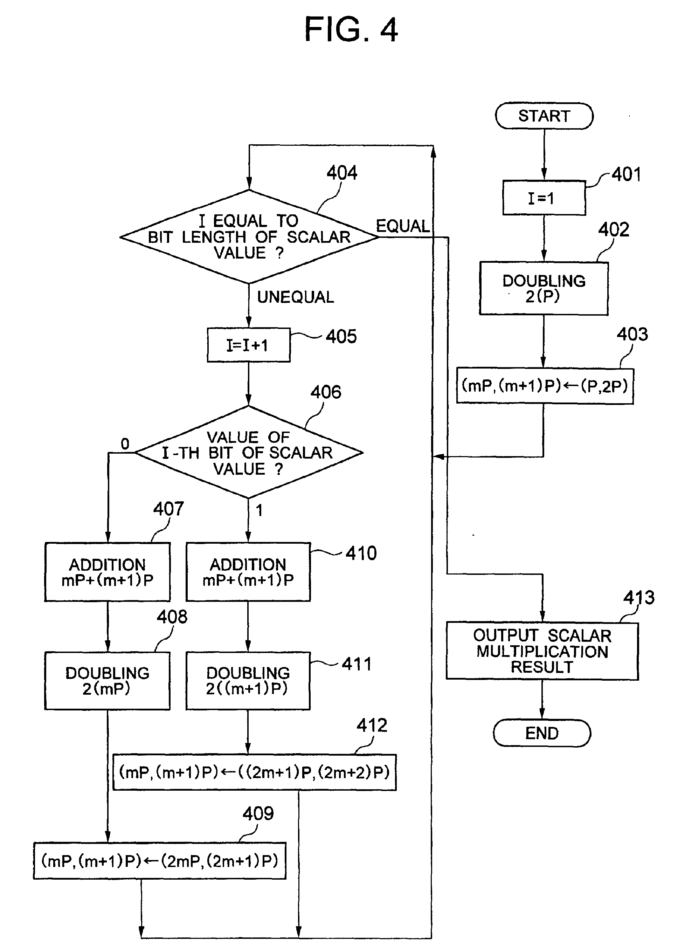

A processing of the fast scalar multiplication unit which outputs $X_d$, $Z_d$, $X_{d+1}$, $Z_{d+1}$ from the scalar value d and the point P on the Montgomery-form elliptic curve will next be described with reference to FIG. 4.

The fast scalar multiplication unit 202 inputs the point P on the Montgomery-form elliptic curve inputted into the scalar multiplication unit 103, and outputs $X_d$ and $Z_d$ in the scalar-multiplied point $dP=(X_d,Y_d,Z_d)$ represented by the projective coordinate in the Montgomery-form elliptic curve, and $X_{d+1}$ and $Z_{d+1}$ in the point $(d+1)P=(X_{d+1},Y_{d+1},Z_{d+1})$ on the Montgomery-form elliptic curve represented by the projective coordinate by the following procedure. In step 401, an initial value 1 is assigned to a variable I. A doubled point 2P of the point P is calculated in step 402. Here, the point P is represented as (x,y,1) in the projective coordinate, and a formula of doubling in the projective coordinate of the Montgomery-form elliptic curve is used to calculate the doubled point 2P. In step 403, the point P on the elliptic curve inputted into the scalar multiplication unit 103 and the point 2P obtained in the step 402 are stored as a set of points (P,2P). Here, the points P and 2P are represented by the projective coordinate. It is judged in step 404 whether or not the variable I agrees with the bit length of the scalar value d. With agreement, the flow goes to step 413. With disagreement, the flow goes to step 405. The variable I is increased by 1 in the step 405. It is judged in step 406 whether the value of an I-th bit of the scalar value is 0 or 1. When the value of the bit is 0, the flow goes to the step 407. When the value of the bit is 1, the flow goes to step 410. In step 407, addition mP+(m+1)P of points mP and (m+1)P is performed from a set of points (mP,(m+1)P) represented by the projective coordinate, and a point (2m+1)P is calculated. Thereafter, the flow goes to step 408. Here, the addition mP+(m+1)P is calculated using the addition formula in the projective coordinate of the Montgomery-form elliptic curve. In step 408, doubling 2(mP) of the point mP is performed from the set of points (mP,(m+1)P) represented by the projective coordinate, and the point 2mP is calculated. Thereafter, the flow goes to step 409. Here, the doubling 2(mP) is calculated using the formula of doubling in the projective coordinate of the Montgomery-form elliptic curve. In the step 409, the point 2mP obtained in the step 408 and the point (2m+1)P obtained in the step 407 are stored as a set of points (2mP, (2m+1)P) instead of the set of points (mP, (m+1)P). Thereafter, the flow returns to the step 404. Here, the points 2mP, (2m+1)P, mP, and (m+1)P are all represented in the projective coordinates. In step 410, addition mP+(m+1)P of the points mP, (m+1)P is performed from the set of points (mP,(m+1)P) represented by the projective coordinates, and the point (2m+1)P is calculated. Thereafter, the flow goes to step 411. Here, the addition mP+(m+1)P is calculated using the addition formula in the projective coordinates of the Montgomery-form elliptic curve. In the step 411, doubling 2((m+1)P) of the point (m+1)P is performed from the set of points (mP,(m+1)P) represented by the projective coordinates, and a point (2m+2)P is calculated. Thereafter, the flow goes to step 412. Here, the doubling 2((m+1)P) is calculated using the formula of doubling in the projective coordinates of the Montgomery-form elliptic curve. In the step 412, the point (2m+1)P obtained in the step 410 and the point (2m+2)P obtained in the step 411 are stored as a set of points ((2m+1)P, (2m+2)P) instead of the set of points (mP, (m+1)P). Thereafter, the flow returns to the step 404. Here, the points (2m+1)P, (2m+2)P, mP, and (m+1)P are all represented in the projective coordinates. In step 413, from the set of points (mP,(m+1)P) represented by the projective coordinates, $X_m$ and $Z_m$ are outputted as $X_d$ and $Z_d$ from the point $mP=(X_m,Y_m,Z_m)$ represented by the projective coordinates, and $X_{m+1}$ and $Z_{m+1}$ are outputted as $X_{d+1}$ and $Z_{d+1}$ from the point $(m+1)P=(X_{m+1},Y_{m+1}, Z_{m+1})$ represented by the projective coordinates. Here, $Y_m$ and $Y_{m+1}$ are not obtained, because Y-coordinate cannot be obtained by the addition and doubling formulae in the projective coordinates of the Montgomery-form elliptic curve. Moreover, by the aforementioned procedure, m and the scalar value d have an equal bit length and further have the same pattern of the bit, and are therefore equal.

The computational amount of the addition formula in the projective coordinates of the Montgomery-form elliptic curve is 3M+2S with $Z_1$=1. Here, M is the computational amount of multiplication on the finite field, and S is the computational amount of squaring on the finite field. The computational amount of the formula of doubling in the projective coordinates of the Montgomery-form elliptic curve is 3M+2S. When the value of the I-th bit of the scalar value is 0, the computational amount of addition in the step 407, and the computational amount of doubling in the step 408 are required. That is, a computational amount of 6M+4S is required. When the value of the I-th bit of the scalar value is 1, the computational amount of addition in the step 410, and the computational amount of doubling in the step 411 are required. That is, the computational amount of 6M+4S is required. In any case, the computational amount of 6M+4S is required. The number of repetitions of the steps 404, 405, 406, 407, 408, 409, or the steps 404, 405, 406, 410, 411, 412 is (bit length of the scalar value d)-1. Therefore, in consideration of the computational amount of doubling in the step 402, the entire computational amount is (6M+4S)(k-1)+3M+2S. Here, k is a bit length of the scalar value d. In general, since a computational amount S is estimated to be of the order of S=0.8M, the entire computational amount is approximately (9.2k-4.6)M. For example, when the scalar value d indicates 160 bits (k=160), the computational amount of algorithm of the aforementioned procedure is about 1467 M. The computational amount per bit of the scalar value d is about 9.2 M. In A. Miyaji, T. Ono, H. Cohen, Efficient elliptic curve exponentiation using mixed coordinates, Advances in Cryptology Proceedings of ASIACRYPT'98, LNCS 1514 (1988) pp.51-65, a scalar multiplication method using a window method and mixed coordinates mainly including Jacobian coordinates in a Weierstrass-form elliptic curve is described as a fast scalar multiplication method. In this case, the computational amount per bit of the scalar value is estimated to be about 10 M. For example, when the scalar value d indicates 160 bits (k=160), the computational amount of the scalar multiplication method is about 1600 M. Therefore, the algorithm of the aforementioned procedure can be said to have a small computational amount and high speed.

Additionally, instead of using the algorithm of the aforementioned procedure in the fast scalar multiplication unit 202, another algorithm may be used as long as the algorithm outputs $X_d$, $Y_d$, $X_{d+1}$, $Z_{d+1}$ from the scalar value d and the point P on the Montgomery-form elliptic curve at high speed.

The computational amount required for recovering the coordinate of the coordinate recovering unit 203 in the scalar multiplication unit 103 is 15M+2S+1, and this is far small as compared with a computational amount of (9.2k-4.6)M necessary for fast scalar multiplication of the fast scalar multiplication unit 202. Therefore, the computational amount necessary for the scalar multiplication of the scalar multiplication unit 103 is substantially equal to the computational amount necessary for the fast scalar multiplication of the fast scalar multiplication unit. Assuming I=40M, S=0.8M, the computational amount can be estimated to be about (9.2k+52)M. For example, when the scalar value d indicates 160 bits (k=160), the computational amount necessary for the scalar multiplication is 1524 M. The Weierstrass-form elliptic curve is used as the elliptic curve, the scalar multiplication method is used in which the window method and the mixed coordinates mainly including the Jacobian coordinates are used, and the scalar-multiplied point is outputted as the affine coordinates. In this case, the required computational amount is about 1640 M, and as compared with this, the required computational amount is reduced.

In a second embodiment, the scalar multiplication unit 103 calculates and outputs a scalar-multiplied point $(X_d,Y_d,Z_d)$ with the complete coordinate given thereto as a point of the projective coordinates in the Montgomery-form elliptic curve from the scalar value d and the point P on the Montgomery-form elliptic curve. The scalar value d and the point P on the Montgomery-form elliptic curve are inputted into the scalar multiplication unit 103 and then received by the fast scalar multiplication unit 202. The fast scalar multiplication unit 202 calculates $X_d$ and $Z_d$ in the coordinate of the scalar-multiplied point $dP=(X_d,Y_d,Z_d)$ represented by the projective coordinates in the Montgomery-form elliptic curve, and $X_{d+1}$ and $Z_{d+1}$ in the coordinate of the point on the Montgomery-form elliptic curve $(d+1)P=(X_{d+1},Y_{d+1},Z_{d+1})$ represented by the projective coordinates from the received scalar value d and the given point P on the Montgomery-form elliptic curve, and gives the information together with the inputted point P=(x,y) on the Montgomery-form elliptic curve represented by the affine coordinates to the coordinate recovering unit 203. The coordinate recovering unit 203 recovers coordinate $X_d$, $Y_d$, and $Z_d$ of the scalar-multiplied point $dP=(X_d,Y_d,Z_d)$ represented by the projective coordinates in the Montgomery-form elliptic curve from the given coordinate values $X_d$, $Z_d$, $X_{d+1}$, $Z_{d+1}$, x and y. The scalar multiplication unit 103 outputs the scalar-multiplied point $(X_d,Y_d,Z_d)$ with the coordinate completely given thereto in the projective coordinates as the calculation output.

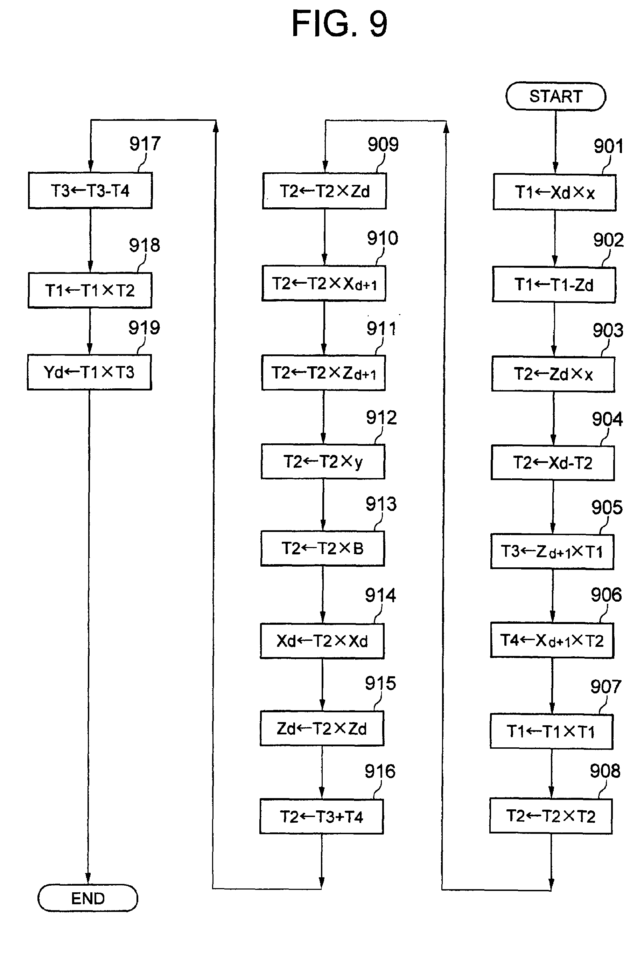

A processing of the coordinate recovering unit which outputs $X_d$, $Y_d$, $Z_d$ from the given coordinate x, y, $X_d$, $Z_d$, $X_{d+1}$, $Z_{d+1}$ will next be described with reference to FIG. 9.

The coordinate recovering unit 203 inputs $X_d$ and $Z_d$ in the coordinate of the scalar-multiplied point $dP=(X_d, Y_d,Z_d)$ represented by the projective coordinates in the Montgomery-form elliptic curve, $X_{d+1}$ and $Z_{d+1}$ in the coordinate of the point on the Montgomery-form elliptic curve $(d+1)P=(X_{d+1},Y_{d+1},Z_{d+1})$ represented by the projective coordinates, and (x,y) as representation of the point P on the Montgomery-form elliptic curve inputted into the scalar multiplication unit 103 in the affine coordinates, and outputs the scalar-multiplied point $(X_d,Y_d,Z_d)$ with the complete coordinate given thereto in the projective coordinates in the following procedure. Here, the affine coordinate of the inputted point P on the Montgomery-form elliptic curve is represented by (x,y), and the projective coordinate thereof is represented by $(X_1, Y_1,Z_1)$. Assuming that the inputted scalar value is d, the affine coordinate of the scalar-multiplied point dP in the Montgomery-form elliptic curve is represented by $(x_d,y_d)$, and the projective coordinate thereof is represented by $(X_d,Y_d, Z_d)$. The affine coordinate of the point (d-1)P on the Montgomery-form elliptic curve is represented by $(x_{d-1},Y_{d-1})$, and the projective coordinate thereof is represented by $(X_{d-1},Y_{d-1},Z_{d-1})$. The affine coordinate of the point (d+1)P on the Montgomery-form elliptic curve is represented by $(x_{d+1},y_{d+1})$, and the projective coordinate thereof is represented by $(X_{d+1},Y_{d+1},Z_{d+1})$.

In step 901 $X_d \times x$ is calculated, and stored in the register $T_1$. In step 902 $T_1-Z_d$ is calculated. Here, $X_d x$ is stored in the register $T_1$, and $X_d x-Z_d$ is therefore calculated. The result is stored in the register $T_1$. In step 903 $Z_d \times x$ is calculated, and stored in the register $T_2$. In step 904 $X_d-T_2$ is calculated. Here, $Z_d x$ is stored in the register $T_2$, and $X_d-xZ_d$ is therefore calculated. The result is stored in the register $T_2$. In step 905 $Z_{d+1} \times T_1$ is calculated. Here, $X_d x-Z_d$ is stored in the register $T_1$, and $Z_{d+1}(X_d x-Z_d)$ is therefore calculated. The result is stored in the register $T_3$. In step 906 $X_{d+1} \times T_2$ is calculated. Here, $X_d-xZ_d$ is stored in the register $T_2$, and $X_{d+1}(X_d-xZ_d)$ is therefore calculated. The result is stored in the register $T_4$. In step 907 a square of $T_1$ is calculated. Here, $X_d x-Z_d$ is stored in the register $T_1$, and $(X_d x-Z_d)^2$ is therefore calculated. The result is stored in the register $T_1$. In step 908 a square of $T_2$ is calculated. Here, $X_d-xZ_d$ is stored in the register $T_2$, and $(X_d-xZ_d)^2$ is therefore calculated. The result is stored in the register $T_2$. In step 909 $T_2 \times Z_d$ is calculated. Here, $(X_d-xZ_d)^2$ is stored in the register $T_2$, and $Z_d(X_d-xZ_d)^2$ is therefore calculated. The result is stored in the register $T_2$. In step 910 $T_2 \times X_{d+1}$ is calculated. Here, $Z_d(X_d-xZ_d)^2$ is stored in the register $T_2$, and $X_{d+1}Z_d(X_d-xZ_d)^2$ is therefore calculated. The result is stored in the register $T_2$. In step 911 $T_2 \times Z_{d+1}$ is calculated. Here, $X_{d+1}Z_d$

$(X_d-xZ_d)^2$ is stored in the register $T_2$, and $Z_{d+1}X_{d+1}Z_d(X_d-xZ_d)^2$ is therefore calculated. The result is stored in the register $T_2$. In step 912 $T_2\times y$ is calculated. Here, $Z_{d+1}X_{d+1}Z_d(X_d-xZ_d)^2$ is stored in the register $T_2$, and $yZ_{d+1}X_{d+1}Z_d(X_d-xZ_d)^2$ is therefore calculated. The result is stored in the register $T_2$. In step 913 $T_2\times B$ is calculated. Here, $yZ_{d+1}X_{d+1}Z_d(X_d-xZ_d)^2$ is stored in the register $T_2$, and $ByZ_{d+1}X_{d+1}Z_d(X_d-xZ_d)^2$ is therefore calculated. The result is stored in the register $T_2$. In step 914 $T_2\times X_d$ is calculated. Here, $ByZ_{d+1}X_{d+1}Z_d(X_d-xZ_d)^2$ is stored in the register $T_2$, and $ByZ_{d+1}X_{d+1}Z_d(X_d-xZ_d)^2X_d$ is therefore calculated. The result is stored in the register $X_d$. In step 915 $T_2\times Z_d$ is calculated. Here, $ByZ_{d+1}X_{d+1}Z_d(X_d-xZ_d)^2$ is stored in the register $T_2$, and $ByZ_{d+1}X_{d+1}Z_d(X_d-xZ_d)^2Z_d$ is therefore calculated. The result is stored in the register $Z_d$. In step 916 $T_3+T_4$ is calculated. Here $X_{d+1}(X_dx-Z_d)$ is stored in the register $T_3$, $X_{d+1}(X_d-xZ_d)$ is stored in the register $T_4$, and therefore $Z_{d+1}(X_dx-Z_d)+X_{d+1}(X_d-xZ_d)$ is calculated. The result is stored in the register $T_2$. In step 917 $T_3-T_4$ is calculated. Here $Z_{d+1}(X_dx-Z_d)$ is stored in the register $T_3$, $X_{d+1}(X_d-xZ_d)$ is stored in the register $T_4$, and therefore $Z_{d+1}(X_dx-Z_d)-X_{d+1}(X_d-xZ_d)$ is calculated. The result is stored in the register $T_3$. In step 918 $T_1\times T_2$ is calculated. Here $(X_dx-Z_d)^2$ is stored in the register $T_1$, $Z_{d+1}(X_dx-Z_d)+X_{d+1}(X_d-xZ_d)$ is stored in the register $T_2$, and therefore $\{Z_{d+1}(X_dx-Z_d)+X_{d+1}(X_d-xZ_d)\}(X_dx-Z_d)^2$ is calculated. The result is stored in the register $T_1$. In step 919 $T_1\times T_3$ is calculated. Here $\{Z_{d+1}(X_dx-Z_d)+X_{d+1}(X_d-xZ_d)\}(X_dx-Z_d)^2$ is stored in the register $T_1$, $Z_{d+1}(X_dx-Z_d)-X_{d+1}(X_d-xZ_d)$ is stored in the register $T_3$, and therefore $\{Z_{d+1}(X_dx-Z_d)+X_{d+1}(X_d-xZ_d)\}\{Z_{d+1}(X_dx-Z_d)-X_{d+1}(X_d-xZ_d)\}(X_dx-Z_d)^2$ is calculated. The result is stored in the register $Y_d$. Therefore, $\{Z_{d+1}(X_dx-Z_d)+X_{d+1}(X_d-xZ_d)\}\{Z_{d+1}(X_dx-Z_d)-X_{d+1}(X_d-xZ_d)\}(X_dx-Z_d)^2$ is stored in the register $Y_d$. In the step 914 $ByZ_{d+1}X_{d+1}Z_{d+1}(X_d-xZ_d)^2X_d$ is stored in the register $X_d$, and is not updated, and the value is held. In the step 915 $ByZ_{d+1}X_{d+1}Z_{d+1}(X_d-xZ_d)^2$ is stored in the register $Z_d$, and is not updated thereafter, and the value is therefore held.

A reason why all values in the projective coordinate $(X_d,Y_d,Z_d)$ of the scalar-multiplied point are recovered from x, y, $X_d$, $Z_d$, $X_{d+1}$, $Z_{d+1}$ given by the aforementioned procedure is as follows. The point (d+1)P is a point obtained by adding the point P to the point dP, and the point (d-1)P is a point obtained by subtracting the point P from the point dP. Assignment to the addition formulae in the affine coordinates of the Montgomery-form elliptic curve results in Equations 6, 7. When the opposite sides are individually subjected to subtraction, Equation 8 is obtained. Therefore, Equation 9 results. Here, $x_d=X_d/Z_d$, $x_{d+1}=X_{d+1}/Z_{d+1}$, $x_{d-1}=X_{d-1}/Z_{d-1}$. The value is assigned and thereby converted to the value of the projective coordinate. Then, Equation 10 is obtained.

The addition formulae in the projective coordinate of the Montgomery-form elliptic curve are Equations 11 and 12. Here, $X_m$ and $Z_m$ are X-coordinate and Z-coordinate in the projective coordinate of the m-multiplied point mP of the point P on the Montgomery-form elliptic curve, $X_n$ and $Z_n$ are X-coordinate and Z-coordinate in the projective coordinate of the n-multiplied point nP of the point P on the Montgomery-form elliptic curve, $X_{m-n}$ and $Z_{m-n}$ are X-coordinate and Z-coordinate in the projective coordinate of the (m-n)-multiplied point (m-n)P of the point P on the Montgomery-form elliptic curve, $X_{m+n}$ and $Z_{m+n}$ are X-coordinate and Z-coordinate in the projective coordinate of the (m+n)-multiplied point (m+n)P of the point P on the Montgomery-form elliptic curve, and m, n are positive integers satisfying m>n. In the equation when $X_m/Z_m=x_m$, $X_n/Z_n=x_n$, $X_{m-n}/Z_{m-n}=x_{m-n}$ are unchanged, $X_{m+n}/Z_{m+n}=x_{m+n}$ is also unchanged. Therefore, this functions well as the formula in the projective coordinate. On the other hand, for Equations 14, 15, when $X_m/Z_m=x_m$, $X_n/Z_n=x_n$, $X_{m+n}/Z_{m+n}-x_{m+n}$ are unchanged in this equation, $X'_{m-n}/Z'_{m-n}$ is also unchanged. Moreover, since $X'_{m-n}/Z'_{m-n}=X_{m-n}/Z_{m-n}=x_{m-n}$ is satisfied, $X'_{m-n}$, $Z'_{m-n}$ may be taken as the projective coordinate of $x_{m-n}$. When m=d, n=1 are set, the above formula is used, $X_{d-1}$ and $Z_{d-1}$ are deleted from the equation of $y_d$, and $X_1=x$, $Z_1=1$ are set, Equation 15 is obtained. Although $x_d=X_d/Z_d$, reduction to the denominator common with that of $y_d$ is performed, and Equation 16 is obtained.

As a result, the following equation is obtained.

$$Y_d = \{Z_{d+1}(X_dx-Z_d) + X_{d+1}(X_d-xZ_d)\}\{Z_{d+1}(X_dx-Z_d) - X_{d+1}(X_d-xZ_d)\}(X_dx-Z_d)^2 \qquad \text{Equation 17}$$

Then, $X_d$ and $Z_d$ may be updated by the following equations.

$$ByZ_{d+1}X_{d+1}Z_d(X_d - xZ_d)^2X_d \qquad \text{Equation 18}$$

$$ByZ_{d+1}X_{d+1}Z_d(X_d - xZ_d)^2Z_d \qquad \text{Equation 19}$$

Here, $X_d$, $Y_d$, $Z_d$ are given by the processing of FIG. 9. Therefore, all the values of the projective coordinate $(X_d,Y_d,Z_d)$ are recovered.

For the aforementioned procedure, in the steps 901, 903, 905, 906, 909, 910, 911, 912, 913, 914, 915, 918, and 919, the computational amount of multiplication on the finite field is required. Moreover, the computational amount of squaring on the finite field is required in the steps 907 and 908. The computational amounts of addition and subtraction on the finite field are relatively small as compared with the computational amount of multiplication on the finite field and the computational amount of squaring, and may therefore be ignored. Assuming that the computational amount of multiplication'on the finite field is M, and the computational amount of squaring on the finite field is S, the above procedure requires a computational amount of 13M+2S. This is far small as compared with the computational amount of the fast scalar multiplication. For example, when the scalar value d indicates 160 bits, the computational amount of the fast scalar multiplication is estimated to be a little less than about 1500 M. Assuming S=0.8M, the computational amount of coordinate recovering is 14.6 M, and far small as compared with the computational amount of the fast scalar multiplication. Therefore, it is indicated that the coordinate can efficiently be recovered.

Additionally, even when the above procedure is not taken, the values of $X_d$, $Y_d$, $Z_d$ given by the above equation can be calculated, and the values of $X_d$, $Y_d$, $Z_d$ can then be recovered. Moreover, the values of $X_d$, $Y_d$, $Z_d$ are selected so that $x_d$, $y_d$ take the values given by the aforementioned equations, the values can be calculated, and then $X_d$, $Y_d$, $Z_d$ can be recovered. In this case, the computational amount required for recovering generally increases. Furthermore, when the value of B as the parameter of the elliptic curve is set to be small, the computational amount of multiplication in the step 913 can be reduced.

An algorithm which outputs $X_d$, $Z_d$, $X_{d+1}$, $Z_{d+1}$ from the scalar value d and the point P on the Montgomery-form elliptic curve will next be described.

The fast scalar multiplication method of the first embodiment is used as the fast scalar multiplication method of the fast scalar multiplication unit 202 of the second embodiment. Thereby, as the algorithm which outputs $X_d$, $Z_d$, $X_{d+1}$, $Z_{d+1}$ from the scalar value d and the point P on the Montgomery-form elliptic curve, a fast algorithm is achieved. Additionally, instead of using the aforementioned algorithm in the fast scalar multiplication unit 202, another algorithm may be used as long as the algorithm outputs $X_d$, $Z_d$, $X_{d+1}$, $Z_{d+1}$ from the scalar value d and the point P on the Montgomery-form elliptic curve at high speed.

The computational amount required for recovering the coordinate of the coordinate recovering unit 203 in the scalar multiplication unit 103 is 13M+2S, and this is far small as compared with the computational amount of (9.2k-4.6)M necessary for fast scalar multiplication of the fast scalar multiplication unit 202. Therefore, the computational amount necessary for the scalar multiplication of the scalar multiplication unit 103 is substantially equal to the computational amount necessary for the fast scalar multiplication of the fast scalar multiplication unit. Assuming S=0.8M, the computational amount can be estimated to be about (9.2k+10)M. For example, when the scalar value d indicates 160 bits (k=160), the computational amount necessary for the scalar multiplication is 1482 M. The Weierstrass-form elliptic curve is used as the elliptic curve, the scalar multiplication method is used in which the window method and the mixed coordinates mainly including the Jacobian coordinates are used, and the scalar-multiplied point is outputted as the Jacobian coordinates. In this case, the required computational amount is about 1600 M, and as compared with this, the required computational amount is reduced.

In a third embodiment, the scalar multiplication unit 103 calculates and outputs a scalar-multiplied point ($x_d$, $y_d$) with the complete coordinate given thereto as a point of the affine coordinates in the Montgomery-form elliptic curve from the scalar value d and the point P on the Montgomery-form elliptic curve. The scalar value d and the point P on the Montgomery-form elliptic curve are inputted into the scalar multiplication unit 103 and then received by the fast scalar multiplication unit 202. The fast scalar multiplication unit 202 calculates $X_d$ and $Z_d$ in the coordinate of the scalar-multiplied point $dP=(X_d,Y_d,Z_d)$ represented by the projective coordinates in the Montgomery-form elliptic curve, $X_{d+1}$ and $Z_{d+1}$ in the coordinate of the point on the Montgomery-form elliptic curve $(d+1)P=(X_{d+1},Y_{d+1},Z_{d+1})$ represented by the projective coordinates, and $X_{d-1}$ and $Z_{d-1}$ in the coordinate of the point on the Montgomery-form elliptic curve $(d-1)P= (X_{d-1},Y_{d-1},Z_{d-1})$ represented by the projective coordinates from the received scalar value d and the given point P on the Montgomery-form elliptic curve, and gives the information together with the inputted point $P=(x,y)$ on the Montgomery-form elliptic curve represented by the affine coordinates to the coordinate recovering unit 203. The coordinate recovering unit 203 recovers coordinate $x_d$, and $y_d$ of the scalar-multiplied point $dP=(x_d,y_d)$ represented by the affine coordinates in the Montgomery-form elliptic curve from the given coordinate values $X_d$, $Z_d$, $X_{d+1}$, $Z_{d+1}$, $X_{d-1}$, $Z_{d-1}$, x and y. The scalar multiplication unit 103 outputs the scalar-multiplied point ($x_d,y_d$) with the coordinate completely given thereto in the affine coordinates as the calculation output.

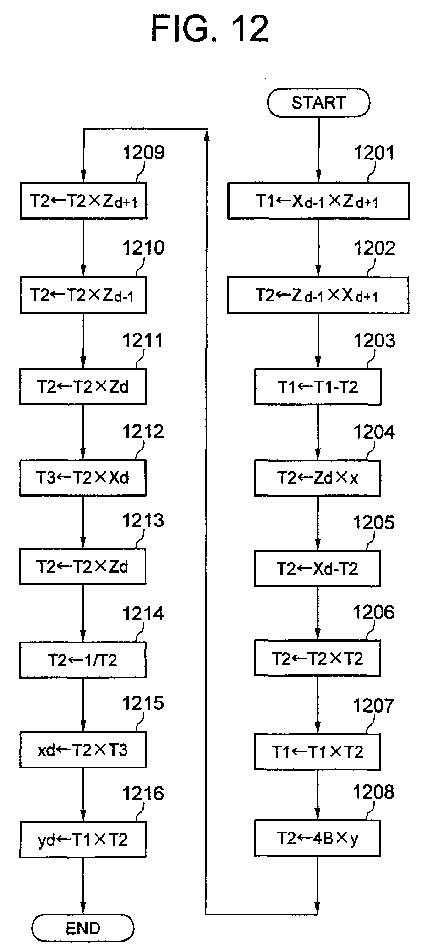

A processing of the coordinate recovering unit which outputs $x_d$, $y_d$ from the given coordinate x, y, $X_d$, $Z_d$, $X_{d+1}$, $Z_{d+1}$, $X_{d-1}$, $Z_{d-1}$ will next be described with reference to FIG. 12.

The coordinate recovering unit 203 inputs $X_d$ and $Z_d$ in the coordinate of the scalar-multiplied point $dP=(X_d, Y_d,Z_d)$ represented by the proj ective coordinates in the Montgomery-form elliptic curve, $X_{d+1}$ and $Z_{d+1}$ in the coordinate of the point on the Montgomery-form elliptic curve $(d+1)P=(X_{d+1},Y_{d+1},Z_{d+1})$ represented by the projective coordinates, $X_{d-1}$ and $Z_{d-1}$ in the coordinate of the point on the Montgomery-form elliptic curve $(d-1)P= (X_{d-1},Y_{d-1},Z_{d-1})$ represented by the projective coordinates, and (x,y) as representation of the point P on the Montgomery-form elliptic curve in the affine coordinates inputted into the scalar multiplication unit 103, and outputs the scalar-multiplied point ($x_d,y_d$) with the complete coordinate given thereto in the affine coordinates in the following procedure. Here, the affine coordinate of the inputted point P on the Montgomery-form elliptic curve is represented by (x,y), and the projective coordinate thereof is represented by $(X_1,Y_1,Z_1)$. Assuming that the inputted scalar value is d, the affine coordinate of the scalar-multiplied point dP in the Montgomery-form elliptic curve is represented by $(x_d,y_d)$, and the projective coordinate thereof is represented by $(X_d,Y_d,Z_d)$. The affine coordinate of the point (d-1)P on the Montgomery-form elliptic curve is represented by $(x_{d-1},y_{d-1})$, and the projective coordinate thereof is represented by $(X_{d-1},Y_{d-1},Z_{d-1})$. The affine coordinate of the point (d+1)P on the Montgomery-form elliptic curve is represented by $(x_{d+1},y_{d+1})$, and the projective coordinate thereof is represented by $(X_{d+1},Y_{d+1},Z_{d+1})$.

In step 1201 $X_{d-1} \times Z_{d+1}$ is calculated, and stored in the register $T_1$. In step 1202 $Z_{d-1} \times X_{d+1}$ is calculated, and stored in the register $T_2$. In step 1203 $T_1-T_2$ is calculated. Here, $X_{d-1}Z_{d+1}$ is stored in the register $T_1$, $Z_{d-1}X_{d+1}$ is stored in the register $T_2$, and $X_{d-1}Z_{d+1}-Z_{d-1}X_{d+1}$ is therefore calculated. The result is stored in the register $T_1$. In step 1204 $Z_d \times x$ is calculated, and stored in the register $T_2$. In step 1205 $X_d-T_2$ is calculated. Here, $Z_dx$ is stored in the register $T_2$, and $X_d-xZ_d$ is therefore calculated. The result is stored in the register $T_2$. In step 1206 a square of $T_2$ is calculated. Here, $(X_d-xZ_d)$ is stored in the register $T_2$, and $(X_d-xZ_d)^2$ is therefore calculated. The result is stored in the register $T_2$. In step 1207 $T_1 \times T_2$ is calculated. Here, $X_{d-1}-Z_{d+1}-Z_{d-1}X_{d+1}$ is stored in the register $T_1$, $(X_d-xZ_d)^2$ is stored in the register $T_2$, and therefore $(X_d-xZ_d)^2(X_{d-1}Z_{d+1}-Z_{d-1}X_{d+1})$ is calculated. The result is stored in the register $T_1$. In step 1208 $4B \times y$ is calculated. The result is stored in the register $T_2$. In step 1209 $T_2 \times Z_{d+1}$ is calculated. Here, $4By$ is stored in the register $T_2$, and $4ByZ_{d+1}$ is therefore calculated. The result is stored in the register $T_2$. In step 1210 $T_2 \times Z_{d-1}$ is calculated. Here, $4ByZ_{d+1}$ is stored in the register $T_2$, and $4ByZ_{d-1}Z_{d+1}$ is therefore calculated. The result is stored in the register $T_2$. In step 1211 $T_2 \times Z_d$ is calculated. Here, $4ByZ_{d+1}Z_{d-1}$ is stored in the register $T_2$, and $4ByZ_{d+1}Z_{d-1}Z_d$ is therefore calculated. The result is stored in the register $T_2$. In step 1212 $T_2 \times X_d$ is calculated. Here, $4ByZ_{d-1}Z_{d+1}Z_d$ is stored in the register $T_2$, and $4ByZ_{d+1}Z_{d-1}Z_dX_d$ is therefore calculated. The result is stored in the register $T_3$. In step 1213 $T_2 \times Z_d$ is calculated. Here, $4ByZ_{d+1}Z_{d-1}Z_d$ is stored in the register $T_2$, and $4ByZ_{d+1}Z_{d-1}Z_dZ_d$ is therefore calculated. The result is stored in the register $T_2$. In step 1214 the inverse element of the register $T_2$ is calculated. Here, $4ByZ_{d+1}Z_{d-1}Z_dZ_d$ is stored in the register $T_2$, and therefore $1/4ByZ_{d+1}Z_{d-1}Z_dZ_d$ is calculated. The result is stored in the register $T_2$. In step 1215 $T_2 \times T_3$ is calculated. Here, $1/4ByZ_{d+1}Z_{d-1}Z_dZ_d$ is stored in the register $T_2$, $4ByZ_{d+1}Z_{d-1}Z_dX_d$ is stored in the register $T_3$, and therefore $(4ByZ_{d+1}Z_{d-1}Z_dX_d)/(4ByZ_{d+1}Z_{d-1}Z_dZ_d)$ is calculated. The result is stored in the register $x_d$. In step 1216 $T_1 \times T_2$ is calculated. Here, $(X_d-xZ_d)^2(X_{d-1}Z_{d+1}-Z_{d-1}X_{d+1})$ is stored in the register $T_1$, $1/4ByZ_{d+1}Z_{d-1}Z_dZ_d$ is stored in the register $T_2$, and therefore $(X_{d-1}Z_{d+1}-Z_{d-1}X_{d+1})(X_d-xZ_d)^2/4ByZ_{d-1}Z_{d+1}Z_d^2$ is calculated. The result is stored in the register $y_d$. Therefore, $(X_{d-1}Z_{d+1}-Z_{d-1}X_{d+1})(X_d-Z_dx)^2/4ByZ_{d-1}Z_{d+1}Z_d^2$ is stored in the register $y_d$. In the step 1215 $(4ByZ_{d+1}Z_{d-1}Z_dX_d)/(4ByZ_{d+1}Z_{d-1}Z_dZ_d)$ is stored in the register $x_d$, and is not updated thereafter, and therefore the value is held.

A reason why all values in the affine coordinate $(x_d,y_d)$ of the scalar-multiplied point in the Montgomery-form elliptic curve are recovered from x, y, $X_d$, $Z_d$, $X_{d+1}$, $Z_{d+1}$, $X_{d-1}$, $Z_{d-1}$ given by the aforementioned procedure is as follows. The point (d+1)P is a point obtained by adding the point P to the point dP, and the point (d-1)P is a point obtained by subtracting the point P from the point dP.

Assignment to the addition formulae in the affine coordinates of the Montgomery-form elliptic curve results in Equations 6, 7. When the opposite sides are individually subjected to subtraction, Equation 8 is obtained. Therefore, Equation 9 results. Here, $x_d=X_d/Z_d$, $x_{d+1}=X_{d+1}/Z_{d+1}$, $x_{d-1}=X_{d-1}/Z_{d-1}$. The value is assigned and thereby converted to the value of the projective coordinate. Then, Equation 10 is obtained.

Although $x_d=X_d/Z_d$, reduction to the denominator common with that of $y_d$ is performed for the purpose of reducing the frequency of inversion, and the following equation is obtained.

$$x_d = \frac{4ByZ_{d+1}Z_{d-1}Z_dX_d}{4ByZ_{d+1}Z_{d-1}Z_dZ_d} \qquad \text{Equation 20}$$

Here, $x_d$, $y_d$ are given by the processing shown in FIG. 12. Therefore, all the values of the affine coordinate $(x_d,y_d)$ are recovered.

For the aforementioned procedure, in the steps 1201, 1202, 1204, 1207, 1208, 1209, 1210, 1211, 1212, 1213, 1215, and 1216, the computational amount of multiplication on the finite field is required. Moreover, the computational amount of squaring on the finite field is required in the step 1206. Moreover, the computational amount of inversion on the finite field is required in the step 1214. The computational amounts of addition and subtraction on the finite field are relatively small as compared with the computational amount of multiplication on the finite field and the computational amounts of squaring and inversion, and may be ignored. Assuming that the computational amount of multiplication on the finite field is M, the computational amount of squaring on the finite field is S, and the computational amount of inversion on the finite field is I, the above procedure requires a computational amount of 12M+S+I. This is very small as compared with the computational amount of fast scalar multiplication. For example, when the scalar value d indicates 160 bits, the computational amount of the fast scalar multiplication is estimated to be a little less than about 1500 M. Assuming S=0.8M, I=40M, the computational amount of coordinate recovering is 52.8 M, and this is very small as compared with the computational amount of the fast scalar multiplication. Therefore, it is indicated that the coordinate can efficiently be recovered.

Additionally, even when the above procedure is not taken, the values of $x_d$, $y_d$ given by the above equation can be calculated, and the values of $x_d$, $y_d$ can then be recovered. In this case, the computational amount required for recovering generally increases. Furthermore, when the value of B as the parameter of the elliptic curve is set to be small, the computational amount of multiplication in the step 1208 can be reduced.

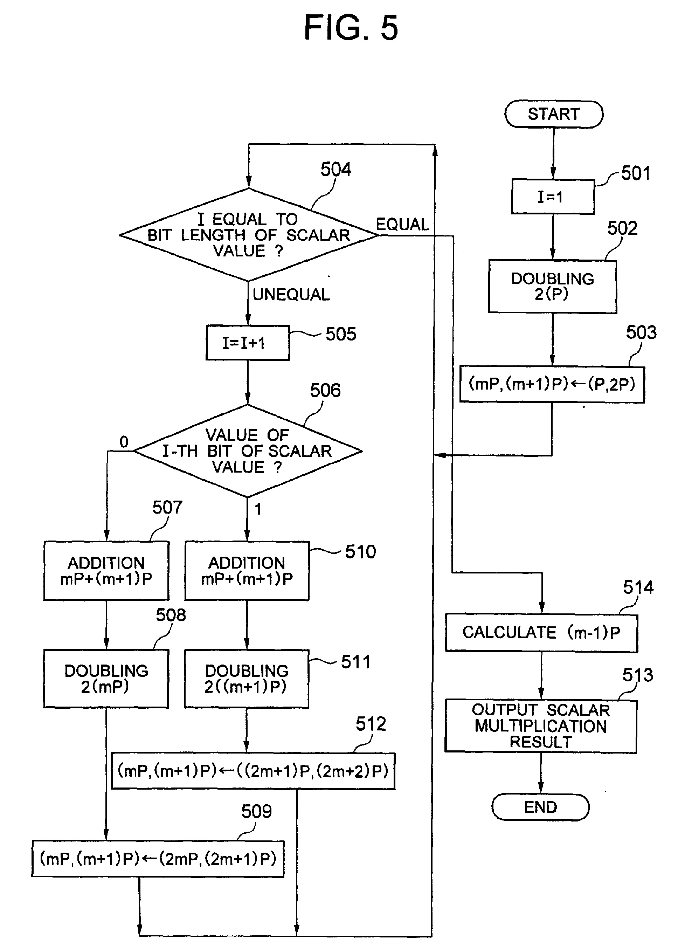

A processing of the fast scalar multiplication unit which outputs $X_d$, $Z_d$, $X_{d+1}$, $Z_{d+1}$, $X_{d-1}$, $Z_{d-1}$ from the scalar value d and the point P on the Montgomery-form elliptic curve will next be described with reference to FIG. 5.

The fast scalar multiplication unit 202 inputs the point P on the Montgomery-form elliptic curve inputted into the scalar multiplication unit 103, and outputs $X_d$ and $Z_d$ in the scalar-multiplied point $dP=(X_d,Y_d,Z_d)$ represented by the projective coordinate in the Montgomery-form elliptic curve, $X_{d+1}$ and $Z_{d+1}$ in the point $(d+1)P=(X_{d+1},Y_{d+1},Z_{d+1})$ on the Montgomery-form elliptic curve represented by the projective coordinate, and $X_{d-1}$ and $Z_{d-1}$ in the point $(d-1)P= (X_{d-1},Y_{d-1},Z_{d-1})$ on the Montgomery-form elliptic curve represented by the projective coordinate by the following procedure. In step 501, the initial value 1 is assigned to the variable I. The doubled point 2P of the point P is calculated in step 502. Here, the point P is represented as (x,y,1) in the projective coordinate, and the formula of doubling in the projective coordinate of the Montgomery-form elliptic curve is used to calculate the doubled point 2P. In step 503, the point P on the elliptic curve inputted into the scalar multiplication unit 103 and the point 2P obtained in the step 502 are stored as a set of points (P,2P). Here, the points P and 2P are represented by the projective coordinate. It is judged in step 504 whether or not the variable I agrees with the bit length of the scalar value d. With agreement, m=d is satisfied, and the flow goes to step 514. With disagreement, the flow goes to step 505. The variable I is increased by 1 in the step 505. It is judged in step 506 whether the value of an I-th bit of the scalar value is 0 or 1. When the value of the bit is 0, the flow goes to the step 507. When the value of the bit is 1, the flow goes to step 510. In step 507, addition mP+(m+1)P of points mP and (m+1)P is performed from the set of points (mP,(m+1)P) represented by the projective coordinate, and the point (2m+1)P is calculated. Thereafter, the flow goes to step 508. Here, the addition mP+(m+1)P is calculated using the addition formula in the projective coordinate of the Montgomery-form elliptic curve. In step 508, doubling 2(mP) of the point mP is performed from the set of points (mP,(m+1)P) represented by the projective coordinate, and the point 2mP is calculated. Thereafter, the flow goes to step 509. Here, the doubling 2(mP) is calculated using the formula of doubling in the projective coordinate of the Montgomery-form elliptic curve. In the step 509, the point 2mP obtained in the step 508 and the point (2m+1)P obtained in the step 507 are stored as the set of points (2mP, (2m+1)P) instead of the set of points (mP, (m+1)P). Thereafter, the flow returns to the step 504. Here, the points 2mP, (2m+1)P, mP, and (m+1)P are all represented in the projective coordinates. In step 510, addition mP+ (m+1)P of the points mP, (m+1)P is performed from the set of points (mP,(m+1)P) represented by the projective coordinates, and the point (2m+1)P is calculated. Thereafter, the flow goes to step 511. Here, the addition mP+(m+1)P is calculated using the addition formula in the projective coordinates of the Montgomery-form elliptic curve. In the step 511, doubling 2((m+1)P) of the point (m+1)P is performed from the set of points (mP,(m+1)P) represented by the projective coordinates, and the point (2m+2)P is calculated. Thereafter, the flow goes to step 512. Here, the doubling 2((m+1)P) is calculated using the formula of doubling in the projective coordinates of the Montgomery-form elliptic curve. In the step 512, the point (2m+1)P obtained in the step 510 and the point (2m+2)P obtained in the step 511 are stored as the set of points ((2m+1)P,(2m+2)P) instead of the set of points (mP,(m+1)P). Thereafter, the flow returns to the step 504. Here, the points (2m+1)P, (2m+2)P, mP, and (m+1)P are all represented in the projective coordinates. In step 514, from the set of points (mP,(m+1)P) represented by the projective coordinates, X-coordinate $X_{m-1}$ and Z-coordinate $Z_{m-1}$ in the projective coordinates of the point (m-1)P are obtained as $X_{d-1}$ and $Z_{d-1}$. Thereafter, the flow goes to step 513. In the step 513, $X_m$ and $Z_m$ are obtained as $X_d$ and $Z_d$ from the point $mP=(X_m,Y_m,Z_m)$ represented by the projective coordinates, $X_{m+1}$ and $Z_{m+1}$ are obtained as $X_{d+1}$ and $Z_{d+1}$ from the point $(m+1)P=(X_{m+1},Y_{m+1},Z_{m+1})$ represented by the projective coordinates, and these are outputted together with $X_{d-1}$ and $Z_{d-1}$. Here, $Y_m$ and $Y_{m+1}$ are not obtained, because Y-coordinate cannot be obtained by the addition and doubling formulae in the projective coordinates of the Montgomery-form elliptic curve. Moreover, by the aforementioned procedure, m and the scalar value d have an equal bit length and further have the same pattern of the bit, and are therefore equal. Moreover, when (m-1) P is obtained in the step 514, Equations 10, 11 may be used. When m is an odd number, a value of ((m-1)/2)P is separately held in the step 512, and (m-1)P may be obtained from the value by the formula of doubling of the Montgomery-form elliptic curve.

The computational amount of the addition formula in the projective coordinates of the Montgomery-form elliptic curve is 3M+2S with $Z_1=1$. Here, M is the computational amount of multiplication on the finite field, and S is the computational amount of squaring on the finite field. The computational amount of the formula of doubling in the projective coordinates of the Montgomery-form elliptic curve is 3M+2S. When the value of the I-th bit of the scalar value is 0, the computational amount of addition in the step 507, and the computational amount of doubling in the step 508 are required. That is, the computational amount of 6M+4S is required. When the value of the I-th bit of the scalar value is 1, the computational amount of addition in the step 510, and the computational amount of doubling in the step 511 are required. That is, the computational amount of 6M+4S is required. In any case, the computational amount of 6M+4S is required. The number of repetitions of the steps 504, 505, 506, 507, 508, 509, or the steps 504, 505, 506, 510, 511, 512 is (bit length of the scalar value d)-1. Therefore, in consideration of the computational amount of doubling in the step 502, and the computational amount necessary for calculating (m-1)P in the step 514, the entire computational amount is (6M+4S)k+M. Here, k is the bit length of the scalar value d. In general, since the computational amount S is estimated to be of the order of S=0.8M, the entire computational amount is approximately (9.2k+1)M. For example, when the scalar value d indicates 160 bits (k=160), the computational amount of algorithm of the aforementioned procedure is about 1473 M. The computational amount per bit of the scalar value d is about 9.2 M. In A. Miyaji, T. Ono, H. Cohen, Efficient elliptic curve exponentiation using mixed coordinates, Advances in Cryptology Proceedings of ASIACRYPT'98, LNCS 1514 (1998) pp.51-65, the scalar multiplication method using the window method and mixed coordinates mainly including Jacobian coordinates in the Weierstrass-form elliptic curve is described as the fast scalar multiplication method. In this case, the computational amount per bit of the scalar value is estimated to be about 10 M. For example, when the scalar value d indicates 160 bits (k=160), the computational amount of the scalar multiplication method is about 1600 M. Therefore, the algorithm of the aforementioned procedure can be said to have a small computational amount and high speed.

Additionally, instead of using the aforementioned algorithm in the fast scalar multiplication unit 202, another algorithm may be used as long as the algorithm outputs $X_d$, $Z_d$, $X_{d+1}$, $Z_{d+1}$ from the scalar value d and the point P on the Montgomery-form elliptic curve at high speed.

The computational amount required for recovering the coordinate of the coordinate recovering unit 203 in the scalar multiplication unit 103 is 12M+S+I, and this is far small as compared with the computational amount of (9.2k+1) M necessary for fast scalar multiplication of the fast scalar multiplication unit 202. Therefore, the computational amount necessary for the scalar multiplication of the scalar multiplication unit 103 is substantially equal to the computational amount necessary for the fast scalar multiplication of the fast scalar multiplication unit. Assuming I=40M, S=0.8M, the computational amount can be estimated to be about (9.2k+53.8)M. For example, when the scalar value d indicates 160 bits (k=160), the computational amount necessary for the scalar multiplication is about 1526 M. The Weierstrass-form elliptic curve is used as the elliptic curve, the scalar multiplication method is used in which the window method and the mixed coordinates mainly including the Jacobian coordinates are used, and the scalar-multiplied point is outputted as the affine coordinates. In this case, the required computational amount is about 1640 M, and as compared with this, the required computational amount is reduced.

In a fourth embodiment, the scalar multiplication unit 103 calculates and outputs a scalar-multiplied point ($X_d$, $Y_d$, $Z_d$) with the complete coordinate given thereto as a point of the projective coordinates in the Montgomery-form elliptic curve from the scalar value d and the point P on the Montgomery-form elliptic curve. The scalar value d and the point P on the Montgomery-form elliptic curve are inputted into the scalar multiplication unit 103 and then received by the fast scalar multiplication unit 202. The fast scalar multiplication unit 202 calculates $X_d$ and $Z_d$ in the coordinate of the scalar-multiplied point $dP=(X_d, Y_d, Z_d)$ represented by the projective coordinates in the Montgomery-form elliptic curve, $X_{d+1}$ and $Z_{d+1}$ in the coordinate of the point $(d+1)P=(X_{d+1}, Y_{d+1}, Z_{d+1})$ on the Montgomery-form elliptic curve represented by the projective coordinates, and the point $(d-1)P=(X_{d-1}, Y_{d-1}, Z_{d-1})$ on the Montgomery-form elliptic curve represented by the projective coordinates from the received scalar value d and the given point P on the Montgomery-form elliptic curve, and gives the information together with the inputted point P=(x,y) on the Montgomery-form elliptic curve represented by the affine coordinates to the coordinate recovering unit 203. The coordinate recovering unit 203 recovers coordinates $X_d$, $Y_d$, and $Z_d$ of the scalar-multiplied point $dP=(X_d, Y_d, Z_d)$ represented by the proj ective coordinates in the Montgomery-form elliptic curve from the given coordinate values $X_d$, $Z_d$, $X_{d+1}$, $Z_{d+1}$, $X_{d-1}$, $Z_{d-1}$, x and y. The scalar multiplication unit 103 outputs the scalar-multiplied point ($X_d$, $Y_d$, $Z_d$) with the coordinate completely given thereto in the projective coordinates as the calculation result.

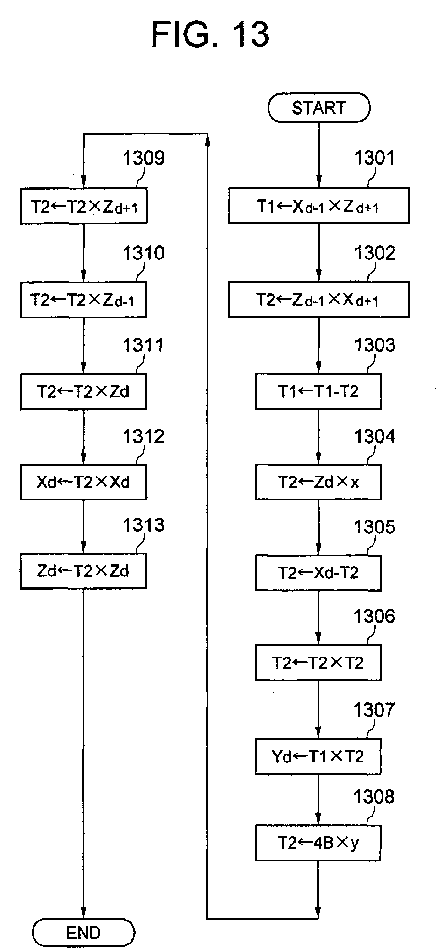

A processing of the coordinate recovering unit which outputs $X_d$, $Y_d$, $Z_d$ from the given coordinates x, y, $X_d$, $Z_d$, $X_{d+1}$, $Z_{d+1}$, $X_{d-1}$, $Z_{d-1}$ will next be described with reference to FIG. 13.

The coordinate recovering unit 203 inputs $X_d$ and $Z_d$ in the coordinate of the scalar-multiplied point $dP=(X_d, Y_d, Z_d)$ represented by the protective coordinates in the Montgomery-form elliptic curve, $X_{d+1}$ and $Z_{d+1}$ in the coordinate of the point $(d+1)P=(X_{d+1}, Y_{d+1}, Z_{d+1})$ on the Montgomery-form elliptic curve represented by the projective coordinates, $X_{d-1}$ and $Z_{d-1}$ in the coordinate of the point $(d-1)P=(X_{d-1}, Y_{d-1}, Z_{d-1})$ on the Montgomery-form elliptic curve represented by the projective coordinates, and (x,y) as representation of the point P on the Montgomery-form elliptic curve inputted into the scalar multiplication unit 103 in the affine coordinates, and outputs the scalar-multiplied point ($X_d$, $Y_d$, $Z_d$) with the complete coordinate given thereto in the projective coordinates in the following procedure. Here, the affine coordinate of the inputted point P on the Montgomery-form elliptic curve is represented by (x,y), and the projective coordinate thereof is represented by ($X_1$, $Y_1$, $Z_1$). Assuming that the inputted scalar value is d, the affine coordinate of the scalar-multiplied point dP in the Montgomery-form elliptic curve is represented by ($x_d$, $y_d$), and the projective coordinate thereof is represented by ($X_d$, $Y_d$, $Z_d$). The affine coordinate of the point (d-1)P on the Montgomery-form elliptic curve is represented by ($x_{d-1}$, $y_{d-1}$), and the projective coordinate thereof is represented by ($X_{d-1}$, $Y_{d-1}$, $Z_{d-1}$). The affine coordinate of the point (d+1)P on the Montgomery-form elliptic curve is represented by $(x_{d+1}, y_{d+1})$, and the projective coordinate thereof is represented by $(X_{d+1}, Y_{d+1}, Z_{d+1})$.

In step 1301 $X_{d-1} \times Z_{d+1}$ is calculated, and stored in the register $T_1$. In step 1302 $Z_{d-1} \times X_{d+1}$ is calculated, and stored in the register $T_2$. In step 1303 $T_1 - T_2$ is calculated. Here, $X_{d-1}Z_{d+1}$ is stored in the register $T_1$, $Z_{d-1}X_{d+1}$ is stored in the register $T_2$, and $X_{d-1}Z_{d+1} - Z_{d-1}X_{d+1}$ is therefore calculated. The result is stored in the register $T_1$. In step 1304 $Z_d \times x$ is calculated, and stored in the register $T_2$. In step 1305 $X_d - T_2$ is calculated. Here, $Z_d x$ is stored in the register $T_2$, and $X_d - xZ_d$ is therefore calculated. The result is stored in the register $T_2$. In step 1306 a square of $T_2$ is calculated. Here, $X_d - xZ_d$ is stored in the register $T_2$, and $(X_d - xZ_d)^2$ is therefore calculated. The result is stored in the register $T_2$. In step 1307 $T_1 \times T_2$ is calculated. Here, $X_{d-1}Z_{d+1} - Z_{d-1}X_{d+1}$ is stored in the register $T_1$, $(X_d - xZ_d)^2$ is stored in the register $T_2$, and therefore $(X_d - xZ_d)^2(X_{d-1}Z_{d+1} - Z_{d-1}X_{d+1})$ is calculated. The result is stored in the register $Y_d$. In step 1308 $4B \times y$ is calculated. The result is stored in the register $T_2$. In step 1309 $T_2 \times Z_{d+1}$ is calculated. Here, $4By$ is stored in the register $T_2$, and $4ByZ_{d+1}$ is therefore calculated. The result is stored in the register $T_2$. In step 1310 $T_2 \times Z_{d-1}$ is calculated. Here, $4ByZ_{d+1}$ is stored in the register $T_2$, and $4ByZ_{d+1}Z_{d-1}$ is therefore calculated. The result is stored in the register $T_2$. In step 1311 $T_2 \times Z_d$ is calculated. Here, $4ByZ_{d+1}Z_{d-1}$ is stored in the register $T_2$, and $4ByZ_{d+1}Z_{d-1}Z_d$ is therefore calculated. The result is stored in the register $T_2$. In step 1312 $T_2 \times X_d$ is calculated. Here, $4ByZ_{d+1}Z_{d-1}Z_d$ is stored in the register $T_2$, and $4ByZ_{d+1}Z_{d-1}Z_dX_d$ is therefore calculated. The result is stored in the register $X_d$. In step 1313 $T_2 \times Z_d$ is calculated. Here, $4ByZ_{d+1}Z_{d-1}Z_d$ is stored in the register $T_2$, and $4ByZ_{d+1}Z_{d-1}Z_dZ_d$ is therefore calculated. The result is stored in $Z_d$. Therefore, $4ByZ_{d+1}Z_{d-1}Z_dZ_d$ is stored in $Z_d$. In the step 1307 $(X_d - xZ_d)^2(X_{d-1}Z_{d+1} - Z_{d-1}X_{d+1})$ is stored in the register $Y_d$, and is not updated thereafter, and therefore the value is held.

A reason why all values in the projective coordinate $(X_d, Y_d, Z_d)$ of the scalar-multiplied point are recovered from x, y, $X_d$, $Z_d$, $X_{d+1}$, $Z_{d+1}$, $X_{d-1}$, $Z_{d-1}$ given by the aforementioned procedure is as follows. The point (d+1)P is a point obtained by adding the point P to the point dP, and the point (d-1)P is a point obtained by subtracting the point P from the point dP. Thereby, Equation 7 can be obtained. The coordinate recovering unit 203 outputs $(X_d, Y_d, Z_d)$ as the complete coordinate represented by the projective coordinate of the scalar-multiplied point.

Assignment to the addition formulae in the affine coordinates of the Montgomery-form elliptic curve results in Equations 6, 7. When the opposite sides are individually subjected to subtraction, Equation 8 is obtained. Therefore, Equation 9 results. Here, $x_d = X_d/Z_d$, $x_{d+1} = X_{d+1}/Z_{d+1}$, $x_{d-1} = X_{d-1}/Z_{d-1}$. The value is assigned and thereby converted to the value of the projective coordinate. Then, Equation 7 is obtained.

Although $x_d = X_d/Z_d$, reduction to the denominator common with that of $y_d$ is performed, and thereby Equation 20 results. As a result, the following equation is obtained.

$$Y_d = (X_{d-1}Z_{d+1} - Z_{d-1}X_{d+1})(X_d - Z_d x)^2 \qquad \text{Equation 21}$$

Then, $X_d$ and $Z_d$ may be updated by the following equations, respectively.

$$4ByZ_{d+1}Z_{d-1}Z_dX_d \qquad \text{Equation 22}$$

$$4ByZ_{d+1}Z_{d-1}Z_dZ_d \qquad \text{Equation 23}$$

Here, $X_d$, $Y_d$, $Z_d$ are given by the processing of FIG. 13. Therefore, all the values of the projective coordinate $(X_d, Y_d, Z_d)$ are recovered.

For the aforementioned procedure, in the steps 1301, 1302, 1304, 1307, 1308, 1309, 1310, 1311, 1312, and 1313, the computational amount of multiplication on the finite field is required. Moreover, the computational amount of squaring on the finite field is required in the step 1306. The computational amount of subtraction on the finite field is relatively small as compared with the computational amount of multiplication on the finite field and the computational amount of squaring, and may therefore be ignored. Assuming that the computational amount of multiplication on the finite field is M, and the computational amount of squaring on the finite field is S, the above procedure requires a computational amount of 10M+S. This is far small as compared with the computational amount of the fast scalar multiplication. For example, when the scalar value d indicates 160 bits, the computational amount of the fast scalar multiplication is estimated to be a little less than about 1500 M. Assuming S=0.8M, the computational amount of coordinate recovering is 10.8 M, and far small as compared with the computational amount of the fast scalar multiplication. Therefore, it is indicated that the coordinate can efficiently be recovered.

Additionally, even when the above procedure is not taken, the values of $X_d$, $Y_d$, $Z_d$ given by the above equation can be calculated, and the values of $X_d$, $Y_d$, $Z_d$ can then be recovered. Moreover, the values of $X_d$, $Y_d$, $Z_d$ are selected so that $x_d$, $y_d$ take the values given by the aforementioned equations, the values can be calculated, and then $X_d$, $Y_d$, $Z_d$ can be recovered. In this case, the computational amount required for recovering generally increases. Furthermore, when the value of B as the parameter of the elliptic curve is set to be small, the computational amount of multiplication in the step 1308 can be reduced.

An algorithm which outputs $X_d$, $Z_d$, $X_{d+1}$, $Z_{d+1}$, $X_{d-1}$, $Z_{d-1}$ from the scalar value d and the point P on the Montgomery-form elliptic curve will next be described.

The fast scalar multiplication method of the third embodiment is used as the fast scalar multiplication method of the fast scalar multiplication unit 202 of the fourth embodiment. Thereby, as the algorithm which outputs $X_d$, $Z_d$, $X_{d+1}$, $Z_{d+1}$, $X_{d-1}$, $Z_{d-1}$ from the scalar value d and the point P on the Montgomery-form elliptic curve, the fast algorithm is achieved. Additionally, instead of using the aforementioned algorithm in the fast scalar multiplication unit 202, another algorithm may be used as long as the algorithm outputs $X_d$, $Z_d$, $X_{d+1}$, $Z_{d+1}$, $X_{d-1}$, $Z_{d-1}$ from the scalar value d and the point P on the Montgomery-form elliptic curve at high speed.

The computational amount required for recovering the coordinate of the coordinate recovering unit 203 in the scalar multiplication unit 103 is 10M+S, and this is far small as compared with the computational amount of (9.2k+1) M necessary for fast scalar multiplication of the fast scalar multiplication unit 202. Therefore, the computational amount necessary for the scalar multiplication of the scalar multiplication unit 103 is substantially equal to the computational amount necessary for the fast scalar multiplication of the fast scalar multiplication unit. Assuming S=0.8M, the computational amount can be estimated to be about (9.2k+11.8)M. For example, when the scalar value d indicates 160 bits (k=160), the computational amount necessary for the scalar multiplication is 1484 M. The Weierstrass-form elliptic curve is used as the elliptic curve, the scalar multiplication method is used in which the window method and the mixed coordinates mainly including the Jacobian coordinates are used, and the scalar-multiplied point is outputted as the Jacobian coordinates. In this case, the required computational amount is about 1600 M, and as compared with this, the required computational amount is reduced.

In a fifth embodiment, the scalar multiplication unit 103 calculates and outputs a scalar-multiplied point ($x_d$, $y_d$) with the complete coordinate given thereto as a point of the affine coordinates in the Montgomery-form elliptic curve from the scalar value d and the point P on the Montgomery-form elliptic curve. The scalar value d and the point P on the Montgomery-form elliptic curve are inputted into the scalar multiplication unit 103 and then received by the fast scalar multiplication unit 202. The fast scalar multiplication unit 202 calculates $x_d$ in the coordinate of the scalar-multiplied point $dP=(x_d,y_d)$ represented by the affine coordinates in the Montgomery-form elliptic curve, $x_{d+1}$ in the coordinate of the point $(d+1)P=(x_{d+1},y_{d+1})$ on the Montgomery-form elliptic curve represented by the affine coordinates, and $x_{d-1}$ in the coordinate of the point $(d-1)P=(x_{d-1},y_{d-1})$ on the Montgomery-form elliptic curve represented by the affine coordinates from the received scalar value d and the given point P on the Montgomery-form elliptic curve, and gives the information together with the inputted point $P=(x,y)$ on the Montgomery-form elliptic curve represented by the affine coordinates to the coordinate recovering unit 203. The coordinate recovering unit 203 recovers coordinates $y_d$ of the scalar-multiplied point $dP=(x_d,y_d,)$ represented by the affine coordinates in the Montgomery-form elliptic curve from the given coordinate values $x_d$, $x_{d+1}$, $x_{d-1}$, x and y. The scalar multiplication unit 103 outputs the scalar-multiplied point ($x_d,y_d$) with the coordinate completely given thereto in the affine coordinates as the calculation result.

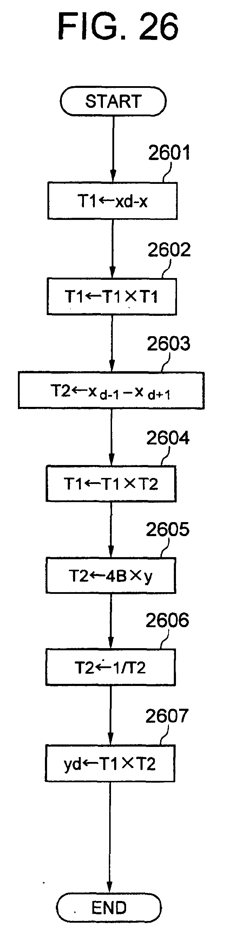

A processing of the coordinate recovering unit which outputs $x_d$, $y_d$ from the given coordinates x, y, $x_{d+1}$, $x_{d-1}$ will next be described with reference to FIG. 26.

The coordinate recovering unit 203 inputs $x_d$ in the coordinate of the scalar-multiplied point $dP=(x_d,y_d)$ represented by the affine coordinates in the Montgomery-form elliptic curve, $x_{d+1}$ in the coordinate of the point $(d+1)P=(x_{d+1},y_{d+1})$ on the Montgomery-form elliptic curve represented by the affine coordinates, $x_{d-1}$ in the coordinate of the point $(d-1)P=(x_{d-1},y_{d-1})$ on the Montgomery-form elliptic curve represented by the affine coordinates, and (x,y) as representation of the point P on the Montgomery-form elliptic curve inputted into the scalar multiplication unit 103 in the affine coordinates, and outputs the scalar-multiplied point ($x_d,y_d$) with the complete coordinate given thereto in the affine coordinates in the following procedure.

In step 2601 $x_d$-x is calculated, and stored in the register $T_1$. In step 2602 a square of $T_1$, that is, $(x_d-x)^2$ is calculated, and stored in the register $T_1$. In step 2603 $x_{d-1}-x_{d+1}$ is calculated, and stored in the register $T_2$. In step 2604 $T_1 \times T_2$ is calculated. Here, $(x_d-x)^2$ is stored in the register $T_1$, $x_{d-1}-x_{d+1}$ is stored in the register $T_2$, and therefore $(x_d-x)^2(x_{d-1}-x_{d+1})$ is calculated. The result is stored in the register $T_1$. In step 2605 $4B \times y$ is calculated, and stored in the register $T_2$. In step 2606 an inverse element of $T_2$ is calculated. Here, 4By is stored in the register $T_2$, and 1/4By is therefore calculated. The result is stored in the register $T_2$. In step 2607 $T_1 \times T_2$ is calculated. Here, $(x_d-x)^2(x_{d-1}-x_{d+1})$ is stored in the register $T_1$, 1/4By is stored in the register $T_2$, and $(x_d-x)^2(x_{d-1}-x_{d+1})/4By$ is therefore calculated. The result is stored in register $y_d$. Therefore, $(x_d-x)^2(x_{d-1}-x_{d+1})/4By$ is stored in the register $y_d$. Since register $x_d$ is not updated, the inputted value is held.

A reason why the y coordinate $y_d$ of the scalar-multiplied point is recovered by the aforementioned procedure is as follows. Additionally, the point (d+1)P is a point obtained by adding the point P to the point dP, and the point (d-1)P is a point obtained by subtracting the point P from the point dP. Thereby, assignment to the addition formulae in the affine coordinates of the Montgomery-form elliptic curve results in Equations 6, 7.

When the opposite sides are individually subjected to subtraction, Equation 8 is obtained. Therefore, Equation 9 results.

Here, $x_d$, $y_d$ are given by the processing of FIG. 26. Therefore, all the values of the affine coordinate $(x_d,y_d)$ are all recovered.

For the aforementioned procedure, in the steps 2604, 2605, and 2607, the computational amount of multiplication on the finite field is required. Moreover, the computational amount of squaring on the finite field is required in the step 2602. Furthermore, the computational amount of inversion on the finite field is required in the step 2606. The computational amount of subtraction on the finite field is relatively small as compared with the computational amounts of multiplication on the finite field, squaring, and inversion, and may therefore be ignored. Assuming that the computational amount of multiplication on the finite field is M, the computational amount of squaring on the finite field is S, and the computational amount of inversion on the finite field is I, the above procedure requires a computational amount of 3M+S+I. This is far small as compared with the computational amount of the fast scalar multiplication. For example, when the scalar value d indicates 160 bits, the computational amount of the fast scalar multiplication is estimated to be a little less than about 1500 M. Assuming S=0.8M and I=40M, the computational amount of coordinate recovering is 43.8 M, and far small as compared with the computational amount of the fast scalar multiplication. Therefore, it is indicated that the coordinate can efficiently be recovered.

Additionally, even when the above procedure is not taken, and when the value of the right side of the equation can be calculated, the value of $y_d$ can be recovered. In this case, the computational amount required for recovering generally increases. Furthermore, when the value of B as the parameter of the elliptic curve is set to be small, the computational amount of multiplication in the step 2605 can be reduced.

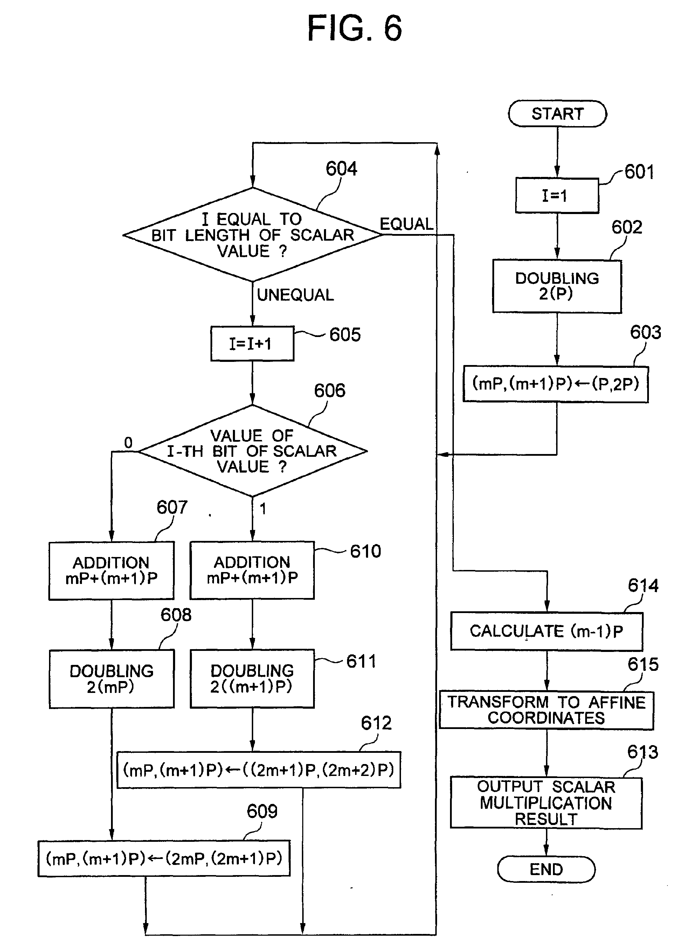

A processing of the fast scalar multiplication unit which outputs $x_d$, $x_{d+1}$, $x_{d-1}$ from the scalar value d and the point P on the Montgomery-form elliptic curve will next be described with reference to FIG. 6.

The fast scalar multiplication unit 202 inputs the point P on the Montgomery-form elliptic curve inputted into the scalar multiplication unit 103, and outputs $x_d$ in the scalar-multiplied point $dP=(x_d,y_d)$ represented by the affine coordinate in the Montgomery-form elliptic curve, $x_{d+1}$ in the point $(d+1)P=(x_{d+1},y_{d+1})$ on the Montgomery-form elliptic curve represented by the affine coordinate, and $x_{d-1}$ in the point $(d-1)P=(x_{d-1},y_{d-1})$ on the Montgomery-form elliptic curve represented by the affine coordinate by the following procedure. In step 601, the initial value 1 is assigned to the variable I. The doubled point 2P of the point P is calculated in step 602. Here, the point P is represented as (x,y, 1) in the projective coordinate, and the formula of doubling in the projective coordinate of the Montgomery-form elliptic curve is used to calculate the doubled point 2P. In step 603, the point P on the elliptic curve inputted into the scalar multiplication unit 103 and the point 2P obtained in the step 602 are stored as a set of points (P,2P). Here, the points P and 2P are represented by the projective coordinate. It is judged in step 604 whether or not the variable I agrees with the bit length of the scalar value d. With agreement, the flow goes to step 614. With disagreement, the flow goes to step 605. The variable I is increased by 1 in the step 605. It is judged in step 606 whether the value of the I-th bit of the scalar value is 0 or 1. When the value of the bit is 0, the flow goes to the step 607. When the value of the bit is 1, the flow goes to step 610. In step 607, addition mP+(m+1)P of points mP and (m+1)P is performed from the set of points (mP,(m+1)P) represented by the projective coordinate, and the point (2m+1)P is calculated. Thereafter, the flow goes to step 608. Here, the addition mP+(m+1)P is calculated using the addition formula in the projective coordinate of the Montgomery-form elliptic curve. In step 608, doubling 2(mP) of the point mP is performed from the set of points (mP,(m+1)P) represented by the projective coordinate, and the point 2mP is calculated. Thereafter, the flow goes to step 609. Here, the doubling 2(mP) is calculated using the formula of doubling in the projective coordinate of the Montgomery-form elliptic curve. In the step 609, the point 2mP obtained in the step 608 and the point (2m+1)P obtained in the step 607 are stored as the set of points (2mP, (2m+1)P) instead of the set of points (mP, (m+1)P). Thereafter, the flow returns to the step 604. Here, the points 2mP, (2m+1)P, mP, and (m+1)P are all represented in the projective coordinates. In step 610, addition mP+(m+1)P of the points mP, (m+1)P is performed from the set of points (mP,(m+1)P) represented by the projective coordinates, and the point (2m+1)P is calculated. Thereafter, the flow goes to step 611. Here, the addition mP+(m+1)P is calculated using the addition formula in the projective coordinates of the Montgomery-form elliptic curve. In the step 611, doubling 2((m+1)P) of the point (m+1)P is performed from the set of points (mP, (m+1)P) represented by the projective coordinates, and the point (2m+2)P is calculated. Thereafter, the flow goes to step 612. Here, the doubling 2((m+1)P) is calculated using the formula of doubling in the projective coordinates of the Montgomery-form elliptic curve. In the step 612, the point (2m+1)P obtained in the step 610 and the point (2m+2)P obtained in the step 611 are stored as the set of points ((2m+1)P,(2m+2)P) instead of the set of points (mP,(m+1)P). Thereafter, the flow returns to the step 604. Here, the points (2m+1)P, (2m+2)P, mP, and (m+1)P are all represented in the projective coordinates. In step 614, from the set of points (mP,(m+1)P) represented by the projective coordinates, X-coordinate $X_{m-1}$ and Z-coordinate $Z_{m-1}$ in the projective coordinates of the point (m-1)P are obtained as $X_{d-1}$ and $Z_{d-1}$. Thereafter, the flow goes to step 615. In the step 615, $X_m$ and $Z_m$ are obtained as $X_d$ and $Z_d$ from the point $mP=(X_m,Y_m,Z_m)$ represented by the projective coordinates, and $X_{m+1}$ and $Z_{m+1}$ are obtained as $X_{d+1}$ and $Z_{d+1}$ from the point $(m+1)P=(X_{m+1},Y_{m+1},Z_{m+1})$ represented by the projective coordinates. Here, $Y_m$ and $Y_{m+1}$ are not obtained, because Y-coordinate cannot be obtained by the addition and doubling formulae in the projective coordinates of the Montgomery-form elliptic curve. From $X_{d-1}$, $Z_{d-1}$, $X_d$, $Z_d$, $X_{d+1}$, and $Z_{d+1}$, $x_{d-1}$, $x_d$, $x_{d+1}$ are obtained as follows.

$$x_{d-1} = X_{d-1}Z_dZ_{d+1}/Z_{d-1}Z_dZ_{d+1} \qquad \text{Equation 24}$$

$$x_d = Z_{d-1}X_dZ_{d+1}/Z_{d-1}Z_dZ_{d+1} \qquad \text{Equation 25}$$

$$x_{d+1} = Z_{d-1}Z_dX_{d+1}/Z_{d-1}Z_dZ_{d+1} \qquad \text{Equation 26}$$

Thereafter, the flow goes to step 613. In the step 613, $x_{d-1}$, $x_d$, $x_{d+1}$ are outputted. In the above procedure, m and scalar value d are equal in the bit length and bit pattern, and are therefore equal. Moreover, when (m-1)P is obtained in step 614, it may be obtained by Equations 13, 14. If m is an odd number, a value of ((m-1)/2)P is separately held in the step 612, and (m-1)P may be obtained from the value by the doubling formula of the Montgomery-form elliptic curve.

The computational amount of the addition formula in the projective coordinates of the Montgomery-form elliptic curve is 3M+2S with $Z_1$=1. Here, M is the computational amount of multiplication on the finite field, and S is the computational amount of squaring on the finite field. The computational amount of the formula of doubling in the projective coordinates of the Montgomery-form elliptic curve is 3M+2S. When the value of the I-th bit of the scalar value is 0, the computational amount of addition in the step 607, and the computational amount of doubling in the step 608 are required. That is, the computational amount of 6M+4S is required. When the value of the I-th bit of the scalar value is 1, the computational amount of addition in the step 610, and the computational amount of doubling in the step 611 are required. That is, the computational amount of 6M+4S is required. In any case, the computational amount of 6M+4S is required. The number of repetitions of the steps 604, 605, 606, 607, 608, 609, or the steps 604, 605, 606, 610, 611, 612 is (bit length of the scalar value d)-1. Therefore, in consideration of the computational amount of doubling in the step 602, the computational amount necessary for calculating (m-1)P in the step 614, and the computational amount of transform to the affine coordinate, the entire computational amount is (6M+4S)k+11M+I. Here, k is the bit length of the scalar value d. In general, since the computational amount S is estimated to be of the order of S=0.8 M, and the computational amount I is estimated to be of the order of I=40 M, the entire computational amount is approximately (9.2k+51)M. For example, when the scalar value d indicates 160 bits (k=160), the computational amount of algorithm of the aforementioned procedure is about 1523 M. The computational amount per bit of the scalar value d is about 9.2 M. In A. Miyaji, T. Ono, H. Cohen, Efficient elliptic curve exponentiation using mixed coordinates, Advances in Cryptology Proceedings of ASIACRYPT'98, LNCS 1514 (1998) pp.51-65, the scalar multiplication method using the window method and mixed coordinates mainly including Jacobian coordinates in the Weierstrass-form elliptic curve is described as the fast scalar multiplication method. In this case, the computational amount per bit of the scalar value is estimated to be about 10 M, and additionally the computational amount of the transform to the affine coordinates is required. For example, when the scalar value d indicates 160 bits (k=160), the computational amount of the scalar multiplication method is about 1650 M. Therefore, the algorithm of the aforementioned procedure can be said to have a small computational amount and high speed.

Additionally, instead of using the aforementioned algorithm in the fast scalar multiplication unit 202, another algorithm may be used as long as the algorithm outputs $x_d$, $x_{d+1}$, $x_{d-1}$ from the scalar value d and the point P on the Montgomery-form elliptic curve at high speed.

The computational amount required for recovering the coordinate of the coordinate recovering unit 203 in the scalar multiplication unit 103 is 3M+S+I, and this is far small as compared with the computational amount of (9.2k+51) M necessary for fast scalar multiplication of the fast scalar multiplication unit 202. Therefore, the computational amount necessary for the scalar multiplication of the scalar multiplication unit 103 is substantially equal to the computational amount necessary for the fast scalar multiplication of the fast scalar multiplication unit. Assuming S=0.8M and I=40M, the computational amount can be estimated to be about (9.2k+94.8)M. For example, when the scalar value d indicates 160 bits (k=160), the computational amount necessary for the scalar multiplication is about 1567 M. The Weierstrass-form elliptic curve is used as the elliptic curve, the scalar multiplication method is used in which the window method and the mixed coordinates mainly including the Jacobian coordinates are used, and the scalar-multiplied point is outputted as the affine coordinates. In this case, the required computational amount is about 1640 M, and as compared with this, the required computational amount is reduced.

In a sixth embodiment, the Weierstrass-form elliptic curve is used as the elliptic curve. That is, the elliptic curve for use in input/output of the scalar multiplication unit 103 is the Weierstrass-form elliptic curve. Additionally, as the elliptic curve used in internal calculation of the scalar multiplication unit 103, the Montgomery-form elliptic curve to which the given Weierstrass-form elliptic curve can be transformed may be used. The scalar multiplication unit 103 calculates a scalar-multiplied point $(x_d,y_d)$ with the complete coordinate given thereto as the point of the affine coordinates in the Weierstrass-form elliptic curve from the scalar value d and the point P on the Weierstrass-form elliptic curve. The scalar value d and the point P on the Weierstrass-form elliptic curve are inputted into the scalar multiplication unit 103, and received by the scalar multiplication unit 202. The fast scalar multiplication unit 202 calculates $X_d$ and $Z_d$ in the coordinate of the scalar-multiplied point $dP=(X_d,Y_d,Z_d)$ represented by the projective coordinates in the Weierstrass-form elliptic curve, $X_{d+1}$ and $Z_{d+1}$ in the coordinate of the point $(d+1)P=(X_{d+1},Y_{d+1},Z_{d+1})$ on the Weierstrass-form elliptic curve represented by the projective coordinates, and $X_{d-1}$ and $Z_{d-1}$ in the coordinate of the point $(d-1)P=(X_{d-1},Y_{d-1},Z_{d-1})$ on the Weierstrass-form elliptic curve represented by the projective coordinates from the received scalar value d and the given point P on the Weierstrass-form elliptic curve, and gives the information together with the inputted point $P=(x,y)$ on the Weierstrass-form elliptic curve represented by the affine coordinates to the coordinate recovering unit 203. The coordinate recovering unit 203 recovers coordinates $x_d$ and $y_d$ of the scalar-multiplied point $dP=(x_d,y_d)$ represented by the affine coordinates in the Weierstrass-form elliptic curve from the given coordinate values $X_d$, $Z_d$, $X_{d+1}$, $Z_{d+1}$, $X_{d-1}$, $Z_{d-1}$, x and y. The scalar multiplication unit 103 outputs the scalar-multiplied point $(x_d,y_d)$ with the coordinate completely given thereto in the affine coordinates as the calculation result.

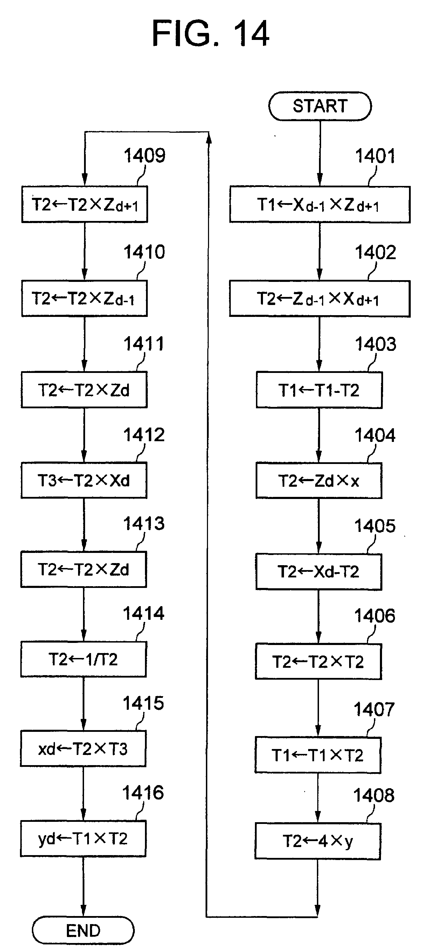

A processing of the coordinate recovering unit which outputs $x_d$, $y_d$ from the given coordinates x, y, $X_d$, $Z_d$, $X_{d+1}$, $Z_{d+1}$, $X_{d-1}$, $Z_{d-1}$ will next be described with reference to FIG. 14.

The coordinate recovering unit 203 inputs $X_d$ and $Z_d$ in the coordinate of the scalar-multiplied point $dP=(X_d, Y_d,Z_d)$ represented by the projective coordinates in the Weierstrass-form elliptic curve, $X_{d+1}$ and $Z_{d+1}$ in the coordinate of the point $(d+1)P=(X_{d+1},Y_{d+1},Z_{d+1})$ on the Weierstrass-form elliptic curve represented by the protective coordinates, $X_{d-1}$ and $Z_{d-1}$ in the coordinate of the point $(d-1)P=(X_{d-1},Y_{d-1},Z_{d-1})$ on the Weierstrass-form elliptic curve represented by the projective coordinates, and $(x,y)$ as representation of the point P on the Weierstrass-form elliptic curve inputted into the scalar multiplication unit 103 in the affine coordinates, and outputs the scalar-multiplied point $(x_d,y_d)$ with the complete coordinate given thereto in the affine coordinates in the following procedure. Here, the affine coordinate of the inputted point P on the Weierstrass-form elliptic curve is represented by $(x,y)$, and the projective coordinate thereof is represented by $(X_1,Y_1,Z_1)$. Assuming that the inputted scalar value is d, the affine coordinate of the scalar-multiplied point dP in the Weierstrass-form elliptic curve is represented by $(x_d,y_d)$, and the projective coordinate thereof is represented by $(X_d,Y_d,Z_d)$. The affine coordinate of the point $(d-1)P$ on the Weierstrass-form elliptic curve is represented by $(x_{d-1},y_{d-1})$, and the projective coordinate thereof is represented by $(X_{d-1},Y_{d-1},Z_{d-1})$. The affine coordinate of the point $(d+1)P$ on the Weierstrass-form elliptic curve is represented by $(x_{d+1},y_{d+1})$, and the projective coordinate thereof is represented by $(X_{d+1},Y_{d+1},Z_{d+1})$.

In step 1401 $X_{d-1}\times Z_{d+1}$ is calculated, and stored in the register $T_1$. In step 1402 $Z_{d-1}\times X_{d+1}$ is calculated, and stored in the register $T_2$. In step 1403 $T_1-T_2$ is calculated. Here, $X_{d-1}Z_{d+1}$ is stored in the register $T_1$, $Z_{d-1}X_{d+1}$ is stored in the register $T_2$, and $X_{d-1}Z_{d+1}-Z_{d-1}X_{d+1}$ is therefore calculated. The result is stored in the register $T_1$. In step 1404 $Z_d\times x$ is calculated, and stored in the register $T_2$. In step 1405 $X_d-T_2$ is calculated. Here, $Z_dx$ is stored in the register $T_2$, and $X_d-xZ_d$ is therefore calculated. The result is stored in the register $T_2$. In step 1406 a square of $T_2$ is calculated. Here, $X_d-xZ_d$ is stored in the register $T_2$, and $(X_d-xZ_d)^2$ is therefore calculated. The result is stored in the register $T_2$. In step 1407 $T_1\times T_2$ is calculated. Here, $X_d-Z_{d+1}-Z_{d-1}X_{d+1}$ is stored in the register $T_1$, $(X_d-xZ_d)$ is stored in the register $T_2$, and therefore $(X_d-xZ_d)^2(X_{d-1}Z_{d+1}-Z_{d-1}X_{d+1})$ is calculated. The result is stored in the register $T_1$. In step 1408 $4\times y$ is calculated. The result is stored in the register $T_2$. In step 1409 $T_2\times Z_{d+1}$ is calculated. Here, 4y is stored in the register $T_2$, and $4yZ_{d+1}$ is therefore calculated. The result is stored in the register $T_2$. In step 1410 $T_2\times Z_{d-1}$ is calculated. Here, $4yZ_{d+1}$ is stored in the register $T_2$, and $4yZ_{d+1}Z_{d-1}$ is therefore calculated. The result is stored in the register $T_2$. In step 1411 $T_2\times Z_d$ is calculated. Here, $4yZ_{d+1}Z_{d-1}$ is stored in the register $T_2$, and $4yZ_{d+1}Z_{d-1}Z_d$ is therefore calculated. The result is stored in the register $T_2$. In step 1412 $T_2\times X_d$ is calculated. Here, $4yZ_{d+1}Z_{d-1}Z_d$ is stored in the register $T_2$, and $4yZ_{d+1}Z_{d-1}Z_dX_d$ is therefore calculated. The result is stored in the register $T_3$. In step 1413 $T_2\times Z_d$ is calculated. Here, $4yZ_{d-1}Z_{d+1}Z_d$ is stored in the register $T_2$, and $4yZ_{d+1}Z_{d-1}Z_dZ_d$ is therefore calculated. The result is stored in $T_2$. In step 1414, the inverse element of the register $T_2$ is calculated. Here, $4yZ_{d+1}Z_{d-1}Z_dZ_d$ is stored in the register $T_2$. Therefore, $1/4yZ_{d+1}Z_{d-1}Z_dZ_d$ is calculated. The result is stored in the register $T_2$. In step 1415 $T_2\times T_3$ is calculated. Here, $1/4yZ_{d+1}Z_{d-1}Z_dZ_d$ is stored in the register $T_2$, and $4yZ_{d-1}Z_{d+1}Z_dX_d$ is stored in the register $T_3$. Therefore, $(4yZ_{d+1}Z_{d-1}Z_dX_d) / (4yZ_{d+1}Z_{d-1}Z_dZ_d)$ is calculated. The result is stored in the register $x_d$. In step 1416 $T_1\times T_2$ is calculated. Here, the register $T_1$ stores $(X_d-xZ_d)^2(X_{d-1}Z_{d+1}-Z_{d-1}X_{d+1})$ and the register $T_2$ stores $1/4yZ_{d+1}Z_{d-1}Z_dZ_d$. Therefore, $(X_{d-1}Z_{d+1}-Z_{d-1}X_{d+1})(X_d-Z_dx)^2/4yZ_{d+1}Z_{d-1}Z_d^2$ is calculated. The result is stored in the register $y_d$. Therefore, the register $y_d$ stores $(X_{d-1}Z_{d+1}-Z_{d-1}X_{d+1})(X_d-Z_dx)^2/4yZ_{d-1}Z_{d+1}Z_d^2$. In step 1415 $(4yZ_{d-1}Z_{d+1}Z_dX_d) /-(4yZ_{d-1}Z_{d+1}Z_dZ_d)$ is stored in the register $x_d$, and is not updated thereafter, and therefore the value is held.

A reason why all values in the affine coordinate $(x_d,y_d)$ of the scalar-multiplied point are recovered from x, y, $X_d$, $Z_d$, $X_{d+1}$, $Z_{d+1}$, $X_{d-1}$, $Z_{d-1}$ given by the aforementioned procedure is as follows. The point $(d+1)P$ is a point obtained by adding the point P to the point dP, and the point $(d-1)P$ is a point obtained by subtracting the point P from the point dP. Assignment to addition formulae in the affine coordinates of the Weierstrass-form elliptic curve results in the following equations.

$$(x + x_d + x_{d+1})(x_d - x)^2 = (y_d - y)^2$$ Equation 27

$$(x + x_d + x_{d-1})(x_d - x)^2 = (y_d + y)^2$$ Equation 28

When opposite sides are individually subjected to subtraction, the following equation is obtained.

$$(x_{d-1} - x_{d+1})(x_d - x)^2 = 4y_d y$$ Equation 29

Therefore, the following results.

$$y_d = (x_{d-1} - x_{d+1})(x_d - x)^2 / 4y$$ Equation 30

Here, $x_d = X_d/Z_d$, $x_{d+1} = X_{d+1}/Z_{d+1}$, $x_{d-1} = X_{d-1}/Z_{d-1}$. The value is assigned and thereby converted to a value of the projective coordinate. Then, the following equation is obtained.

$$y_d = (X_{d-1}Z_{d+1} - Z_{d-1}X_{d+1})(X_d - Z_d x)^2 / 4yZ_{d-1}Z_{d+1}Z_d^2$$ Equation 31

Although $x_d = X_d/Z_d$, reduction to a denominator common with that of $y_d$ is performed for a purpose of reducing a frequency of inversion, and the following equation is obtained.

$$x_d = \frac{4yZ_{d+1}Z_{d-1}Z_d X_d}{4yZ_{d+1}Z_{d-1}Z_d Z_d}$$ Equation 32

Here, $x_d$, $y_d$ are given by the processing of FIG. 14. Therefore, all the values of the affine coordinate $(x_d, y_d)$ are recovered.

For the aforementioned procedure, in the steps 1401, 1402, 1404, 1407, 1409, 1410, 1411, 1412, 1413, 1415, and 1416, the computational amount of multiplication on the finite field is required. Moreover, in the multiplication in the step 1408, since the value of the multiplicand is small as 4, the computational amount is relatively small as compared with the computational amount of usual multiplication, and may be ignored. Moreover, in the step 1406 the computational amount of squaring on the finite field is required. Furthermore, in the step 1414, the computational amount of the inversion on the finite field is required. The computational amount of subtraction on the finite field is relatively small as compared with the computational amounts of multiplication on the finite field, squaring, and inversion, and may therefore be ignored. Assuming that the computational amount of multiplication on the finite field is M, the computational amount of squaring on the finite field is S, and the computational amount of inversion on the finite field is I, the above procedure requires a computational amount of 11M+S+I. This is very small as compared with the computational amount of fast scalar multiplication. For example, when the scalar value d indicates 160 bits, the computational amount of the fast scalar multiplication is estimated to be a little less than about 1500 M. Assuming S=0.8 M, I=40 M, the computational amount of coordinate recovering is 51.8 M, and this is very small as compared with the computational amount of the fast scalar multiplication. Therefore, it is indicated that the coordinate can efficiently be recovered.

Additionally, even when the above procedure is not taken, the values of $x_d$, $y_d$ given by the above equation can be calculated, and the values of $x_d$, $y_d$ can then be recovered. In this case, the computational amount necessary for the recovering generally increases.

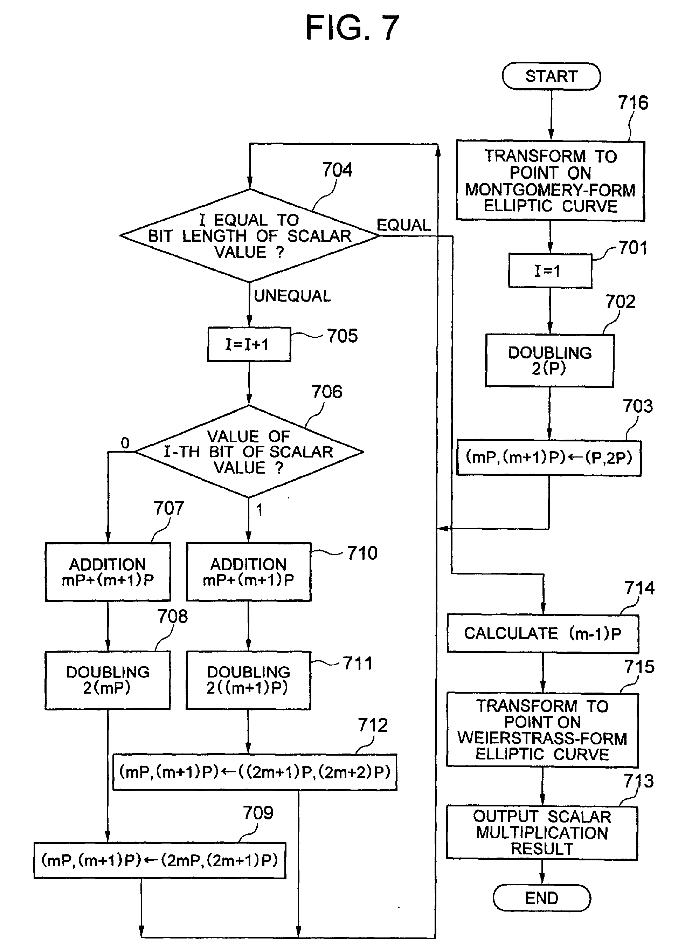

A processing of the fast scalar multiplication unit which outputs $X_d$, $Z_d$, $X_{d+1}$, $Z_{d+1}$, $X_{d-1}$, $Z_{d-1}$ from the scalar value d and the point P on the Weierstrass-form elliptic curve will next be described with reference to FIG. 7.

The fast scalar multiplication unit 202 inputs the point P on the Weierstrass-form elliptic curve inputted into the scalar multiplication unit 103, and outputs $X_d$ and $Z_d$ in the scalar-multiplied point $dP=(X_d, Y_d, Z_d)$ represented by the protective coordinate in the Weierstrass-form elliptic curve, $X_{d+1}$ and $Z_{d+1}$ in the point $(d+1)P=(X_{d+1}, Y_{d+1}, Z_{d+1})$ on the Weierstrass-form elliptic curve represented by the projective coordinate, and $X_{d-1}$ and $Z_{d-1}$ in the point $(d-1)P=(X_{d-1}, Y_{d-1}, Z_{d-1})$ on the Weierstrass-form elliptic curve represented by the projective coordinate by the following procedure. In step 716, the given point P on the Weierstrass-form elliptic curve is transformed to the point represented by the projective coordinates on the Montgomery-form elliptic curve. This point is set anew as point P. In step 701, the initial value 1 is assigned to the variable I. A doubled point 2P of the point P is calculated in step 702. Here, the point P is represented as (x,y,1) in the projective coordinate, and a formula of doubling in the projective coordinate of the Montgomery-form elliptic curve is used to calculate the doubled point 2P. In step 703, the point P on the elliptic curve inputted into the scalar multiplication unit 103 and the point 2P obtained in the step 702 are stored as a set of points (P,2P). Here, the points P and 2P are represented by the projective coordinate. It is judged in step 704 whether or not the variable I agrees with the bit length of the scalar value d. With agreement, the flow goes to step 714. With disagreement, the flow goes to step 705. The variable I is increased by 1 in the step 705. It is judged in step 706 whether the value of the I-th bit of the scalar value is 0 or 1. When the value of the bit is 0, the flow goes to the step 707. When the value of the bit is 1, the flow goes to step 710. In step 707, addition mP+(m+1)P of points mP and (m+1)P is performed from a set of points (mP,(m+1)P) represented by the projective coordinate, and a point (2m+1)P is calculated. Thereafter, the flow goes to step 708. Here, the addition mP+(m+1)P is calculated using the addition formula in the projective coordinate of the Montgomery-form elliptic curve. In step 708, doubling 2(mP) of the point mP is performed from the set of points (mP,(m+1)P) represented by the projective coordinate, and the point 2mP is calculated. Thereafter, the flow goes to step 709. Here, the doubling 2(mP) is calculated using the formula of doubling in the projective coordinate of the Montgomery-form elliptic curve. In the step 709, the point 2mP obtained in the step 708 and the point (2m+1)P obtained in the step 707 are stored as a set of points (2mP, (2m+1)P) instead of the set of points (mP, (m+1)P). Thereafter, the flow returns to the step 704. Here, the points 2mP, (2m+1)P, mP, and (m+1)P are all represented in the projective coordinates. In step 710, addition mP+(m+1)P of the points mP, (m+1)P is performed from the set of points (mP,(m+1)P) represented by the projective coordinates, and the point (2m+1)P is calculated. Thereafter, the flow goes to step 711. Here, the addition mP+(m+1)P is calculated using the addition formula in the projective coordinates of the Montgomery-form elliptic curve. In the step 711, doubling 2((m+1)P) of the point (m+1)P is performed from the set of points (mP,(m+1)P) represented by the projective coordinates, and a point (2m+2)P is calculated. Thereafter, the flow goes to step 712. Here, the doubling 2((m+1)P) is calculated using the formula of doubling in the projective coordinates of the Montgomery-form elliptic curve. In the step 712, the point (2m+1)P obtained in the step 710 and the point (2m+2)P obtained in the step 711 are stored as a set of points ((2m+1)P,(2m+2)P) instead of the set of points (mP,(m+1)P). Thereafter, the flow returns to the step 704. Here, the points (2m+1)P, (2m+2)P, mP, and (m+1)P are all represented in the projective coordinates. In step 714, from the set of points (mP, (m+1)P) represented by the projective coordinates, X-coordinate $X_{m-1}$ and Z-coordinate $Z_{m-1}$ are obtained in the projective coordinates of the point (m-1)P. Thereafter, the flow goes to step 715. In the step 715, the point (m-1)P in the Montgomery-form elliptic curve is transformed to the point represented by the projective coordinates on the Weierstrass-form elliptic curve. The X-coordinate and Z-coordinate of the point are set anew to $X_{m-1}$ and $Z_{m-1}$. With respect to the set of points (mP, (m+1)P) represented by the projective coordinates in the Montgomery-form elliptic curve, the points mP and (m+1)P are transformed to points represented by the projective coordinates on the Weierstrass-form elliptic curve. The respective points are replaced as $mP=(X_m,Y_m,Z_m)$ and $(m+1)P=(X_{m+1},Y_{m+1},Z_{m+1})$. Here, since the Y-coordinate cannot be obtained by the addition and doubling formulae in the projective coordinates of the Montgomery-form elliptic curve, $Y_m$ and $Y_{m+1}$ are not obtained. In step 713, X-coordinate $X_{m-1}$ and Z-coordinate $Z_{m-1}$ of the point (m-1)P represented by the projective coordinates on the Weierstrass-form elliptic curve are outputted as $X_{d-1}$, $Z_{d-1}$, $X_m$ and $Z_m$ are outputted as $X_d$, $Z_d$ from the point $mP=(X_m,Y_m,Z_m)$ represented by the projective coordinates on the Weierstrass-form elliptic curve, and $X_{m+1}$ and $Z_{m+1}$ are outputted as $X_{d+1}$, $Z_{d+1}$ from the point $(m+1)P=(X_{m+1},Y_{m+1},Z_{m+1})$ represented by the projective coordinates on the Weierstrass-form elliptic curve. In the above procedure, m and scalar value d are equal in the bit length and bit pattern, and are therefore equal. Moreover, when (m-1)P is obtained in step 714, it may be obtained by Equations 13, 14. If m is an odd number, a value of ((m-1)/2)P is separately held in the step 712, and (m-1)P may be obtained from the value by the doubling formula of the Montgomery-form elliptic curve.

The computational amount of the addition formula in the projective coordinates of the Montgomery-form elliptic curve is 3M+2S with $Z_1$=1. Here, M is the computational amount of multiplication on the finite field, and S is the computational amount of squaring on the finite field. The computational amount of the formula of doubling in the projective coordinates of the Montgomery-form elliptic curve is 3M+2S. When the value of the I-th bit ,of the scalar value is 0, the computational amount of addition in the step 707, and the computational amount of doubling in the step 708 are required. That is, the computational amount of 6M+4S is required. When the value of the I-th bit of the scalar value is 1, the computational amount of addition in the step 710, and the computational amount of doubling in the step 711 are required. That is, the computational amount of 6M+4S is required. In any case, the computational amount of 6M+4S is required. The number of repetitions of the steps 704, 705, 706, 707, 708, 709, or the steps 704, 705, 706, 710, 711, 712 is (bit length of the scalar value d)-1. Therefore, in consideration of the computational amount of doubling in the step 702, the computational amount necessary for transform to the point on the Montgomery-form elliptic curve in the step 716, and the computational amount of transform to the point on the Weierstrass-form elliptic curve in the step 715, the entire computational amount is (6M+4S)k+4M. Here, k is the bit length of the scalar value d. In general, since the computational amount S is estimated to be of the order of S=0.8 M, the entire computational amount is approximately (9.2k+4)M. For example, when the scalar value d indicates 160 bits (k=160), the computational amount of algorithm of the aforementioned procedure is about 1476 M. The computational amount per bit of the scalar value d is about 9.2 M. In A. Miyaji, T. Ono, H. Cohen, Efficient elliptic curve exponentiation using mixed coordinates, Advances in Cryptology Proceedings of ASIACRYPT'98, LNCS 1514 (1998) pp.51-65, the scalar multiplication method using the window method and mixed coordinates mainly including Jacobian coordinates in the Weierstrass-form elliptic curve is described as the fast scalar multiplication method. In this case, the computational amount per bit of the scalar value is estimated to be about 10 M. For example, when the scalar value d indicates 160 bits (k=160), the computational amount of the scalar multiplication method is about 1600 M. Therefore, the algorithm of the aforementioned procedure can be said to have a small computational amount and high speed.

Additionally, instead of using the aforementioned algorithm in the fast scalar multiplication unit 202, another algorithm may be used as long as the algorithm outputs $X_d$, $Z_d$, $X_{d+1}$, $Z_{d+1}$, $X_{d-1}$, $Z_{d-1}$ from the scalar value d and the point P on the Weierstrass-form elliptic curve at high speed.

The computational amount required for recovering the coordinate of the coordinate recovering unit 203 in the scalar multiplication unit 103 is 11M+S+I, and this is far small as compared with the computational amount of (9.2k+4) M necessary for fast scalar multiplication of the fast scalar multiplication unit 202. Therefore, the computational amount necessary for the scalar multiplication of the scalar multiplication unit 103 is substantially equal to the computational amount necessary for the fast scalar multiplication of the fast scalar multiplication unit. Assuming I=40M, and S=0.8M, the computational amount can be estimated to be about (9.2k+55.8)M. For example, when the scalar value d indicates 160 bits (k=160), the computational amount necessary for the scalar multiplication is about 1528 M. The Weierstrass-form elliptic curve is used as the elliptic curve, the scalar multiplication method is used in which the window method and the mixed coordinates mainly including the Jacobian coordinates are used, and the scalar-multiplied point is outputted as the affine coordinates. In this case, the required computational amount is about 1640 M, and as compared with this, the required computational amount is reduced.

In a seventh embodiment, a Weierstrass-form elliptic curve is used as the elliptic curve. That is, the elliptic curve for use in input/output of the scalar multiplication unit 103 is the Weierstrass-form elliptic curve. Additionally, as the elliptic curve used in internal calculation of the scalar multiplication unit 103, the Montgomery-form elliptic curve to which the given Weierstrass-form elliptic curve can be transformed may be used. The scalar multiplication unit 103 calculates a scalar-multiplied point $(X_d,Y_d,Z_d)$ with the complete coordinate given thereto as the point of the projective coordinates in the Weierstrass-form elliptic curve from the scalar value d and the point P on the Weierstrass-form elliptic curve. The scalar value d and the point P on the Weierstrass-form elliptic curve are inputted into the scalar multiplication unit 103, and received by the scalar multiplication unit 202. The fast scalar multiplication unit 202 calculates $X_d$ and $Z_d$ in the coordinate of the scalar-multiplied point $dP=(X_d,Y_d,Z_d)$ represented by the projective coordinates in the Weierstrass-form elliptic curve, $X_{d+1}$ and $Z_{d+1}$ in the coordinate of the point $(d+1)P=(X_{d+1},Y_{d+1},Z_{d+1})$ on the Weierstrass-form elliptic curve represented by the projective coordinates, and $X_{d-1}$ and $Z_{d-1}$ in the coordinate of the point $(d-1)P= (X_{d-1},Y_{d-1},Z_{d-1})$ on the Weierstrass-form elliptic curve represented by the projective coordinates from the received scalar value d and the given point P on the Weierstrass-form elliptic curve, and gives the information together with the inputted point P=(x,y) on the Weierstrass-form elliptic curve represented by the affine coordinates to the coordinate recovering unit 203. The coordinate recovering unit 203 recovers coordinates $X_d$, $Y_d$ and $Z_d$ of the scalar-multiplied point $dP=(X_d,Y_d,Z_d)$ represented by the projective coordinates in the Weierstrass-form elliptic curve from the given coordinate values $X_d$, $Z_d$, $X_{d+1}$, $Z_{d+1}$, $X_{d-1}$, $Z_{d-1}$, x and y. The scalar multiplication unit 103 outputs the scalar-multiplied point $(X_d,Y_d,Z_d)$ with the coordinate completely given thereto in the projective coordinates as the calculation result.

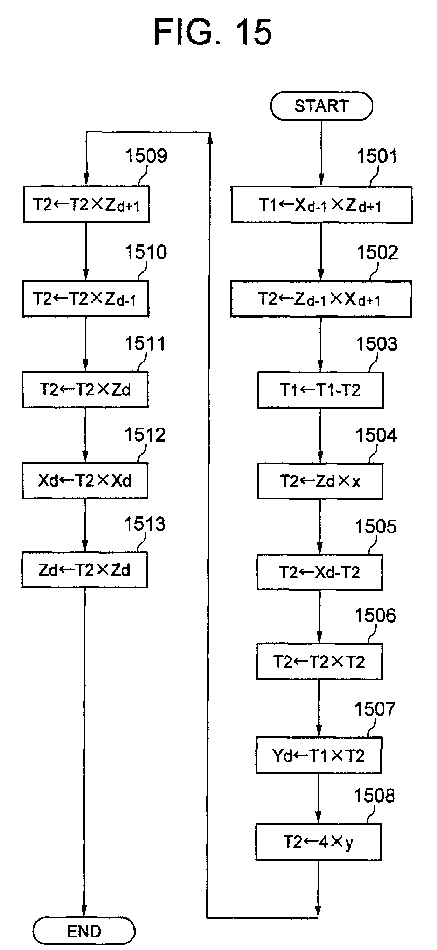

A processing of the coordinate recovering unit which outputs $X_d$, $Y_d$, $Z_d$ from the given coordinates x, y, $X_d$, $Z_d$, $X_{d+1}$, $Z_{d+1}$, $X_{d-1}$, $Z_{d-1}$ will next be described with reference to FIG. 15.

The coordinate recovering unit 203 inputs $X_d$ and $Z_d$ in the coordinate of the scalar-multiplied point $dP=(X_d, Y_d,Z_d)$ represented by the projective coordinates in the Weierstrass-form elliptic curve, $X_{d+1}$ and $Z_{d+1}$ in the coordinate of the point $(d+1)P=(X_{d+1},Y_{d+1},Z_{d+1})$ on the Weierstrass-form elliptic curve represented by the projective coordinates, $X_{d-1}$ and $Z_{d-1}$ in the coordinate of the point $(d-1)P=(X_{d-1},Y_{d-1},Z_{d-1})$ on the Weierstrass-form elliptic curve represented by the projective coordinates, and (x,y) as representation of the point P on the Weierstrass-form elliptic curve in the affine coordinates inputted into the scalar multiplication unit 103, and outputs the scalar-multiplied point $(X_d,Y_d,Z_d)$ with the complete coordinate given thereto in the projective coordinates in the following procedure. Here, the affine coordinate of the inputted point P on the Weierstrass-form elliptic curve is represented by (x,y), and the projective coordinate thereof is represented by $(X_1,Y_1,Z_1)$. Assuming that the inputted scalar value is d, the affine coordinate of the scalar-multiplied point dP in the Weierstrass-form elliptic curve is represented by $(x_d,y_d)$, and the projective coordinate thereof is represented by $(X_d,Y_d,Z_d)$. The affine coordinate of the point (d-1)P on the Weierstrass-form elliptic curve is represented by $(x_{d-1},y_{d-1})$, and the projective coordinate thereof is represented by $(X_{d-1},Y_{d-1},Z_{d-1})$. The affine coordinate of the point (d+1)P on the Weierstrass-form elliptic curve is represented by $(x_{d+1},y_{d+1})$, and the projective coordinate thereof is represented by $(X_{d+1}, Y_{d+1}, Z_{d+1})$.

In step 1501 $X_{d-1} \times Z_{d+1}$ is calculated, and stored in $T_1$. In step 1502 $Z_{d-1} \times X_{d+1}$ is calculated, and stored in $T_2$. In step 1503 $T_1 - T_2$ is calculated. Here, $X_{d-1}Z_{d+1}$ is stored in the register $T_1$, $Z_{d-1}X_{d+1}$ is stored in the register $T_2$, and $X_{d-1}Z_{d+1} - Z_{d-1}X_{d+1}$ is therefore calculated. The result is stored in $T_1$. In step 1504 $Z_d \times x$ is calculated, and stored in the register $T_2$. In step 1505 $X_d - T_2$ is calculated. Here, $Z_d x$ is stored in $T_2$, and $X_d - x Z_d$ is therefore calculated. The result is stored in $T_2$. In step 1506 a square of $T_2$ is calculated. Here, $X_d - x Z_d$ is stored in the register $T_2$, and $(X_d - x Z_d)^2$ is therefore calculated. The result is stored in $T_2$. In step 1507 $T_1 \times T_2$ is calculated. Here, $X_{d-1}Z_{d+1} - Z_{d-1}X_{d+1}$ is stored in $T_1$, $(X_d - x Z_d)^2$ is stored in the register $T_2$, and therefore $(X_d - x Z_d)^2(X_{d-1}Z_{d+1} - Z_{d-1}X_{d+1})$ is calculated. The result is stored in the register $Y_d$. In step 1508 $4 \times y$ is calculated. The result is stored in $T_2$. In step 1509 $T_2 \times Z_{d+1}$ is calculated. Here, $4y$ is stored in $T_2$, and $4y Z_{d+1}$ is therefore calculated. The result is stored in $T_2$. In step 1510 $T_2 \times Z_{d-1}$ is calculated. Here, $4y Z_{d+1}$ is stored in $T_2$, and $4y Z_{d+1} Z_{d-1}$ is therefore calculated. The result is stored in $T_2$. In step 1511 $T_2 \times Z_d$ is calculated. Here, $4y Z_{d+1} Z_{d-1}$ is stored in the $T_2$, and $4y Z_{d+1} Z_{d-1} Z_d$ is therefore calculated. The result is stored in $T_2$. In step 1512 $T_2 \times X_d$ is calculated. Here, $4y Z_{d+1} Z_{d-1} Z_d$ is stored in $T_2$, and $4y Z_{d+1} Z_{d-1} Z_d X_d$ is therefore calculated. The result is stored in the register $X_d$. In step 1513 $T_2 \times Z_d$ is calculated. Here, $4y Z_{d-1} Z_{d+1} Z_d$ is stored in $T_2$, and $4y Z_{d+1} Z_{d-1} Z_d Z_d$ is therefore calculated. The result is stored in $Z_d$. Therefore, $4y Z_{d+1} Z_{d-1} Z_d Z_d$ is stored in the register $Z_d$. In the step 1507 $(X_d - x Z_d)^2(X_{d-1}Z_{d+1} - Z_{d-1}X_{d+1})$ is stored in the register $Y_d$, and is not updated thereafter, and therefore the value is held. In the step 1512 $4y Z_{d+1} Z_{d-1} Z_d X_d$ is stored in the register $X_d$, and is not updated thereafter, and therefore the value is held.

A reason why all values in the projective coordinate $(X_d, Y_d, Z_d)$ of the scalar-multiplied point in the Weierstrass-form elliptic curve are recovered from $x, y, X_d, Z_d, X_{d+1}, Z_{d+1}, X_{d-1}, Z_{d-1}$ given by the aforementioned procedure is as follows. The point $(d+1)P$ is a point obtained by adding the point P to the point dP, and the point $(d-1)P$ is a point obtained by subtracting the point P from the point dP. Assignment to addition formulae in the affine coordinates of the Weierstrass-form elliptic curve results in Equations 27, 28. When opposite sides are individually subjected to subtraction, Equation 29 is obtained. Therefore, Equation 30 results. Here, $x_d = X_d/Z_d$, $x_{d+1} = X_{d+1}/Z_{d+1}$, $x_{d-1} = X_{d-1}/Z_{d-1}$. The value is assigned and thereby converted to a value of the projective coordinate. Then, Equation 31 is obtained. Although $x_d = X_d/Z_d$, reduction to the denominator common with that of $y_d$ is performed, and Equation 32 is obtained.

The following results.

$$Y_d = (X_{d-1}Z_{d+1} - Z_{d-1}X_{d+1})(X_d - Z_d x)^2 \qquad \text{Equation 35}$$

Then, $X_d$ and $Z_d$ may be updated by the following.

$$4y Z_{d+1} Z_{d-1} Z_d X_d \qquad \text{Equation 34}$$

$$4y Z_{d+1} Z_{d-1} Z_d Z_d \qquad \text{Equation 35}$$

The updating is shown above.

Here, $X_d, Y_d, Z_d$ are given by the processing shown in FIG. 15. Therefore, all the values of the projective coordinate $(X_d, Y_d, Z_d)$ are all recovered.

For the aforementioned procedure, in the steps 1501, 1505, 1504, 1507, 1509, 1510, 1511, 1512, and 1513, the computational amount of multiplication on the finite field is required.

Additionally, in the multiplication of the step 1508, since the value of the multiplicand is small as 4, the computational amount is relatively small as compared with the computational amount of usual multiplication, and may therefore be ignored. Moreover, in the step 1506 the computational amount of squaring on the finite field is required. The computational amount of subtraction on the finite field is relatively small as compared with the computational amounts of multiplication on the finite field, and squaring, and may therefore be ignored. Assuming that the computational amount of multiplication on the finite field is M, and the computational amount of squaring on the finite field is S, the above procedure requires a computational amount of 9M+S. This is very small as compared with the computational amount of fast scalar multiplication. For example, when the scalar value d indicates 160 bits, the computational amount of the fast scalar multiplication is estimated to be a little less than about 1500 M. Assuming S=0.8 M, the computational amount of coordinate recovering is 9.8 M, and this is very small as compared with the computational amount of the fast scalar multiplication. Therefore, it is indicated that the coordinate can efficiently be recovered.

Additionally, even when the above procedure is not taken, the values of $X_d, Y_d, Z_d$ given by the above equation can be calculated, and the values of $X_d, Y_d, Z_d$ can be recovered. Moreover, the values of $X_d, Y_d, Z_d$ are selected so that $x_d$, $y_d$ take the values given by the above equations, and the values can be calculated, then the $X_d$, $Y_d$, $Z_d$ can be recovered. In these cases, the computational amount required for recovering generally increases.

The algorithm which outputs $X_d$, $Z_d$, $X_{d+1}$, $Z_{d+1}$, $X_{d-1}$, $Z_{d-1}$ from the scalar value d and the point P on the Weierstrass-form elliptic curve will next be described.

As the fast scalar multiplication method of the scalar multiplication unit 202 of the seventh embodiment, the fast scalar multiplication method of the sixth embodiment is used. Thereby, as the algorithm which outputs $X_d$, $Z_d$, $X_{d+1}$, $Z_{d+1}$, $X_{d-1}$, $Z_{d-1}$ from the scalar value d and the point P on the Weierstrass-form elliptic curve, a fast algorithm can be achieved. Additionally, instead of using the aforementioned algorithm in the scalar multiplication unit 202, any algorithm may be used as long as the algorithm outputs $X_d$, $Z_d$, $X_{d+1}$, $Z_{d+1}$, $X_{d-1}$, $Z_{d-1}$ from the scalar value d and the point P on the Weierstrass-form elliptic curve at high speed.

The computational amount required for recovering the coordinate of the coordinate recovering unit 203 in the scalar multiplication unit 103 is 9M+S, and this is far small as compared with the computational amount of (9.2k+4)M necessary for fast scalar multiplication of the fast scalar multiplication unit 202. Therefore, the computational amount necessary for the scalar multiplication of the scalar multiplication unit 103 is substantially equal to the computational amount necessary for the fast scalar multiplication of the fast scalar multiplication unit. Assuming that S=0.8 M, the computational amount can be estimated to be about (9.2k+13.8)M. For example, when the scalar value d indicates 160 bits (k=160), the, computational amount necessary for the scalar multiplication is about 1486 M. The Weierstrass-form elliptic curve is used as the elliptic curve, the scalar multiplication method is used in which the window method and the mixed coordinates mainly including the Jacobian coordinates are used, and the scalar-multiplied point is outputted as the affine coordinates. In this case, the required computational amount is about 1600 M, and as compared with this, the required computational amount is reduced.

In an eighth embodiment, the Weierstrass-form elliptic curve is used as the elliptic curve. That is, the elliptic curve for use in input/output of the scalar multiplication unit 103 is the Weierstrass-form elliptic curve. Additionally, as the elliptic curve used in internal calculation of the scalar multiplication unit 103, the Montgomery-form elliptic curve to which the given Weierstrass-form elliptic curve can be transformed may be used. The scalar multiplication unit 103 calculates a scalar-multiplied point $(x_d, y_d)$ with the complete coordinate given thereto as the point of the affine coordinates in the Weierstrass-form elliptic curve from the scalar value d and the point P on the Weierstrass-form elliptic curve. The scalar value d and the point P on the Weierstrass-form elliptic curve are inputted into the scalar multiplication unit 103, and received by the scalar multiplication unit 202. The fast scalar multiplication unit 202 calculates $x_d$ in the coordinate of the scalar-multiplied point $dP=(x_d, y_d)$ represented by the affine coordinates in the Weierstrass-form elliptic curve, $x_{d+1}$ in the coordinate of the point $(d+1)P=(x_{d+1}, y_{d+1})$ on the Weierstrass-form elliptic curve represented by the affine coordinates, and $x_{d-1}$ in the coordinate of the point $(d-1)P=(x_{d-1}, y_{d-1})$ on the Weierstrass-form elliptic curve represented by the affine coordinates from the received scalar value d and the given point P on the Weierstrass-form elliptic curve, and gives the information together with the inputted point $P=(x,y)$ on the Weierstrass-form elliptic curve represented by the affine coordinates to the coordinate recovering unit 203. The coordinate recovering unit 203 recovers coordinate $y_d$ of the scalar-multiplied point $dP=(x_d, y_d)$ represented by the affine coordinates in the Weierstrass-form elliptic curve from the given coordinate values $x_d$, $x_{d+1}$, $x_{d-1}$, x and y. The scalar multiplication unit 103 outputs the scalar-multiplied point $(x_d, y_d)$ with the coordinate completely given thereto in the affine coordinates as the calculation result.

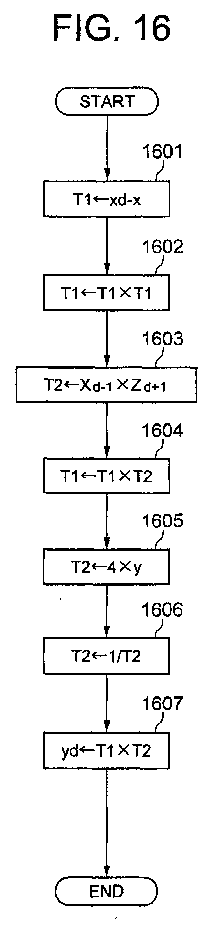

A processing of the coordinate recovering unit which outputs $x_d$, $y_d$ from the given coordinates x, y, $x_d$, $x_{d+1}$, $x_{d-1}$ will next be described with reference to FIG. 16.

The coordinate recovering unit 203 inputs $x_d$ in the coordinate of the scalar-multiplied point $dP=(x_d, y_d)$ represented by the affine coordinates in the Weierstrass-form elliptic curve, $x_{d+1}$ in the coordinate of the point $(d+1)P=(x_{d+1}, y_{d+1})$ on the Weierstrass-form elliptic curve represented by the affine coordinates, $x_{d-1}$ in the coordinate of the point $(d-1)P=(x_{d-1}, y_{d-1})$ on the Weierstrass-form elliptic curve represented by the affine coordinates, and (x,y) as representation of the point P on the Weierstrass-form elliptic curve in the affine coordinates inputted into the scalar multiplication unit 103, and outputs the scalar-multiplied point $(x_d, y_d)$ with the complete coordinate given thereto in the affine coordinates in the following procedure.

In step 1601 $x_d$-x is calculated, and stored in $T_1$. In step 1602 a square of $T_1$, that is, $(x_d-x)^2$ is calculated, and stored in $T_1$. In step 1603 $x_{d-1}-x_{d+1}$ is calculated, and stored in $T_2$. In step 1604 $T_1 \times T_2$ is calculated. Here, $(x_d-x)^2$ is stored in $T_1$, $x_{d-1}-x_{d+1}$ is stored in $T_2$, and therefore $(x_d-x)^2(x_{d-1}-x_{d+1})$ is calculated. The result is stored in $T_1$. In step 1605 $4 \times y$ is calculated, and stored in $T_2$. In step 1606 the inverse element of $T_2$ is calculated. Here, 4y is stored in $T_2$, and 1/4y is therefore calculated. The result is stored in the register $T_2$. In step 1607 $T_1 \times T_2$ is calculated. Here, $(x_d-x)^2(x_{d-1}-x_{d+1})$ is stored in $T_1$, 1/4y is stored in $T_2$, and $(x_d-x)^2(x_{d-1}-x_{d+1})/4y$ is therefore calculated. The result is stored in the register $y_d$. Therefore, $(x_d-x)^2(x_{d-1}-x_{d+1})/4y$ is stored in the register $y_d$. Since the register $x_d$ is not updated, the inputted value is held.

A reason why the y-coordinate $y_d$ of the scalar-multiplied point is recovered by the aforementioned procedure is as follows. Additionally, the point $(d+1)P$ is a point obtained by adding the point P to the point dP, and the point (d-1)P is a point obtained by subtracting the point P from the point dP. Thereby, assignment to the addition formulae in the affine coordinates of the Weierstrass-form elliptic curve results in Equations 27, 28. When the opposite sides are individually subjected to subtraction, Equation 29 is obtained. Therefore, Equation 30 results. Here, $x_d$, $y_d$ are given by the processing of FIG. 16. Therefore, all the values of the affine coordinate $(x_d,y_d)$ are all recovered.

For the aforementioned procedure, in the steps 1604, and 1607, the computational amount of multiplication on the finite field is required. Moreover, for the multiplication of the step 1605, since the value of the multiplicand is small as 4, the computational amount is relatively small as compared with the computational amount of the usual multiplication, and may therefore be ignored. Moreover, in the step 1602, the computational amount of squaring on the finite field is required. Furthermore, the computational amount of inversion on the finite field is required in the step 1606. The computational amount of subtraction on the finite field is relatively small as compared with the computational amounts of multiplication on the finite field, squaring, and inversion, and may therefore be ignored. Assuming that the computational amount of multiplication on the finite field is M, the computational amount of squaring on the finite field is S, and the computational amount of inversion on the finite field is I, the above procedure requires a computational amount of 2M+S+I. This is far small as compared with the computational amount of the fast scalar multiplication. For example, when the scalar value d indicates 160 bits, the computational amount of the fast scalar multiplication is estimated to be a little less than about 1500 M. Assuming S=0.8M and I=40M, the computational amount of coordinate recovering is 42.8 M, and far small as compared with the computational amount of the fast scalar multiplication. Therefore, it is indicated that the coordinate can efficiently be recovered.

Additionally, even when the above procedure is not taken, and when the value of the right side of the equation can be calculated, the value of $y_d$ can be recovered. In this case, the computational amount required for recovering generally increases.

An algorithm which outputs $x_d$, $x_{d+1}$, $x_{d-1}$ from the scalar value d and the point P on the Weierstrass-form elliptic curve will next be described with reference to FIG. 7.

The fast scalar multiplication unit 202 inputs the point P on the Weierstrass-form elliptic curve inputted into the scalar multiplication unit 103, and outputs $x_d$ in the scalar-multiplied point $dP=(x_d,y_d)$ represented by the affine coordinate in the Weierstrass-form elliptic curve, $x_{d+1}$ in the point $(d+1)P=(x_{d+1},y_{d+1})$ on the Weierstrass-form elliptic curve represented by the affine coordinate, and $x_{d-1}$ in the point $(d-1)P=(x_{d-1},y_{d-1})$ on the Weierstrass-form elliptic curve represented by the affine coordinate by the following procedure. In step 716, the given point P on the Weierstrass-form elliptic curve is transformed to the point represented by the projective coordinates on the Montgomery-form elliptic curve. This point is set anew as point P. In step 701, the initial value 1 is assigned to the variable I. A doubled point 2P of the point P is calculated in step 702. Here, the point P is represented as (x,y,1) in the projective coordinate, and a formula of doubling in the projective coordinate of the Montgomery-form elliptic curve is used to calculate the doubled point 2P. In step 703, the point P on the elliptic curve inputted into the scalar multiplication unit 103 and the point 2P obtained in the step 702 are stored as a set of points (P,2P). Here, the points P and 2P are represented by the projective coordinate. It is judged in step 704 whether or not the variable I agrees with the bit length of the scalar value d. With agreement, m=d is satisfied and the flow goes to step 714. With disagreement, the flow goes to step 705. The variable I is increased by 1 in the step 705. It is judged in step 706 whether the value of the I-th bit of the scalar value is 0 or 1. When the value of the bit is 0, the flow goes to the step 707. When the value of the bit is 1, the flow goes to step 710. In step 707, addition mP+(m+1)P of points mP and (m+1)P is performed from a set of points (mP,(m+1)P) represented by the projective coordinate, and the point (2m+1)P is calculated. Thereafter, the flow goes to step 708. Here, the addition mP+(m+1)P is calculated using the addition formula in the projective coordinate of the Montgomery-form elliptic curve. In step 708, doubling 2(mP) of the point mP is performed from the set of points (mP, (m+1)P) represented by the projective coordinate, and the point 2mP is calculated. Thereafter, the flow goes to step 709. Here, the doubling 2(mP) is calculated using the formula of doubling in the projective coordinate of the Montgomery-form elliptic curve. In the step 709, the point 2mP obtained in the step 708 and the point (2m+1)P obtained in the step 707 are stored as a set of points (2mP, (2m+1)P) instead of the set of points (mP, (m+1)P). Thereafter, the flow returns to the step 704. Here, the points 2mP, (2m+1)P, mP, and (m+1)P are all represented in the projective coordinates. In step 710, addition mP+(m+1)P of the points mP, (m+1)P is performed from the set of points (mP,(m+1)P) represented by the projective coordinates, and the point (2m+1)P is calculated. Thereafter, the flow goes to step 711. Here, the addition mP+(m+1)P is calculated using the addition formula in the projective coordinates of the Montgomery-form elliptic curve. In the step 711, doubling 2((m+1)P) of the point (m+1)P is performed from the set of points (mP,(m+1)P) represented by the projective coordinates, and a point (2m+2)P is calculated. Thereafter, the flow goes to step 712. Here, the doubling 2((m+1)P) is calculated using the formula of doubling in the projective coordinates of the Montgomery-form elliptic curve. In the step 712, the point (2m+1)P obtained in the step 710 and the point (2m+2)P obtained in the step 711 are stored as a set of points ((2m+1)P, (2m+2)P) instead of the set of points (mP, (m+1)P). Thereafter, the flow returns to the step 704. Here, the points (2m+1)P, (2m+2)P, mP, and (m+1)P are all represented in the projective coordinates. In step 714, from the set of points (mP, (m+1)P) represented by the protective coordinates, X-coordinate $X_{m-1}$ and Z-coordinate $Z_{m-1}$ are obtained in the projective coordinates of the point (m-1)P. Thereafter, the flow goes to step 715. In the step 715, the point (m-1)P in the Montgomery-form elliptic curve is transformed to the point represented by the affine coordinates on the Weierstrass-form elliptic curve. The x-coordinate of the point is set anew to $x_{m-1}$. With respect to the set of points (mP, (m+1)P) represented by the projective coordinates in the Montgomery-form elliptic curve, the points mP and (m+1)P are transformed to points represented by the affine coordinates on the Weierstrass-form elliptic curve. The respective points are replaced as mP=$(x_m,y_m)$ and (m+1)P= $(x_{m+1},y_{m+1})$. Here, since the Y-coordinate cannot be obtained by the addition and doubling formulae in the projective coordinates of the Montgomery-form elliptic curve, $y_m$ and $y_{m+1}$ are not obtained. Thereafter, the flow goes to step 713. In the step 713, x-coordinate $x_{m-1}$ of the point (m-1) P represented by the affine coordinates on the Weierstrass-form elliptic curve is set to $x_{d-1}$, $x_m$ is set to $x_d$ from the point mP=$(x_m,y_m)$ represented by the projective coordinates on the Weierstrass-form elliptic curve, and $x_{m+1}$ is outputted as $x_{d+1}$ from the point (m+1)P=$(x_{m+1},y_{m+1})$ represented by the affine coordinates on the Weierstrass-form elliptic curve. In the above procedure, m and scalar value d are equal in the bit length and bit pattern, and are therefore equal. Moreover, when (m-1)P is obtained in step 714, it may be obtained by Equations 13, 14. If m is an odd number, a value of ((m-1)/2)P is separately held in the step 712, and (m-1)P may be obtained from the value by the doubling formula of the Montgomery-form elliptic curve.

The computational amount of the addition formula in the projective coordinates of the Montgomery-form elliptic curve is 3M+2S with $Z_1$=1. Here, M is the computational amount of multiplication on the finite field, and S is the computational amount of squaring on the finite field. The computational amount of the doubling formula in the projective coordinates of the Montgomery-form elliptic curve is 3M+2S. When the value of the I-th bit of the scalar value is 0, the computational amount of addition in the step 707, and the computational amount of doubling in the step 708 are required. That is, the computational amount of 6M+4S is required. When the value of the I-th bit of the scalar value is 1, the computational amount of addition in the step 710, and the computational amount of doubling in the step 711 are required. That is, the computational amount of 6M+4S is required. In any case, the computational amount of 6M+4S is required. The number of repetitions of the steps 704, 705, 706, 707, 708, 709, or the steps 704, 705, 706, 710, 711, 712 is (bit length of the scalar value d)-1. Therefore, in consideration of the computational amount of doubling in the step 702, the computational amount necessary for transform to the point on the Montgomery-form elliptic curve in the step 716, and the computational amount necessary for transform to the point on the Weierstrass-form elliptic curve in the step 715, the entire computational amount is (6M+4S)k+15M+I. Here, k is the bit length of the scalar value d. In general, since the computational amount S is estimated to be of the order of S=0.8 M, and the computational amount of I is estimated to be of the order of I=40 M, the entire computational amount is approximately (9.2k+55)M. For example, when the scalar value d indicates 160 bits (k=160), the computational amount of algorithm of the aforementioned procedure is about 1527 M. The computational amount per bit of the scalar value d is about 9.2 M. In A. Miyaji, T. Ono, H. Cohen, Efficient elliptic curve exponentiation using mixed coordinates, Advances in Cryptology Proceedings of ASIACRYPT'98, LNCS 1514 (1998) pp.51-65, the scalar multiplication method using the window method and mixed coordinates mainly including Jacobian coordinates in the Weierstrass-form elliptic curve is described as the fast scalar multiplication method. In this case, the computational amount per bit of the scalar value is estimated to be about 10 M. For example, when the scalar value d indicates 160 bits (k=160), the computational amount of the scalar multiplication method is about 1640 M. Therefore, the algorithm of the aforementioned procedure can be said to have a small computational amount and high speed.

Additionally, instead of using the aforementioned algorithm in the fast scalar multiplication unit 202, another algorithm may be used as long as the algorithm outputs $x_d$, $x_{d+1}$, $x_{d-1}$ from the scalar value d and the point P on the Weierstrass-form elliptic curve at high speed.

The computational amount required for recovering the coordinate of the coordinate recovering unit 203 in the scalar multiplication unit 103 is 2M+S+I, and this is far small as compared with the computational amount of (9.2k+55) M necessary for fast scalar multiplication of the fast scalar multiplication unit 202. Therefore, the computational amount necessary for the scalar multiplication of the scalar multiplication unit 103 is substantially equal to the computational amount necessary for the fast scalar multiplication of the fast scalar multiplication unit. Assuming I=40 M, and S=0.8 M, the computational amount can be estimated to be about (9.2k+97.8)M. For example, when the scalar value d indicates 160 bits (k=160), the computational amount necessary for the scalar multiplication is about 1570 M. The Weierstrass-form elliptic curve is used as the elliptic curve, the scalar multiplication method is used in which the window method and the mixed coordinates mainly including the Jacobian coordinates are used, and the scalar-multiplied point is outputted as the affine coordinates. In this case, the required computational amount is about 1640 M, and as compared with this, the required computational amount is reduced.

In a ninth embodiment, the Weierstrass-form elliptic curve is used as the elliptic curve for input/output, and the Montgomery-form elliptic curve to which the given Weierstrass-form elliptic curve can be transformed is used for the internal calculation. The scalar multiplication unit 103 calculates and outputs the scalar-multiplied point $(x_d,y_d)$ with the complete coordinate given thereto as the point of the affine coordinates in the Weierstrass-form elliptic curve from the scalar value d and the point P on the Weierstrass-form elliptic curve. The scalar value d and the point P on the Weierstrass-form elliptic curve are inputted into the scalar multiplication unit 103, and received by the scalar multiplication unit 202. The fast scalar multiplication unit 202 calculates $X_d$ and $Z_d$ in the coordinate of the scalar-multiplied point $dP=(X_d,Y_d,Z_d)$ represented by the projective coordinates in the Montgomery-form elliptic curve, and $X_{d+1}$ and $Z_{d+1}$ in the coordinate of the point $(d+1)P=(X_{d+1},Y_{d+1},Z_{d+1})$ on the Montgomery-form elliptic curve represented by the projective coordinates from the received scalar value d and the given point P on the Weierstrass-form elliptic curve. Moreover, the inputted point P on the Weierstrass-form elliptic curve is transformed to the point on the Montgomery-form elliptic curve which can be transformed from the given Weierstrass-form elliptic curve, and the point is set anew to P=(x,y). The scalar multiplication unit 202 gives $X_d$, $Z_d$, $X_{d+1}$, $Z_{d+1}$, x, and y to the coordinate recovering unit 203. The coordinate recovering unit 203 recovers coordinate $x_d$ and $y_d$ of the scalar-multiplied point $dP=(x_d,y_d)$ represented by the affine coordinates in the Weierstrass-form elliptic curve from the given coordinate values $X_d$, $Z_d$, $X_{d+1}$, $Z_{d+1}$, x, and y. The scalar multiplication unit 103 outputs the scalar-multiplied point $(x_d,y_d)$ with the coordinate completely given thereto in the affine coordinates as the calculation result.

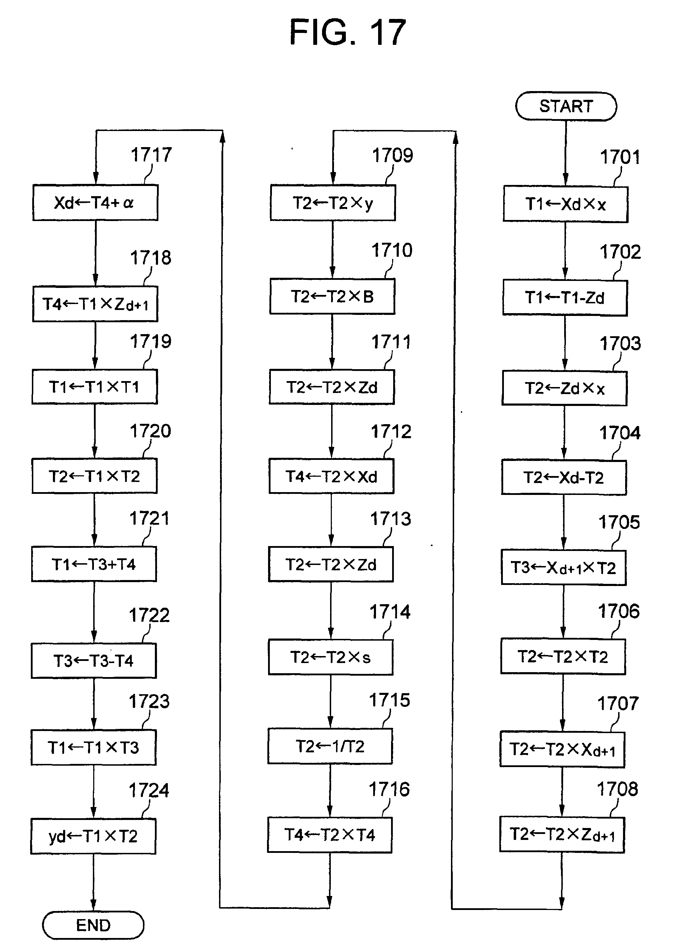

A processing of the coordinate recovering unit which outputs $x_d$, $y_d$ from the given coordinates x, y, $X_d$, $Z_d$, $X_{d+1}$, $Z_{d+1}$ will next be described with reference to FIG. 17.

The coordinate recovering unit 203 inputs $X_d$ and $Z_d$ in the coordinate of the scalar-multiplied point $dP=(X_d, Y_d,Z_d)$ represented by the projective coordinates in the Montgomery-form elliptic curve, $X_{d+1}$ and $Z_{d+1}$ in the coordinate of the point $(d+1)P=(X_{d+1},Y_{d+1},Z_{d+1})$ on the Montgomery-form elliptic curve represented by the projective coordinates, and (x,y) as representation of the point P on the Montgomery-form elliptic curve in the affine coordinates inputted into the scalar multiplication unit 103, and outputs the scalar-multiplied point $(x_d,y_d)$ with the complete coordinate given thereto in the affine coordinates in the following procedure. Here, the affine coordinate of the inputted point P on the Montgomery-form elliptic curve is represented by (x,y), and the projective coordinate thereof is represented by $(X_1,Y_1, Z_1)$. Assuming that the inputted scalar value is d, the affine coordinate of the scalar-multiplied point dP in the Montgomery-form elliptic curve is represented by $(x_d^{Mon},y_d^{Mon})$, and the projective coordinate thereof is represented by $(X_d, Y_d,Z_d)$. The affine coordinate of the point (d-1)P on the Montgomery-form elliptic curve is represented by $(x_{d-1},y_{d-1})$, and the projective coordinate thereof is represented by $(X_{d-1},Y_{d-1},Z_{d-1})$. The affine coordinate of the point (d+1)P on the Montgomery-form elliptic curve is represented by $(x_{d+1},y_{d+1})$, and the projective coordinate thereof is represented by $(X_{d+1},Y_{d+1},Z_{d+1})$.

In step 1701 $X_d \times x$ is calculated, and stored in the register $T_1$. In step 1702 $T_1-Z_d$ is calculated. Here, $X_d x$ is stored in the register $T_1$, and $X_d x-Z_d$ is therefore calculated. The result is stored in the register $T_1$. In step 1703 $Z_d \times x$ is calculated, and stored in the register $T_2$. In step 1704 $X_d-T_2$ is calculated. Here, $Z_d x$ is stored in the register $T_2$, and $X_d-xZ_d$ is therefore calculated. The result is stored in the register $T_2$. In step 1705 $X_{d+1} \times T_2$ is calculated. Here, $X_d-xZ_d$ is stored in the register $T_2$, and $X_{d+1}(X_d-xZ_d)$ is therefore calculated. The result is stored in the register $T_3$. In step 1706 the square of $T_2$ is calculated. Here, $(X_d-xZ_d)$ is stored in the register $T_2$, and $(X_d-xZ_d)^2$ is therefore calculated. The result is stored in the register $T_2$. In step 1707 $T_2 \times X_{d+1}$ is calculated. Here, $(X_d-xZ_d)^2$ is stored in the register $T_2$, and $X_{d+1}(X_d-xZ_d)^2$ is therefore calculated. The result is stored in the register $T_2$. In step 1708 $T_2 \times Z_{d+1}$ is calculated. Here, $X_{d+1}(X_d-xZ_d)^2$ is stored in the register $T_2$, and $Z_{d+1}X_{d+1}(X_d-xZ_d)^2$ is therefore calculated. The result is stored in the register $T_2$. In step 1709 $T_2 \times y$ is calculated. Here, $Z_{d+1}X_{d+1}(X_d-xZ_d)^2$ is stored in the register $T_2$, and $yZ_{d+1}X_{d+1}(X_d-xZ_d)^2$ is therefore calculated. The result is stored in the register $T_2$. In step 1710 $T_2 \times B$ is calculated. Here, $yZ_{d+1}X_{d+1}(X_d-xZ_d)^2$ is stored in the register $T_2$, and $ByZ_{d+1}X_{d+1}(X_d-xZ_d)^2$ is therefore calculated. The result is stored in the register $T_2$. In step 1711 $T_2 \times Z_d$ is calculated. Here, $ByZ_{d+1}X_{d+1}(X_d-xZ_d)^2$ is stored in the register $T_2$, and $ByZ_{d+1}X_{d+1}(X_d-xZ_d)^2Z_d$ is therefore calculated. The result is stored in the register $T_2$. In step 1712 $T_2 \times X_d$ is calculated. Here, $ByZ_{d+1}X_{d+1}(X_d-xZ_d)^2Z_d$ is stored in the register $T_2$, and $ByZ_{d+1}X_{d+1}(X_d-xZ_d)^2Z_dX_d$ is therefore calculated. The result is stored in the register $T_4$. In step 1713 $T_2 \times Z_d$ is calculated. Here, $ByZ_{d+1}X_{d+1}(X_d-xZ_d)^2Z_d$ is stored in the register $T_2$, and $ByZ_{d+1}X_{d+1}(X_d-xZ_d)^2Z_d$ is therefore calculated. The result is stored in the register $T_2$. In step 1714 the register $T_2 \times s$ is calculated. Here, $ByZ_{d+1}X_{d+1}(X_d-xZ_d)^2Z_d^2$ is stored in the register $T_2$, and therefore $sByZ_{d+1}X_{d+1}(X_d-xZ_d)^2Z_d^2$ is calculated. The result is stored in the register $T_2$. In step 1715 the inverse element of $T_2$ is calculated. Here, $sByZ_{d+1}X_{d+1}(X_d-xZ_d)^2Z_d^2$ is stored in $T_2$, and $1/sByZ_{d+1}X_{d+1}(X_d-xZ_d)^2Z_d^2$ is calculated. The result is stored in $T_2$. In step 1716 $T_2 \times T_4$ is calculated. Therefore, $1/sByZ_{d+1}X_{d+1}(X_d-xZ_d)^2Z_d^2$ is stored in the register $T_2$, $ByZ_{d+1}X_{d+1}(X_d-xZ_d)^2Z_dX_d$ is stored in the register $T_4$, and therefore $(ByZ_{d+1}X_{d+1}(X_d-xZ_d)^2Z_dX_d)/(sByZ_{d+1}X_{d+1}(X_d-xZ_d)^2Z_d^2)$ is calculated. The result is stored in the register $T_4$. In step 1717 $T_4+\alpha$ is calculated. Here, the register $T_4$ stores $(ByZ_{d+1}X_{d+1}(X_d-xZ_d)^2Z_dX_d) / (sByZ_{d+1}X_{d+1}(X_d-xZ_d)^2Z_d^2)$, and Equation 36 is therefore calculated.

$$\frac{ByZ_{d+1}X_{d+1}Z_d(X_d - xZ_d)^2 X_d}{sBYZ_{d+1}X_{d+1}Z_d(X_d - xZ_d)^2 Z_d} + \alpha \qquad\qquad \text{Equation 36}$$

The result is stored in the register $x_d$. In step 1718 $T_1 \times Z_{d+1}$ is calculated. Here, $X_d x-Z_d$ is stored in the register $T_1$, and therefore $Z_{d+1}(X_d x-Z_d)$ is calculated. The result is stored in the register $T_4$. In step 1719 a square of the register

$T_1$ is calculated. Here $(X_dx-Z_d)$ is stored in the register $T_1$, and therefore $(X_dx-Z_d)^2$ is calculated. The result is stored in the register $T_1$. In step 1720 $T_1 \times T_2$ is calculated. Here $(X_dx-Z_d)^2$ is stored in the register $T_1$, $1/sByZ_{d+1}X_{d+1}(X_d-xZ_d)^2Z_d^2$ is stored in the register $T_2$, and therefore $(X_dx-Z_d)^2/SByZ_{d+1}X_{d+1}(X_d-xZ_d)^2Z_d^2$ is calculated. The result is stored in the register $T_2$. In step 1721 $T_3+T_4$ is calculated. Here $X_{d+1}(X_d-xZ_d)$ is stored in the register $T_3$, $Z_{d+1}(X_dx-Z_d)$ is stored in the register $T_4$, and therefore $X_{d+1}(X_d-xZ_d)+Z_{d+1}(X_dx-Z_d)$ is calculated. The result is stored in the register $T_1$. In step 1722 $T_3-T_4$ is calculated. Here $X_{d+1}(X_d-xZ_d)$ is stored in the register $T_3$, and $Z_{d+1}(X_dx-Z_d)$ is stored in the register $T_4$, and therefore $X_{d+1}(X_d-xZ_d)-Z_{d+1}(X_dx-Z_d)$ is calculated. The result is stored in the register $T_3$. In step 1723 $T_1 \times T_3$ is calculated. Here $X_{d+1}(X_d-xZ_d)+Z_{d+1}(X_dx-Z_d)$ is stored in the register $T_1$, $X_{d+1}(X_d-xZ_d)-Z_{d+1}(X_dx-Z_d)$ is stored in the register $T_3$, and therefore $\{X_{d+1}(X_d-xZ_d)+Z_{d+1}(X_dx-Z_d)\}\{X_{d+1}(X_d-xZ_d)-Z_{d+1}(X_dx-Z_d)\}$ is calculated. The result is stored in the register $T_1$. In step 1724 $T_1 \times T_2$ is calculated. Here $\{X_{d+1}(X_d-xZ_d)+Z_{d+1}(X_dx-Z_d)\}\{X_{d+1}(X_d-xZ_d)-Z_{d+1}(X_dx-Z_d)\}$ is stored in the register $T_1$, $(X_dx-Z_d)^2/sByZ_{d+1}X_{d+1}(X_d-xZ_d)^2Z_d^2$ is stored in the register $T_2$, and therefore the following is calculated.

$$\frac{\{Z_{d+1}(X_dx - Z_d) + X_{d+1}(X_d - xZ_d)\}\{Z_{d+1}(X_dx - Z_d) - X_{d+1}(X_d - xZ_d)\}(X_dx - Z_d)^2}{sByZ_{d+1}X_{d+1}(X_d - xZ_d)^2Z_d^2} \qquad \text{Equation 37}$$

The result is stored in $y_d$. Therefore, the value of Equation 37 is stored in the register $y_d$. The value of Equation 36 is stored in the register $x_d$, and is not updated thereafter, and the value is therefore held. As a result, all the values of the affine coordinate $(x_d,y_d)$ in the Weierstrass-form elliptic curve are recovered.

A reason why all values in the affine coordinate $(x_d,y_d)$ of the scalar-multiplied point in the Weierstrass-form elliptic curve are recovered from x, y, $X_d$, $Z_d$, $X_{d+1}$, $Z_{d+1}$ given by the aforementioned procedure is as follows. Additionally, point (d+1)P is a point obtained by adding the point P to the point dP, and point (d-1)P is a point obtained by subtracting the point P from the point dP. Assignment to addition formulae in the affine coordinates of the Montgomery-form elliptic curve results in the following equations.

$$(A + x + x_d^{Mon} + x_{d+1})(x_d^{Mon} - x)^2 = B(y_d^{Mon} - y)^2 \qquad \text{Equation 38}$$

$$(A + x + x_d^{Mon} + x_{d-1})(x_d^{Mon} - x)^2 = B(y_d^{Mon} + y)^2 \qquad \text{Equation 39}$$

When opposite sides are individually subjected to subtraction, the following equation is obtained.

$$(x_{d-1} - x_{d+1})(x_d^{Mon} - x)^2 = 4By_d^{Mon}y \qquad \text{Equation 40}$$

Therefore, the following results.

$$y_d^{Mon} = (x_{d-1} - x_{d+1})(x_d^{Mon} - x)^2 / 4By \qquad \text{Equation 41}$$

Here, $x_d^{Mon}=X_d/Z_d$, $x_{d+1}=X_{d+1}/Z_{d+1}$, $x_{d-1}=X_{d-1}/Z_{d-1}$. The value is assigned and thereby converted to a value of the projective coordinate. Then, the following equation is obtained.

$$y_d^{Mon}=(X_{d-1}Z_{d+1}-Z_{d-1}X_{d+1})(X_d-Z_dx)^2/4ByZ_{d-1}Z_{d+1}Z_d^2 \qquad \text{Equation 42}$$

The addition formulae in the projective coordinate of the Montgomery-form elliptic curve are Equations 11, 12 described above. Here, $X_m$ and $Z_m$ are X-coordinate and Z-coordinate in the projective coordinate of the m-multiplied point mP of the point P on the Montgomery-form elliptic curve, $X_n$ and $Z_n$ are X-coordinate and Z-coordinate in the projective coordinate of an n-multiplied point nP of the point P on the Montgomery-form elliptic curve, $X_{m-n}$ and $Z_{m-n}$ are X-coordinate and Z-coordinate in the projective coordinate of the (m-n)-multiplied point (m-n)P of the point P on the Montgomery-form elliptic curve, $X_{m+n}$ and $Z_{m+n}$ are X-coordinate and Z-coordinate in the projective coordinate of a (m+n)-multiplied point (m+n)P of the point P on the Montgomery-form elliptic curve, and m, n are positive integers satisfying m>n. In the equation, when $X_m/Z_m=x_m$, $X_n/Z_n=x_n$, $X_{m-n}/Z_{m-n}=x_{m-n}$ are unchanged, $X_{m+n}/Z_{m+n}=x_{m+n}$ is also unchanged. Therefore, this functions well as the formula in the projective coordinate. On the other hand, also in Equa-

tions 13, 14, when $X_m/Z_m=X_m$, $X_n/Z_n=x_n$, $X_{m-n}/Z_{m-n}-x_{m-n}$ are unchanged, $X_{m+n}/Z_{m+n}=x_{m-n}$ is also unchanged. Moreover, since $X'_{m-n}/Z'_{m-n}=X_{m-n}/Z_{m-n}=x_{m-n}$ is satisfied, $X'_{m-n}$, $Z'_{m-n}$ may be taken as the projective coordinate of $x_{m-n}$. When m=d, n=1 are set, the above formula is used, $X_{d-1}$ and $Z_{d-1}$ are deleted from the equation of $y_d^{Mon}$, and $X_1=x$, $Z_1=1$ are set, the following equation is obtained.

$$y_d^{Mon} = \frac{\{Z_{d+1}(X_d x - Z_d) + X_{d+1}(X_d - xZ_d)\}\{Z_{d+1}(X_d x - Z_d) - X_{d+1}(X_d - xZ_d)\}(X_d x - Z_d)^2}{ByZ_{d+1}X_{d+1}(X_d - xZ_d)^2 Z_d^2}$$ 

Equation 43

Although $x_d^{Mon}=X_d/Z_d$, reduction to the denominator common with that of $y_d^{Mon}$ is performed for the purpose of reducing the frequency of inversion, and the following equation is obtained.

$$x_d^{Mon} = \frac{ByZ_{d+1}X_{d+1}Z_d(X_d-xZ_d)^2 X_d}{ByZ_{d+1}X_{d+1}Z_d(X_d-xZ_d)^2 Z_d}$$ 

Equation 44

A correspondence between the point on the Montgomery-form elliptic curve and the point on the Weierstrass-form elliptic curve is described in K.Okeya, H.Kurumatani, K.Sakurai, Elliptic Curves with the Montgomery-form and Their Cryptographic Applications, Public Key Cryptography, LNCS 1751 (2000) pp.238-257. Thereby, when conversion parameters are s, $\alpha$, the relation is $y_d=s^{-1}y_d^{Mon}$ and $x_d=s^{-1}x_d^{Mon}+\alpha$. As a result, Equations 45, 46 are obtained.

$$y_d = \frac{\{Z_{d+1}(X_d x-z_d)+X_{d+1}(X_d-xZ_d)\}\{Z_{d+1}(X_d x-Z_d)-X_{d+1}(X_d-xZ_d)\}(X_d x-Z_d)^2}{sByZ_{d+1}X_{d+1}(X_d-xZ_d)^2 Z_d^2}$$ 

Equation 45

$$x_d=(ByZ_{d+1}X_{d+1}Z_d(X_d-xZ_d)^2X_d)/(sByZ_{d+1}X_{d+1}Z_d(X_d-xZ_d)^2Z_d)+\alpha$$ 

Equation 46

Here, $x_d$, $y_d$ are given by FIG. 17. Therefore, all values of the affine coordinate $(x_d,y_d)$ in the Weierstrass-form elliptic curve are recovered.

For the aforementioned procedure, in the steps 1701, 1703, 1705, 1707, 1708, 1709, 1710, 1711, 1712, 1713, 1714, 1716, 1718, 1720, 1723, and 1724, the computational amount of multiplication on the finite field is required. Moreover, the computational amount of squaring on the finite field is required in the steps 1706 and 1719. Moreover, the computational amount of inversion on the finite field is required in the step 1715. The computational amounts of addition and subtraction on the finite field are relatively small as compared with the computational amount of multiplication on the finite field and the computational amounts of squaring and inversion, and may therefore be ignored. Assuming that the computational amount of multiplication on the finite field is M, the computational amount of squaring on the finite field is S, and the computational amount of inversion on the finite field is I, the above procedure requires a computational amount of 16M+2S+I. This is very small as compared with the computational amount of fast scalar multiplication. For example, when the scalar value d indicates 160 bits, the computational amount of the fast scalar multiplication is estimated to be a little less than about 1500 M. Assuming S=0.8 M, I=40 M, the computational amount of coordinate recovering is 57.6 M, and this is very small as compared with the computational amount of the fast scalar multiplication. Therefore, it is indicated that the coordinate can efficiently be recovered.

Additionally, even when the above procedure is not taken, the values of $x_d$, $y_d$ given by the above equation can be calculated, and the values of $x_d$, $y_d$ can then be recovered. In this case, the computational amount necessary for the recovering generally increases. Moreover, when the value of B as the parameter of the Montgomery-form elliptic curve or the conversion parameter s to the Montgomery-form elliptic curve is set to be small, the computational amount of multiplication in the step 1710 or 1714 can be reduced.

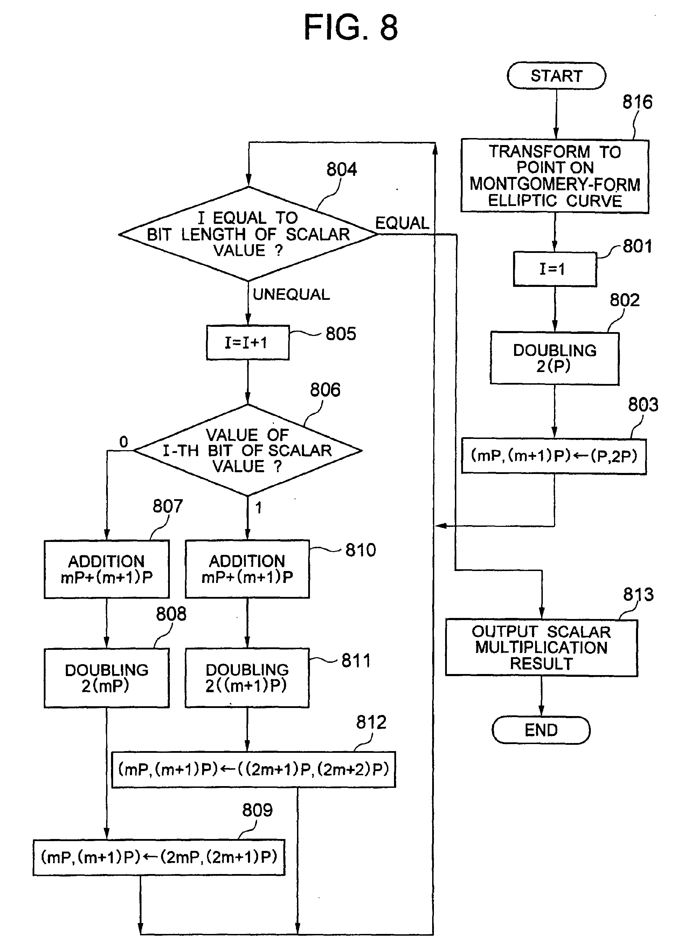

A processing of the fast scalar multiplication unit which outputs $X_d$, $Z_d$, $X_{d+1}$, $Z_{d+1}$ from the scalar value d and the point P on the Weierstrass-form elliptic curve will next be described with reference to FIG. 8.

The fast scalar multiplication unit 202 inputs the point P on the Weierstrass-form elliptic curve inputted into the scalar multiplication unit 103, and outputs $X_d$ and $Z_d$ in the scalar-multiplied point $dP=(X_d,Y_d,Z_d)$ represented by the projective coordinate in the Montgomery-form elliptic curve, and $X_{d+1}$ and $Z_{d+1}$ in the point $(d+1)P=(X_{d+1},Y_{d+1},Z_{d+1})$ on the Montgomery-form elliptic curve represented by the projective coordinate by the following procedure. In step 816, the given point P on the Weierstrass-form elliptic curve is transformed to the point represented by the projective coordinates on the Montgomery-form elliptic curve. This point is set anew as point P. In step 801, the initial value 1 is assigned to the variable I. The doubled point 2P of the point P is calculated in step 802. Here, the point P is represented as (x,y,1) in the projective coordinate, and the doubling formula in the projective coordinate of the Montgomery-form elliptic curve is used to calculate the doubled point 2P. In step 803, the point P on the elliptic curve inputted into the scalar multiplication unit 103 and the point 2P obtained in the step 802 are stored as a set of points (P,2P). Here, the points P and 2P are represented by the projective coordinate. It is judged in step 804 whether or not the variable I agrees with the bit length of the scalar value d. With agreement, the flow goes to step 813. With disagreement, the flow goes to step 805. The variable I is increased by 1 in the step 805. It is judged in step 806 whether the value of the I-th bit of the scalar value is 0 or 1. When the value of the bit is 0, the flow goes to the step 807. When the value of the bit is 1, the flow goes to step 810. In step 807, addition mP+(m+1)P of points mP and (m+1)P is performed from a set of points (mP,(m+1)P) represented by the projective coordinate, and the point (2m+1)P is calculated. Thereafter, the flow goes to step 808. Here, the addition mP+(m+1)P is calculated using the addition formula in the projective coordinate of the Montgomery-form elliptic curve. In step 808, doubling 2(mP) of the point mP is performed from the set of points (mP,(m+1)P) represented by the projective coordinate, and the point 2mP is calculated. Thereafter, the flow goes to step 809. Here, the doubling 2(mP) is calculated using the formula of doubling in the projective coordinate of the Montgomery-form elliptic curve. In the step 809, the point 2mP obtained in the step 808 and the point (2m+1)P obtained in the step 807 are stored as a set of points (2mP, (2m+1)P) instead of the set of points (mP, (m+1)P). Thereafter, the flow returns to the step 804. Here, the points 2mP, (2m+1)P, mP, and (m+1)P are all represented in the projective coordinates. In step 810, addition mP+(m+1)P of the points mP, (m+1)P is performed from the set of points (mP,(m+1)P) represented by the projective coordinates, and the point (2m+1)P is calculated. Thereafter, the flow goes to step 811. Here, the addition mP+(m+1)P is calculated using the addition formula in the projective coordinates of the Montgomery-form elliptic curve. In the step 811, doubling 2((m+1)P) of the point (m+1)P is performed from the set of points (mP,(m+1)P) represented by the projective coordinates, and a point (2m+2)P is calculated. Thereafter, the flow goes to step 812. Here, the doubling 2((m+1)P) is calculated using the formula of doubling in the projective coordinates of the Montgomery-form elliptic curve. In the step 812, the point (2m+1)P obtained in the step 810 and the point (2m+2)P obtained in the step 811 are stored as a set of points ((2m+1)P,(2m+2)P) instead of the set of points (mP,(m+1)P). Thereafter, the flow returns to the step 804. Here, the points (2m+1)P, (2m+2)P, mP, and (m+1)P are all represented in the projective coordinates. In step 813, $X_m$ and $Z_m$ are outputted as $X_d$ and $Z_d$ in the point $mP(X_m,Y_m,Z_m)$ represented by the projective coordinates, and $X_{m+1}$ and $Z_{m+1}$ are outputted as $X_{d+1}$ and $Z_{d+1}$ in the point $(m+1)P(X_{m+1},Y_{m+1},Z_{m+1})$ represented by the projective coordinates from the set of points (mP,(m+1)P) represented by the projective coordinates. Here, $Y_m$ and $Y_{m+1}$ are not obtained, because the Y-coordinate cannot be obtained by the addition and doubling formulae in the projective coordinates of the Montgomery-form elliptic curve. In the above procedure, m and scalar value d are equal in the bit length and bit pattern, and are therefore equal.

The computational amount of the addition formula in the projective coordinates of the Montgomery-form elliptic curve is 3M+2S with $Z_1$=1. Here, M is the computational amount of multiplication on the finite field, and S is the computational amount of squaring on the finite field. The computational amount of the doubling formula in the projective coordinates of the Montgomery-form elliptic curve is 3M+2S. When the value of the I-th bit of the scalar value is 0, the computational amount of addition in the step 807, and the computational amount of doubling in the step 808 are required. That is, the computational amount of 6M+4S is required. When the value of the I-th bit of the scalar value is 1, the computational amount of addition in the step 810, and the computational amount of doubling in the step 811 are required. That is, the computational amount of 6M+4S is required. In any case, the computational amount of 6M+4S is required. The number of repetitions of the steps 804, 805, 806, 807, 808, 809, or the steps 804, 805, 806, 810, 811, 812 is (bit length of the scalar value d)-1. Therefore, in consideration of the computational amount of doubling in the step 802, and the computational amount necessary for transform to the point on the Montgomery-form elliptic curve in the step 816, the entire computational amount is (6M+4S) (k-1)+4M+2S. Here, k is the bit length of the scalar value d. In general, since the computational amount S is estimated to be of the order of S=0.8 M, the entire computational amount is approximately (9.2k-3.6)M. For example, when the scalar value d indicates 160 bits (k=160), the computational amount of algorithm of the aforementioned procedure is about 1468 M. The computational amount per bit of the scalar value d is about 9.2 M. In A. Miyaji, T. Ono, H. Cohen, Efficient elliptic curve exponentiation using mixed coordinates, Advances in Cryptology Proceedings of ASIACRYPT'98, LNCS 1514 (1998) pp.51-65, the scalar multiplication method using the window method and mixed coordinates mainly including Jacobian coordinates in the Weierstrass-form elliptic curve is described as the fast scalar multiplication method. In this case, the computational amount per bit of the scalar value is estimated to be about 10 M. For example, when the scalar value d indicates 160 bits (k=160), the computational amount of the scalar multiplication method is about 1600 M. Therefore, the algorithm of the aforementioned procedure can be said to have a small computational amount and high speed.

Additionally, instead of using the aforementioned algorithm in the fast scalar multiplication unit 202, another algorithm may be used as long as the algorithm outputs $X_d$, $Z_d$, $X_{d+1}$, $Z_{d+1}$ from the scalar value d and the point P on the Weierstrass-form elliptic curve at high speed.

The computational amount required for recovering the coordinate of the coordinate recovering unit 203 in the scalar multiplication unit 103 is 16M+2S+I, and this is far small as compared with the computational amount of (9.2k-3.6)M necessary for fast scalar multiplication of the fast scalar multiplication unit 202. Therefore, the computational amount necessary for the scalar multiplication of the scalar multiplication unit 103 is substantially equal to the computational amount necessary for the fast scalar multiplication of the fast scalar multiplication unit. Assuming I=40 M, and S=0.8 M, the computational amount can be estimated to be about (9.2k+54)M. For example, when the scalar value d indicates 160 bits (k=160), the computational amount necessary for the scalar multiplication is about 1526 M. The Weierstrass-form elliptic curve is used as the elliptic curve, the scalar multiplication method is used in which the window method and the mixed coordinates mainly including the Jacobian coordinates are used, and the scalar-multiplied point is outputted as the affine coordinates. In this case, the required computational amount is about 1640 M, and as compared with this, the required computational amount is reduced.

In a tenth embodiment, the Weierstrass-form elliptic curve is used as the elliptic curve for input/output, and the Montgomery-form elliptic curve which can be transformed from the given Weierstrass-form elliptic curve is used for the internal calculation. The scalar multiplication unit 103 calculates and outputs the scalar-multiplied point $(X_d^w, Y_d^w, Z_d^w)$ with the complete coordinate given thereto as the point of the projective coordinates in the Weierstrass-form elliptic curve from the scalar value d and the point P on the Weierstrass-form elliptic curve. The scalar value d and the point P on the Weierstrass-form elliptic curve are inputted into the scalar multiplication unit 103, and received by the scalar multiplication unit 202. The fast scalar multiplication unit 202 calculates $X_d$ and $Z_d$ in the coordinate of the scalar-multiplied point $dP=(X_d,Y_d,Z_d)$ represented by the projective coordinates in the Montgomery-form elliptic curve, and $X_{d+1}$ and $Z_{d+1}$ in the coordinate of the point $(d+1)P=(X_{d+1},Y_{d+1},Z_{d+1})$ on the Montgomery-form elliptic curve represented by the projective coordinates from the received scalar value d and the given point P on the Weierstrass-form elliptic curve. Moreover, the inputted point P on the Weierstrass-form elliptic curve is transformed to the point on the Montgomery-form elliptic curve which can be transformed from the given Weierstrass-form elliptic curve, and the point is set anew to P=(x,y). The scalar multiplication unit 202 gives $X_d$, $Z_d$, $X_{d+1}$, $Z_{d+1}$, x, and y to the coordinate recovering unit 203. The coordinate recovering unit 203 recovers coordinate $X_d^w$, $Y_d^w$, $Z_d^w$ of the scalar-multiplied point $dP=(X_d^w, Y_d^w, Z_d^w)$ represented by the projective coordinates in the Weierstrass-form elliptic curve from the given coordinate values $X_d$, $Z_d$, $X_{d+1}$, $Z_{d+1}$, x, and y. The scalar multiplication unit 103 outputs the scalar-multiplied point $(X_d^w, Y_d^w, Z_d^w)$ with the coordinate completely given thereto in the projective coordinates as the calculation result.

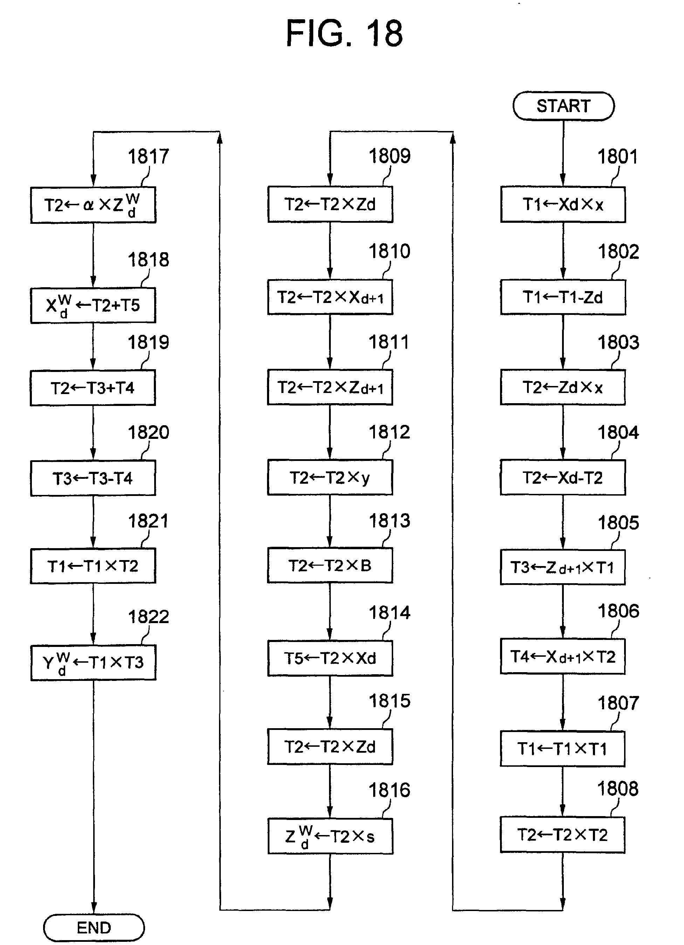

A processing of the coordinate recovering unit which outputs $X_d^w$, $Y_d^w$, $Z_d^w$ from the given coordinates x, y, $X_d$, $Z_d$, $X_{d+1}$, $Z_{d+1}$ will next be described with reference to FIG. 18.

The coordinate recovering unit 203 inputs $X_d$ and $Z_d$ in the coordinate of the scalar-multiplied point $dP=(X_d, Y_d, Z_d)$ represented by the projective coordinates in the Montgomery-form elliptic curve, $X_{d+1}$ and $Z_{d+1}$ in the coordinate of the point $(d+1)P=(X_{d+1},Y_{d+1},Z_{d+1})$ on the Montgomery-form elliptic curve represented by the projective coordinates, and (x,y) as representation of the point P on the Montgomery-form elliptic curve inputted into the scalar multiplication unit 103 in the affine coordinates, and outputs the scalar-multiplied point $(X_d^w, Y_d^w, Z_d^w)$ with the complete coordinate given thereto in the projective coordinates on the Weierstrass-form elliptic curve in the following procedure. Here, the affine coordinate of the inputted point P on the Montgomery-form elliptic curve is represented by (x,y), and the projective coordinate thereof is represented by $(X_1, Y_1, Z_1)$. Assuming that the inputted scalar value is d, the affine coordinate of the scalar-multiplied point dP in the Montgomery-form elliptic curve is represented by $(x_d, y_d)$, and the projective coordinate thereof is represented by $(X_d, Y_d, Z_d)$. The affine coordinate of the point (d-1)P on the Montgomery-form elliptic curve is represented by $(x_{d-1}, y_{d-1})$, and the projective coordinate thereof is represented by $(X_{d-1}, Y_{d-1}, Z_{d-1})$ The affine coordinate of the point (d+1)P on the Montgomery-form elliptic curve is represented by $(x_{d+1}, y_{d+1})$, and the projective coordinate thereof is represented by $(X_{d+1}, Y_{d+1}, Z_{d+1})$.

In step 1801 $X_d \times x$ is calculated, and stored in the register $T_1$. In step 1802 $T_1-Z_d$ is calculated. Here, $X_d x$ is stored in the register $T_1$, and $X_d x-Z_d$ is therefore calculated. The result is stored in the register $T_1$. In step 1803 $Z_d \times x$ is calculated, and stored in the register $T_2$. In step 1804 $X_d-T_2$ is calculated. Here, $Z_d x$ is stored in the register $T_2$, and $X_d-xZ_d$ is therefore calculated. The result is stored in the register $T_2$. In step 1805 $Z_{d+1} \times T_1$ is calculated. Here, $X_d x-Z_d$ is stored in the register $T_1$, and $Z_{d+1}(X_d x-Z_d)$ is therefore calculated. The result is stored in the register $T_3$. In step 1806 $X_{d+1} \times T_2$ is calculated. Here, $X_d-xZ_d$ is stored in the register $T_2$. Therefore, $X_{d+1}(X_d-xZ_d)$ is calculated. The result is stored in the register $T_4$. In step 1807 a square of $T_1$ is calculated. Here, $X_d x-Z_d$ is registered in the register $T_1$, and therefore $(X_d x-Z_d)^2$ is calculated. The result is stored in the register $T_1$. In step 1808 a square of $T_2$ is calculated. Here, $X_d-xZ_d$ is stored in the register $T_2$, and $(X_d-xZ_d)^2$ is therefore calculated. The result is stored in the register $T_2$. In step 1809 $T_2 \times Z_d$ is calculated. Here, $(X_d-xZ_d)^2$ is stored in the register $T_2$. Therefore, $Z_d(X_d-XZ_d)^2$ is calculated. The result is stored in the register $T_2$. In step 1810 $T_2 \times X_{d+1}$ is calculated. Here, $Z_d(X_d-xZ_d)^2$ is stored in the register $T_2$, and $X_{d+1}Z_d(X_d-xZ_d)^2$ is therefore calculated. The result is stored in the register $T_2$. In step 1811 $T_2 \times Z_{d+1}$ is calculated. Here, $X_{d+1}Z_d(X_d-xZ_d)^2$ is stored in the register $T_2$, and therefore $Z_{d+1}X_{d+1}Z_d(X_d-xZ_d)^2$ is calculated. The result is stored in the register $T_2$. In step 1812 $T_2 \times y$ is calculated. Here, $Z_{d+1}X_{d+1}Z_d(X_d-xZ_d)^2$ is stored in the register $T_2$, and $yZ_{d+1}X_{d+1}Z_d(X_d-xZ_d)^2$ is therefore calculated. The result is stored in the register $T_2$. In step 1813 $T_2 \times B$ is calculated. Here,

$yZ_{d+1}X_{d+1}Z_d(X_d-xZ_d)^2$ is stored in the register $T_2$, and $ByZ_{d+1}X_{d+1}Z_d(X_d-xZ_d)^2$ is therefore calculated. The result is stored in the register $T_2$. In step 1814 $T_2 \times X_d$ is calculated. Here, $ByZ_{d+1}X_{d+1}Z_d(X_d-xZ_d)^2$ is stored in the register $T_2$. Therefore, $ByZ_{d+1}X_{d+1}Z_d(X_d-xZ_d)^2X_d$ is calculated. The result is stored in a register $T_5$. In step 1815 $T_2 \times Z_d$ is calculated. Here, $ByZ_{d+1}X_{d+1}Z_d(X_d-xZ_d)^2$ is stored in the register $T_2$, and $ByZ_{d+1}X_{d+1}Z_d(X_d-xZ_d)^2Z_d$ is therefore calculated. The result is stored in the register $T_2$. In step 1816 $T_2 \times s$ is calculated. Here, $ByZ_{d+1}X_{d+1}Z_d(X_d-xZ_d)^2Z_d$ is stored in the register $T_2$, and therefore $sByZ_{d+1}X_{d+1}Z_d(X_d-xZ_d)^2Z_d$ is calculated. The result is stored in $Z_d{}^w$. In step 1817 $\alpha \times Z_d{}^w$ is calculated. Here, $sByZ_{d+1}X_{d+1}Z_d(X_d-xZ_d)^2Z_d$ is stored in $Z_d{}^w$. Therefore, $\alpha sByZ_{d+1}X_{d+1}Z_d(X_d-xZ_d)^2Z_d$ is calculated. The result is stored in the register $T_2$. In step 1818, $T_2+T_5$ is calculated. Here, $\alpha sByZ_{d+1}X_{d+1}Z_d(X_d-xZ_d)^2Z_d$ is stored in the register $T_2$, and $ByZ_{d+1}X_{d+1}Z_d(X_d-xZ_d)^2X_d$ is stored in the register $T_5$. Therefore, $\alpha sByZ_{d+1}X_{d+1}Z_d(X_d-xZ_d)^2Z_d+ByZ_{d+1}X_{d+1}Z_d(X_d-xZ_d)^2X_d$ is calculated. The result is stored in $X_d{}^w$. In step 1819 $T_3+T_4$ is calculated. Here $Z_{d+1}(X_dx-Z_d)$ is stored in the register $T_3$, $X_{d+1}(X_d-xZ_d)$ is stored in the register $T_4$, and therefore $Z_{d+1}(X_dx-Z_d)+X_{d+1}(X_d-xZ_d)$ is calculated. The result is stored in the register $T_2$. In step 1820 $T_3-T_4$ is calculated. Here $Z_{d+1}(X_dx-Z_d)$ is stored in the register $T_3$, and $X_{d+1}(X_d-xZ_d)$ is stored in the register $T_4$, and therefore $Z_{d+1}(X_dx-Z_d)-x_{d+1}(X_d-xZ_d)$ is calculated. The result is stored in the register $T_3$. In step 1821 $T_1 \times T_2$ is calculated. Here $(X_dx-Z_d)^2$ is stored in the register $T_1$, and $Z_{d+1}(X_dx-Z_d)+X_{d+1}(X_d-xZ_d)$ is stored in the register $T_2$. Therefore, $\{Z_{d+1}(X_dx-Z_d)+X_{d+1}(X_d-xZ_d)\}(X_dx-Z_d)^2$ is calculated. The result is stored in the register $T_1$. In step 1822 $T_1 \times T_3$ is calculated. Here, $\{Z_{d+1}(X_dx-Z_d)+X_{d+1}(X_d-xZ_d)\}(X_dx-Z_d)^2$ is stored in the register $T_1$, and $Z_{d+1}(X_dx-Z_d)-x_{d+1}(X_d-xZ_d)$ is stored in the register $T_3$, and therefore $\{Z_{d+1}(X_dx-Z_d)+X_{d+1}(X_d-xZ_d)\}\{Z_{d+1}(X_dx-Z_d)-X_{d+1}(X_d-xZ_d)\}(X_dx-Z_d)^2$ is calculated. The result is stored in the register $Y_d{}^w$. Therefore, $Y_d{}^w$ stores $\{Z_{d+1}(X_dx-Z_d)+X_{d+1}(X_d-xZ_d)\}\{Z_{d+1}(X_dx-Z_d)-X_{d+1}(X_d-xZ_d)\}(X_dx-Z_d)^2$. In the step 1818 $ByZ_{d+1}X_{d+1}Z_d(X_d-xZ_d)^2X_d+\alpha sByZ_{d+1}X_{d+1}Z_d(X_d-xZ_d)^2Z_d$ is stored in $X_d{}^w$, and is not updated thereafter, and the value is therefore held. In the step 1816 $sByZ_{d+1}X_{d+1}Z_d(X_d-xZ_d)^2Z_d$ is stored in $Z_d{}^w$, and is not updated thereafter, and the value is therefore held. As a result, all the values of the projective coordinate $(X_d{}^w,Y_d{}^w,Z_d{}^w)$ in the Weierstrass-form elliptic curve are recovered.

A reason why all values in the projective coordinate $(X_d{}^w,Y_d{}^w,Z_d{}^w)$ of the scalar-multiplied point in the Weierstrass-form elliptic curve are recovered from x, y, $X_d$, $Z_d$, $X_{d+1}$, $Z_{d+1}$ given by the aforementioned procedure is as follows. Additionally, point (d+1)P is a point obtained by adding the point P to the point dP, and point (d-1)P is a point obtained by subtracting the point P from the point dP. Assignment to addition formulae in the affine coordinates of the Montgomery-form elliptic curve results in Equations 6, 7. When opposite sides of Equation 6, 7 are individually subjected to subtraction, Equation 8 is obtained. Therefore, Equation 9 results. Here, $x_d=X_d/Z_d$, $x_{d+1}=X_{d+1}/Z_{d+1}$, $x_{d-1}=X_{d-1}/Z_{d-1}$. The value is assigned and thereby converted to a value of the projective coordinate. Then, Equation 10 is obtained. The addition formulae in the projective coordinate of the Montgomery-form elliptic curve are Equations 11, 12. Here, $X_m$ and $Z_m$ are X-coordinate and Z-coordinate in the projective coordinate of the m-multiplied point mP of the point P on the Montgomery-form elliptic curve, $X_n$ and $Z_n$ are X-coordinate and Z-coordinate in the projective coordinate of an n-multiplied point nP of the point P on the Montgomery-form elliptic curve, $X_{m-n}$ and $Z_{m-n}$ are X-coordinate and Z-coordinate in the projective coordinate of the (m-n)-multiplied point (m-n)P of the point P on the Montgomery-form elliptic curve, $X_{m+n}$ and $Z_{m+n}$ are X-coordinate and Z-coordinate in the projective coordinate of a (m+n)-multiplied point (m+n)P of the point P on the Montgomery-form elliptic curve, and m, n are positive integers satisfying m>n. In the equation, when $X_m/Z_m=x_m$, $X_n/Z_n=x_n$, $X_{m-n}/Z_{m-n}=X_{m-n}$ are unchanged, $X_{m+n}/Z_{m+n}=x_{m+n}$ is also unchanged. Therefore, this functions well as the formula in the projective coordinate. On the other hand, also in Equations 13, 14, when $X_m/Z_m=x_m$, $X_n/Z_n=x_n$, $X_{m-n}/Z_{m-n}=x_{m-n}$ are unchanged, $X_{m+n}/Z_{m+n}=x_{m+n}$ is also unchanged. Moreover, since $X'_{m-n}/Z'_{m-n}=X_{m-n}/Z_{m-n}=x_{m-n}$ is satisfied, $X'_{m-n}$, $Z'_{m-n}$ may be taken as the projective coordinate of $x_{m-n}$. When m=d, n=1 are set, the above formula is used, $X_{d-1}$ and $Z_{d-1}$ are deleted from the equation of $y_d$, and $X_1=x$, $Z_1=1$ are set, Equation 15 is obtained. Although $x_d=X_d/Z_d$, reduction to the denominator common with that of $y_d$ is performed, and Equation 16 is obtained. As a result, the following equation is obtained.

$$Y'_d = \{Z_{d+1}(X_dx-Z_d)+X_{d+1}(X_d-xZ_d)\}\{Z_{d+1}(X_dx-Z_d)-X_{d+1}(X_d-xZ_d)\}(X_dx-Z_d)^2 \qquad \text{Equation 47}$$

The following equations also result.

$$X'_d = ByZ_{d+1}X_{d+1}Z_d(X_d-xZ_d)^2X_d \qquad \text{Equation 48}$$

$$Z'_d = ByZ_{d+1}X_{d+1}Z_d(X_d-xZ_d)^2Z_d \qquad \text{Equation 49}$$

Then, $(X'_d,Y'_d,Z'_d)=(X_d,Y_d,Z_d)$. The correspondence between the point on the Montgomery-form elliptic curve and the point on the Weierstrass-form elliptic curve is described in K.Okeya, H.Kurumatani, K.Sakurai, Elliptic Curves with the Montgomery-Form and Their Cryptographic Applications, Public Key Cryptography, LNCS 1751 (2000) pp.238-257.

Thereby, when the conversion parameter is $s\alpha$, the relation is $Y_d^w = Y'_d$, $X_d^w = X'_d + \alpha Z_d^w$, and $Z_d^w = sZ'_d$. As a result, the following equations are obtained.

$$Y_d^W = \{Z_{d+1}(X_d x - Z_d) + X_{d+1}(X_d - xZ_d)\}\{Z_{d+1}(X_d x - Z_d) - X_{d+1}(X_d - xZ_d)\}(X_d x - Z_d)^2 \qquad \text{Equation 50}$$

$$X_d^W = ByZ_{d+1}X_{d+1}Z_d(X_d - xZ_d)^2 X_d + \alpha Z_d^W \qquad \text{Equation 51}$$

$$Z_d^W = sByZ_{d+1}X_{d+1}Z_d(X_d - xZ_d)^2 Z_d \qquad \text{Equation 52}$$

The values may be updated as described above. Here, $X_d^w$, $Y_d^w$, $Z_d^w$ are given by the processing of FIG. 18. Therefore, all values of the projective coordinate $(X_d^w, Y_d^w, Z_d^w)$ in the Weierstrass-form elliptic curve are recovered.

For the aforementioned procedure, in the steps 1801, 1803, 1805, 1806, 1809, 1810, 1811, 1812, 1813, 1814, 1815, 1816, 1817, 1821, and 1822, the computational amount of multiplication on the finite field is required. Moreover, the computational amount of squaring on the finite field is required in the steps 1807 and 1808. The computational amounts of addition and subtraction on the finite field are relatively small as compared with the computational amount of multiplication on the finite field and the computational amount of squaring, and may therefore be ignored. Assuming that the computational amount of multiplication on the finite field is M, and the computational amount of squaring on the finite field is S, the above procedure requires a computational amount of 15M+2S. This is far small as compared with the computational amount of the fast scalar multiplication. For example, when the scalar value d indicates 160 bits, the computational amount of the fast scalar multiplication is estimated to be a little less than about 1500 M. Assuming S=0.8 M, the computational amount of coordinate recovering is 16.6 M, and far small as compared with the computational amount of the fast scalar multiplication. Therefore, it is indicated that the coordinate can efficiently be recovered.

Additionally, even when the above procedure is not taken, the values of $X_d^w$, $Y_d^w$, $Z_d^w$ given by the above equation can be calculated, and the values of $X_d^w$, $Y_d^w$, $Z_d^w$ can then be recovered. Moreover, when the scalar-multiplied point dP in the affine coordinates in the Weierstrass-form elliptic curve is $dp=(x_d^w, y_d^w)$, the values of $X_d^w$, $Y_d^w$, $Z_d^w$ are selected so that $x_d^w$, $y_d^w$ take the values given by the aforementioned equations, the values can be calculated, and then $X_d^w$, $Y_d^w$, $Z_d^w$ can be recovered. In this case, the computational amount required for recovering generally increases. Furthermore, when the values of B as the parameter of the Montgomery-form elliptic curve and the conversion parameter s to the Montgomery-form elliptic curve are set to be small, the computational amount of multiplication in the step 1813 or 1816 can be reduced.

An algorithm which outputs $X_d$, $Z_d$, $X_{d+1}$, $Z_{d+1}$ from the scalar value d and the point P on the Weierstrass-form elliptic curve will next be described.

As the fast scalar multiplication method of the scalar multiplication unit 202 of the tenth embodiment, the fast scalar multiplication method of the ninth embodiment is used. Thereby, as the algorithm which outputs $X_d$, $Z_d$, $X_{d+1}$, $Z_{d+1}$ from the scalar value d and the point P on the Weierstrass-form elliptic curve, a fast algorithm can be achieved. Additionally, instead of using the aforementioned algorithm in the scalar multiplication unit 202, any algorithm may be used as long as the algorithm outputs $X_d$, $Z_d$, $X_{d+1}$, $Z_{d+1}$ from the scalar value d and the point P on the Weierstrass-form elliptic curve at high speed.

The computational amount required for recovering the coordinate of the coordinate recovering unit 203 in the scalar multiplication unit 103 is 15M+2S, and this is far small as compared with the computational amount of (9.2k-3.6)M necessary for fast scalar multiplication of the fast scalar multiplication unit 202. Therefore, the computational amount necessary for the scalar multiplication of the scalar multiplication unit 103 is substantially equal to the computational amount necessary for the fast scalar multiplication of the fast scalar multiplication unit. Assuming that S=0.8 M, the computational amount can be estimated to be about (9.2k+13)M. For example, when the scalar value d indicates 160 bits (k=160), the computational amount necessary for the scalar multiplication is about 1485 M. The Weierstrass-form elliptic curve is used as the elliptic curve, the scalar multiplication method is used in which the window method and the mixed coordinates mainly including the Jacobian coordinates are used, and the scalar-multiplied point is outputted as the Jacobian coordinates. In this case, the required computational amount is about 1600 M, and as compared with this, the required computational amount is reduced.

In an eleventh embodiment, the Weierstrass-form elliptic curve is used as the elliptic curve for input/output, and the Montgomery-form elliptic curve which can be transformed from the given Weierstrassform elliptic curve is used for the internal calculation. The scalar multiplication unit 103 calculates and outputs the scalar-multiplied point $(x_d, y_d)$ with the complete coordinate given thereto as the point of the affine coordinates in the Weierstrass-form elliptic curve from the scalar value d and the point P on the Weierstrass-form elliptic curve. The scalar value d and the point P on the Weierstrass-form elliptic curve are inputted into the scalar multiplication unit 103, and received by the scalar multiplication unit 202. The fast scalar multiplication unit 202 calculates $X_d$ and $Z_d$ in the coordinate of the scalar-multiplied point $dP=(X_d,Y_d,Z_d)$ represented by the projective coordinates in the Montgomery-form elliptic curve, $X_{d+1}$ and $Z_{d+1}$ in the coordinate of the point $(d+1)P=(X_{d+1},Y_{d+1},Z_{d+1})$ on the Montgomery-form elliptic curve represented by the projective coordinates, and $X_{d-1}$ and $Z_{d-1}$ in the coordinate of the point $(d-1)P=(X_{d-1},Y_{d-1},Z_{d-1})$ on the Montgomery-form elliptic curve represented by the projective coordinates from the received scalar value d and the given point P on the Weierstrass-form elliptic curve. Moreover, the inputted point P on the Weierstrass-form elliptic curve is transformed to the point on the Montgomery-form elliptic curve which can be transformed from the given Weierstrass-form elliptic curve, and the point is set anew to P=(x,y). The scalar multiplication unit 202 gives $X_d$, $Z_d$, $X_{d+1}$, $Z_{d+1}$, $X_{d-1}$, $Z_{d-1}$, x, and y to the coordinate recovering unit 203. The coordinate recovering unit 203 recovers coordinates $x_d$, $y_d$ of the scalar-multiplied point $dP=(x_d,y_d)$ represented by the affine coordinates in the Weierstrass-form elliptic curve from the given coordinate values $X_d$, $Z_d$, $X_{d+1}$, $Z_{d+1}$, $X_{d-1}$, $Z_{d-1}$, x, and y. The scalar multiplication unit 103 outputs the scalar-multiplied point $(x_d,y_d)$ with the coordinate completely given thereto in the affine coordinates on the Weierstrass-form elliptic curve as the calculation result.

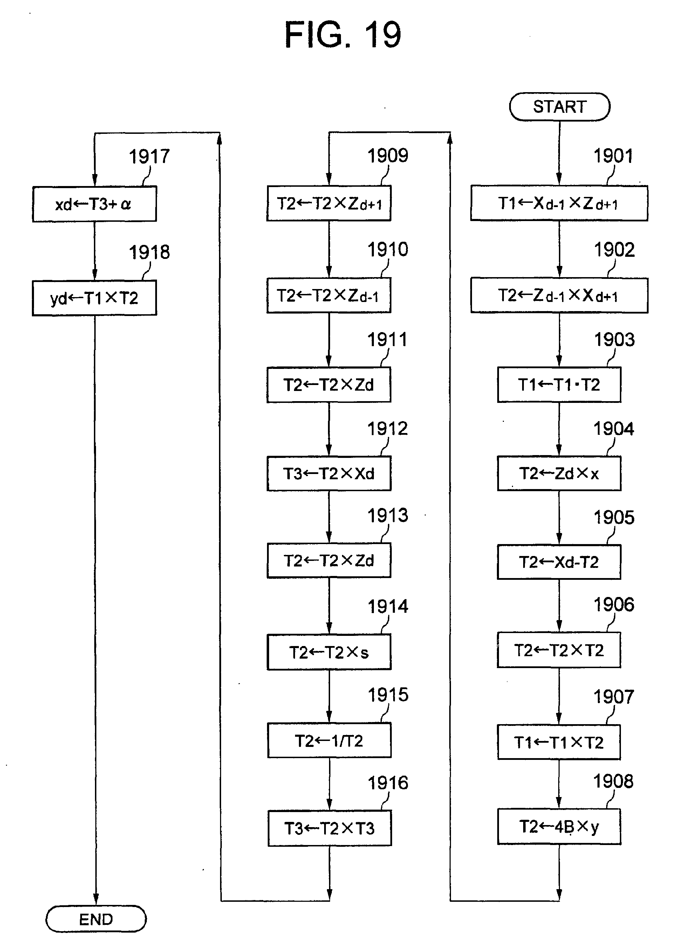

A processing of the coordinate recovering unit which outputs $x_d$, $y_d$ from the given coordinates x, y, $X_d$, $Z_d$, $X_{d+1}$, $Z_{d+1}$, $X_{d-1}$, $Z_{d-1}$ will next be described with reference to FIG. 19.

The coordinate recovering unit 203 inputs $X_d$ and $Z_d$ in the coordinate of the scalar-multiplied point $dP=(X_d, Y_d,Z_d)$ represented by the projective coordinates in the Montgomery-form elliptic curve, $X_{d+1}$ and $Z_{d+1}$ in the coordinate of the point $(d+1)P=(X_{d+1},Y_{d+1},Z_{d+1})$ on the Montgomery-form elliptic curve represented by the projective coordinates, $X_{d-1}$ and $Z_{d-1}$ in the coordinate of the point $(d-1)P=(X_{d-1},Y_{d-1},Z_{d-1})$ on the Montgomery-form elliptic curve represented by the projective coordinates, and (x,y) as representation of the point P on the Montgomery-form elliptic curve in the affine coordinates inputted into the scalar multiplication unit 103, and outputs the scalar-multiplied point $(x_d,y_d)$ with the complete coordinate given thereto in the affine coordinates on the Weierstrass-form elliptic curve in the following procedure. Here, the affine coordinate of the inputted point P on the Montgomery-form elliptic curve is represented by (x,y), and the projective coordinate thereof is represented by $(X_1,Y_1,Z_1)$. Assuming that the inputted scalar value is d, the affine coordinate of the scalar-multiplied point dP in the Montgomery-form elliptic curve is represented by $(x_d^{Mon}, y_d^{Mon})$, and the projective coordinate thereof is represented by $(X_d,Y_d,Z_d)$. The affine coordinate of the point $(d-1)P$ on the Montgomery-form elliptic curve is represented by $(x_{d-1},y_{d-1})$, and the protective coordinate thereof is represented by $(X_{d-1},Y_{d-1},Z_{d-1})$. The affine coordinate of the point $(d+1)P$ on the Montgomery-form elliptic curve is represented by $(x_{d+1},y_{d+1})$, and the projective coordinate thereof is represented by $(X_{d+1},Y_{d+1},Z_{d+1})$.

In step 1901 $X_{d-1}\times Z_{d+1}$ is calculated, and stored in the register $T_1$. In step 1902 $Z_{d-1}\times X_{d+1}$ is calculated, and stored in the register $T_2$. In step 1903 $T_1$-$T_2$ is calculated. Here, $X_{d-1}Z_{d+1}$ is stored in the register $T_1$ and $Z_{d-1}X_{d+1}$ is stored in the register $T_2$, and $X_{d-1}Z_{d+1}$-$Z_{d-1}X_{d+1}$ is therefore calculated. The result is stored in the register $T_1$. In step 1904 $Z_d\times x$ is calculated and stored in the register $T_2$. In step 1905 $X_d$-$T_2$ is calculated. Here, $Z_dx$ is stored in the register $T_2$. Therefore, $X_d$-$xZ_d$ is calculated. The result is stored in the register $T_2$. In step 1906 a square of $T_2$ is calculated. Here, $X_d$-$xZ_d$ is stored in the register $T_2$. Therefore, $(X_d$-$xZ_d)^2$ is calculated. The result is stored in the register $T_2$. In step 1907 $T_1\times T_2$ is calculated. Here, $X_{d-1}Z_{d+1}$-$Z_{d-1}X_{d+1}$ is registered in the register $T_1$, $(X_d$-$xZ_d)^2$ is stored in the register $T_2$, and therefore $(X_d$-$xZ_d)^2(X_{d-1}Z_{d+1}$-$Z_{d-1}X_{d+1})$ is calculated. The result is stored in the register $T_1$. In step 1908 $4B\times y$ is calculated. The result is stored in the register $T_2$. In step 1909 $T_2\times Z_{d+1}$ is calculated. Here, $4By$ is stored in the register $T_2$, and $4ByZ_{d+1}$ is calculated. The result is stored in the register $T_2$. In step 1910 $T_2\times Z_{d-1}$ is calculated. Here, $4ByZ_{d+1}$ is stored in the register $T_2$, and $4ByZ_{d-1}Z_{d+1}$ is therefore calculated. The result is stored in the register $T_2$. In step 1911 $T_2\times Z_d$ is calculated. Here, $4ByZ_{d-1}Z_{d+1}$ is stored in the register $T_2$. Therefore, $4ByZ_{d-1}Z_{d+1}Z_d$ is calculated. The result is stored in the register $T_2$. In step 1912 $T_2\times X_d$ is calculated. Here, $4ByZ_{d-1}Z_{d+1}Z_d$ is stored in the register $T_2$, and $4ByZ_{d-1}Z_{d+1}Z_dX_d$ is therefore calculated. The result is stored in the register $T_3$. In step 1913 $T_2\times Z_d$ is calculated. Here, $4ByZ_{d-1}Z_{d+1}Z_d$ is stored in the register $T_2$, and $4ByZ_{d-1}Z_{d+1}Z_dZ_d$ is therefore calculated. The result is stored in the register $T_2$. In step 1914 $T_2\times s$ is calculated. Here, $4ByZ_{d-1}Z_{d+1}Z_dZ_d$ is stored in the register $T_2$. Therefore, $4sByZ_{d-1}Z_{d+1}Z_dZ_d$ is calculated. The result is stored in the register $T_2$. In step 1915 an inverse element of $T_2$ is calculated. Here, $4sByZ_{d-1}Z_{d+1}Z_dZ_d$ is stored in the register $T_2$, and $1/4sByZ_{d-1}Z_{d+1}Z_dZ_d$ is therefore calculated. The result is stored in the register $T_2$. In step 1916 $T_2\times T_3$ is calculated. Here, $1/4sByZ_{d-1}Z_{d+1}Z_dZ_d$ is stored in the register $T_2$, $4ByZ_{d-1}Z_{d+1}Z_dX_d$ is in the register $T_3$, and therefore $(4ByZ_{d-1}Z_{d+1}Z_dX_d)/(4sByZ_{d-1}Z_{d+1}Z_dZ_d)$ is calculated. The result is stored in $T_3$. In step 1917 $T_3+\alpha$ is calculated. Here, $(4ByZ_{d-1}Z_{d+1}Z_dX_d) / (4sByZ_{d-1}Z_{d+1}Z_dZ_d)$ is stored in the register $T_3$. Therefore, $(4ByZ_{d-1}Z_{d+1}Z_dX_d) /$-$(4sByZ_{d-1}Z_{d+1}Z_dZ_d)+\alpha$ is calculated. The result is stored in the register $x_d$. In step 1918 the register $T_1\times T_2$ is calculated. Here $(X_d$-$xZ_d)^2(X_{d-1}Z_{d+1}$-$Z_{d-1}X_{d+1})$ is stored in the register $T_1$, $1/4sByZ_{d-1}Z_{d+1}Z_dZ_d$ is stored in the register $T_2$, and therefore $(X_{d-1}Z_{d+1}$-$Z_{d-1}X_{d+1})(X_d$-$Z_dx)^2/4sByZ_{d-1}Z_{d+1}Z_d^2$ is calculated. The result is stored in the register $y_d$. Therefore, the register $y_d$ stores $(X_{d-1}Z_{d+1}$-$Z_{d-1}X_{d+1})(X_d$-$Z_dx)^2/ 4sByZ_{d-1}Z_{d+1}Z_d^2$. In the step 1917 $(4ByZ_{d-1}Z_{d+1}Z_dX_d)/(4sByZ_{d-1}Z_{d+1}Z_dZ_d)+\alpha$ is stored in the register $x_d$, and is not updated thereafter, and the value is therefore held.

A reason why all the values in the affine coordinate $(x_d,y_d)$ of the scalar-multiplied point in the Weierstrass-form elliptic curve are recovered from x, y, $X_d$, $Z_d$, $X_{d+1}$, $Z_{d+1}$, $X_{d-1}$, $Z_{d-1}$ given by the aforementioned procedure is as follows. Additionally, point (d+1)P is a point obtained by adding the point P to the point dP, and point (d-1)P is a point obtained by subtracting the point P from the point dP. Assignment to the addition formulae in the affine coordinates of the Montgomery-form elliptic curve results in Equations 38, 39. When opposite sides are individually subjected to subtraction, Equation 40 is obtained. Therefore, Equation 41 results. Here, $x_d^{Mon}=X_d/Z_d$, $X_{d+1}=X_{d+1}/Z_{d+1}$, $X_{d-1}=X_{d-1}/Z_{d-1}$. The value is assigned and thereby converted to the value of the projective coordinate. Then, Equation 42 is obtained. Although $x_d^{Mon}=X_d/Z_d$, the reduction to the denominator common with that of $y_d^{Mon}$ is performed for the purpose of reducing the frequency of inversion, and Equation 53 is obtained.

$$x_d^{Mon} = (4ByZ_{d+1}Z_{d-1}Z_dX_d)/(4ByZ_{d+1}Z_{d-1}Z_dZ_d) \qquad \text{Equation 53}$$

The correspondence between the point on the Montgomery-form elliptic curve and the point on the Weierstrass-form elliptic curve is described in K.Okeya, H.Kurumatani, K.Sakurai, Elliptic Curves with the Montgomery-form and Their Cryptographic Applications, Public Key Cryptography, LNCS 1751 (2000) pp.238-257. Thereby, when the conversion parameters are s, $\alpha$, the relation is $y_d=s^{-1}y_d^{Mon}$ and $x_d=s^{-1}x_d^{Mon}+\alpha$. As a result, the following equations are obtained.

$$y_d =(X_{d-1}Z_{d+1}-Z_{d-1}X_{d+1}(X_d-Z_dx)^2/4sByZ_{d-1}Z_{d+1}Z_d^2 \qquad \text{Equation 54}$$

$$x_d = (4ByZ_{d+1}Z_{d-1}Z_dX_d)/(4sByZ_{d+1}Z_{d-1}Z_dZ_d)+\alpha \qquad \text{Equation 55}$$

Here, $x_d$, $y_d$ are given by FIG. 19. Therefore, all values of the affine coordinate ($x_d$,$y_d$) of the scalar-multiplied point in the Weierstrass-form elliptic curve are recovered.

For the aforementioned procedure, in the steps 1901, 1902, 1904, 1907, 1908, 1909, 1910, 1911, 1912, 1913, 1914, 1916, and 1818, the computational amount of multiplication on the finite field is required. Moreover, the computational amount of squaring on the finite field is required in the step 1906. Moreover, in the step 1914 the computational amount of the inversion on the finite field is required. The computational amounts of addition and subtraction on the finite field are relatively small as compared with the computational amount of multiplication on the finite field and the computational amounts of squaring and inversion, and may therefore be ignored. Assuming that the computational amount of multiplication on the finite field is M, the computational amount of squaring on the finite field is S, and the computational amount of inversion on the finite field is I, the above procedure requires a computational amount of 13M+S+I. This is far small as compared with the computational amount of the fast scalar multiplication. For example, when the scalar value d indicates 160 bits, the computational amount of the fast scalar multiplication is estimated to be a little less than about 1500 M. Assuming S=0.8 M, I=40 M, the computational amount of coordinate recovering is 53.8 M, and far small as compared with the computational amount of the fast scalar multiplication. Therefore, it is indicated that the coordinate can efficiently be recovered.

Additionally, even when the above procedure is not taken, the values of $x_d$, $y_d$ given by the above equation can be calculated, and the values of $x_d$, $y_d$ can then be recovered. In this case, the computational amount required for recovering generally increases. Furthermore, when the values of B as the parameter of the Montgomery-form elliptic curve and s as the conversion parameter to the Montgomery-form elliptic curve are set to be small, the computational amount of multiplication in the step 1908 or 1914 can be reduced.

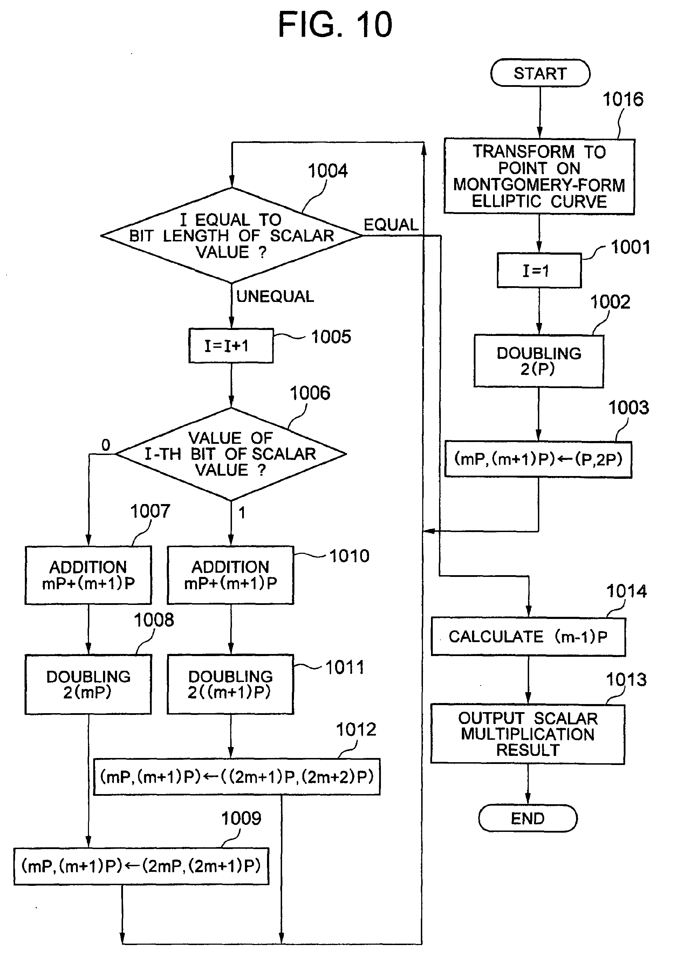

A processing of the fast scalar multiplication unit which outputs $X_d$, $Z_d$, $X_{d+1}$, $Z_{d+1}$, $X_{d-1}$, $Z_{d-1}$ from the scalar value d and the point P on the Weierstrass-form elliptic curve will next be described with reference to FIG. 10.

The fast scalar multiplication unit 202 inputs the point P on the Weierstrass-form elliptic curve inputted into the scalar multiplication unit 103, and outputs $X_d$ and $Z_d$ in the scalar-multiplied point $dP=(X_d,Y_d,Z_d)$ represented by the projective coordinate in the Montgomery-form elliptic curve, $X_{d+1}$ and $Z_{d+1}$ in the point (d+1) $P= (X_{d+1}, Y_{d+1}, Z_{d+1})$ on the Montgomery-form elliptic curve represented by the projective coordinate, and $X_{d-1}$ and $Z_{d-1}$ in the point (d-1)P= $(X_{d-1},Y_{d-1},Z_{d-1})$ on the Montgomery-form elliptic curve represented by the projective coordinate by the following procedure. In step 1016, the given point P on the Weierstrass-form elliptic curve is transformed to the point represented by the projective coordinates on the Montgomery-form elliptic curve. This point is set anew as point P. In step 1001, the initial value 1 is assigned to the variable I. The doubled point 2P of the point P is calculated in step 1002. Here, the point P is represented as (x,y,1) in the projective coordinate, and the doubling formula in the projective coordinate of the Montgomery-form elliptic curve is used to calculate the doubled point 2P. In step 1003, the point P on the elliptic curve inputted into the scalar multiplication unit 103 and the point 2P obtained in the step 1002 are stored as a set of points (P,2P). Here, the points P and 2P are represented by the projective coordinate. It is judged in step 1004 whether or not the variable I agrees with the bit length of the scalar value d. With agreement, m=d is satisfied and the flow goes to step 1014. With disagreement, the flow goes to step 1005. The variable I is increased by 1 in the step 1005. It is judged in step 1006 whether the value of the I-th bit of the scalar value is 0 or 1. When the value of the bit is 0, the flow goes to the step 1007. When the value of the bit is 1, the flow goes to step 1010. In step 1007, addition mP+(m+1)P of points mP and (m+1)P is performed from a set of points (mP,(m+1)P) represented by the projective coordinate, and the point (2m+1)P is calculated. Thereafter, the flow goes to step 1008. Here, the addition mP+(m+1)P is calculated using the addition formula in the projective coordinate of the Montgomery-form elliptic curve. In step 1008, doubling 2(mP) of the point mP is performed from the set of points (mP,(m+1)P) represented by the projective coordinate, and the point 2mP is calculated. Thereafter, the flow goes to step 1009. Here, the doubling 2(mP) is calculated using the formula of doubling in the projective coordinate of the Montgomery-form elliptic curve. In the step 1009, the point 2mP obtained in the step 1008 and the point (2m+1)P obtained in the step 1007 are stored as a set of points (2mP, (2m+1)P) instead of the set of points (mP, (m+1)P). Thereafter, the flow returns to the step 1004. Here, the points 2mP, (2m+1)P, mP, and (m+1)P are all represented in the projective coordinates. In step 1010, addition mP+(m+1)P of the points mP, (m+1)P is performed from the set of points (mP,(m+1)P) represented by the projective coordinates, and the point (2m+1)P is calculated. Thereafter, the flow goes to step 1011. Here, the addition mP+(m+1)P is calculated using the addition formula in the projective coordinates of the Montgomery-form elliptic curve. In the step 1011, doubling 2((m+1)P) of the point (m+1)P is performed from the set of points (mP, (m+1)P) represented by the projective coordinates, and the point (2m+2)P is calculated. Thereafter, the flow goes to step 1012. Here, the doubling 2((m+1)P) is calculated using the formula of doubling in the projective coordinates of the Montgomery-form elliptic curve. In the step 1012, the point (2m+1)P obtained in the step 1010 and the point (2m+2)P obtained in the step 1011 are stored as a set of points ((2m+1)P, (2m+2)P) instead of the set of points (mP,(m+1)P). Thereafter, the flow returns to the step 1004. Here, the points (2m+1)P, (2m+2)P, mP, and (m+1)P are all represented in the projective coordinates. In step 1014, $X_{m-1}$ and $Z_{m-1}$ are outputted as $X_{d-1}$ and $Z_{d-1}$ of the point (m-1)P in the projective coordinates from the set of points (mP,(m+1)P) represented by the projective coordinates. Thereafter, the flow goes to step 1013. In the step 1013, $X_m$ and $Z_m$ as $X_d$ and $Z_d$ from the point mP=$(X_m,Y_m,Z_m)$ represented by the projective coordinates, and $X_{m+1}$ and $Z_{m+1}$ as $X_{d+1}$ and $Z_{d+1}$ of the point (m+1)P=$(X_{m+1},Y_{m+1},Z_{m+1})$ represented by the projective coordinates are outputted together with $X_{d-1}$ and $Z_{d-1}$. Here, $Y_m$ and $Y_{m+1}$ are not obtained, because the Y-coordinate cannot be obtained by the addition and doubling formulae in the projective coordinates of the Montgomery-form elliptic curve. In the above procedure, m and scalar value d are equal in the bit length and bit pattern, and are therefore equal.

Moreover, when (m-1)P is obtained in step 1014, it may be obtained by Equations 13, 14. If m is an odd number, a value of ((m-1)/2)P is separately held in the step 1012, and (m-1)P may be obtained from the value by the doubling formula of the Montgomery-form elliptic curve.

The computational amount of the addition formula in the projective coordinates of the Montgomery-form elliptic curve is 3M+2S with $Z_1$=1. Here, M is the computational amount of multiplication on the finite field, and S is the computational amount of squaring on the finite field. The computational amount of the doubling formula in the projective coordinates of the Montgomery-form elliptic curve is 3M+2S. When the value of the I-th bit of the scalar value is 0, the computational amount of addition in the step 1007, and the computational amount of doubling in the step 1008 are required. That is, the computational amount of 6M+4S is required. When the value of the I-th bit of the scalar value is 1, the computational amount of addition in the step 1010, and the computational amount of doubling in the step 1011 are required. That is, the computational amount of 6M+4S is required. In any case, the computational amount of 6M+4S is required. The number of repetitions of the steps 1004, 1005, 1006, 1007, 1008, 1009, or the steps 1004, 1005, 1006, 1010, 1011, 1012 is (bit length of the scalar value d)-1. Therefore, in consideration of the computational amount of doubling in the step 1002, and the computational amount necessary for the calculation of (m-1)P in the step 1014, the entire computational amount is (6M+4S)k+M. Here, k is the bit length of the scalar value d. In general, since the computational amount S is estimated to be of the order of S=0.8 M, the entire computational amount is approximately (9.2k+3)M. For example, when the scalar value d indicates 160 bits (k=160), the computational amount of algorithm of the aforementioned procedure is about 1475 M. The computational amount per bit of the scalar value d is about 9.2 M. In A. Miyaji, T. Ono, H. Cohen, Efficient elliptic curve exponentiation using mixed coordinates, Advances in Cryptology Proceedings of ASIACRYPT'98, LNCS 1514 (1998) pp.51-65, the scalar multiplication method using the window method and mixed coordinates mainly including Jacobian coordinates in the Weierstrass-form elliptic curve is described as the fast scalar multiplication method. In this case, the computational amount per bit of the scalar value is estimated to be about 10 M. For example, when the scalar value d indicates 160 bits (k=160), the computational amount of the scalar multiplication method is about 1600 M. Therefore, the algorithm of the aforementioned procedure can be said to have a small computational amount and high speed.

Additionally, instead of using the aforementioned algorithm in the fast scalar multiplication unit 202, another algorithm may be used as long as the algorithm outputs $X_d$, $Z_d$, $X_{d+1}$, $Z_{d+1}$ from the scalar value d and the point P on the Weierstrass-form elliptic curve at high speed.

The computational amount required for recovering the coordinate of the coordinate recovering unit 203 in the scalar multiplication unit 103 is 13M+S+I, and this is far small as compared with the computational amount of (9.2k+1) M necessary for fast scalar multiplication of the fast scalar multiplication unit 202. Therefore, the computational amount necessary for the scalar multiplication of the scalar multiplication unit 103 is substantially equal to the computational amount necessary for the fast scalar multiplication of the fast scalar multiplication unit. Assuming I=40 M, S=0.8 M, the computational amount can be estimated to be about (9.2k+56.8)M. For example, when the scalar value d indicates 160 bits (k=160), the computational amount necessary for the scalar multiplication is about 1529 M. The Weierstrass-form elliptic curve is used as the elliptic curve, the scalar multiplication method is used in which the window method and the mixed coordinates mainly including the Jacobian coordinates are used, and the scalar-multiplied point is outputted as the affine coordinates. In this case, the required computational amount is about 1640 M, and as compared with this, the required computational amount is reduced.

In a twelfth embodiment, the Weierstrass-form elliptic curve is used as the elliptic curve for input/output, and the Montgomery-form elliptic curve which can be transformed from the given Weierstrass-form elliptic curve is used for the internal calculation. The scalar multiplication unit 103 calculates and outputs the scalar-multiplied point $(X_d^w, Y_d^w, Z_d^w)$ with the complete coordinate given thereto as the point of the projective coordinates in the Weierstrass-form elliptic curve from the scalar value d and the point P on the Weierstrass-form elliptic curve. The scalar value d and the point P on the Weierstrass-form elliptic curve are inputted into the scalar multiplication unit 103, and received by the scalar multiplication unit 202. The fast scalar multiplication unit 202 calculates $X_d$ and $Z_d$ in the coordinate of the scalar-multiplied point $dP=(X_d, Y_d, Z_d)$ represented by the projective coordinates in the Montgomery-form elliptic curve, $X_{d+1}$ and $Z_{d+1}$ in the coordinate of the point $(d+1)P=(X_{d+1}, Y_{d+1}, Z_{d+1})$ on the Montgomery-form elliptic curve represented by the projective coordinates, and $X_{d-1}$ and $Z_{d-1}$ in the coordinate of the point $(d-1)P=(X_{d-1}, Y_{d-1}, Z_{d-1})$ on the Montgomery-form elliptic curve represented by the projective coordinates from the received scalar value d and the given point P on the Weierstrass-form elliptic curve. The information is given to the coordinate recovering unit 203 together with the inputted point P=(x,y) on the Weierstrass-form elliptic curve represented by the projective coordinates. The coordinate recovering unit 203 recovers coordinate $X_d^w, Y_d^w, Z_d^w$ of the scalar-multiplied point $dP=(X_d^w, Y_d^w, Z_d^w)$ represented by the projective coordinates in the Weierstrass-form elliptic curve from the given coordinate values $X_d, Z_d, X_{d+1}, Z_{d+1}, X_{d-1}, Z_{d-1}, x,$ and y. The scalar multiplication unit 103 outputs the scalar-multiplied point $(X_d^w, Y_d^w, Z_d^w)$ with the coordinate completely given thereto in the projective coordinates on the Weierstrass-form elliptic curved as the calculation result.

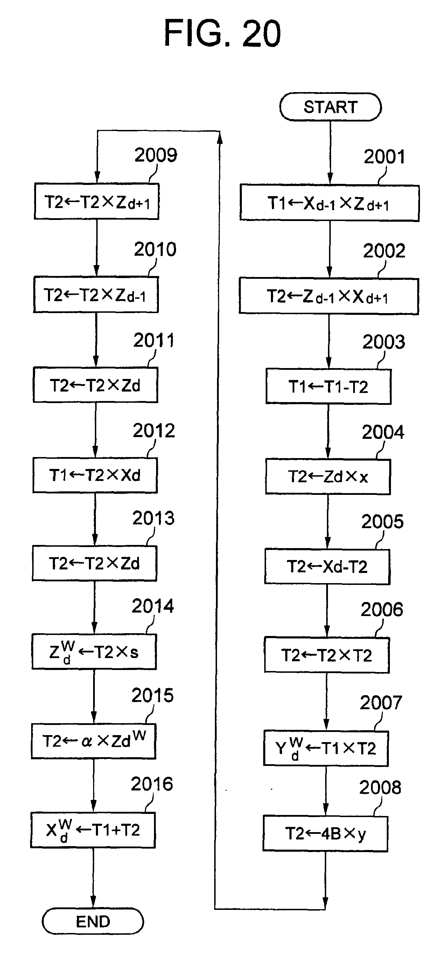

A processing of the coordinate recovering unit which outputs $X_d^w, Y_d^w, Z_d^w$ from the given coordinates x, y, $X_d, Z_d, X_{d+1}, Z_{d+1}, X_{d-1}, Z_{d-1}$ will next be described with reference to FIG. 20.

The coordinate recovering unit 203 inputs $X_d$ and $Z_d$ in the coordinate of the scalar-multiplied point $dP=(X_d, Y_d, Z_d)$ represented by the projective coordinates in the Montgomery-form elliptic curve, $X_{d+1}$ and $Z_{d+1}$ in the coordinate of the point $(d+1)P=(X_{d+1}, Y_{d+1}, Z_{d+1})$ on the Montgomery-form elliptic curve represented by the projective coordinates, $X_{d-1}$ and $Z_{d-1}$ in the coordinate of the point $(d-1)P=(X_{d-1}, Y_{d-1}, Z_{d-1})$ on the Montgomery-form elliptic curve represented by the projective coordinates, and (x,y) as representation of the point P on Weierstrass-form elliptic curve in the projective coordinates inputted into the scalar multiplication unit 103, and outputs the scalar-multiplied point $(X_d^w, Y_d^w, Z_d^w)$ with the complete coordinate given thereto in the projective coordinates on the Weierstrass-form elliptic curve in the following procedure. Here, the affine coordinate of the inputted point P on the Montgomery-form elliptic curve is represented by (x,y), and the projective coordinate thereof is represented by $(X_1, Y_1, Z_1)$. Assuming that the inputted scalar value is d, the affine coordinate of the scalar-multiplied point dP in the Montgomery-form elliptic curve is represented by $(x_d, y_d)$, and the projective coordinate thereof is represented by $(X_d, Y_d, Z_d)$. The affine coordinate of the point $(d-1)P$ on the Montgomery-form elliptic curve is represented by $(x_{d-1}, y_{d-1})$, and the projective coordinate thereof is represented by $(X_{d-1}, Y_{d-1}, Z_{d-1})$. The affine coordinate of the point $(d+1)P$ on the Montgomery-form elliptic curve is represented by $(x_{d+1}, y_{d+1})$, and the projective coordinate thereof is represented by $(X_{d+1}, Y_{d+1}, Z_{d+1})$.

In step 2001 $X_{d-1} \times X_{d+1}$ is calculated, and stored in the register $T_1$. In step 2002 $Z_{d-1} \times X_{d+1}$ is calculated, and stored in the register $T_2$. In step 2003 $T_1 - T_2$ is calculated. Here, $X_{d-1} Z_{d+1}$ is stored in the register $T_1$, $Z_{d-1} X_{d+1}$ is stored in the register $T_2$, and $X_{d-1} Z_{d+1} - Z_{d-1} X_{d+1}$ is therefore calculated. The result is stored in the register $T_1$. In step 2004 $Z_d \times x$ is calculated, and stored in the register $T_2$. In step 2005 $X_d - T_2$ is calculated. Here, $Z_d x$ is stored in the register $T_2$, and $X_d - x Z_d$ is therefore calculated. The result is stored in the register $T_2$. In step 2006 a square of $T_2$ is calculated. Here, $X_d - x Z_d$ is stored in the register $T_2$, and $(X_d - x Z_d)^2$ is therefore calculated. The result is stored in the register $T_2$. In step 2007 $T_1 \times T_2$ is calculated. Here, $X_{d-1} Z_{d+1} - Z_{d-1} X_{d+1}$ is stored in the register $T_1$, $(X_d - x Z_d)^2$ is stored in the register $T_2$, and therefore $(X_d - x Z_d)^2(X_{d-1} Z_{d+1} - Z_{d-1} X_{d+1})$ is calculated. The result is stored in the register $Y_d^w$. In step 2008 $4B \times y$ is calculated. The result is stored in the register $T_2$. In step 2009 $T_2 \times Z_{d+1}$ is calculated. Here, $4By$ is stored in the register $T_2$, and $4By Z_{d+1}$ is therefore calculated. The result is stored in the register $T_2$. In step 2010 $T_2 \times Z_{d-1}$ is calculated. Here, $4By Z_{d+1}$ is stored in the register $T_2$, and $4By Z_{d+1} Z_{d-1}$ is therefore calculated. The result is stored in the register $T_2$. In step 2011 $T_2 \times Z_d$ is calculated. Here, $4By Z_{d+1} Z_{d-1}$ is stored in the register $T_2$, and $4By Z_{d+1} Z_{d-1} Z_d$ is therefore calculated. The result is stored in the register $T_2$. In step 2012 $T_2 \times X_d$ is calculated. Here, $4By Z_{d+1} Z_{d-1} Z_d$ is stored in the register $T_2$, and $4By Z_{d+1} Z_{d-1} Z_d X_d$ is therefore calculated. The result is stored in the register $T_1$. In step 2013 $T_2 \times Z_d$

is calculated. Here, $4ByZ_{d+1}Z_{d-1}Z_d$ is stored in the register $T_2$, and $4ByZ_{d+1}Z_{d-1}Z_dZ_d$ is therefore calculated. The result is stored in $T_2$. In step 2014 $T_2 \times s$ is calculated. Here the register $T_2$ stores $4ByZ_{d+1}Z_{d-1}Z_d$, and therefore $4sByZ_{d+1}Z_{d-1}Z_dZ_d$ is calculated. The result is stored in the register $Z_d{}^w$. In step 2015 $\alpha \times Z_d{}^w$ is calculated. Here, the register $Z_d{}^w$ stores $4sByZ_{d+1}Z_{d-1}Z_dZ_d$, and therefore $4\alpha sByZ_{d+1}Z_{d-1}Z_dZ_d$ is calculated. The result is stored in the register $T_2$. In step 2016 $T_1+T_2$ is calculated. Here, the register $T_1$ stores $4ByZ_{d+1}Z_{d-1}Z_dX_d$, the register $T_2$ stores $4\alpha sByZ_{d+1}Z_{d-1}Z_dZ_d$, and therefore $4ByZ_{d+1}Z_{d-1}Z_dX_d+4\alpha sByZ_{d+1}Z_{d-1}Z_dZ_d$ is calculated. The result is stored in the register $X_d{}^w$. Therefore, $X_d{}^w$ stores $4ByZ_{d+1}Z_{d-1}Z_dX_d+4\alpha sByZ_{d+1}Z_{d-1}Z_dZ_d$. In the step 2007 $(X_d\text{-}xZ_d)^2(X_{d-1}Z_{d+1}\text{-}Z_{d-1}X_{d+1})$ is stored in the register $Y_d{}^w$, and is not updated thereafter, and therefore the value is held. In the step 2014 $4sByZ_{d+1}Z_{d-1}Z_dZ_d$ is stored in the register $Z_d{}^w$, and is not updated thereafter, and therefore the value is held.

A reason why all values in the projective coordinate $(X_d{}^w,Y_d{}^w,Z_d{}^w)$ of the scalar-multiplied point in the Weierstrass-form elliptic curve are recovered from x, y, $X_d$, $Z_d$, $X_{d+1}$, $Z_{d+1}$, $X_{d-1}$, $Z_{d-1}$ given by the aforementioned procedure is as follows. Additionally, the point (d+1)P is a point obtained by adding the point P to the point dP, and the point (d-1)P is a point obtained by subtracting the point P from the point dP. Assignment to the addition formula in the affine coordinates of the Montgomery-form elliptic curve results in Equations 6, 7. When opposite sides are individually subjected to subtraction, Equation 8 is obtained. Therefore, Equation 9 results. Here, $x_d=X_d/Z_d$, $x_{d+1}=X_{d+1}/Z_{d+1}$, $x_{d-1}=X_{d-1}/Z_{d-1}$. The value is assigned and thereby converted to a value of the projective coordinate. Then, Equation 10 is obtained. Although $x_d=X_d/Z_d$, the reduction to the denominator common with that of $y_d$ is performed, and Equation 20 results. As a result, the following equation is obtained.

$$Y'_d = (X_{d-1}Z_{d+1} - Z_{d-1}X_{d+1})(X_d - Z_dx)^2 \qquad \text{Equation 56}$$

Then, the followings are obtained.

$$X'_d = 4ByZ_{d+1}Z_{d-1}Z_dX_d \qquad \text{Equation 57}$$

$$Z'_d = 4ByZ_{d+1}Z_{d-1}Z_dZ_d \qquad \text{Equation 56}$$

Here, $(X'_d,Y'_d,Z'_d) = (X_d,Y_d,Z_d)$. The correspondence between the point on the Montgomery-form elliptic curve and the point on the Weierstrass-form elliptic curve is described in K.Okeya, H.Kurumatani, K.Sakurai, Elliptic Curves with the Montgomery-form and Their Cryptographic Applications, Public Key Cryptography, LNCS 1751 (2000) pp.238-257. Thereby, when the conversion parameters are s, $\alpha$, the relation is $Y_d{}^w=Y'_d$, $X_d{}^w=X'_d+\alpha Z_d{}^w$, and $Z_d{}^w=sZ'_d$. As a result, the following equations are obtained.

$$Y_d^W = (X_{d-1}Z_{d+1} - Z_{d-1}X_{d+1})(X_d - Z_dx)^2 \qquad \text{Equation 59}$$

$$X_d^W = 4ByZ_{d+1}Z_{d-1}Z_dX_d + \alpha 4sByZ_{d+1}Z_{d-1}Z_dZ_d \qquad \text{Equation 60}$$

$$Z_d^W = 4sByZ_{d+1}Z_{d-1}Z_dZ_d \qquad \text{Equation 61}$$

Here, $X_d{}^w$, $Y_d{}^w$, $Z_d{}^w$ are given by FIG. 20. Therefore, all the values of the projective coordinate $(X_d{}^w,Y_d{}^w,Z_d{}^w)$ in the Weierstrass-form elliptic curve are recovered.

For the aforementioned procedure, in the steps 2001, 2002, 2004, 2007, 2008, 2009, 2010, 2011, 2012, 2013, 2014, and 2015, the computational amount of multiplication on the finite field is required. Moreover, the computational amount of squaring on the finite field is required in the step 2006. The computational amounts of addition and subtraction on the finite field are relatively small as compared with the computational amount of multiplication on the finite field and the computational amount of squaring, and may therefore be ignored. Assuming that the computational amount of multiplication on the finite field is M, and the computational amount of squaring on the finite field is S, the above procedure requires a computational amount of 12M+S. This is far small as compared with the computational amount of the fast scalar multiplication. For example, when the scalar value d indicates 160 bits, the computational amount of the fast scalar multiplication is estimated to be a little less than about 1500 M. Assuming S=0.8 M, the computational amount of coordinate recovering is 12.8 M, and far small as compared with the computational amount of the fast scalar multiplication. Therefore, it is indicated that the coordinate can efficiently be recovered.

Additionally, even when the above procedure is not taken, the values of $X_d^w$, $Y_d^w$, $Z_d^w$ given by the above equation can be calculated, and the values of $X_d^w$, $Y_d^w$, $Z_d^w$ can then be recovered. Moreover, when the scalar-multiplied point dP in the affine coordinates in the Weierstrass-form elliptic curve is dP= $(x_d^w, y_d^w)$, the values of $X_d^w$, $Y_d^w$, $Z_d^w$ are selected so that $x_d^w$, $y_d^w$ take the values given by the aforementioned equations, the values can be calculated, and then $X_d^w$, $Y_d^w$, $Z_d^w$ can be recovered. In this case, the computational amount required for recovering generally increases. Furthermore, when the values of B as the parameter of the Montgomery-form elliptic curve and s as the conversion parameter to the Montgomery-form elliptic curve are set to be small, the computational amount of multiplication in the step 2008 or 2014 can be reduced.

An algorithm which outputs $X_d$, $Z_d$, $X_{d+1}$, $Z_{d+1}$, $X_{d-1}$, $Z_{d-1}$ from the scalar value d and the point P on the Weierstrass-form elliptic curve will next be described.

As the fast scalar multiplication method of the scalar multiplication unit 202 of the twelfth embodiment, the fast scalar multiplication method of the eleventh embodiment is used. Thereby, as the algorithm which outputs $X_d$, $Z_d$, $X_{d+1}$, $Z_{d+1}$, $X_{d-1}$, $Z_{d-1}$ from the scalar value d and the point P on the Weierstrass-form elliptic curve, a fast algorithm can be achieved. Additionally, instead of using the aforementioned algorithm in the scalar multiplication unit 202, any algorithm may be used as long as the algorithm outputs $X_d$, $Z_d$, $X_{d+1}$, $Z_{d+1}$, $X_{d-1}$, $Z_{d-1}$ from the scalar value d and the point P on the Weierstrass-form elliptic curve at high speed.

The computational amount required for recovering the coordinate of the coordinate recovering unit 203 in the scalar multiplication unit 103 is 12M+S, and this is far small as compared with the computational amount of (9.2k+1) M necessary for fast scalar multiplication of the fast scalar multiplication unit 202. Therefore, the computational amount necessary for the scalar multiplication of the scalar multiplication unit 103 is substantially equal to the computational amount necessary for the fast scalar multiplication of the fast scalar multiplication unit. Assuming that S=0.8 M, the computational amount can be estimated to be about (9.2k+13.8)M. For example, when the scalar value d indicates 160 bits (k=160), the computational amount necessary for the scalar multiplication is about 1486 M. The Weierstrass-form elliptic curve is used as the elliptic curve, the scalar multiplication method is used in which the window method and the mixed coordinates mainly including the Jacobian coordinates are used, and the scalar-multiplied point is outputted as the Jacobian coordinates. In this case, the required computational amount is about 1600 M, and as compared with this, the required computational amount is reduced.

In a thirteenth embodiment, the Weierstrass-form elliptic curve is used as the elliptic curve for input/output, and the Montgomery-form elliptic curve which can be transformed from the given Weierstrass-form elliptic curve is used for the internal calculation. The scalar multiplication unit 103 calculates and outputs the scalar-multiplied point $(x_d^w, y_d^w)$ with the complete coordinate given thereto as the point of the affine coordinates in the Weierstrass-form elliptic curve from the scalar value d and the point P on the Weierstrass-form elliptic curve. The scalar value d and the point P on the Weierstrass-form elliptic curve are inputted into the scalar multiplication unit 103, and received by the scalar multiplication unit 202. The fast scalar multiplication unit 202 calculates $x_d$ in the coordinate of the scalar-multiplied point dP=$(x_d, y_d)$ represented by the affine coordinates in the Montgomery-form elliptic curve, $x_{d+1}$ in the coordinate of the point (d+1)P=$(x_{d+1}, y_{d+1})$ on the Montgomery-form elliptic curve represented by the affine coordinates, and $x_{d-1}$ in the coordinate of the point (d-1)P=$(x_{d-1}, y_{d-1})$ on the Montgomery-form elliptic curve represented by the affine coordinates from the received scalar value d and the given point P on the Weierstrass-form elliptic curve. The information is given to the coordinate recovering unit 203 together with the inputted point P=(x,y) on the Montgomery-form elliptic curve represented by the affine coordinates. The coordinate recovering unit 203 recovers coordinate $y_d^w$ of the scalar-multiplied point dP=$(x_d^w, y_d^w)$ represented by the affine coordinates in the Weierstrass-form elliptic curve from the given coordinate values $x_d$, $x_{d+1}$, $x_{d-1}$, x, and y. The scalar multiplication unit 103 outputs the scalar-multiplied point $(x_d^w, y_d^w)$ with the coordinate completely given thereto in the affine coordinates on the Weierstrass-form elliptic curve as the calculation result.

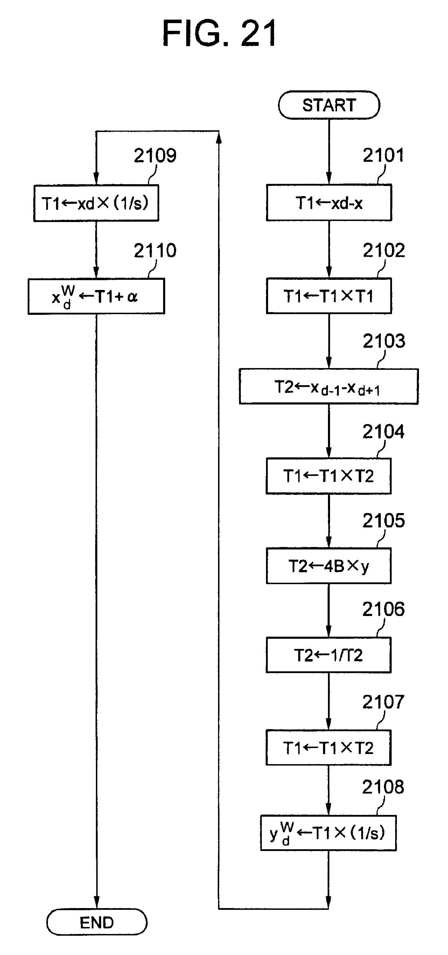

A processing of the coordinate recovering unit which outputs $x_d^w$, $y_d^w$ from the given coordinates x, y, $x_d$, $x_{d+1}$, $x_{d-1}$ will next be described with reference to FIG. 21.

The coordinate recovering unit 203 inputs $x_d$ in the coordinate of the scalar-multiplied point dP=$(x_d, y_d)$ represented by the affine coordinates in the Montgomery-form elliptic curve, $x_{d+1}$ in the coordinate of the point (d+1) P= $(x_{d+1}, y_{d+1})$ on the Montgomery-form elliptic curve represented by the affine coordinates, $x_{d-1}$ in the coordinate of the point (d-1)P=$(x_{d-1}, y_{d-1})$ on the Montgomery-form elliptic curve represented by the affine coordinates, and (x,y) as representation of the point P on the Montgomery-form elliptic curve in the affine coordinates inputted into the scalar multiplication unit 103, and outputs the scalar-multiplied point $(x_d^w, y_d^w)$ with the complete coordinate given thereto in the affine coordinates in the following procedure.

In step 2101 $x_d$-x is calculated, and stored in the register $T_1$. In step 2102 a square of $T_1$, that is, $(x_d$-x$)^2$ is calculated, and stored in the register $T_1$. In step 2103 $x_{d-1}$-$x_{d+1}$ is calculated, and stored in $T_2$. In step 2104 $T_1 \times T_2$ is calculated. Here, $(x_d$-x$)^2$ is stored in the register $T_1$, $x_{d-1}$-$x_{d+1}$ is stored in the register $T_2$, and therefore $(x_d$-x$)^2(x_{d-1}$-$x_{d+1})$ is calculated. The result is stored in the register $T_1$. In step 2105 4B$\times$y is calculated, and stored in the register $T_2$. In step 2106 the inverse element of $T_2$ is calculated. Here, 4By is stored in the register $T_2$, and 1/4By is therefore calculated. The result is stored in the register $T_2$. In step 2107 $T_1 \times T_2$ is calculated. Here, $(x_d-x)^2(x_{d-1}-x_{d+1})$ is stored in the register $T_1$, 1/4By is stored in the register $T_2$, and $(x_d-x)^2(x_{d-1}-x_{d+1})$/4By is therefore calculated. The result is stored in the register $T_1$. In step 2108 $T_1 \times s^{-1}$ is calculated. Here, $(x_d-x)^2(x_{d-1}-x_{d+1})$/4By is stored in the register $T_1$, and therefore $(x_d-x)^2(x_{d-1}-x_{d+1})$/4sBy is calculated. The result is stored in the register $y_d{}^w$. Additionally, since s is given beforehand, $s^{-1}$ can be calculated beforehand. In step 2109 $x_d \times s^{-1}$ is calculated. The result is stored in the register $T_1$. In step 2110 $T_1+\alpha$ is calculated. Here $s^{-1}x_d$ is stored in the register $T_1$, and therefore $s^{-1}x_d+\alpha$ is calculated. The result is stored in the register $x_d{}^w$. Therefore, $s^{-1}x_d+\alpha$ is stored in the register $x_d{}^w$. In the step 2108, since $(x_d-x)^2(x_{d-1}-x_{d+1})$/4sBy is stored in the register $y_d{}^w$, and is not updated thereafter, the inputted value is held.

A reason why the y-coordinate $y_d$ of the scalar-multiplied point is recovered by the aforementioned procedure is as follows. Additionally, the point (d+1)P is a point obtained by adding the point P to the point dP, and the point (d-1)P is a point obtained by subtracting the point P from the point dP. Thereby, assignment to the addition formulae in the affine coordinates of the Montgomery-form elliptic curve results in Equations 6, 7. When the opposite sides are individually subjected to subtraction, Equation 8 is obtained. Therefore, Equation 9 results. The correspondence between the point on the Montgomery-form elliptic curve and the point on the Weierstrass-form elliptic curve is described in K.Okeya, H.Kurumatani, K.Sakurai, Elliptic Curves with the Montgomery-Form and Their Cryptographic Applications, Public Key Cryptography, LNCS 1751 (2000) pp.238-257. Thereby, when the conversion parameters are s, $\alpha$, the relation is $y_d{}^w=s^{-1}y_d$, and $x_d{}^w= s^{-1}x_d+\alpha$. As a result, the following equations are obtained.

$$y_d^W = (x_{d-1} - x_{d+1})(x_d - x)^2/4sBy \qquad\qquad \text{Equation 62}$$

$$x_d^W = s^{-1}x_d + \alpha \qquad\qquad \text{Equation 63}$$

Here, $x_d{}^w$, $y_d{}^w$ are given by FIG. 21. Therefore, all values of the affine coordinate $(x_d{}^w, y_d{}^w)$ are recovered.

For the aforementioned procedure, in the steps 2104, 2105, 2107, 2108 and 2109, the computational amount of multiplication on the finite field is required. Moreover, the computational amount of squaring on the finite field is required in the step 2102. Furthermore, the computational amount of the inversion on the finite field is required in the step 2106. The computational amounts of addition and subtraction on the finite field are relatively small as compared with the computational amounts of multiplication, squaring, and inversion on the finite field, and may therefore be ignored. Assuming that the computational amount of multiplication on the finite field is M, the computational amount of squaring on the finite field is S, and the computational amount of inversion on the finite field is I, the above procedure requires a computational amount of 5M+S+I. This is far small as compared with the computational amount:of the fast scalar multiplication. For example, when the scalar value d indicates 160 bits, the computational amount of the fast scalar multiplication is estimated to be a little less than about 1500 M. Assuming S=0.8 M and I=40 M, the computational amount of coordinate recovering is 45.8 M, and far small as compared with the computational amount of the fast scalar multiplication. Therefore, it is indicated that the coordinate can efficiently be recovered.

Additionally, even when the above procedure is not taken, but when the values of the right side of the above equation can be calculated, the value of $y_d{}^w$ can be recovered. In this case, the computational amount required for recovering generally increases. Furthermore, when the values of B as the parameter of the Montgomery-form elliptic curve and s as the conversion parameter to the Montgomery-form elliptic curve are set to be small, the computational amount of multiplication in the steps 2105, 2108, 2109 can be reduced.

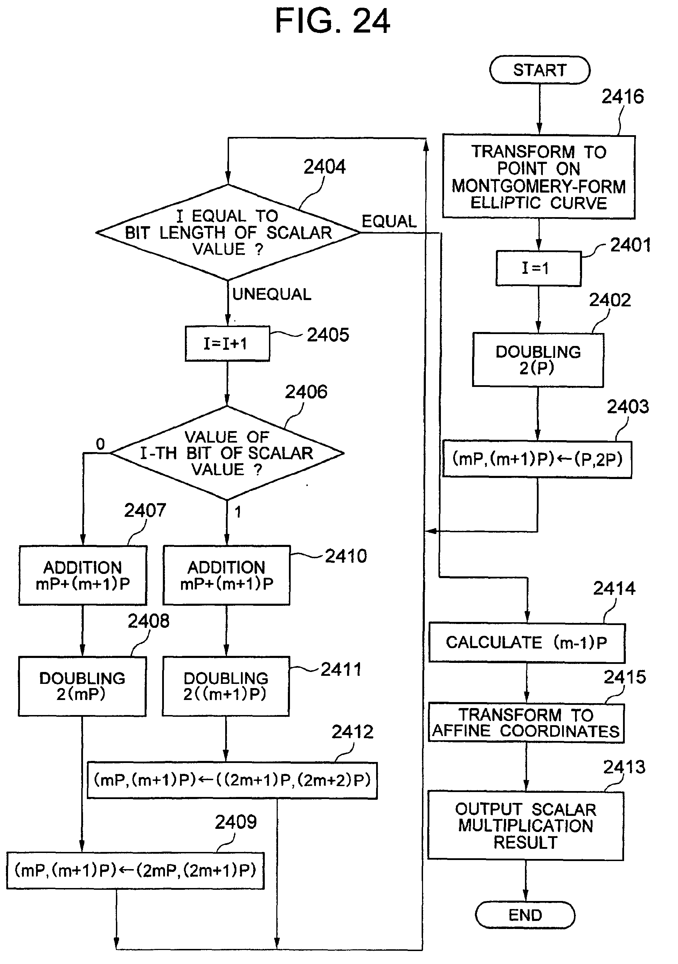

A processing of the fast scalar multiplication unit which outputs $x_d$, $x_{d+1}$, $x_{d-1}$ from the scalar value d and the point P on the Weierstrass-form elliptic curve will next be described with reference to FIG. 24.

The fast scalar multiplication unit 202 inputs the point P on the Weierstrass-form elliptic curve inputted into the scalar multiplication unit 103, and outputs $x_d$ in the scalar-multiplied point $dP=(x_d,y_d)$ represented by the affine coordinate in the Montgomery-form elliptic curve, $x_{d+1}$ in the point (d+1) $P= (x_{d+1}, y_{d+1})$ on the Montgomery-form elliptic curve represented by the affine coordinate, and $x_{d-1}$ in the point (d-1)$P= (x_{d-1},y_{d-1})$ on the Montgomery-form elliptic curve represented by the affine coordinate by the following procedure. In step 2416, the point P on the given Weierstrass-form elliptic curve is transformed to the point by the projective coordinates on the Montgomery-form elliptic curve. This point is set anew to the point P. In step 2401, the initial value 1 is assigned to the variable I. The doubled point 2P of the point P is calculated in step 2402. Here, the point P is represented as (x,y,1) in the projective coordinate, and the formula of doubling in the projective coordinate of the Montgomery-form elliptic curve is used to calculate the doubled point 2P. In step 2403, the point P on the elliptic curve inputted into the scalar multiplication unit 103 and the point 2P obtained in the step 2402 are stored as a set of points (P,2P). Here, the points P and 2P are represented by the projective coordinate. It is judged in step 2404 whether or not the variable I agrees with the bit length of the scalar value d. With agreement, m=d is satisfied and the flow goes to step 2414. With disagreement, the flow goes to step 2405. The variable I is increased by 1 in the step 2405. It is judged in step 2406 whether the value of the I-th bit of the scalar value is 0 or 1. When the value of the bit is 0, the flow goes to the step 2407. When the value of the bit is 1, the flow goes to step 2410. In step 2407, addition mP+(m+1)P of points mP and (m+1)P is performed from the set of points (mP,(m+1)P) represented by the projective coordinate, and the point (2m+1)P is calculated. Thereafter, the flow goes to step 2408. Here, the addition mP+(m+1)P is calculated using the addition formula in the projective coordinate of the Montgomery-form elliptic curve. In step 2408, doubling 2(mP) of the point mP is performed from the set of points (mP, (m+1)P) represented by the projective coordinate, and the point 2mP is calculated. Thereafter, the flow goes to step 2409. Here, the doubling 2(mP) is calculated using the formula of doubling in the projective coordinate of the Montgomery-form elliptic curve. In the step 2409, the point 2mP obtained in the step 2408 and the point (2m+1)P obtained in the step 2407 are stored as the set of points (2mP,(2m+1)P) instead of the set of points (mP,(m+1)P). Thereafter, the flow returns to the step 2404. Here, the points 2mP, (2m+1)P, mP, and (m+1)P are all represented in the projective coordinates. In step 2410, addition mP+(m+1)P of the points mP, (m+1)P is performed from the set of points (mP,(m+1)P) represented by the projective coordinates, and the point (2m+1)P is calculated. Thereafter, the flow goes to step 2411. Here, the addition mP+(m+1)P is calculated using the addition formula in the projective coordinates of the Montgomery-form elliptic curve. In the step 2411, doubling 2((m+1)P) of the point (m+1)P is performed from the set of points (mP,(m+1)P) represented by the projective coordinates, and the point (2m+2)P is calculated. Thereafter, the flow goes to step 2412. Here, the doubling 2((m+1)P) is calculated using the formula of doubling in the projective coordinates of the Montgomery-form elliptic curve. In the step 2412, the point (2m+1)P obtained in the step 2410 and the point (2m+2)P obtained in the step 2411 are stored as the set of points ((2m+1)P, (2m+2)P) instead of the set of points (mP, (m+1)P). Thereafter, the flow returns to the step 2404. Here, the points (2m+1)P, (2m+2)P, mP, and (m+1)P are all represented in the projective coordinates. In step 2414, from the set of points (mP,(m+1)P) represented by the projective coordinates, X-coordinate $X_{m-1}$ and Z-coordinate $Z_{m-1}$ in the projective coordinates of the point (m-1)P are obtained as $X_{d-1}$ and $Z_{d-1}$. Thereafter, the flow goes to step 2415. In the step 2415, $X_m$ and $Z_m$ are obtained as $X_d$ and $Z_d$ from the point $mP=(X_m,Y_m,Z_m)$ represented by the projective coordinates, and $X_{m+1}$ and $Z_{m+1}$ are obtained as $X_{d+1}$ and $Z_{d+1}$ from the point $(m+1)P=(X_{m+1},Y_{m+1},Z_{m+1})$ represented by the projective coordinates. Here, $Y_m$ and $Y_{m+1}$ are not obtained, because Y-coordinate cannot be obtained by the addition and doubling formulae in the projective coordinates of the Montgomery-form elliptic curve. From $X_{d-1}$, $Z_{d-1}$, $X_d$, $Z_d$, $X_{d+1}$ and $Z_{d+1}$, $x_{d-1}$, $x_d$, $x_{d+1}$ are obtained as in Equations 24, 25, 26. Thereafter, the flow goes to step 2413. In the step 2413, $x_{d-1}$, $x_d$, $x_{d+1}$ are outputted. In the above procedure, m and scalar value d are equal in the bit length and bit pattern, and are therefore equal. Moreover, when (m-1)P is obtained in step 2414, it may be obtained by Equations 13, 14. If m is an odd number, the value of ((m-1)/2)P is separately held in the step 2412, and (m-1)P may be obtained from the value by the doubling formula of the Montgomery-form elliptic curve.

The computational amount of the addition formula in the projective coordinates of the Montgomery-form elliptic curve is 3M+2S with $Z_1$=1. Here, M is the computational amount of multiplication on the finite field, and S is the computational amount of squaring on the finite field. The computational amount of the doubling formula in the projective coordinates of the Montgomery-form elliptic curve is 3M+2S. When the value of the I-th bit of the scalar value is 0, the computational amount of addition in the step 2407, and the computational amount of doubling in the step 2408 are required. That is, the computational amount of 6M+4S is required. When the value of the I-th bit of the scalar value is 1, the computational amount of addition in the step 2410, and the computational amount of doubling in the step 2411 are required. That is, the computational amount of 6M+4S is required. In any case, the computational amount of 6M+4S is required. The number of repetitions of the steps 2404, 2405, 2406, 2407, 2408, 2409, or the steps 2404, 2405, 2406, 2410, 2411, 2412 is (bit length of the scalar value d)-1. Therefore, in consideration of the computational amount of doubling in the step 2402, the computational amount necessary for the calculation of (m-1)P in the step 2414, and the computational amount of the transform to the affine coordinates in the step 2415, the entire computational amount is (6M+4S)k+11M+I. Here, k is the bit length of the scalar value d. In general, since the computational amount S is estimated to be of the order of S=0.8 M, and the computational amount I is estimated to be of the order of I=40 M, the entire computational amount is approximately (9.2k+51)M. For example, when the scalar value d indicates 160 bits (k=160), the computational amount of algorithm of the aforementioned procedure is about 1523 M. The computational amount per bit of the scalar value d is about 9.2 M. In A. Miyaji, T. Ono, H. Cohen, Efficient elliptic curve exponentiation using mixed coordinates, Advances in Cryptology Proceedings of ASIACRYPT'98, LNCS 1514 (1998) pp.51-65, the scalar multiplication method using the window method and mixed coordinates mainly including Jacobian coordinates in the Weierstrass-form elliptic curve is described as the fast scalar multiplication method. In this case, the computational amount per bit of the scalar value is estimated to be about 10 M. Additionally, the computational amount of the transform to the affine coordinates is required. For example, when the scalar value d indicates 160 bits (k=160), the computational amount of the scalar multiplication method is about 1640 M. Therefore, the algorithm of the aforementioned procedure can be said to have a small computational amount and high speed.

Additionally, instead of using the aforementioned algorithm in the scalar multiplication unit 202, any algorithm may be used as long as the algorithm outputs $x_{d-1}$, $x_d$, $x_{d+1}$ from the scalar value d and the point P on the Weierstrass-form elliptic curve at high speed.

In a fourteenth embodiment, the scalar multiplication unit 103 calculates and outputs the scalar-multiplied point $(x_d, y_d)$ with the complete coordinate given thereto as the point of the affine coordinates in the Montgomery-form elliptic curve from the scalar value d and the point P on the Montgomery-form elliptic curve. The scalar value d and the point P on the Montgomery-form elliptic curve are inputted into the scalar multiplication unit 103, and received by the scalar multiplication unit 202. The fast scalar multiplication unit 202 calculates $X_d$ and $Z_d$ in the coordinate of the scalar-multiplied point $dP=(X_d, Y_d, Z_d)$ represented by the projective coordinates in the Montgomery-form elliptic curve, and $X_{d+1}$ and $Z_{d+1}$ in the coordinate of the point $(d+1)P=(X_{d+1}, Y_{d+1}, Z_{d+1})$ on the Montgomery-form elliptic curve represented by the projective coordinates from the received scalar value d and the given point P on the Montgomery-form elliptic curve. The information is given to the coordinate recovering unit 203 together with the inputted point $P=(x,y)$ on the Montgomery-form elliptic curve represented by the affine coordinates. The coordinate recovering unit 203 recovers coordinate $x_d$ and $y_d$ of the scalar-multiplied point $dP=(x_d, y_d)$ represented by the affine coordinates in the Montgomery-form elliptic curve from the given coordinate values $X_d$, $Z_d$, $X_{d+1}$, $Z_{d+1}$, x, and y. The scalar multiplication unit 103 outputs the scalar-multiplied point $(x_d, y_d)$ with the coordinate completely given thereto in the affine coordinates as the calculation result.

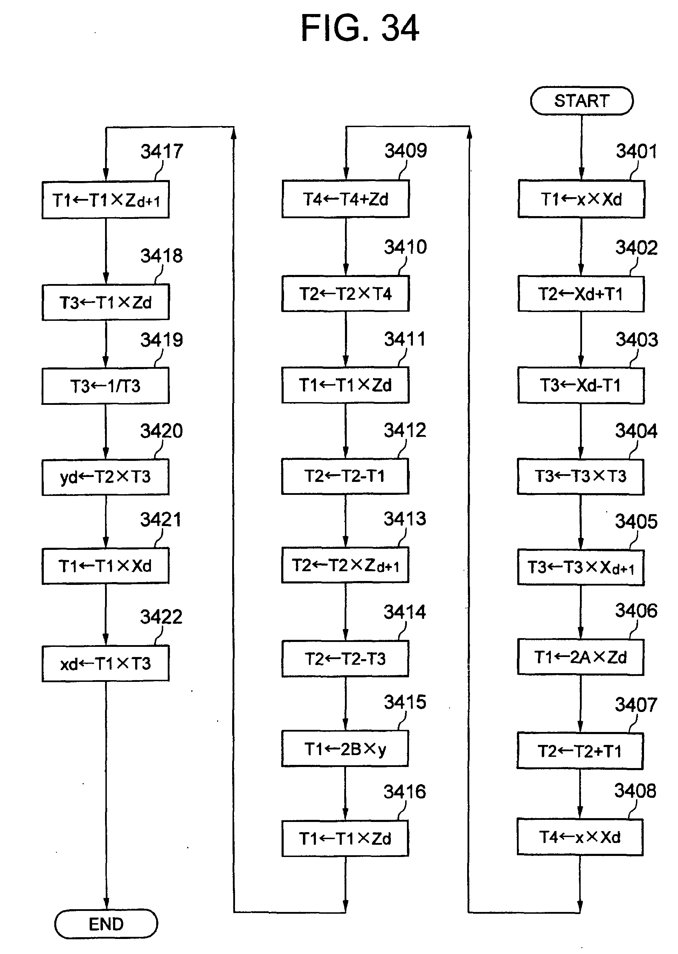

A processing of the coordinate recovering unit which outputs $x_d$, $y_d$ from the given coordinates x, y, $X_d$, $Z_d$, $X_{d+1}$, $Z_{d+1}$ will next be described with reference to FIG. 34.

The coordinate recovering unit 203 inputs $X_d$ and $Z_d$ in the coordinate of the scalar-multiplied point $dP=(X_d, Y_d, Z_d)$ represented by the projective coordinates in the Montgomery-form elliptic curve, $X_{d+1}$ and $Z_{d+1}$ in the coordinate of the point $(d+1)P=(X_{d+1}, Y_{d+1}, Z_{d+1})$ on the Montgomery-form elliptic curve represented by the projective coordinates, and (x,y) as representation of the point P on Montgomery-form elliptic curve inputted into the scalar multiplication unit 103 in the affine coordinates, and outputs the scalar-multiplied point $(x_d, y_d)$ with the complete coordinate given thereto in the affine coordinates in the following procedure. Here, the affine coordinate of the inputted point P on the Montgomery-form elliptic curve is represented by (x,y), and the projective coordinate thereof is represented by $(X_1, Y_1, Z_1)$. Assuming that the inputted scalar value is d, the affine coordinate of the scalar-multiplied point dP in the Montgomery-form elliptic curve is represented by $(x_d, y_d)$, and the projective coordinate thereof is represented by $(X_d, Y_d, Z_d)$. The affine coordinate of the point $(d+1)P$ on the Montgomery-form elliptic curve is represented by $(x_{d+1}, y_{d+1})$, and the projective coordinate thereof is represented by $(X_{d+1}, Y_{d+1}, Z_{d+1})$.

In step 3401, $x \times Z_d$ is calculated and stored in the register $T_1$. In step 3402 $X_d + T_1$ is calculated. Here, $xZ_d$ is stored in the register $T_1$, and therefore $xZ_d + X_d$ is calculated. The result is stored in the register $T_2$. In step 3403 $X_d - T_1$ is calculated, here the register $T_1$ stores $xZ_d$, and therefore $xZ_d - X_d$ is calculated. The result is stored in the register $T_3$. In step 3404 a square of the register $T_3$ is calculated. Here, $xZ_d - X_d$ stored in the register $T_3$, and therefore $(X_d - xZ_d)^2$ is calculated. The result is stored in the register $T_3$. In step 3405 $T_3 \times X_{d+1}$ is calculated. Here, $(X_d - xZ_d)^2$ is stored in the register $T_3$, and therefore $X_{d+1}(X_d - xZ_d)^2$ is calculated. The result is stored in the register $T_3$. In step 3406 $2A \times Z_d$ is calculated, and stored in the register $T_1$. In step 3407 $T_2 + T_1$ is calculated. Here, $xZ_d + X_d$ is stored in the register $T_2$, $2AZ_d$ is stored in the register $T_1$, and therefore $xZ_d + X_d + 2AZ_d$ is calculated. The result is stored in the register $T_2$. In step 3408 $x \times X_d$ is calculated and stored in the register $T_4$. In step 3409 $T_4 + Z_d$ is calculated. Here, the register $T_4$ stores $xX_d$, and therefore $xX_d + Z_d$ is calculated. The result is stored in the register $T_4$. In step 3410 $T_2 \times T_4$ is calculated. Here $T_2$ stores $xZ_d + X_d + 2AZ_d$, the register $T_4$ stores $xX_d + Z_d$, and therefore, $(xZ_d + X_d + 2AZ_d)(xX_d + Z_d)$ is calculated. The result is stored in the register $T_2$. In step 3411 $T_1 \times Z_d$ is calculated. Here, since the register $T_1$ stores $2AZ_d$, $2AZ_d^2$ is calculated. The result is stored in the register $T_1$. In step 3412 $T_2 - T_1$ is calculated. Here $(xZ_d + X_d + 2AZ_d)(xX_d + Z_d)$ is stored in the register $T_2$, $2AZ_d^2$ is stored in the register $T_1$, and therefore $(xZ_d + X_d + 2AZ_d)(xX_d + Z_d) - 2AZ_d^2$ is calculated. The result is stored in the register $T_2$. In step 3413 $T_2 \times Z_{d+1}$ is calculated. Here $(xZ_d + X_d + 2AZ_d)(xX_d + Z_d) - 2AZ_d^2$ is stored in the register $T_2$, and therefore, $Z_{d+1}((xZ_d + X_d + 2AZ_d)(xX_d + Z_d) - 2AZ_d^2)$ is calculated. The result is stored in the register $T_2$. In step 3414 $T_2 - T_3$ is calculated. Here $Z_{d+1}((xZ_d + X_d + 2AZ_d)(xX_d + Z_d) - 2AZ_d^2)$ is stored in the register $T_2$, $X_{d+1}(X_d - xZ_d)^2$ is stored in the register $T_3$, and therefore $Z_{d+1}((xZ_d + X_d + 2AZ_d)(xX_d + Z_d) - 2AZ_d^2) - X_{d+1}(X_d - xZ_d)^2$ is calculated. The result is stored in the register $T_2$. In step 3415 $2B \times y$ is calculated, and stored in the register $T_1$. In step 3416 $T_1 \times Z_d$ is calculated. Here, $2By$ is stored in the register $T_1$, and therefore $2ByZ_d$ is calculated. The result is stored in the register $T_1$. In step 3417 $T_1 \times Z_{d+1}$ is calculated. Here the register $T_1$ stores $2ByZ_d$, and therefore $2ByZ_dZ_{d+1}$ is calculated. The result is stored in the register $T_1$. In step 3418 $T_1 \times Z_d$ is calculated. Here the register $T_1$ stores $2ByZ_dZ_{d+1}$, and therefore $2ByZ_dZ_{d+1}Z_d$ is calculated. The result is stored in the register $T_3$. In step 3419 the inverse element of the register $T_3$ is stored. Here the register $T_3$ stores $2ByZ_dZ_{d+1}Z_d$, and therefore $1/2ByZ_dZ_{d+1}Z_d$ is calculated. The result is stored in the register $T_3$. In step 3420 $T_2 \times T_3$ is calculated. Here, the register $T_2$ stores $Z_{d+1}((xZ_d + X_d + 2AZ_d)(xX_d + Z_d) - 2AZ_d^2) - X_{d+1}(X_d - xZ_d)^2$, the register $T_3$ stores $1/2ByZ_dZ_{d+1}Z_d$, and therefore $\{Z_{d+1}((xZ_d + X_d + 2AZ_d)(xX_d + Z_d) - 2AZ_d^2) - X_{d+1}(X_d - xZ_d)^2\}/2ByZ_dZ_{d+1}Z_d$ is calculated. The result is stored in the register $y_d$. In step 3421 $T_1 \times X_d$ is calculated. Here the register $T_1$ stores $2ByZ_dZ_{d+1}$, and therefore $2By_dZ_{d+1}X_d$ is calculated. The result is stored in the register $T_1$. In step 3422 $T_1 \times T_3$ is calculated. Here, the register $T_1$ stores $2ByZ_dZ_{d+1}X_d$, the register $T_3$ stores $1/2ByZ_dZ_{d+1}Z_d$, and therefore $2ByZ_dZ_{d+1}X_d/2ByZ_dZ_{d+1}Z_d(=X_d/Z_d)$ is calculated. The result is stored in $x_d$. In the step 3420 since $\{Z_{d+1}((xZ_d + X_d + 2AZ_d)$

$(xX_d+Z_d)-2AZ_d^2)-X_{d+1}(X_d-xZ_d)^2\}/2ByZ_dZ_{d+1}Z_d$ is stored in $y_d$, and is not updated thereafter, the value is held.

A reason why all the values in the affine coordinate $(x_d,y_d)$ of the scalar-multiplied point in the Montgomery-form elliptic curve are recovered from x, y, $X_d$, $Z_d$, $X_{d+1}$, $Z_{d+1}$ given to the coordinate recovering unit 203 by the aforementioned procedure is as follows. Additionally, the point (d+1)P is a point obtained by adding the point P to the point dP. The assignment to the addition formulae in the affine coordinates of the Montgomery-form elliptic curve results in Equation 6. Since the points P and dP are points on the Montgomery-form elliptic curve, $By_d^2=x_d^3+Ax_d^2+x_d$ and $By^2=x^3+Ax^2+x$ are satisfied. When the value is assigned to Equation 6, $By_d^2$ and $By^2$ are deleted, and the equation is arranged, the following is obtained.

$$y_d = \{(x_dx+1)(x_d+x+2A)-2A-(x_d-x)^2x_{d+1}\}/(2By) \qquad \text{Equation 64}$$

Here, $x_d=X_d/Z_d$, $x_{d+1}=X_{d+1}/Z_{d+1}$. The value is assigned and thereby converted to the value of the projective coordinate. Then, the following equation is obtained.

$$y_d = \left\{Z_{d+1}\left((X_dx+Z_d)(X_d+xZ_d+2AZ_d)-2AZ_d^2\right)-(X_d-xZ_d)^2X_{d+1}\right\}/(2ByZ_dZ_{d+1}Z_d)$$

$$\ldots \text{Equation 65}$$

Although $x_d=X_d/Z_d$, the reduction to the denominator common with that of $y_d$ is performed for the purpose of reducing the frequency of inversion, and following equation is obtained.

$$x_d = (2ByZ_dZ_{d+1}X_d)/(2ByZ_dZ_{d+1}Z_d) \qquad \text{Equation 66}$$

Here, $x_d$, $y_d$ are given by the processing of FIG. 34. Therefore, all values of the affine coordinate $(x_d,y_d)$ are recovered.

For the aforementioned procedure, in the steps 3401, 3405, 3406, 3408, 3410, 3411, 3413, 3415, 3416, 3417, 3418, 3420, 3421, and 3422, the computational amount of multiplication on the finite field is required. Moreover, the computational amount of squaring on the finite field is required in the step 3404. Moreover, in the step 3419 the computational amount of inversion on the finite field is required. The computational amounts of addition and subtraction on the finite field are relatively small as compared with the computational amounts of multiplication, squaring, and inversion on the finite field, and may therefore be ignored. Assuming that the computational amount of multiplication on the finite field is M, the computational amount of squaring on the finite field is S, and the computational amount of inversion on the finite field is I, the above procedure requires a computational amount of 14M+S+I. This is far small as compared with the computational amount of the fast scalar multiplication. For example, when the scalar value d indicates 160 bits, the computational amount of the fast scalar multiplication is estimated to be a little less than about 1500 M. Assuming S=0.8 M, I=40 M, the computational amount of coordinate recovering is 54.8 M, and far small as compared with the computational amount of the fast scalar multiplication. Therefore, it is indicated that the coordinate can efficiently be recovered.

Additionally, even when the above procedure is not taken, but if the values of $x_d$, $y_d$ given by the above equation can be calculated, the values of $x_d$, $y_d$ can be recovered. In this case, the computational amount required for recovering generally increases. Furthermore, when the value of A or B as the parameter of the elliptic curve is set to be small, the computational amount of multiplication in the step 3406 or 3415 can be reduced.

A processing of the fast scalar multiplication unit which outputs $X_d$, $Z_d$, $X_{d+1}$, $Z_{d+1}$ from the scalar value d and the point P on the Montgomery-form elliptic curve will next be described.

As the fast scalar multiplication method of the scalar multiplication unit 202 of the fourteenth embodiment, the fast scalar multiplication method of the first embodiment is used. Thereby, as the algorithm which outputs $X_d$, $Z_d$, $X_{d+1}$, $Z_{d+1}$ from the scalar value d and the point P on the Montgomery-form elliptic curve, the fast algorithm can be achieved. Additionally, instead of using the aforementioned algorithm in the scalar multiplication unit 202, any algorithm may be used as long as the algorithm outputs $X_d$, $Z_d$, $X_{d+1}$, $Z_{d+1}$ from the scalar value d and the point P on the Montgomery-form elliptic curve at high speed.

The computational amount required for recovering the coordinate of the coordinate recovering unit 203 in the scalar multiplication unit 103 is 14M+S+I, and this is far small as compared with the computational amount of (9.2k-4.6)M necessary for fast scalar multiplication of the fast scalar multiplication unit 202. Therefore, the computational amount necessary for the scalar multiplication of the scalar multiplication unit 103 is substantially equal to the computational amount necessary for the fast scalar multiplication of the fast scalar multiplication unit. Assuming that I=40 M, S=0.8 M, the computational amount can be estimated to be about (9.2k+50)M. For example, when the scalar value d indicates 160 bits (k=160), the computational amount necessary for the scalar multiplication is 1522 M. The Weierstrass-form elliptic curve is used as the elliptic curve, the scalar multiplication method is used in which the window method and the mixed coordinates mainly including the Jacobian coordinates are used, and the scalar-multiplied point is outputted as the affine coordinates. In this case, the required computational amount is about 1640 M, and as compared with this, the required computational amount is reduced.

In a fifteenth embodiment, the scalar multiplication unit 103 calculates and outputs the scalar-multiplied point $(X_d,Y_d,Z_d)$ with the complete coordinate given thereto as the point of the projective coordinates in the Montgomery-form elliptic curve from the scalar value d and the point P on the Montgomery-form elliptic curve. The scalar value d and the point P on the Montgomery-form elliptic curve are inputted into the scalar multiplication unit 103, and received by the scalar multiplication unit 202. The fast scalar multiplication unit 202 calculates $X_d$ and $Z_d$ in the coordinate of the scalar-multiplied point $dP=(X_d,Y_d,Z_d)$ represented by the projective coordinates in the Montgomery-form elliptic curve, and $X_{d+1}$ and $Z_{d+1}$ in the coordinate of the point $(d+1)P=(X_{d+1},Y_{d+1},Z_{d+1})$ on the Montgomery-form elliptic curve represented by the projective coordinates from the received scalar value d and the given point P on the Montgomery-form elliptic curve. The information is given to the coordinate recovering unit 203 together with the inputted point P=(x,y) on the Montgomery-form elliptic curve represented by the affine coordinates. The coordinate recovering unit 203 recovers coordinate $X_d$, $Y_d$, and $Z_d$ of the scalar-multiplied point $dP=(X_d,Y_d,Z_d)$ represented by the projective coordinates in the Montgomery-form elliptic curve from the given coordinate values $X_d$, $Z_d$, $X_{d+1}$, $Z_{d+1}$, x, and y. The scalar multiplication unit 103 outputs the scalar-multiplied point $(X_d,Y_d,Z_d)$ with the coordinate completely given thereto in the projective coordinates as the calculation result.

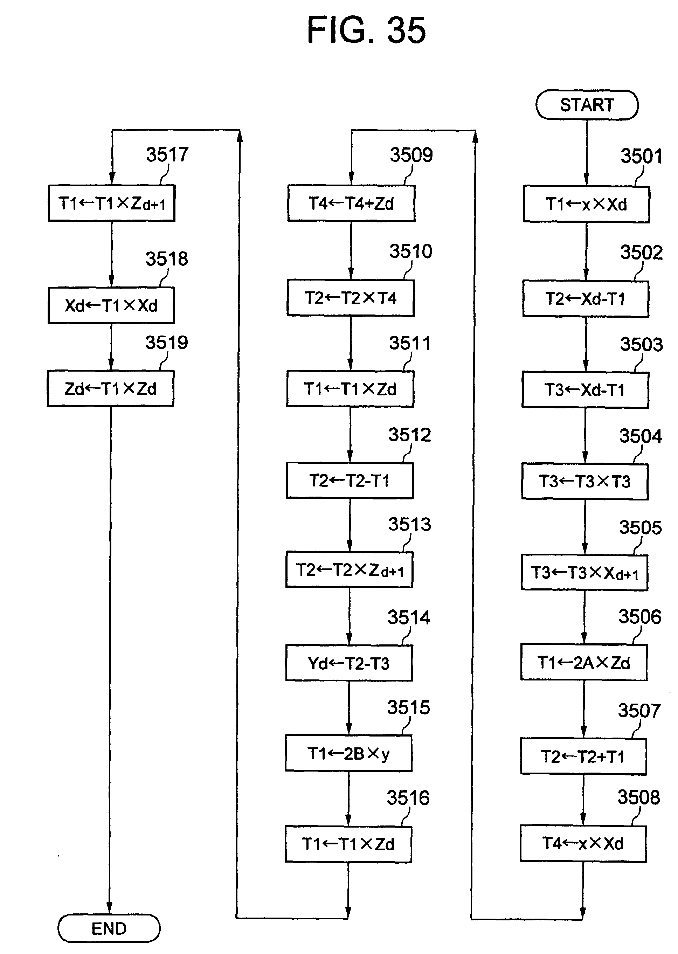

A processing of the coordinate recovering unit which outputs $X_d$, $Y_d$, $Z_d$ from the given coordinates x, y, $X_d$, $Z_d$, $X_{d+1}$, $Z_{d+1}$ will next be described with reference to FIG. 35.

The coordinate recovering unit 203 inputs $X_d$ and $Z_d$ in the coordinate of the scalar-multiplied point $dP=(X_d,Y_d,Z_d)$ represented by the projective coordinates in the Montgomery-form elliptic curve, $X_{d+1}$ and $Z_{d+1}$ in the coordinate of the point $(d+1)P=(X_{d+1},Y_{d+1},Z_{d+1})$ on the Montgomery-form elliptic curve represented by the projective coordinates, and (x,y) as representation of the point P on Montgomery-form elliptic curve inputted into the scalar multiplication unit 103 in the affine coordinates, and outputs the scalar-multiplied point $(X_d,Y_d,Z_d)$ with the complete coordinate given thereto in the projective coordinates in the following procedure. Here, the affine coordinate of the inputted point P on the Montgomery-form elliptic curve is represented by (x,y), and the projective coordinate thereof is represented by $(X_1,Y_1,Z_1)$. Assuming that the inputted scalar value is d, the affine coordinate of the scalar-multiplied point dP in the Montgomery-form elliptic curve is represented by $(x_d,y_d)$, and the projective coordinate thereof is represented by $(X_d,Y_d,Z_d)$. The affine coordinate of the point (d+1)P on the Montgomery-form elliptic curve is represented by $(x_{d+1},y_{d+1})$, and the projective coordinate thereof is represented by $(X_{d+1},Y_{d+1},Z_{d+1})$.

In step 3501, $x \times Z_d$ is calculated and stored in the register $T_1$. In step 3502 $X_d+T_1$ is calculated. Here, $xZ_d$ is stored in the register $T_1$, and therefore $xZ_d+X_d$ is calculated. The result is stored in the register $T_2$. In step 3503 $X_d-T_1$ is calculated, here the register $T_1$ stores $xZ_d$, and therefore $xZ_d-X_d$ is calculated. The result is stored in the register $T_3$. In step 3504 a square of the register $T_3$ is calculated. Here, $xZ_d-X_d$ is stored in the register $T_3$, and therefore $(X_d-xZ_d)^2$ is calculated. The result is stored in the register $T_3$. In step 3505 $T_3 \times X_{d+1}$ is calculated. Here, $(X_d-xZ_d)^2$ is stored in the register $T_3$, and therefore $X_{d+1}(X_d-xZ_d)^2$ is calculated. The result is stored in the register $T_3$. In step 3506 $2A \times Z_d$ is calculated, and stored in the register $T_1$. In step 3507 $T_2+T_1$ is calculated. Here, $xZ_d+X_d$ is stored in the register $T_2$, $2AZ_d$ is stored in the register $T_1$, and therefore $xZ_d+X_d+2AZ_d$ is calculated. The result is stored in the register $T_2$. In step 3508 $x \times X_d$ is calculated and stored in the register $T_4$. In step 3509 $T_4+Z_d$ is calculated. Here, the register $T_4$ stores $xX_d$, and therefore $xX_d+Z_d$ is calculated. The result is stored in the register $T_4$. In step 3510 $T_2 \times T_4$ is calculated. Here $T_2$ stores $xZ_d+X_d+2AZ_d$, the register $T_4$ stores $xX_d+Z_d$, and therefore $(xZ_d+X_d+2AZ_d)(xX_d+Z_d)$ is calculated. The result is stored in the register $T_2$. In step 3511 $T_1 \times Z_d$ is calculated. Here, since the register $T_1$ stores $2AZ_d$, $2AZ_d^2$ is calculated. The result is stored in the register $T_1$. In step 3512 $T_2-T_1$ is calculated. Here $(xZ_d+X_d+2AZ_d)(xX_d+Z_d)$ is stored in the register $T_2$, $2AZ_d^2$ is stored in the register $T_1$, and therefore $(XZ_d+X_d+2AZ_d)(xX_d+Z_d)-2AZ_d^2$ is calculated. The result is stored in the register $T_2$. In step 3513 $T_2 \times Z_{d+1}$ is calculated. Here $(xZ_d+X_d+2AZ_d)(xX_d+Z_d)-2AZ_d^2$ is stored in the register $T_2$, and therefore $Z_{d+1}((xZ_d+X_d+2AZ_d)(xX_d+Z_d)-2AZ_d^2)$ is calculated. The result is stored in the register $T_2$. In step 3514 $T_2-T_3$ is calculated. Here $Z_{d+1}((xZ_d+X_d+2AZ_d)(xX_d+Z_d)-2AZ_d^2)$ is stored in the register $T_2$, $X_{d+1}(X_d-XZ_d)^2$ is stored in the register $T_3$, and therefore $Z_{d+1}((xZ_d+X_d+2AZ_d)(xX_d+Z_d)-2AZ_d^2)-X_{d+1}(X_d-xZ_d)^2$ is calculated. The result is stored in the register $Y_d$. In step 3515 $2B \times y$ is calculated, and stored in the register $T_1$. In step 3516 $T_1 \times Z_d$ is calculated. Here, Since 2By is stored in the register $T_1$, $2ByZ_d$ is calculated. The result is stored in the register $T_1$. In step 3417 $T_1 \times Z_{d+1}$ is calculated. Here, since the register $T_1$ stores $2ByZ_d$, $2ByZ_dZ_{d+1}$ is calculated. The result is stored in the register $T_1$. In step 3518 $T_1 \times X_d$ is calculated. Here, since the register $T_1$ stores $2ByZ_dZ_{d+1}$, $2ByZ_dZ_{d+1}X_d$ is calculated. The result is stored in the register $X_d$. In step 3519 $T_1 \times Z_d$ is calculated. Here, since the register $T_1$ stores

$2ByZ_dZ_{d+1}$, $2ByZ_dZ_{d+1}Z_d$ is calculated. The result is stored in the register $Z_d$. Since $2ByZ_dZ_{d+1}X_d$ is stored in $X_d$ in the step 3518, and is not updated thereafter, the value is held. Since $Z_{d+1}((xZ_d+X_d+2AZ_d)(xX_d+Z_d)-2AZ_d^2)-x_{d+1}(X_d-xZ_d)^2$ is stored in $Y_d$, and is not updated thereafter, the value is held.

A reason why all the values in the projective coordinate $(X_d,Y_d,Z_d)$ of the scalar-multiplied point are recovered from x, y, $X_d$, $Z_d$, $X_{d+1}$, $Z_{d+1}$ by the aforementioned procedure is as follows. Additionally, the point (d+1)P is a point obtained by adding the point P to the point dP. The assignment to the addition formulae in the affine coordinates of the Montgomery-form elliptic curve results in Equation 6. Since the points P and dP are points on the Montgomery-form elliptic curve, $By_d^2=x_d^3+Ax_d^2+x_d$ and $By^2=x^3+Ax^2+x$ are satisfied. When the value is assigned to Equation 6, $By_d^2$ and $By^2$ are deleted, and the equation is arranged, Equation 64 is obtained. Here, $x_d=X_d/Z_d$, $x_{d+1}=X_{d+1}/Z_{d+1}$. The value is assigned and thereby converted to the value of the projective coordinate. Then, the Equation 65 is obtained. Although $x_d=X_d/Z_d$, the reduction to the denominator common with that of $y_d$ is performed for the purpose of reducing the frequency of inversion, and Equation 66 results. As a result, the following equation is obtained.

$$Y_d = Z_{d+1}[(X_d+xZ_d+2AZ_d)(X_dx+Z_d)-2AZ_d^2]-(X_d-xZ_d)^2X_{d+1} \qquad \text{Equation 67}$$

Here, $X_d$, $Y_d$ may be updated by the following equations.

$$2ByZ_dZ_{d+1}X_d \qquad \text{Equation 68}$$

$$2ByZ_dZ_{d+1}X_d \qquad \text{Equation 69}$$

Here, $X_d$, $Y_d$, $Z_d$ are given by the processing of FIG. 35. Therefore, all the values of the projective coordinate $(X_d, Y_d, Z_d)$ are recovered.

For the aforementioned procedure, in the steps 3501, 3505, 3506, 3508, 3510, 3511, 3513, 3515, 3516, 3517, 3518, and 3519, the computational amount of multiplication on the finite field is required.

Moreover, the computational amount of squaring on the finite field is required in the step 3504. The computational amounts of addition and subtraction on the finite field are relatively small as compared with the computational amounts of multiplication and squaring on the finite field, and may therefore be ignored. Assuming that the computational amount of multiplication on the finite field is M, and the computational amount of squaring on the finite field is S, the above procedure requires a computational amount of 12M+S. This is far small as compared with the computational amount of the fast scalar multiplication. For example, when the scalar value d indicates 160 bits, the computational amount of the fast scalar multiplication is estimated to be a little less than about 1500 M. Assuming S=0.8 M, the computational amount of coordinate recovering is 12.8 M, and far small as compared with the computational amount of the fast scalar multiplication. Therefore, it is indicated that the coordinate can efficiently be recovered.

Additionally, even when the above procedure is not taken, but if the values of $X_d$, $Y_d$, $Z_d$ given by the above equation can be calculated, the values of $X_d$, $Y_d$, $Z_d$ can be recovered. Moreover, the values of $X_d$, $Y_d$, $Z_d$ are selected so that $x_d$, $y_d$ take the values given by the aforementioned equations, the values can be calculated, and then $X_d$, $Y_d$, $Z_d$ can be recovered. In this case, the computational amount required for recovering generally increases. Furthermore, when the value of A or B as the parameter of the elliptic curve is set to be small, the computational amount of multiplication in the step 3506 or 3515 can be reduced.

An algorithm for outputting $X_d$, $Z_d$, $X_{d+1}$, $Z_{d+1}$ from the scalar value d and the point P on the Montgomery-form elliptic curve will next be described.

As the fast scalar multiplication method of the scalar multiplication unit 202 of the fifteenth embodiment, the fast scalar multiplication method of the first embodiment is used. Thereby, as the algorithm which outputs $X_d$, $Z_d$, $X_{d+1}$, $Z_{d+1}$ from the scalar value d and the point P on the Montgomery-form elliptic curve, the fast algorithm can be achieved. Additionally, instead of using the aforementioned algorithm in the scalar multiplication unit 202, any algorithm may be used as long as the algorithm outputs $X_d$, $Z_d$, $X_{d+1}$, $Z_{d+1}$ from the scalar value d and the point P on the Montgomery-form elliptic curve at high speed.

The computational amount required for recovering the coordinate of the coordinate recovering unit 203 in the scalar multiplication unit 103 is 12M+S, and this is far small as compared with the computational amount of (9.2k-4.6) M necessary for fast scalar multiplication of the fast scalar multiplication unit 202. Therefore, the computational amount necessary for the scalar multiplication of the scalar multiplication unit 103 is substantially equal to the computational amount necessary for the fast scalar multiplication of the fast scalar multiplication unit. Assuming that S=0.8 M, the computational amount can be estimated to be about (9.2k+8)M. For example, when the scalar value d indicates 160 bits (k=160), the computational amount necessary for the scalar multiplication is 1480 M. The Weierstrass-form elliptic curve is used as the elliptic curve, the scalar multiplication method is used in which the window method and the mixed coordinates mainly including the Jacobian coordinates are used, and the scalar-multiplied point is outputted as the Jacobian coordinates. In this case, the required computational amount is about 1600 M, and as compared with this, the required computational amount is reduced.

In a sixteenth embodiment, the scalar multiplication unit 103 calculates and outputs the scalar-multiplied point $(x_d,y_d)$ with the complete coordinate given thereto as the point of the affine coordinates in the Montgomery-form elliptic curve from the scalar value d and the point P on the Montgomery-form elliptic curve. The scalar value d and the point P on the Montgomery-form elliptic curve are inputted into the scalar multiplication unit 103, and received by the scalar multiplication unit 202. The fast scalar multiplication unit 202 calculates $x_d$ in the coordinate of the scalar-multiplied point $dP=(x_d,y_d)$ represented by the affine coordinates in the Montgomery-form elliptic curve, and $x_{d+1}$ in the coordinate of the point $(d+1)P=(x_{d+1},y_{d+1})$ on the Montgomery-form elliptic curve represented by the affine coordinates from the received scalar value d and the given point P on the Montgomery-form elliptic curve. The information is given to the coordinate recovering unit 203 together with the inputted point P=(x,y) on the Montgomery-form elliptic curve represented by the affine coordinates. The coordinate recovering unit 203 recovers coordinate $y_d$ of the scalar-multiplied point $dP=(x_d,y_d)$ represented by the affine coordinates in the Montgomery-form elliptic curve from the given coordinate values $x_d$, $x_{d+1}$, x, and y. The scalar multiplication unit 103 outputs the scalar-multiplied point $(x_d,y_d)$ with the coordinate completely given thereto in the affine coordinates as the calculation result.

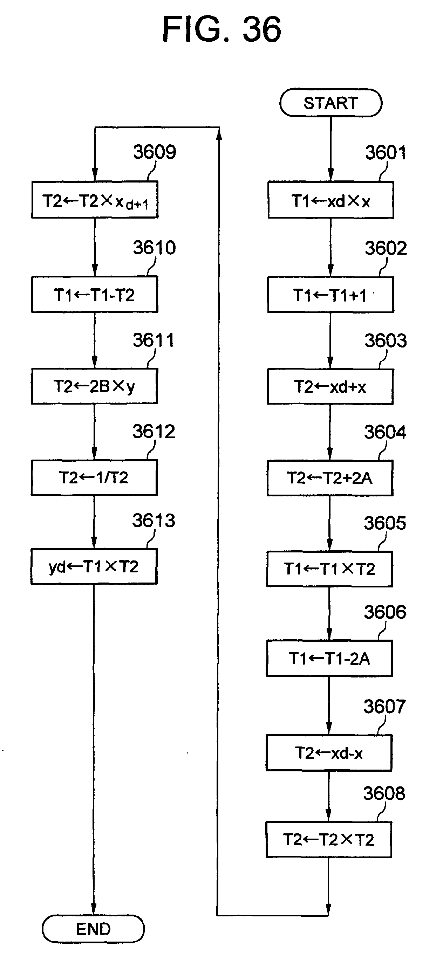

A processing of the coordinate recovering unit which outputs $x_d$, $y_d$ from the given coordinates x, y, $x_d$, $x_{d+1}$ will next be described with reference to FIG. 36.

The coordinate recovering unit 203 inputs $x_d$ in the coordinate of the scalar-multiplied point $dP=(x_d,y_d)$ represented by the affine coordinates in the Montgomery-form elliptic curve, $x_{d+1}$ in the coordinate of the point on the Montgomery-form elliptic curve $(d+1)P=(x_{d+1},y_{d+1})$ represented by the affine coordinates, and (x,y) as representation of the point P on the Montgomery-form elliptic curve in the affine coordinates inputted into the scalar multiplication unit 103, and outputs the scalar-multiplied point $(x_d,y_d)$ with the complete coordinate given thereto in the affine coordinates in the following procedure.

In step 3601 $x_d \times x$ is calculated, and stored in the register $T_1$. In step 3602 $T_1+1$ is calculated. Here, since $x_d x$ is stored in the register $T_1$, $x_d x+1$ is calculated. The result is stored in the register $T_1$. In step 3603 $x_d+x$ is calculated, and stored in the register $T_2$. In step 3604 $T_2+2A$ is calculated. Here, since $x_d+x$ is stored in the register $T_2$, $x_d+x+2A$ is calculated. The result is stored in the register $T_2$. In step 3605 $T_1 \times T_2$ is calculated. Here, since $x_d x+1$ is stored in the register $T_1$, and $x_d+x+2A$ is stored in the register $T_2$, $(x_d x+1)(x_d+x+2A)$ is calculated. The result is stored in the register $T_1$. In step 3606 $T_1-2A$ is calculated. Here, since $(x_d x+1)(x_d+x+2A)$ is stored in the register $T_1$, $(x_d x+1)(x_d+x+2A)-2A$ is calculated. The result is stored in the register $T_1$. In step 3607 $x_d-x$ is calculated, and stored in the register $T_2$. In step 3608 a square of $T_2$ is calculated. Here, since $x_d-x$ is stored in the register $T_2$, $(x_d-x)^2$ is calculated. The result is stored in the register $T_2$. In step 3609 $T_2 \times x_{d+1}$ is calculated. Here, since $(x_d-x)^2$ is stored in the register $T_2$, $(x_d-x)^2 x_{d+1}$ is calculated. The result is stored in the register $T_2$. In step 3610 $T_1-T_2$ is calculated. Here, since $(x_d x+1)(x_d+x+2A)-2A$ is stored in the register $T_1$ and $(x_d-x)^2 x_{d+1}$ is stored in the register $T_2$, $(x_d x+1)(x_d+x+2A)-2A-(x_d-x)^2 x_{d+1}$ is calculated. The result is stored in the register $T_1$. In step 3611, $2B \times y$ is calculated, and stored in the register $T_2$. In step 3612 the inverse element of $T_2$ is calculated. Here, since $2By$ is stored in the register $T_2$, $1/2By$ is calculated. The result is stored in the register $T_2$. In step 3613 $T_1 \times T_2$ is calculated. Here, since $(x_d x+1)(x_d+x+2A)-2A-(x_d-x)^2 x_{d+1}$ is stored in the register $T_1$ and $1/2By$ is stored in the register $T_2$, $(x_d x+1)(x_d+x+2A)-2A-(x_d-x)^2 x_{d+1}/2By$ is calculated. The result is stored in the register $y_d$. Therefore, $(x_d x+1)(x_d+x+2A)-2A-(x_d-x)^2 x_{d+1}/2By$ is stored in the register $y_d$. Since the $x_d$ is not updated, the inputted value is held.

A reason why the y-coordinate $y_d$ of the scalar-multiplied point is recovered by the aforementioned procedure is as follows. The point $(d+1)P$ is obtained by adding the point P to the point $(d+1)P$. The assignment to the addition formulae in the affine coordinates of the Montgomery-form elliptic curve results in Equation 6. Since the points P and dP are points on the Montgomery-form elliptic curve, $By_d^2=x_d^3+Ax_d^2+x_d$ and $By^2=x^3+Ax^2+x$ are satisfied. When the value is assigned to Equation 6, $By_d^2$ and $By^2$ are deleted, and the equation is arranged, Equation 64 is obtained. Here, $x_d$, $y_d$ are given by the processing of FIG. 36. Therefore, all the values of the affine coordinate $(x_d,y_d)$ are recovered.

For the aforementioned procedure, in the steps 3601, 3605, 3609, 3611, and 3613, the computational amount of multiplication on the finite field is required. Moreover, the computational amount of squaring on the finite field is required in the step 3608. Furthermore, the computational amount of the inversion on the finite field is required in the step 3612. The computational amounts of addition and subtraction on the finite field are relatively small as compared with the computational amounts of multiplication, squaring, and inversion on the finite field, and may therefore be ignored. Assuming that the computational amount of multiplication on the finite field is M, the computational amount of squaring on the finite field is S, and the computational amount of inversion on the finite field is I, the above procedure requires a computational amount of 5M+S+I. This is far small as compared with the computational amount of the fast scalar multiplication. For example, when the scalar value d indicates 160 bits, the computational amount of the fast scalar multiplication is estimated to be a little less than about 1500 M. Assuming S=0.8 M, I=40 M, the computational amount of coordinate recovering is 45.8 M; and far small as compared with the computational amount of the fast scalar multiplication. Therefore, it is indicated that the coordinate can efficiently be recovered.

Additionally, even when the above procedure is not taken, but if the values of the right side of the equation can be calculated, the value of $y_d$ can be recovered. In this case, the computational amount required for recovering generally increases. Furthermore, when the value of B as the parameter of the elliptic curve is set to be small, the computational amount of multiplication in the step 2605 can be reduced.

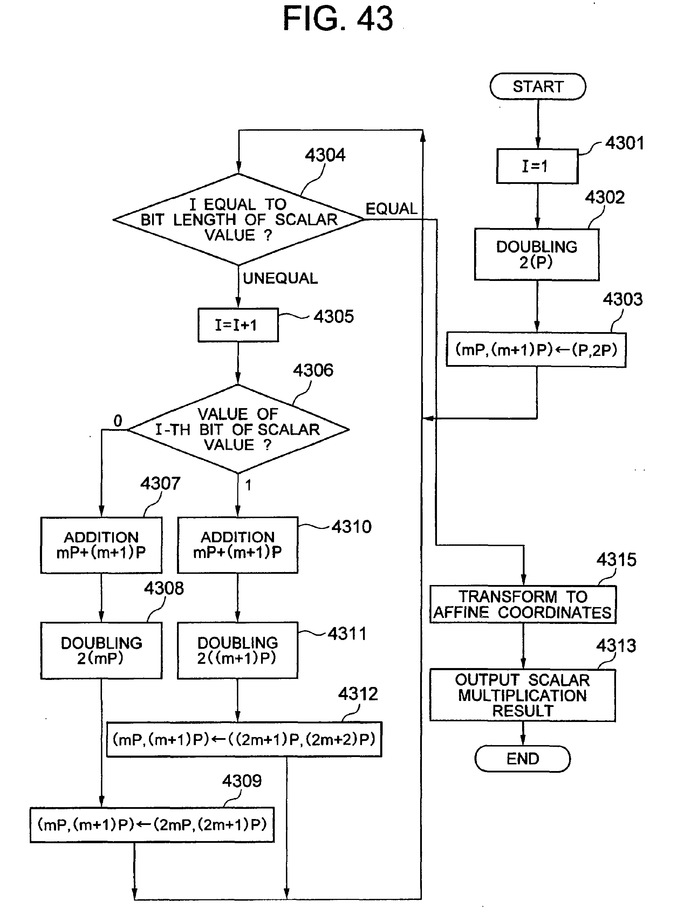

A processing of the fast scalar,multiplication unit for outputting $x_d$, $x_{d+1}$ from the scalar value d and the point P on the Montgomery-form elliptic curve will next be described with reference to FIG. 43.

The fast scalar multiplication unit 202 inputs the point P on the Montgomery-form elliptic curve inputted into the scalar multiplication unit 103, and outputs $x_d$ in the scalar-multiplied point $dP=(x_d,y_d)$ represented by the affine coordinate in the Montgomery-form elliptic curve, and $x_{d+1}$ in the point $(d+1)P= (x_{d+1},y_{d+1})$ on the Montgomery-form elliptic curve represented by the affine coordinate by the following procedure. In step 4301, the initial value 1 is assigned to the variable I. The doubled point 2P of the point P is calculated in step 4302. Here, the point P is represented as (x, y,1) in the projective coordinate, and the formula of doubling in the projective coordinate of the Montgomery-form elliptic curve is used to calculate the doubled point 2P. In step 4303, the point P on the elliptic curve inputted into the scalar multiplication unit 103 and the point 2P obtained in the step 4302 are stored as a set of points (P,2P). Here, the points P and 2P are represented by the projective coordinate. It is judged in step 4304 whether or not the variable I agrees with the bit length of the scalar value d. With agreement, the flow goes to step 4315. With disagreement, the flow goes to step 4305. The variable I is increased by 1 in the step 4305. It is judged in step 4306 whether the value of the I-th bit of the scalar value is 0 or 1. When the value of the bit is 0, the flow goes to the step 4307. When the value of the bit is 1, the flow goes to step 4310. In step 4307, addition mP+(m+1)P of points mP and (m+1)P is performed from the set of points (mP,(m+1)P) represented by the projective coordinate, and the point (2m+1)P is calculated. Thereafter, the flow goes to step 4308. Here, the addition mP+(m+1)P is calculated using the addition formula in the projective coordinate of the Montgomery-form elliptic curve. In step 4308, doubling 2(mP) of the point mP is performed from the set of points (mP,(m+1)P) represented by the projective coordinate, and the point 2mP is calculated. Thereafter, the flow goes to step 4309. Here, the doubling 2(mP) is calculated using the formula of doubling in the projective coordinate of the Montgomery-form elliptic curve. In the step 4309, the point 2mP obtained in the step 4308 and the point (2m+1)P obtained in the step 4307 are stored as the set of points (2mP,(2m+1)P) instead of the set of points (mP,(m+1)P). Thereafter, the flow returns to the step 4304. Here, the points 2mP, (2m+1)P, mP, and (m+1)P are all represented in the projective coordinates. In step 4310, addition mP+(m+1)P of the points mP, (m+1)P is performed from the set of points (mP,(m+1)P) represented by the projective coordinates, and the point (2m+1)P is calculated. Thereafter, the flow goes to step 4311. Here, the addition mP+(m+1)P is calculated using the addition formula in the projective coordinates of the Montgomery-form elliptic curve. In the step 4311, doubling 2((m+1)P) of the point (m+1)P is performed from the set of points (mP, (m+1)P) represented by the projective coordinates, and the point (2m+2)P is calculated. Thereafter, the flow goes to step 4312. Here, the doubling 2((m+1)P) is calculated using the formula of doubling in the projective coordinates of the Montgomery-form elliptic curve. In the step 4312, the point (2m+1)P obtained in the step 4310 and the point (2m+2)P obtained in the step 4311 are stored as the set of points ((2m+1)P,(2m+2)P) instead of the set of points (mP,(m+1)P). Thereafter, the flow returns to the step 4304. Here, the points (2m+1)P, (2m+2)P, mP, and (m+1)P are all represented in the projective coordinates. In step 4315, $X_m$ and $Z_m$ as $X_d$ and $Z_d$ from the point $mP=(X_m,Y_m,Z_m)$ represented by the projective coordinates and $X_{m+1}$ and $Z_{m+1}$ as $X_{d+1}$ and $Z_{d+1}$ from the point $(m+1)$P$=(X_{m+1},Y_{m+1},Z_{m+1})$ represented by the projective coordinates are obtained. Here, $Y_m$ and $Y_{m+1}$ are not obtained, because Y-coordinate cannot be obtained by the addition and doubling formulae in the projective coordinates of the Montgomery-form elliptic curve. From $X_d$, $Z_d$, $X_{d+1}$ and $Z_{d+1}$, $x_d=X_dZ_{d+1}/Z_dZ_{d+1}$ and $x_{d+1}=Z_dX_{d+1}/Z_dZ_{d+1}$ are set, and $x_d$, $x_{d+1}$ are obtained. Thereafter, the flow goes to step 4313. In the step 4313, $x_d$, $x_{d+1}$ are outputted. In the above procedure, m and scalar value d are equal in the bit length and bit pattern, and are therefore equal.

The computational amount of the addition formula in the projective coordinates of the Montgomery-form elliptic curve is 3M+2S with $Z_1$=1. Here, M is the computational amount of multiplication on the finite field, and S is the computational amount of squaring on the finite field. The computational amount of the doubling formula in the projective coordinates of the Montgomery-form elliptic curve is 3M+2S. When the value of the I-th bit of the scalar value is 0, the computational amount of addition in the step 4307, and the computational amount of doubling in the step 4308 are required. That is, the computational amount of 6M+4S is required. When the value of the I-th bit of the scalar value is 1, the computational amount of addition in the step 4310, and the computational amount of doubling in the step 4311 are required. That is, the computational amount of 6M+4S is required. In any case, the computational amount of 6M+4S is required. The number of repetitions of the steps 4304, 4305, 4306, 4307, 4308, 4309, or the steps 4304, 4305, 4306, 4310, 4311, 4312 is (bit length of the scalar value d)-1. Therefore, in consideration of the computational amount of doubling in the step 4302, and the computational amount of the transform to the affine coordinates, the entire computational amount is (6M+4S)k+2M-2S+I. Here, k is the bit length of the scalar value d. In general, since the computational amount S is estimated to be of the order of S=0.8 M, and the computational amount I is estimated to be of the order of I=40 M, the entire computational amount is approximately (9.2k+40.4)M. For example, when the scalar value d indicates 160 bits (k=160), the computational amount of algorithm of the aforementioned procedure is about 1512 M. The computational amount per bit of the scalar value d is about 9.2 M. In A. Miyaji, T. Ono, H. Cohen, Efficient elliptic curve exponentiation using mixed coordinates, Advances in Cryptology Proceedings of ASIACRYPT'98, LNCS 1514 (1998) pp.51-65, the scalar multiplication method using the window method and mixed coordinates mainly including Jacobian coordinates in the Weierstrass-form elliptic curve is described as the fast scalar multiplication method. In this case, the computational amount per bit of the scalar value is estimated to be about 10 M. Additionally, the computational amount of the transform to the affine coordinates is required. For example, when the scalar value d indicates 160 bits (k=160), the computational amount of the scalar multiplication method is about 1640 M. Therefore, the algorithm of the aforementioned procedure can be said to have a small computational amount and high speed.

Additionally, instead of using the aforementioned algorithm in the scalar multiplication unit 202, any algorithm may be used as long as the algorithm outputs $x_d$, $x_{d+1}$ from the scalar value d and the point P on the Montgomery-form elliptic curve at high speed.

The computational amount required for recovering the coordinate of the coordinate recovering unit 203 in the scalar multiplication unit 103 is 5M+S+I, and this is far small as compared with the computational amount of (9.2k+40.4) M necessary for fast scalar multiplication of the fast scalar multiplication unit 202. Therefore, the computational amount necessary for the scalar multiplication of the scalar multiplication unit 103 is substantially equal to the computational amount necessary for the fast scalar multiplication of the fast scalar multiplication unit. Assuming that S=0.8 M, I=40 M, the computational amount can be estimated to be about (9.2k+86.2)M. For example, when the scalar value d indicates 160 bits (k=160), the computational amount necessary for the scalar multiplication is 1558 M. The Weierstrass-form elliptic curve is used as the elliptic curve, the scalar multiplication method is used in which the window method and the mixed coordinates mainly including the Jacobian coordinates are used, and the scalar-multiplied point is outputted as the affine coordinates. In this case, the required computational amount is about 1640 M, and as compared with this, the required computational amount is reduced.

In a seventeenth embodiment, the Weierstrass-form elliptic curve is used as the elliptic curve. That is, the elliptic curve for use in input/output of the scalar multiplication unit 103 is Weierstrass-form elliptic curve. Additionally, as the elliptic curve for use in the internal calculation of the scalar multiplication unit 103, the Montgomery-form elliptic curve which can be transformed from the Weierstrass-form elliptic curve may be used. The scalar multiplication unit 103 calculates and outputs the scalar-multiplied point $(x_d,y_d)$ with the complete coordinate given thereto as the point of the affine coordinates in the Weierstrass-form elliptic curve from the scalar value d and the point P on the Weierstrass-form elliptic curve. The scalar value d and the point P on the Weierstrass-form elliptic curve are inputted into the scalar multiplication unit 103, and received by the scalar multiplication unit 202. The fast scalar multiplication unit 202 calculates $X_d$ and $Z_d$ in the coordinate of the scalar-multiplied point $dP=(X_d,Y_d,Z_d)$ represented by the projective coordinates in the Weierstrass-form elliptic curve, and $X_{d+1}$ and $Z_{d+1}$ in the coordinate of the point $(d+1)P=(X_{d+1},Y_{d+1},Z_{d+1})$ on the Weierstrass-form elliptic curve represented by the projective coordinates from the received scalar value d and the given point P on the Weierstrass-form elliptic curve. The information is given to the coordinate recovering unit 203 together with the inputted point P=(x,y) on the Weierstrass-form elliptic curve represented by the affine coordinates. The coordinate recovering unit 203 recovers coordinate $x_d$, and $y_d$ of the scalar-multiplied point $dP=(x_d,y_d)$ represented by the affine coordinates in the Weierstrass-form elliptic curve from the given coordinate values $X_d$, $Z_d$, $X_{d+1}$, $Z_{d+1}$, x, and y. The scalar multiplication unit 103 outputs the scalar-multiplied point $(x_d,y_d)$ with the coordinate completely given thereto in the affine coordinates as the calculation result.

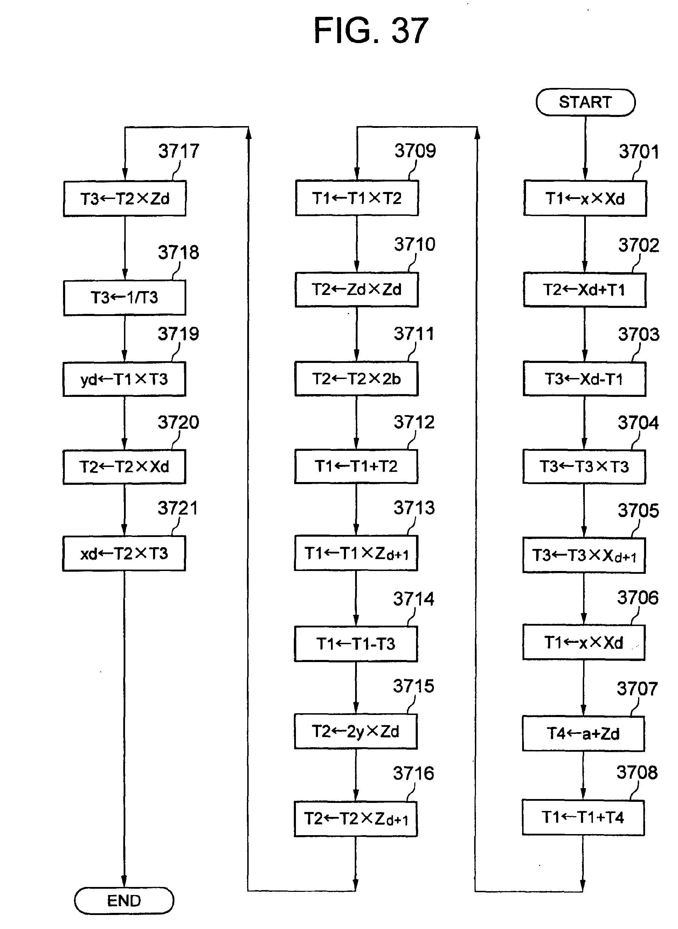

A processing of the coordinate recovering unit which outputs $x_d$, $y_d$ from the given coordinates x, y, $X_d$, $Z_d$, $X_{d+1}$, $Z_{d+1}$ will next be described with reference to FIG. 37.

The coordinate recovering unit 203 inputs $X_d$ and $Z_d$ in the coordinate of the scalar-multiplied point $dP=(X_d, Y_d,Z_d)$ represented by the proj ective coordinates in the Weierstrass-form elliptic curve, $X_{d+1}$ and $Z_{d+1}$ in the coordinate of the point $(d+1)P=(X_{d+1},Y_{d+1},Z_{d+1})$ on the Weierstrass-form elliptic curve represented by the projective coordinates, and (x,y) as representation of the point P on Weierstrass-form elliptic curve inputted into the scalar multiplication unit 103 in the affine coordinates, and outputs the scalar-multiplied point $(x_d,y_d)$ with the complete coordinate given thereto in the affine coordinates in the following procedure. Here, the affine coordinate of the inputted point P on the Weierstrass-form elliptic curve is represented by (x,y), and the projective coordinate thereof is represented by $(X_1,Y_1, Z_1)$. Assuming that the inputted scalar value is d, the affine coordinate of the scalar-multiplied point dP in the Montgomery-form elliptic curve is represented by $(x_d,y_d)$, and the projective coordinate thereof is represented by $(X_d,Y_d, Z_d)$. The affine coordinate of the point (d+1)P on the Weierstrass-form elliptic curve is represented by $(x_{d+1},y_{d+1})$, and the projective coordinate thereof is represented by $(X_{d+1},Y_{d+1},Z_{d+1})$.

In step 3701, $x \times Z_d$ is calculated and stored in the register $T_1$. In step 3702 $X_d+T_1$ is calculated. Here, $xZ_d$ is stored in the register $T_1$, and therefore $xZ_d+X_d$ is calculated. The result is stored in the register $T_2$. In step 3703 $X_d-T_1$

is calculated, here the register $T_1$ stores $xZ_d$, and therefore $xZ_d-X_d$ is calculated. The result is stored in the register $T_3$. In step 3704 a square of the register $T_3$ is calculated. Here, since $xZ_d-X_d$ is stored in the register $T_3$, $(X_d-xZ_d)^2$ is calculated. The result is stored in the register $T_3$. In step 3705 $T_3 \times X_{d+1}$ is calculated. Here, since $(X_d-xZ_d)^2$ is stored in the register $T_3$, $X_{d+1}(X_d-xZ_d)^2$ is calculated. The result is stored in the register $T_3$. In step 3706 $x \times X_d$ is calculated, and stored in the register $T_1$. In step 3707 $a \times Z_d$ is calculated, and stored in the register $T_4$. In step 3708 $T_1+T_4$ is calculated. Here, since $xX_d$ is stored in the register $T_1$, and $aZ_d$ is stored in the register $T_4$, $xX_d+aZ_d$ is calculated. The result is stored in the register $T_1$. In step 3709 $T_1 \times T_2$ is calculated. Here, since the register $T_1$ stores $xX_d+aZ_d$, and $xZ_d+X_d$ is stored in the register $T_2$, $(xX_d+aZ_d)(xZ_d+X_d)$ is calculated. The result is stored in the register $T_1$. In step 3710 a square of $Z_d$ is calculated, and stored in the register $T_2$. In step 3711 $T_2 \times 2b$ is calculated. Here, since the register $T_2$ stores $Z_d^2$, $2bZ_d^2$ is calculated. The result is stored in the register $T_2$. In step 3712 $T_1+T_2$ is calculated. Here, since $(xX_d+aZ_d)(xZ_d+X_d)$ is stored in the register $T_1$ and $2bZ_d^2$ is stored in the register $T_2$, $(xX_d+aZ_d)(xZ_d+X_d) +2bZ_d^2$ is calculated. The result is stored in the register $T_1$. In step 3713 $T_1 \times Z_{d+1}$ is calculated. Here, since $(xX_d+aZ_d) (xZ_d+X_d)+2bZ_d^2$ is stored in the register $T_1$, $Z_{d+1}((xX_d+aZ_d)(xZ_d+X_d)+2bZ_d^2)$ is calculated. The result is stored in the register $T_1$. In step 3714 $T_1-T_3$ is calculated. Here, since $Z_{d+1}((xX_d+aZ_d)(xZ_d+X_d)+2bZ_d^2)$ is stored in the register $T_1$ and $X_{d+1}(X_d-xZ_d)^2$ is stored in the register $T_3$, $Z_{d+1}((xX_d+aZ_d)(xZ_d+X_d)+2bZ_d^2)-X_{d+1}(X_d-xZ_d)^2$ is calculated, and the result is stored in the register $T_1$. In step 3715 $2y \times Z_d$ is calculated, and stored in the register $T_2$. In step 3716 $T_2 \times Z_{d+1}$ is calculated. Here, since the register $T_2$ stores $2yZ_d$, $2yZ_dZ_{d+1}$ is calculated, and the result is stored in the register $T_2$. In step 3717 $T_2 \times Z_d$ is calculated. Here, since $2yZ_dZ_{d+1}$ is stored in the register $T_2$, $2yZ_dZ_{d+1}Z_d$ is calculated, and the result is stored in the register $T_3$. In step 3718, the inverse element of the register $T_3$ is calculated. Here, since the register $T_3$ stores $2yZ_dZ_{d+1}Z_d$ is stored, $1/2yZ_dZ_{d+1}Z_d$ is calculated, and the result is stored in the register $T_3$. In step 3719 $T_1 \times T_3$ is calculated. Here, since the register $T_1$ stores $Z_{d+1}((xX_d+aZ_d)(xZ_d+X_d)+ 2bZ_d^2)-X_{d+1}(X_d-xZ_d)^2$ and the register $T_3$ stores $1/2yZ_dZ_{d+1}Z_d$, $Z_{d+1}((xX_d+aZ_d)(xZ_d+X_d)+2bZ_d^2)-x_{d+1}(X_d-xZ_d)^2/2yZ_dZ_{d+1}Z_d$ is calculated, and the result is stored in the register $y_d$. In step 3720 $T_2 \times X_d$ is calculated. Here, since the register $T_2$ stores $2yZ_dZ_{d+1}$, $2yZ_dZ_{d+1}X_d$ is calculated, and the result is stored in the register $T_2$. In step 3721 $T_2 \times T_3$ is calculated. Here, since $T_2$ stores $2yZ_dZ_{d+1}X_d$ and the register $T_3$ stores $1/2yZ_dZ_{d+1}Z_d$, $2yZ_dZ_{d+1}X_d/2yZ_dZ_{d+1}Z_d$ is calculated, and the result is stored in the register $x_d$. Therefore, the register $x_d$ stores $2yZ_dZ_{d+1}X_d/2yZ_dZ_{d+1}Z_d$. In the step 3719 since $Z_{d+1}((xX_d+aZ_d)(xZ_d+X_d) +2bZ_d^2)-x_{d+1}(X_d-xZ_d)^2/2yZ_dZ_{d+1}Z_d$ is stored in the register $y_d$, and is not updated thereafter, the value is held.

A reason why all the values in the affine coordinate $(x_d,y_d)$ of the scalar-multiplied point in the Weierstrass-form elliptic curve are recovered from the given $x$, $y$, $X_d$, $Z_d$, $X_{d+1}$, $Z_{d+1}$ by the aforementioned procedure is as follows. Additionally, the point $(d+1)P$ is a point obtained by adding the point $P$ to the point $dP$. The assignment to the addition formulae in the affine coordinates of the Weierstrass-form elliptic curve results in Equations 27. Since the points $P$ and $dP$ are points on the Weierstrass-form elliptic curve, $y_d^2=x_d^3+ax_d+b$ and $y^2=x^3+ax+b$ are satisfied. When the value is assigned to Equation 27, $y_d^2$ and $y^2$ are deleted, and the equation is arranged, the following equation is obtained.

$$y_d = \{(x_dx+a)(x_d+x)+2b-(x_d-x)^2x_{d+1}\}/(2y) \qquad \text{Equation 70}$$

Here, $x_d=X_d/Z_d$, $X_{d+1}=X_{d+1}/Z_{d+1}$. The value is assigned and thereby converted to the value of the projective coordinate. Then, the following equation is obtained.

$$y_d = \left\{Z_{d+1}\left((X_dx+aZ_d)(X_d+xZ_d)-2bZ_d^2\right)-(X_d-xZ_d)^2 X_{d+1}\right\}/(2yZ_dZ_{d+1}Z_d)$$

$$\text{... Equation 71}$$

Although $x_d=X_d/Z_d$, the reduction to the denominator common with that of $y_d$ is performed for the purpose of reducing the frequency of inversion, and the following equation results.

$$x_d = (2yZ_dZ_{d+1}X_d)/(2yZ_dZ_{d+1}Z_d) \qquad \text{Equation 72}$$

Here, $x_d$, $y_d$ are given by the processing shown in FIG. 37. Therefore, all the values of the affine coordinate $(x_d,y_d)$ are recovered.

For the aforementioned procedure, in the steps 3701, 3705, 3706, 3707, 3709, 3710, 3711, 3713, 3715, 3716, 3717, 3719, 3720, and 3721, the computational amount of multiplication on the finite field is required. Moreover, the computational amount of squaring on the finite field is required in the step 3704. Furthermore, the computational amount of the inversion on the finite field is required in the step 3718. The computational amounts of addition and subtraction on the finite field are relatively small as compared with the computational amounts of multiplication, squaring, and inversion on the finite field, and may therefore be ignored. Assuming that the computational amount of multiplication on the finite field is M, the computational amount of squaring on the finite field is S, and the computational amount of inversion on the finite field is I; the above procedure requires a computational amount of 14M+S+I. This is far small as compared with the computational amount of the fast scalar multiplication. For example, when the scalar value d indicates 160 bits, the computational amount of the fast scalar multiplication is estimated to be a little less than about 1500 M. Assuming S=0.8 M, I=40 M, the computational amount of coordinate recovering is 54.8 M, and far small as compared with the computational amount of the fast scalar multiplication. Therefore, it is indicated that the coordinate can efficiently be recovered.

Additionally, even when the above procedure is not taken, but if the values of $x_d$, $y_d$ can be calculated, the values of $x_d$, $y_d$ can be recovered. In this case, the computational amount required for recovering generally increases.

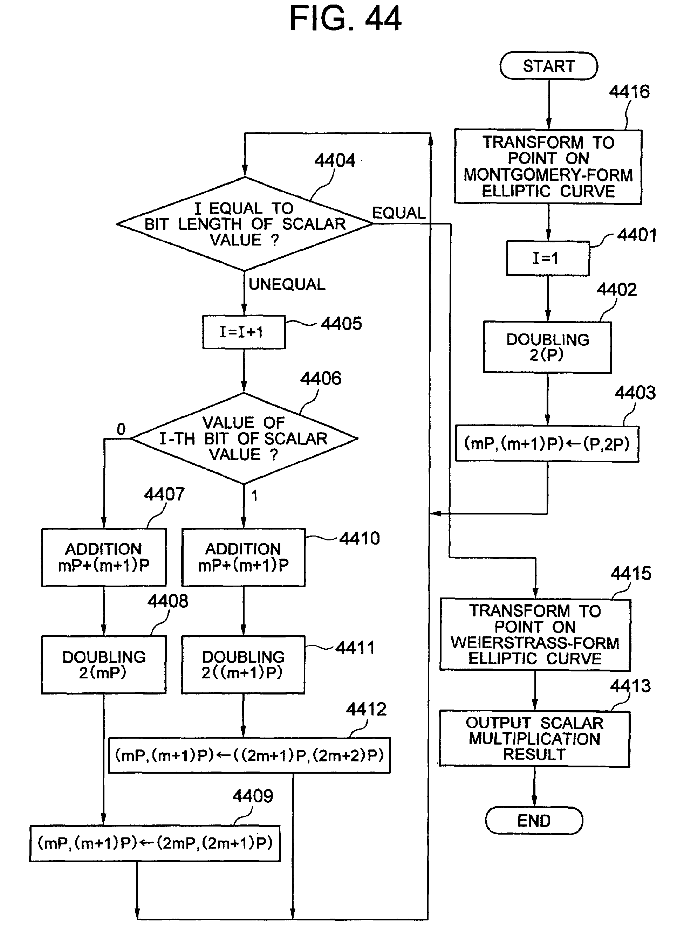

A processing of the fast scalar multiplication unit for outputting $X_d$, $Z_d$, $X_{d+1}$, $Z_{d+1}$ from the scalar value d and the point P on the Weierstrass-form elliptic curve will next be described with reference to FIG. 44.

The fast scalar multiplication unit 202 inputs the point P on the Weierstrass-form elliptic curve inputted into the scalar multiplication unit 103, and outputs $X_d$ and $Z_d$ in the scalar-multiplied point $dP=(X_d,Y_d,Z_d)$ represented by the projective coordinate in the Weierstrass-form elliptic curve, and $X_{d+1}$ and $Z_{d+1}$ in the point $(d+1)P=(X_{d+1},Y_{d+1},Z_{d+1})$ on the Weierstrass-form elliptic curve represented by the projective coordinate by the following procedure. In step 4416, the given point P on the Weierstrass-form elliptic curve is transformed to the point represented by the projective coordinates on the Montgomery-form elliptic curve. This point is set anew to point P. In step 4401, the initial value 1 is assigned to the variable I. The doubled point 2P of the point P is calculated in step 4402. Here, the point P is represented as (x,y,1) in the projective coordinate, and the doubling formula in the projective coordinate of the Montgomery-form elliptic curve is used to calculate the doubled point 2P. In step 4403, the point P on the elliptic curve inputted into the scalar multiplication unit 103 and the point 2P obtained in the step 4402 are stored as a set of points (P,2P). Here, the points P and 2P are represented by the projective coordinate. It is judged in step 4404 whether or not the variable I agrees with the bit length of the scalar value d. With agreement, the flow goes to step 4415. With disagreement, the flow goes to step 4405. The variable I is increased by 1 in the step 4405. It is judged in step 4406 whether the value of the I-th bit of the scalar value is 0 or 1. When the value of the bit is 0, the flow goes to the step 4407. When the value of the bit is 1, the flow goes to step 4410. In step 4407, addition mP+(m+1)P of points mP and (m+1)P is performed from a set of points (mP,(m+1)P) represented by the projective coordinate, and the point (2m+1)P is calculated. Thereafter, the flow goes to step 4408. Here, the addition mP+(m+1)P is calculated using the addition formula in the projective coordinate of the Montgomery-form elliptic curve. In step 4408, doubling 2(mP) of the point mP is performed from the set of points (mP, (m+1)P) represented by the projective coordinate, and the point 2mP is calculated. Thereafter, the flow goes to step 4409. Here, the doubling 2(mP) is calculated using the formula of doubling in the projective coordinate of the Montgomery-form elliptic curve. In the step 4409, the point 2mP obtained in the step 4408 and the point (2m+1)P obtained in the step 4407 are stored as a set of points (2mP,(2m+1)P) instead of the set of points (mP,(m+1)P). Thereafter, the flow returns to the step 4404. Here, the points 2mP, (2m+1)P, mP, and (m+1)P are all represented in the projective coordinates. In step 4410, addition mP+(m+1)P of the points mP, (m+1)P is performed from the set of points (mP,(m+1)P) represented by the projective coordinates, and the point (2m+1)P is calculated. Thereafter, the flow goes to step 4411. Here, the addition mP+(m+1)P is calculated using the addition formula in the projective coordinates of the Montgomery-form elliptic curve. In the step 4411, doubling 2((m+1)P) of the point (m+1)P is performed from the set of points (mP,(m+1)P) represented by the projective coordinates, and the point (2m+2)P is calculated. Thereafter, the flow goes to step 4412. Here, the doubling 2((m+1)P) is calculated using the formula of doubling in the projective coordinates of the Montgomery-form elliptic curve. In the step 4412, the point (2m+1)P obtained in the step 4410 and the point (2m+2)P obtained in the step 4411 are stored as a set of points ((2m+1)P, (2m+2)P) instead of the set of points (mP,(m+1)P). Thereafter, the flow returns to the step 4404. Here, the points (2m+1)P, (2m+2)P, mP, and (m+1)P are all represented in the projective coordinates. In step 4415, the point (m-1)P in the Montgomery-form elliptic curve is transformed to the point shown by the projective coordinates on the Weierstrass-form elliptic curve. The X-coordinate and Z-coordinate of the point are set anew to $X_{m-1}$ and $Z_{m-1}$. Moreover, with respect to the set of points (mP, (m+1)P) represented by the projective coordinates in the Montgomery-form elliptic curve, the points mP and (m+1)P are transformed to the points represented by the projective coordinates on the Weierstrass-form elliptic curve, and are set anew to $mP=(X_m,Y_m,Z_m)$ and $(m+1)P= (X_{m+1},Y_{m+1},Z_{m+1})$. Here, $Y_m$ and $Y_{m+1}$ are not obtained, because the Y-coordinate cannot be obtained by the addition and doubling formulae in the projective coordinates of the Montgomery-form elliptic curve. In step 4413, $X_m$ and $Z_m$ are outputted as $X_d$ and $Z_d$ from the point $mP=(X_m,Y_m,Z_m)$ represented by the projective coordinates on the Weierstrass-form elliptic curve, and $X_{m+1}$ and $Z_{m+1}$ are outputted as $X_{d+1}$ and $Z_{d+1}$ from the point $(m+1)P=(X_{m+1},Y_{m+1},Z_{m+1})$ represented by the projective coordinates on the Weierstrass-form elliptic curve. In the above procedure, m and scalar value d are equal in the bit length and bit pattern, and are therefore equal.

The computational amount of the addition formula in the projective coordinates of the Montgomery-form elliptic curve is 3M+2S with $Z_1$=1. Here, M is the computational amount of multiplication on the finite field, and S is the computational amount of squaring on the finite field. The computational amount of the doubling formula in the projective coordinates of the Montgomery-form elliptic curve is 3M+2S. When the value of the I-th bit of the scalar value is 0, the computational amount of addition in the step 4407, and the computational amount of doubling in the step 4408 are required. That is, the computational amount of 6M+4S is required. When the value of the I-th bit of the scalar value is 1, the computational amount of addition in the step 4410, and the computational amount of doubling in the step 4411 are required. That is, the computational amount of 6M+4S is required. In any case, the computational amount of 6M+4S is required. The number of repetitions of the steps 4404, 4405, 4406, 4407, 4408, 4409, or the steps 4404, 4405, 4406, 4410, 4411, 4412 is (bit length of the scalar value d)-1. Therefore, in consideration of the computational amount of doubling in the step 4402, the computational amount necessary for the transform to the point on the Montgomery-form elliptic curve in the step 4416, and the computational amount necessary for the transform to the point on the Weierstrass-form elliptic curve in the step 4415, the entire computational amount is (6M+4S)k+2M-2S. Here, k is the bit length of the scalar value d. In general, since the computational amount S is estimated to be of the order of S=0.8 M, the entire computational amount is approximately (9.2k+0.4)M. For example, when the scalar value d indicates 160 bits (k=160), the computational amount of algorithm of the aforementioned procedure is about 1472 M. The computational amount per bit of the scalar value d is about 9.2 M. In A. Miyaji, T. Ono, H. Cohen, Efficient elliptic curve exponentiation using mixed coordinates, Advances in Cryptology Proceedings of ASIACRYPT'98, LNCS 1514 (1998) pp. 51-65, the scalar multiplication method using the window method and mixed coordinates mainly including Jacobian coordinates in the Weierstrass-form elliptic curve is described as the fast scalar multiplication method. In this case, the computational amount per bit of the scalar value is estimated to be about 10 M. For example, when the scalar value d indicates 160 bits (k=160), the computational amount of the scalar multiplication method is about 1600 M. Therefore, the algorithm of the aforementioned procedure according to the present invention can be said to have a small computational amount and high speed.

Additionally, instead of using the aforementioned algorithm in the fast scalar multiplication unit 202, another algorithm may be used as long as the algorithm outputs $X_d$, $Z_d$, $X_{d+1}$, $Z_{d+1}$ from the scalar value d and the point P on the Weierstrass-form elliptic curve at high speed.

The computational amount required for recovering the coordinate of the coordinate recovering unit 203 in the scalar multiplication unit 103 is 14M+S+I, and this is far small as compared with the computational amount of (9.2k+0.4) M necessary for fast scalar multiplication of the fast scalar multiplication unit 202. Therefore, the computational amount necessary for the scalar multiplication of the scalar multiplication unit 103 is substantially equal to the computational amount necessary for the fast scalar multiplication of the fast scalar multiplication unit. Assuming I=40 M, S=0.8 M, the computational amount can be estimated to be about (9.2k+55.2)M. For example, when the scalar value d indicates 160 bits (k=160), the computational amount necessary for the scalar multiplication is about 1527 M. The Weierstrass-form elliptic curve is used as the elliptic curve, the scalar multiplication method is used in which the window method and the mixed coordinates mainly including the Jacobian coordinates are used, and the scalar-multiplied point is outputted as the affine coordinates. In this case, the required computational amount is about 1640 M, and as compared with this, the required computational amount is reduced.

In a eighteenth embodiment, the Weierstrass-form elliptic curve is used as the elliptic curve. That is, the elliptic curve for use in input/output of the scalar multiplication unit 103 is Weierstrass-form elliptic curve. Additionally, as the elliptic curve for use in the internal calculation of the scalar multiplication unit 103, the Montgomery-form elliptic curve which can be transformed from the Weierstrass-form elliptic curve may be used. The scalar multiplication unit 103 calculates and outputs the scalar-multiplied point $(X_d,Y_d,Z_d)$ with the complete coordinate given thereto as the point of the projective coordinates in the Weierstrass-form elliptic curve from the scalar value d and the point P on the Weierstrass-form elliptic curve. The scalar value d and the point P on the Weierstrass-form elliptic curve are inputted into the scalar multiplication unit 103, and received by the scalar multiplication unit 202. The fast scalar multiplication unit 202 calculates $X_d$ and $Z_d$ in the coordinate of the scalar-multiplied point $dP=(X_d,Y_d,Z_d)$ represented by the projective coordinates in the Weierstrass-form elliptic curve, and $X_{d+1}$ and $Z_{d+1}$ in the coordinate of the point $(d+1)P=(X_{d+1},Y_{d+1}, Z_{d+1})$ on the Weierstrass-form elliptic curve represented by the projective coordinates from the received scalar value d and the given point P on the Weierstrass-form elliptic curve. The information is given to the coordinate recovering unit 203 together with the inputted point P=(x,y) on the Weierstrass-form elliptic curve represented by the affine coordinates. The coordinate recovering unit 203 recovers coordinate $X_d$, $Y_d$, and $Z_d$ of the scalar-multiplied point $dP=(X_d, Y_d,Z_d)$ represented by the projective coordinates in the Weierstrass-form elliptic curve from the given coordinate values $X_d$, $Z_d$, $X_{d+1}$, $Z_{d+1}$, x, and y. The scalar multiplication unit 103 outputs the scalar-multiplied point $(X_d,Y_d,Z_d)$ with the coordinate completely given thereto in the projective coordinates as the calculation result.

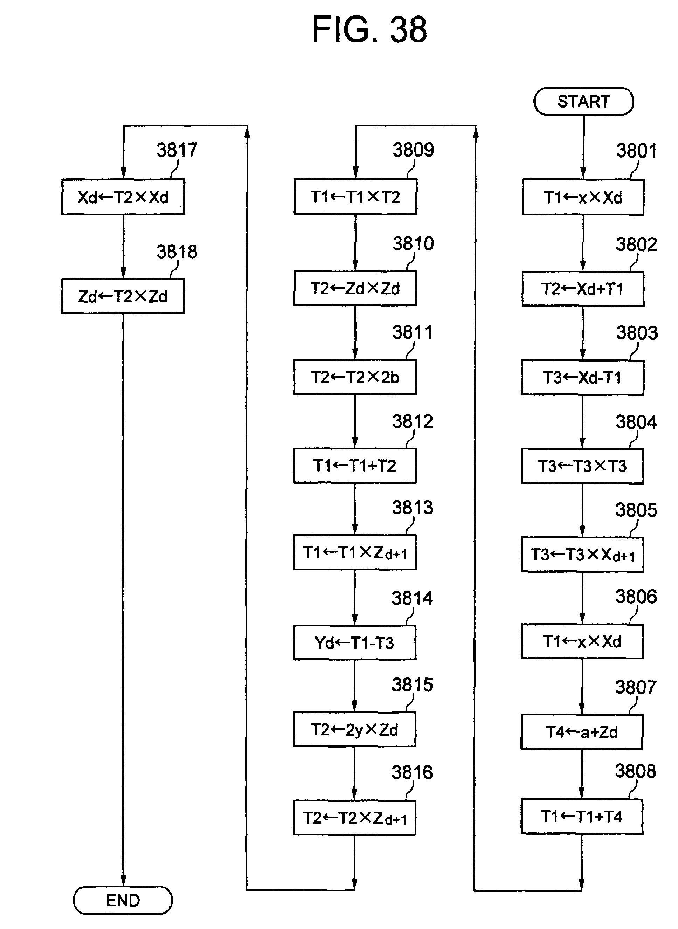

A processing of the coordinate recovering unit which outputs $X_d$, $Y_d$, and $Z_d$ from the given coordinates x, y, $X_d$, $Z_d$, $X_{d+1}$, $Z_{d+1}$ will next be described with reference to FIG. 38.

The coordinate recovering unit 203 inputs $X_d$ and $Z_d$ in the coordinate of the scalar-multiplied point $dP=(X_d, Y_d,Z_d)$ represented by the protective coordinates in the Weierstrass-form elliptic curve, $X_{d+1}$ and $Z_{d+1}$ in the coordinate of the point $(d+1)P=(X_{d+1},Y_{d+1},Z_{d+1})$ on the Weierstrass-form elliptic curve represented by the projective coordinates, and $(x,y)$ as representation of the point P on Weierstrass-form elliptic curve inputted into the scalar multiplication unit 103 in the affine coordinates, and outputs the scalar-multiplied point $(X_d,Y_d,Z_d)$ with the complete coordinate given thereto in the projective coordinates in the following procedure. Here, the affine coordinate of the inputted point P on the Weierstrass-form elliptic curve is represented by $(x,y)$, and the projective coordinate thereof is represented by $(X_1, Y_1,Z_1)$. Assuming that the inputted scalar value is d, the affine coordinate of the scalar-multiplied point dP in the Weierstrass-form elliptic curve is represented by $(x_d,y_d)$, and the projective coordinate thereof is represented by $(X_d, Y_d,Z_d)$. The affine coordinate of the point $(d+1)P$ on the Weierstrass-form elliptic curve is represented by $(x_{d+1},y_{d+1})$, and the projective coordinate thereof is represented by $(X_{d+1},Y_{d+1},Z_{d+1})$.

In step 3801, $x \times Z_d$ is calculated and stored in the register $T_1$. In step 3802 $X_d+T_1$ is calculated. Here, $xZ_d$ is stored in the register $T_1$, and therefore $xZ_d+X_d$ is calculated. The result is stored in the register $T_2$. In step 3803 $X_d-T_1$ is calculated, here the register $T_1$ stores $xZ_d$, and therefore $xZ_d-X_d$ is calculated. The result is stored in the register $T_3$. In step 3804 a square of the register $T_3$ is calculated. Here, since $xZ_d-X_d$ is stored in the register $T_3$, $(X_d-xZ_d)^2$ is calculated. The result is stored in the register $T_3$. In step 3805 $T_3 \times X_{d+1}$ is calculated. Here, since $(X_d-xZ_d)^2$ is stored in the register $T_3$, $X_{d+1}(X_d-xZ_d)^2$ is calculated. The result is stored in the register $T_3$. In step 3806 $x \times X_d$ is calculated, and stored in the register $T_1$. In step 3807 $a \times Z_d$ is calculated, and stored in the register $T_4$. In step 3808 $T_1+T_4$ is calculated. Here, since $xX_d$ is stored in the register $T_1$, and $aZ_d$ is stored in the register $T_4$, $xX_d+aZ_d$ is calculated. The result is stored in the register $T_1$. In step 3809 $T_1 \times T_2$ is calculated. Here, since the register $T_1$ stores $xX_d+aZ_d$, and $xZ_d+X_d$ is stored in the register $T_2$, $(xX_d+aZ_d)(xZ_d+X_d)$ is calculated. The result is stored in the register $T_1$. In step 3810 a square of the register $Z_d$ is calculated, and stored in the register $T_2$. In step 3811 $T_2 \times 2b$ is calculated. Here, since the register $T_2$ stores $Z_d^2$, $2bZ_d^2$ is calculated. The result is stored in the register $T_2$. In step 3812 $T_1+T_2$ is calculated. Here, since $(xX_d+aZ_d)(xZ_d+X_d)$ is stored in the register $T_1$ and $2bZ_d^2$ is stored in the register $T_2$, $(xX_d+aZ_d)(xZ_d+X_d)+2bZ_d^2$ is calculated. The result is stored in the register $T_1$. In step 3813 $T_1 \times Z_{d+1}$ is calculated. Here, since $(xX_d+aZ_d)(xZ_d+X_d)+2bZ_d^2$ is stored in the register $T_1$, $Z_{d+1}((xX_d+aZ_d)(xZ_d+X_d)+2bZ_d^2)$ is calculated. The result is stored in the register $T_1$. In step 3814 $T_1-T_3$ is calculated. Here, since $Z_{d+1}((xX_d+aZ_d)(xZ_d+X_d)+2bZ_d^2)$ is stored in the register $T_1$ and $X_{d+1}(X_d-xZ_d)^2$ is stored in the register $T_3$, $Z_{d+1}((xX_d+aZ_d)(xZ_d+X_d)+2bZ_d^2)-X_{d+1}(X_d-xZ_d)^2$ is calculated, and the result is stored in the register $Y_d$. In step 3815 $2y \times Z_d$ is calculated, and stored in the register $T_2$. In step 3816 $T_2 \times Z_{d+1}$ is calculated. Here, since the register $T_2$ stores $2yZ_d$, $2yZ_dZ_{d+1}$ is calculated, and the result is stored in the register $T_2$. In step 3817 $T_2 \times X_d$ is calculated. Here, since $2yZ_dZ_{d+1}$ is stored in the register $T_2$, $2yZ_dZ_{d+1}X_d$ is calculated, and the result is stored in the register $X_d$. In step 3819, $T_2 \times Z_d$ is calculated. Here, since the register $T_2$ stores $2yZ_dZ_{d+1}$, $2yZ_dZ_{d+1}Z_d$ is calculated, and the result is stored in the register $Z_d$. Therefore, the register $Z_d$ stores $2yZ_dZ_{d+1}Z_d$. In the step 3814 since $Z_{d+1}((xX_d+aZ_d)(xZ_d+X_d)+2bZ_d^2)+x_{d+1}(X_d-xZ_d)^2$ is stored in the register $Y_d$, and is not updated thereafter, the value is held. In the step 3817, since $2yZ_dZ_{d+1}X_d$ is stored in the register $X_d$, and is not updated thereafter, the value is held.

A reason why all the values in the projective coordinate $(X_d,Y_d,Z_d)$ of the scalar-multiplied point in the Weierstrass-form elliptic curve are recovered from the given x, y, $X_d$, $Z_d$, $X_{d+1}$, $Z_{d+1}$ by the aforementioned procedure is as follows. Additionally, the point $(d+1)P$ is a point obtained by adding the point P to the point dP. The assignment to the addition formulae in the affine coordinates of the Weierstrass-form elliptic curve results in Equations 27. Since the points P and dP are points on the Weierstrass-form elliptic curve, $y_d^2=x_d^3+ax_d+b$ and $y^2=x^3+ax+b$ are satisfied. When the value is assigned to Equation 27, $y_d^2$ and $y^2$ are deleted, and the equation is arranged, Equation 70 is obtained. Here, $x_d=X_d/Z_d$, $x_{d+1}=X_{d+1}/Z_{d+1}$. The value is assigned and thereby converted to the value of the projective coordinate. Then, Equation 71 is obtained. Although $x_d=X_d/Z_d$, the reduction to the denominator common with that of $y_d$ is performed for the purpose of reducing the frequency of inversion, and Equation 72 results.

$$Y_d=Z_{d+1}[(X_dx+aZ_d)(X_d+xZ_d)+2bZ_d^2]-(X_d-xZ_d)^2X_{d+1} \qquad \text{Equation 73}$$

Here, $X_d$ and $Z_d$ may be updated by the following.

$$2yZ_dZ_{d+1}X_d \qquad \text{Equation 74}$$

$$2yZ_dZ_{d+1}Z_d \qquad \text{Equation 75}$$

Here, $X_d$, $Y_d$, $Z_d$ are given by the processing shown in FIG. 38. Therefore, all the values of the projective coordinate $(X_d,Y_d,Z_d)$ are recovered.

For the aforementioned procedure, in the steps 3801, 3805, 3806, 3807, 3809, 3811, 3813, 3815, 3816, 3817 and 3818, the computational amount of multiplication on the finite field is required. Moreover, the computational amount of squaring on the finite field is required in the steps 3804 and 3810. The computational amounts of addition and subtraction on the finite field are relatively small as compared with the computational amounts of multiplication and squaring on the finite field, and may therefore be ignored. Assuming that the computational amount of multiplication on the finite field is M, and the computational amount of squaring on the finite field is S, the above procedure requires a computational amount of 11M+2S. This is far small as compared with the computational amount of the fast scalar multiplication. For example, when the scalar value d indicates 160 bits, the computational amount of the fast scalar multiplication is estimated to be a little less than about 1500 M. Assuming S=0.8 M, the computational amount of coordinate recovering is 12.6 M, and far small as compared with the computational amount of the fast scalar multiplication. Therefore, it is indicated that the coordinate can efficiently be recovered.

Additionally, even when the above procedure is not taken, but if the values of $X_d$, $Y_d$, $Z_d$ can be calculated, the values of $X_d$, $Y_d$, $Z_d$ can be recovered. Moreover, the values of $X_d$, $Y_d$, $Z_d$ are selected so that $x_d$, $y_d$ take the values given by the aforementioned equations. When the values can be calculated, and $X_d$, $Y_d$, $Z_d$ can be recovered. In this case, the computational amount required for recovering generally increases.

An algorithm for outputting $X_d$, $Z_d$, $X_{d+1}$, $Z_{d+1}$ from the scalar value d and the point P on the Weierstrass-form elliptic curve will next be described.

As the fast scalar multiplication method of the scalar multiplication unit 202 of the eighteenth embodiment, the fast scalar multiplication method of the seventeenth embodiment is used. Thereby, as the algorithm which outputs $X_d$, $Z_d$, $X_{d+1}$, $Z_{d+1}$ from the scalar value d and the point P on the Weierstrass-form elliptic curve, the fast algorithm is achieved. Additionally, instead of using the aforementioned algorithm in the scalar multiplication unit 202, any algorithm may be used as long as the algorithm outputs $X_d$, $Z_d$, $X_{d+1}$, $Z_{d+1}$ from the scalar value d and the point P on the Weierstrass-form elliptic curve at high speed.

The computational amount required for recovering the coordinate of the coordinate recovering unit 203 in the scalar multiplication unit 103 is 11M+2S, and this is far small as compared with the computational amount of (9.2k+0.4) M necessary for the fast scalar multiplication of the fast scalar multiplication unit 202. Therefore, the computational amount necessary for the scalar multiplication of the scalar multiplication unit 103 is substantially equal to the computational amount necessary for the fast scalar multiplication of the fast scalar multiplication unit. Assuming that S=0.8 M, the computational amount can be estimated to be about (9.2k+13)M. For example, when the scalar value d indicates 160 bits (k=160), the computational amount necessary for the scalar multiplication is 1485 M. The Weierstrass-form elliptic curve is used as the elliptic curve, the scalar multiplication method is used in which the window method and the mixed coordinates mainly including the Jacobian coordinates are used, and the scalar-multiplied point is outputted as the Jacobina coordinates. In this case, the required computational amount is about 1600 M, and as compared with this, the required computational amount is reduced.

In a nineteenth embodiment, the Weierstrass-form elliptic curve is used as the elliptic curve. That is, the elliptic curve for use in input/output of the scalar multiplication unit 103 is the Weierstrass-form elliptic curve. Additionally, as the elliptic curve for use in the internal calculation of the scalar multiplication unit 103, the Montgomery-form elliptic curve which can be transformed from the Weierstrass-form elliptic curve may be used. The scalar multiplication unit 103 calculates and outputs the scalar-multiplied point $(x_d, y_d)$ with the complete coordinate given thereto as the point of the affine coordinates in the Weierstrass-form elliptic curve from the scalar value d and the point P on the Weierstrass-form elliptic curve. The scalar value d and the point P on the Weierstrass-form elliptic curve are inputted into the scalar multiplication unit 103, and received by the scalar multiplication unit 202. The fast scalar multiplication unit 202 calculates $x_d$ in the coordinate of the scalar-multiplied point $dP=(x_d, y_d)$ represented by the affine coordinates in the Weierstrass-form elliptic curve, $x_{d+1}$ in the coordinate of the point $(d+1)P= (x_{d+1}, y_{d+1})$ on the Weierstrass-form elliptic curve represented by the affine coordinates, and $x_{d-1}$ in the coordinate of the point $(d-1)P=(x_{d-1}, y_{d-1})$ on the Weierstrass-form elliptic curve represented by the affine coordinates from the received scalar value d and the given point P on the Weierstrass-form elliptic curve. The information is given to the coordinate recovering unit 203 together with the inputted point P=(x,y) on the Weierstrass-form elliptic curve represented by the affine coordinates. The coordinate recovering unit 203 recovers the coordinate $y_d$ of the scalar-multiplied point $dP=(x_d, y_d)$ represented by the affine coordinates in the Weierstrass-form elliptic curve from the given coordinate values $x_d$, $x_{d+1}$, $x_{d-1}$, x, and y. The scalar multiplication unit 103 outputs the scalar-multiplied point $(x_d, y_d)$ with the coordinate completely given thereto in the affine coordinates as the calculation result.

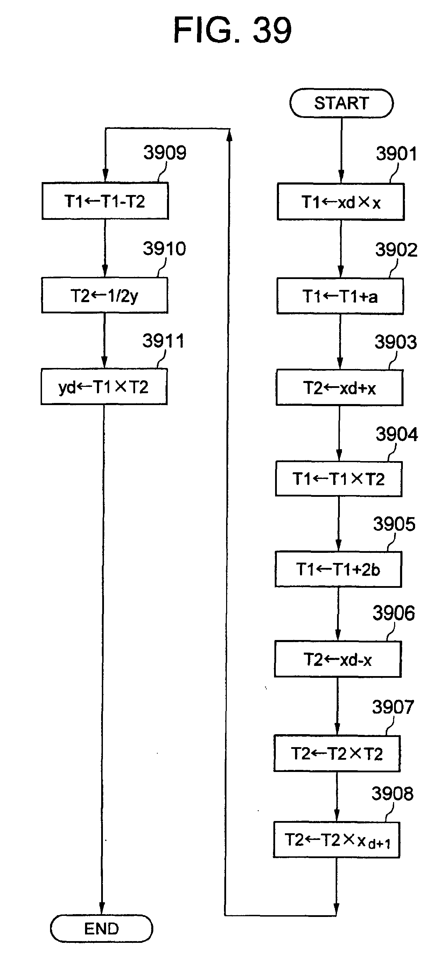

A processing of the coordinate recovering unit which outputs $x_d$, $y_d$ from the given coordinates x, y, $x_d$, $x_{d+1}$ will next be described with reference to FIG. 39.

The coordinate recovering unit 203 inputs $x_d$ in the coordinate of the scalar-multiplied point $dP=(x_d, y_d)$ represented by the affine coordinates in the Weierstrass-form elliptic curve, $x_{d+1}$ in the coordinate of the point $(d+1)P= (x_{d+1}, y_{d+1})$ on the Weierstrass-form elliptic curve represented by the affine coordinates, and (x,y) as representation of the point P on the Weierstrass-form elliptic curve inputted into the scalar multiplication unit 103 in the affine coordinates, and outputs the scalar-multiplied point $(x_d, y_d)$ with the complete coordinate given thereto in the affine coordinates in the following procedure.

In step 3901 $x_d \times x$ is calculated, and stored in the register $T_1$. In step 3902 $T_1 + a$ is calculated. Here, since $x_d x$ is stored in the register $T_1$, $x_d x + a$ is calculated. The result is stored in the register $T_1$. In step 3903 $x_d + x$ is calculated, and stored in the register $T_2$. In step 3904 $T_1 \times T_2$ is calculated. Here, since $x_d x + a$ is stored in the register $T_1$, and $x_d + x$ is stored in the register $T_2$, $(x_d x + a)(x_d + x)$ is calculated. The result is stored in the register $T_1$. In step 3905 $T_1 + 2b$ is calculated. Here, since $(x_d x + a)(x_d + x)$ is stored in the register $T_1$, $(x_d x + a)(x_d + x) + 2b$ is calculated. The result is stored in the register $T_1$. In step 3906 $x_d - x$ is calculated, and stored in the register $T_2$. In step 3907 a square of $T_2$ is calculated. Here, since $x_d - x$ is stored in the register $T_2$, $(x_d - x)^2$ is calculated. The result is stored in the register $T_2$. In step 3908 $T_2 \times x_{2d+1}$ is calculated. Here, since $(x_d - x)^2$ is stored in the register $T_2$, $x_{d+1}(x_d - x)^2$ is calculated. The result is stored in the register $T_2$. In step 3909 $T_1 - T_2$ is calculated. Here, since $(x_d x + a)(x_d + x) + 2b$ is stored in the register $T_1$ and $x_{d+1}(x_d - x)^2$ is stored in the register $T_2$, $(x_d x + a)(x_d + x) + 2b - x_{d+1}(x_d - x)^2$ is calculated. The result is stored in the register $T_1$. In step 3910 the inverse element of $2y$ is calculated, and stored in the register $T_2$. In step 3911 $T_1 \times T_2$ is calculated. Here, since $(x_d x + a)(X_d + X) + 2b - x_{d+1}(x_d - x)^2$ is stored in the register $T_1$ and $1/2y$ is stored in the register $T_2$, $((x_d x + a)(x_d + x) + 2b - x_{d+1}(x_d - x)^2)/2y$ is calculated. The result is stored in the register $y_d$. Therefore, $((x_d x + a)(x_d + x) + 2b - x_{d+1}(x_d - x)^2)/2y$ is stored in the register $y_d$. Since the register $x_d$ is not updated, the inputted value is held.

A reason why the y-coordinate $y_d$ of the scalar-multiplied point is recovered by the aforementioned procedure is as follows. The point $(d+1)P$ is obtained by adding the point P to the point $(d+1)P$. The assignment to the addition formulae in the affine coordinates of the Weierstrass-form elliptic curve results in Equation 27. Since the points P and dP are points on the Weierstrass-form elliptic curve, $y_d^2 = x_d^3 + ax_d + b$ and $y^2 = x^3 + ax + b$ are satisfied. When the value is assigned to Equation 27, $y_d^2$ and $y^2$ are deleted, and the equation is arranged, Equation 70 is obtained. Here, $x_d$, $y_d$ are given by the processing of FIG. 39. Therefore, all the values of the affine coordinate $(x_d, y_d)$ are recovered.

For the aforementioned procedure, in the steps 3901, 3904, 3908, and 3911, the computational amount of multiplication on the finite field is required. Moreover, the computational amount of squaring on the finite field is required in the step 3907. Furthermore, the computational amount of the inversion on the finite field is required in the step 3910. The computational amounts of addition and subtraction on the finite field are relatively small as compared with the computational amounts of multiplication, squaring, and inversion on the finite field, and may therefore be ignored. Assuming that the computational amount of multiplication on the finite field is M, the computational amount of squaring on the finite field is S, and the computational amount of inversion on the finite field is I, the above procedure requires a computational amount of 4M+S+I. This is far small as compared with the computational amount of the fast scalar multiplication. For example, when the scalar value d indicates 160 bits, the computational amount of the fast scalar multiplication is estimated to be a little less than about 1500 M. Assuming S=0.8 M, I=40 M, the computational amount of coordinate recovering is 44.8 M, and far small as compared with the computational amount of the fast scalar multiplication. Therefore, it is indicated that the coordinate can efficiently be recovered.

Additionally, even when the above procedure is not taken, but if the values of the right side of the equation can be calculated, the value of $y_d$ can be recovered. In this case, the computational amount required for recovering generally increases.

An algorithm for outputting $x_d$, $x_{d+1}$ from the scalar value d and the point P on the Weierstrass-form elliptic curve will next be described with reference to FIG. 44.

The fast scalar multiplication unit 202 inputs the point P on the Weierstrass-form elliptic curve inputted into the scalar multiplication unit 103, and outputs $x_d$ in the scalar-multiplied point $dP = (x_d, y_d)$ represented by the affine coordinate in the Weierstrass-form elliptic curve, and $x_{d+1}$ in the point $(d+1)P = (x_{d+1}, Y_{d+1})$ on the Weierstrass-form elliptic curve represented by the affine coordinate by the following procedure. In step 4416, the given point P on the Weierstrass-form elliptic curve is transformed to the point represented by the projective coordinates on the Montgomery-form elliptic curve. This point is set anew to point P. In step 4401, the initial value 1 is assigned to the variable I. The doubled point 2P of the point P is calculated in step 4402. Here, the point P is represented as $(x,y,1)$ in the projective coordinate, and the formula of doubling in the projective coordinate of the Montgomery-form elliptic curve is used to calculate the doubled point 2P. In step 4403, the point P on the elliptic curve inputted into the scalar multiplication unit 103 and the point 2P obtained in the step 4402 are stored as a set of points (P,2P). Here, the points P and 2P are represented by the projective coordinate. It is judged in step 4404 whether or not the variable I agrees with the bit length of the scalar value d. With agreement, the flow goes to step 4415. With disagreement, the flow goes to step 4405. The variable I is increased by 1 in the step 4405. It is judged in step 4406 whether the value of the I-th bit of the scalar value is 0 or 1. When the value of the bit is 0, the flow goes to the step 4407. When the value of the bit is 1, the flow goes to step 4410. In step 4407, addition mP+(m+1)P of points mP and (m+1)P is performed from the set of points (mP,(m+1)P) represented by the projective coordinate, and the point (2m+1)P is calculated. Thereafter, the flow goes to step 4408. Here, the addition mP+(m+1)P is calculated using the addition formula in the projective coordinate of the Montgomery-form elliptic curve. In step 4408, doubling 2(mP) of the point mP is performed from the set of points (mP, (m+1)P) represented by the projective coordinate, and the point 2mP is calculated. Thereafter, the flow goes to step 4409. Here, the doubling 2(mP) is calculated the formula of doubling in the projective coordinates of the Montgomery-form elliptic curve. In step 4409, the point 2mP obtained in the step 4408 and the point (2m+1)P obtained in the step 4407 are stored as a set of points (2mP, (2m+1)P) instead of the set of points (mP,(m+1)P). Thereafter, the flow returns to the step 4404. Here, the points 2mP, (2m+1)P, mP, and (m+1)P are all represented in the projective coordinates. In step 4410, addition mP+(m+1)P of the points mP, (m+1)P is performed from the set of points (mP, (m+1)P) represented by the projective coordinates, and the point (2m+1)P is calculated. Thereafter, the flow goes to step 4411. Here, the addition mP+(m+1)P is calculated using the addition formula in the projective coordinates of the Montgomery-form elliptic curve. In the step 4411, doubling 2((m+1)P) of the point (m+1)P is performed from the set of points (mP,(m+1)P) represented by the projective coordinates, and the point (2m+2)P is calculated. Thereafter, the flow goes to step 4412. Here, the doubling 2((m+1)P) is calculated using the formula of doubling in the projective coordinates of the Montgomery-form elliptic curve. In the step 4412, the point (2m+1)P obtained in the step 4410 and the point (2m+2)P obtained in the step 4411 are stored as a set of points ((2m+1)P, (2m+2)P) instead of the set of points (mP,(m+1)P). Thereafter, the flow returns to the step 4404. Here, the points (2m+1)P, (2m+2)P, mP, and (m+1)P are all represented in the projective coordinates. In step 4415, with respect to the set of points (mP,(m+1)P) represented by the projective coordinates in the Montgomery-form elliptic curve, the points mP and (m+1)P are transformed to the point shown by the affine coordinates on the Weierstrass-form elliptic curve, and set anew to mP=$(x_m,y_m)$ and (m+1)P=$(x_{m+1},y_{m+1})$. Here, $y_m$ and $y_{m+1}$ are not obtained, because the Y-coordinate cannot be obtained by the addition and doubling formulae in the projective coordinates of the Montgomery-form elliptic curve. Thereafter, the flow goes to step 4413. In the step 4413, $x_m$ is outputted as $x_d$ from the point mP=$(x_m,y_m)$ represented by the affine coordinates on the Weierstrass-form elliptic curve, and $x_{m+1}$ is outputted as $x_{d+1}$ from the point (m+1)P=$(x_{m+1},y_{m+1})$ represented by the affine coordinates on the Weierstrass-form elliptic curve. In the above procedure, m and scalar value d are equal in the bit length and bit pattern, and are therefore equal.

The computational amount of the addition formula in the projective coordinates of the Montgomery-form elliptic curve is 3M+2S with $Z_1$=1. Here, M is the computational amount of multiplication on the finite field, and S is the computational amount of squaring on the finite field. The computational amount of the doubling formula in the projective coordinates of the Montgomery-form elliptic curve is 3M+2S. When the value of the I-th bit of the scalar value is 0, the computational amount of addition in the step 4407, and the computational amount of doubling in the step 4408 are required. That is, the computational amount of 6M+4S is required. When the value of the I-th bit of the scalar value is 1, the computational amount of addition in the step 4410, and the computational amount of doubling in the step 4411 are required. That is, the computational amount of 6M+4S is required. In any case, the computational amount of 6M+4S is required. The number of repetitions of the steps 4404, 4405, 4406, 4407, 4408, 4409, or the steps 4404, 4405, 4406, 4410, 4411, 4412 is (bit length of the scalar value d)-1. Therefore, in consideration of the computational amount of doubling in the step 4402, the computational amount necessary for the transform to the point on the Montgomery-form elliptic curve in the step 4416, and the computational amount necessary for the transform to the point on the Weierstrass-form elliptic curve in the step 4415, the entire computational amount is (6M+4S)k+4M-2S+I. Here, k is the bit length of the scalar value d. In general, since the computational amount S is estimated to be of the order of S=0.8 M, and the computational amount I is estimated to be of the order of I=40 M, the entire computational amount is approximately (9.2k+42.4)M. For example, when the scalar value d indicates 160 bits (k=160), the computational amount of algorithm of the aforementioned procedure is about 1514 M. The computational amount per bit of the scalar value d is about 9.2 M. In A. Miyaji, T. Ono, H. Cohen, Efficient elliptic curve exponentiation using mixed coordinates, Advances in Cryptology Proceedings of ASIACRYPT'98, LNCS 1514 (1998) pp.51-65, the scalar multiplication method using the window method and mixed coordinates mainly including Jacobian coordinates in the Weierstrass-form elliptic curve is described as the fast scalar multiplication method. In this case, the computational amount per bit of the scalar value is estimated to be about 10 M. For example, when the scalar value d indicates 160 bits (k=160), the computational amount of the scalar multiplication method is about 1640 M. Therefore, the algorithm of the aforementioned procedure can be said to have a small computational amount and high speed.

Additionally, instead of using the aforementioned algorithm in the fast scalar multiplication unit 202, another algorithm may be used as long as the algorithm outputs $x_d$, $x_{d+1}$, $x_{d=1}$ from the scalar value d and the point P on the Weierstrass-form elliptic curve at high speed.

The computational amount required for recovering the coordinate of the coordinate recovering unit 203 in the scalar multiplication unit 103 is 4M+S+I, and this is far small as compared with the computational amount of (9.2k+42.4)M necessary for fast scalar multiplication of the fast scalar multiplication unit 202. Therefore, the computational amount necessary for the scalar multiplication of the scalar multiplication unit 103 is substantially equal to the computational amount necessary for the fast scalar multiplication of the fast scalar multiplication unit. Assuming I=40 M, S=0.8 M, the computational amount can be estimated to be about (9.2k+87.2)M. For example, when the scalar value d indicates 160 bits (k=160), the computational amount necessary for the scalar multiplication is about 1559 M. The Weierstrass-form elliptic curve is used as the elliptic curve, the scalar multiplication method is used in which the window method and the mixed coordinates mainly including the Jacobian coordinates are used, and the scalar-multiplied point is outputted as the affine coordinates. In this case, the required computational amount is about 1640 M, and as compared with this, the required computational amount is reduced.

In a twentieth embodiment, the Weierstrass-form elliptic curve is used as the elliptic curve for the input/output, and the Montgomery-form elliptic curve which can be transformed from the inputted Weierstrass-form elliptic curve is used for the internal calculation. The scalar multiplication unit 103 calculates and outputs the scalar-multiplied point $(x_d,y_d)$ with the complete coordinate given thereto as the point of the affine coordinates in the Weierstrass-form elliptic curve from the scalar value d and the point P on the Weierstrass-form elliptic curve. The scalar value d and the point P on the Weierstrass-form elliptic curve are inputted into the scalar multiplication unit 103, and received by the scalar multiplication unit 202. The fast scalar multiplication unit 202 calculates $X_d$ and $Z_d$ in the coordinate of the scalar-multiplied point $dP=(X_d,Y_d,Z_d)$ represented by the projective coordinates in the Montgomery-form elliptic curve, and $X_{d+1}$ and $Z_{d+1}$ in the coordinate of the point $(d+1)P=(X_{d+1},Y_{d+1},Z_{d+1})$ on the Montgomery-form elliptic curve represented by the projective coordinates from the received scalar value d and the given point P on the Weierstrass-form elliptic curve. Moreover, the inputted point P on the Weierstrass-form elliptic curve is transformed to the point on the Montgomery-form elliptic curve which can be transformed from the given Weierstrass-form elliptic curve, and the point is set anew to P=(x,y). The fast scalar multiplication unit 202 gives $X_d$, $Z_d$, $X_{d+1}$, $Z_{d+1}$, x, and y to the coordinate recovering unit 203. The coordinate recovering unit 203 recovers coordinate $x_d$, $y_d$ of the scalar-multiplied point $dP=(x_d,y_d)$ represented by the affine coordinates in the Weierstrass-form elliptic curve from the given coordinate values $X_d$, $Z_d$, $X_{d+1}$, $Z_{d+1}$, x, and y. The scalar multiplication unit 103 outputs the scalar-multiplied point $(x_d,y_d)$ with the coordinate completely given thereto in the affine coordinates as the calculation result.

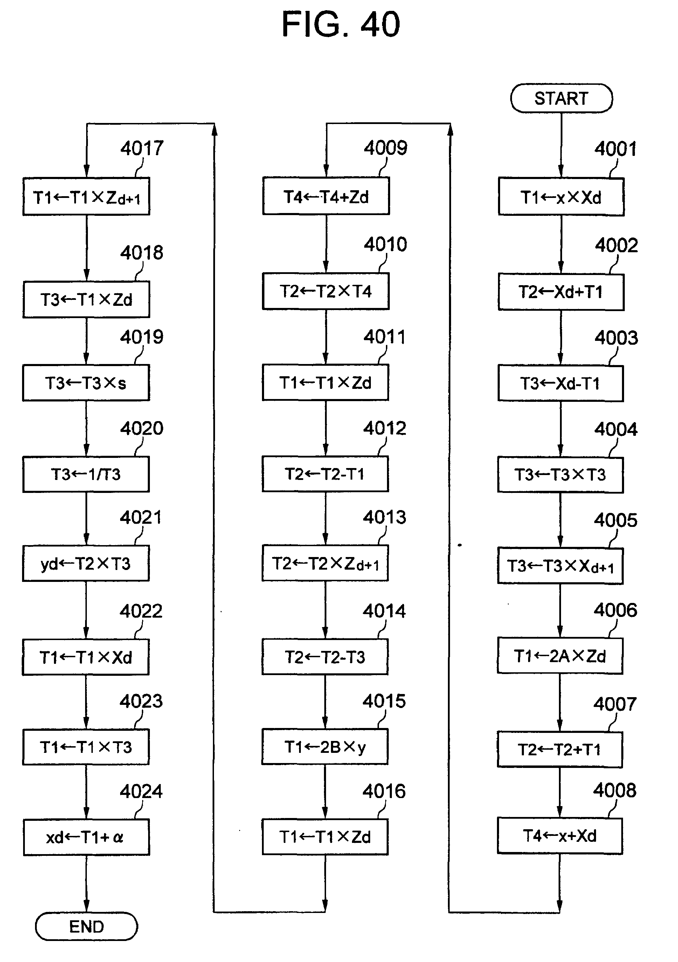

A processing of the coordinate recovering unit for outputting $x_d$, $y_d$ from the given coordinates x, y, $X_d$, $Z_d$, $X_{d+1}$, $f_{d+2}$ will next be described with reference to FIG. 40.

The coordinate recovering unit 203 inputs $X_d$ and $Z_d$ in the coordinate of the scalar-multiplied point $dP=(X_d, Y_d,Z_d)$ represented by the projective coordinates in the Montgomery-form elliptic curve, $X_{d+1}$ and $Z_{d+1}$ in the coordinate of the point $(d+1)P=(X_{d+1},Y_{d+1},Z_{d+1})$ on the Montgomery-form elliptic curve represented by the projective coordinates, and (x,y) as representation of the point P on Montgomery-form elliptic curve inputted into the scalar multiplication unit 103 in the affine coordinates, and outputs the scalar-multiplied point $(x_d,y_d)$ with the complete coordinate given thereto in the affine coordinates in the following procedure. Here, the affine coordinate of the inputted point P on the Montgomery-form elliptic curve is represented by (x,y), and the projective coordinate thereof is represented by $(X_1,Y_1,Z_1)$. Assuming that the inputted scalar value is d, the affine coordinate of the scalar-multiplied point dP in the Montgomery-form elliptic curve is represented by $(x_d{}^{Mon},y_d{}^{Mon})$, and the projective coordinate thereof is represented by $(X_d,Y_d,Z_d)$. The affine coordinate of the point (d+1)P on the Montgomery-form elliptic curve is represented by $(x_{d+1},y_{d+1})$, and the projective coordinate thereof is represented by $(X_{d+1},Y_{d+1},Z_{d+1})$.

In step 4001, $x\times Z_d$ is calculated and stored in the register $T_1$. In step 4002 $X_d+T_1$ is calculated. Here, $xZ_d$ is stored in the register $T_1$, and therefore $xZ_d+X_d$ is calculated. The result is stored in the register $T_2$. In step 4003 $X_d-T_1$ is calculated, here the register $T_1$ stores $xZ_d$, and therefore $xZ_d-X_d$ is calculated. The result is stored in the register $T_3$. In step 4004 a square of the register $T_3$ is calculated. Here, $xZ_d-X_d$ is stored in the register $T_3$, and therefore $(X_d-xZ_d)^2$ is calculated. The result is stored in the register $T_3$. In step 4005 $T_3\times X_{d+1}$ is calculated. Here, $(X_d-xZ_d)^2$ is stored in the register $T_3$, and therefore $X_{d+1}(X_d-xZ_d)^2$ is calculated. The result is stored in the register $T_3$. In step 4006 $2A\times Z_d$ is calculated, and stored in the register $T_1$. In step 4007 $T_2+T_1$ is calculated. Here, $xZ_d+X_d$ is stored in the register $T_2$, $2AZ_d$ is stored in the register $T_1$, and therefore $xZ_d+X_d+2AZ_d$ is calculated. The result is stored in the register $T_2$. In step 4008 $x\times X_d$ is calculated and stored in the register $T_4$. In step 4009 $T_4+Z_d$ is calculated. Here, the register $T_4$ stores $xX_d$, and therefore $xX_d+Z_d$ is calculated. The result is stored in the register $T_4$. In step 4010 $T_2\times T_4$ is calculated. Here $T_2$ stores $xZ_d+X_d+2AZ_d$, the register $T_4$ stores $xX_d+Z_d$, and therefore $(xZ_d+X_d+2AZ_d)(xX_d+Z_d)$ is calculated. The result is stored in the register $T_2$. In step 4011 $T_1\times Z_d$ is calculated. Here, since the register $T_1$ stores $2AZ_d$, $2AZ_d{}^2$ is calculated. The result is stored in the register $T_1$. In step 4012 $T_2-T_1$ is calculated. Here $(XZ_d+X_d+2AZ_d)(xX_d+Z_d)$ is stored in the register $T_2$, $2AZ_d{}^2$ is stored in the register $T_1$, and therefore $(xZ_d+X_d+2AZ_d)(xX_d+Z_d)-2AZ_d{}^2$ is calculated. The result is stored in the register $T_2$. In step 4013 $T_2\times Z_{d+1}$ is calculated. Here $(xZ_d+X_d+2AZ_d)(xX_d+Z_d)-2AZ_d{}^2$ is stored in the register $T_2$, and therefore $Z_{d+1}((xZ_d+X_d+2AZ_d)(xX_d+Z_d)-2AZ_d{}^2)$ is calculated. The result is stored in the register $T_2$. In step 4014 $T_2-T_3$ is calculated. Here $Z_{d+1}((xZ_d+X_d+2AZ_d)(xX_d+Z_d)-2AZ_d{}^2)$ is stored in the register $T_2$, $X_{d+1}(X_d-xZ_d)^2$ is stored in the register $T_3$, and therefore $Z_{d+1}((xZ_d+X_d+2AZ_d)(xX_d+Z_d)-2AZ_d{}^2)-X_{d+1}(X_d-xZ_d)^2$ is calculated. The result is stored in the register $T_2$. In step 4015 $2B\times y$ is calculated, and stored in the register $T_1$. In step 4016 $T_1\times Z_d$ is calculated. Here, Since $2By$ is stored in the register $T_1$, $2ByZ_d$ is calculated. The result is stored in the register $T_1$. In step 4017 $T_1\times Z_{d+1}$ is calculated. Here, since the register $T_1$ stores $2ByZ_d$, $2ByZ_dZ_{d+1}$ is calculated. The result is stored in the register $T_1$. In step 4018 $T_1\times Z_d$ is calculated. Here, since the register $T_1$ stores $2ByZ_dZ_{d+1}$, $2ByZ_dZ_{d+1}Z_d$ is calculated. The result is stored in the register $T_3$. In step 4019 $T_3\times s$ is calculated. Here, since the register $T_3$ stores $2ByZ_dZ_{d+1}Z_d$, $2ByZ_dZ_{d+1}Z_ds$ is calculated. The result is stored in the register $T_3$. In step 4020 the inverse element of the register $T_3$ is calculated. Here, since $2ByZ_dZ_{d+1}Z_ds$ is stored in the register $T_3$, $1/2ByZ_dZ_{d+1}Z_ds$ is calculated. The result is stored in the register $T_3$. In step 4021 $T_2\times T_3$ is calculated. Here, since the register $T_2$ stores $Z_{d+1}($

$(xZ_d+X_d+2AZ_d)$ $(xX_d+Z_d)-2AZ_d{}^2)-X_{d+1}(X_d-xZ_d)^2$ and the register $T_3$ stores $1/2ByZ_dZ_{d+1}Z_ds$, $\{Z_{d+1}((xZ_d+X_d+2AZ_d)$ $(xX_d+Z_d)-2AZ_d{}^2)-X_{d+1}(X_d-xZ_d)^2\}/2ByZ_dZ_{d+1}Z_ds$ is calculated. The result is stored in the register $y_d$. In step 4022 $T_1 \times X_d$ is calculated. Here, since the register $T_1$ stores $2ByZ_dZ_{d+1}$, $2ByZ_dZ_{d+1}X_d$ is calculated. The result is stored in the register $T_1$. In step 4023 $T_1 \times T_3$ is calculated. Here, since the register $T_1$ stores $2ByZ_dZ_{d+1}X_d$ and the register $T_3$ stores $1/2ByZ_dZ_{d+1}Z_ds$, $2ByZ_dZ_{d+1}X_d/2ByZ_dZ_{d+1}Z_ds$ $(=X_d/Z_ds)$ is calculated. The result is stored in the register $T_1$. In step 4024 $T_1+\alpha$ is calculated. Here, since the register $T_1$ stores $X_d/Z_ds$, $(X_d/Z_ds)+\alpha$ is calculated. The result is stored in $x_d$. Therefore, the value of $(X_d/Z_ds)+\alpha$ is stored in the register $x_d$. In the step 4021 since $\{Z_{d+1}((xZ_d+X_d+2AZ_d)$ $(xX_d+Z_d)-2AZ_d{}^2)$ $-X_{d+1}(X_d-xZ_d)^2\}/2ByZ_dZ_{d+1}Z_ds$ is stored in $y_d$, and is not updated thereafter, the value is held. As a result, all the values of the affine coordinate $(x_d,y_d)$ in the Weierstrass-form elliptic curve are recovered.

A reason why all the values in the affine coordinates $(x_d,y_d)$ of the scalar-multiplied point in the Weierstrass-form elliptic curve are recovered from x, y, $X_d$, $Z_d$, $X_{d+1}$, $Z_{d+1}$ given by the aforementioned procedure is as follows. The point $(d+1)P$ is a point obtained by adding the point P to the point dP. The assignment to the addition formulae in the affine coordinates of the Montgomery-form elliptic curve results in Equation 38. Since the points P and dP are points on the Montgomery-form elliptic curve, $By_d{}^{Mon2}=x_d{}^{Mon3}+Ax_d{}^{Mon2}+x_d{}^{Mon}$ and $By^2=x^3+Ax^2+x$ are satisfied. When the value is assigned to Equation 38, $By_d{}^{Mon2}$ and $By^2$ are deleted, and the equation is arranged, the following equation is obtained.

$$y_d^{Mon} = \{(x_d^{Mon}\, x + 1)(x_d^{Mon} + x + 2A) - 2A - (x_d^{Mon} - x)^2 x_{d+1}\}/(2By) \qquad \text{Equation 76}$$

Here, $x_d{}^{Mon}=X_d/Z_d$, $x_{d+1}=X_{d+1}/Z_{d+1}$. The value is assigned and thereby converted to the value of the projective coordinate. Then, the following equation is obtained.

$$y_d^{Mon} = \left\{Z_{d+1}\big((X_d x + Z_d)(X_d + xZ_d + 2AZ_d) - 2AZ_d^2\big) - (x_d - xZ_d)^2 X_{d+1}\right\}/(2ByZ_dZ_{d+1}Z_d)$$
$$\ldots \text{ Equation 77}$$

Although $x_d{}^{Mon}=X_d/Z_d$, the reduction to the denominator common with that of $y_d{}^{Mon}$ is performed for the purpose of reducing the frequency of inversion, and the following equation is obtained.

$$x_d^{Mon} = (2ByZ_dZ_{d+1}X_d)/(2ByZ_dZ_{d+1}Z_d) \qquad \text{Equation 78}$$

The correspondence between the point on the Montgomery-form elliptic curve and the point on the Weierstrass-form elliptic curve is described in K.Okeya, H.Kurumatani, K.Sakurai, Elliptic Curves with the Montgomery-form and Their Cryptographic Applications, Public Key Cryptography, LNCS 1751 (2000) pp.238-257. Thereby, when the conversion parameters are s, $\alpha$, the relation is $y_d=s^{-1}y_d{}^{Mon}$ and $x_d=s^{-1}x_d{}^{Mon}+\alpha$. As a result, Equations 79, 80 are obtained.

$$y_d = \left\{Z_{d+1}\big((X_d x + Z_d)(X_d + xZ_d + 2AZ_d) - 2AZ_d^2\big) - (X_d - xZ_d)^2 X_{d+1}\right\}/(2sByZ_dZ_{d+1}Z_d)$$
$$\ldots \text{ Equation 79}$$

$$x_d = ((2ByZ_dZ_{d+1}X_d)/(2sByZ_dZ_{d+1}Z_d))+\alpha \qquad \text{Equation 80}$$

Here, $x_d$, $y_d$ are given by FIG. 40. Therefore, all the values of the affine coordinates $(x_d,y_d)$ in the Weierstrass-form elliptic curve are recovered.

For the aforementioned procedure, in the steps 4001, 4005, 4006, 4008, 4010, 4011, 4013, 4015, 4016, 4017, 4018, 4019, 4021, 4022, and 4023, the computational amount of multiplication on the finite field is required. Moreover, the computational amount of squaring on the finite field is required in the step 4004. Moreover, the computational amount of inversion on the finite field is required in the step 4020. The computational amounts of addition and subtraction on the finite field are relatively small as compared with the computational amounts of multiplication, squaring, and inversion on the finite field, and may therefore be ignored. Assuming that the computational amount of multiplication

on the finite field is M, the computational amount of squaring on the finite field is S, and the computational amount of the inversion on the finite field is I, the above procedure requires a computational amount of 15M+S+I. This is far small as compared with the computational amount of the fast scalar multiplication. For example, when the scalar value d indicates 160 bits, the computational amount of the fast scalar multiplication is estimated to be a little less than about 1500 M. Assuming that S=0.8 M, I=40 M, the computational amount of coordinate recovering is 55.8 M, and far small as compared with the computational amount of the fast scalar multiplication. Therefore, it is indicated that the coordinate can efficiently be recovered.

Additionally, even when the above procedure is not taken, but if the values of $x_d$, $y_d$ given by the above equation can be calculated, the values of $x_d$, $y_d$ can be recovered. In this case, the computational amount required for recovering generally increases. Furthermore, when the value of A or B as the parameter of the Montgomery-form elliptic curve, or s as the transform parameter to the Montgomery-form elliptic curve is set to be small, the computational amount of multiplication in the step 4006 or 4015 or the computational amount of multiplication in step 4019 can be reduced.

A processing of the fast scalar multiplication unit for outputting $X_d$, $Z_d$, $X_{d+1}$, $Z_{d+1}$ from the scalar value d and the point P on the Weierstrass-form elliptic curve will next be described.

In this case, as the fast scalar multiplication method of the scalar multiplication unit 202 of the twentieth embodiment, the fast scalar multiplication method of the ninth embodiment (see Fig. 8) is used. Thereby, as the algorithm which outputs $X_d$, $Z_d$, $X_{d+1}$, $Z_{d+1}$ from the scalar value d and the point P on the Weierstrass-form elliptic curve, the fast algorithm can be achieved. Additionally, instead of using the aforementioned algorithm in the scalar multiplication unit 202, any algorithm may be used as long as the algorithm outputs $X_d$, $Z_d$, $X_{d+1}$, $Z_{d+1}$ from the scalar value d and the point P on the Weierstrass-form elliptic curve at high speed.

The computational amount required for recovering the coordinate of the coordinate recovering unit 203 in the scalar multiplication unit 103 is 15M+S+I, and this is far small as compared with the computational amount of (9.2k-3.6)M necessary for fast scalar multiplication of the fast scalar multiplication unit 202. Therefore, the computational amount necessary for the scalar multiplication of the scalar multiplication unit 103 is substantially equal to the computational amount necessary for the fast scalar multiplication of the fast scalar multiplication unit. Assuming that I=40 M, S=0.8 M, the computational amount can be estimated to be about (9.2k+52.2)M. For example, when the scalar value d indicates 160 bits (k=160), the computational amount necessary for the scalar multiplication is 1524 M. The Weierstrass-form elliptic curve is used as the elliptic curve, the scalar multiplication method is used in which the window method and the mixed coordinates mainly including the Jacobian coordinates are used, and the scalar-multiplied point is outputted as the affine coordinates. In this case, the required computational amount is about 1640 M, and as compared with this, the required computational amount is reduced.

In a twenty-first embodiment, the Weierstrass-form elliptic curve is used as the elliptic curve for the input/output, and the Montgomery-form elliptic curve which can be transformed from the inputted Weierstrass-form elliptic curve is used for the internal calculation. The scalar multiplication unit 103 calculates and outputs the scalar-multiplied point $(X_d{}^w, Y_d{}^w, Z_d{}^w)$ with the complete coordinate given thereto as the point of the projective coordinates in the Weierstrass-form elliptic curve from the scalar value d and the point P on the Weierstrass-form elliptic curve. The scalar value d and the point P on the Weierstrass-form elliptic curve are inputted into the scalar multiplication unit 103, and received by the scalar multiplication unit 202. The fast scalar multiplication unit 202 calculates $X_d$ and $Z_d$ in the coordinate of the scalar-multiplied point $dP=(X_d, Y_d, Z_d)$ represented by the projective coordinates in the Montgomery-form elliptic curve, and $X_{d+1}$ and $Z_{d+1}$ in the coordinate of the point $(d+1)P=(X_{d+1}, Y_{d+1}, Z_{d+1})$ on the Montgomery-form elliptic curve represented by the projective coordinates from the received scalar value d and the given point P on the Weierstrass-form elliptic curve. Moreover, the inputted point P on the Weierstrass-form elliptic curve is transformed to the point on the Montgomery-form elliptic curve which can be transformed from the given Weierstrass-form elliptic curve, and the point is set anew to P=(x,y). The fast scalar multiplication unit 202 gives $X_d$, $Z_d$, $X_{d+1}$, $Z_{d+1}$, x, and y to the coordinate recovering unit 203. The coordinate recovering unit 203 recovers coordinate $X_d{}^w$, $Y_d{}^w$, $Z_d{}^w$ of the scalar-multiplied point $dP=(X_d{}^w, Y_d{}^w, Z_d{}^w)$ represented by the projective coordinates in the Weierstrass-form elliptic curve from the given coordinate values $X_d$, $Z_d$, $X_{d+1}$, $Z_{d+1}$, x, and y. The scalar multiplication unit 103 outputs the scalar-multiplied point $(X_d{}^w, Y_d{}^w, Z_d{}^w)$ with the coordinate completely given thereto in the projective coordinates as the calculation result.

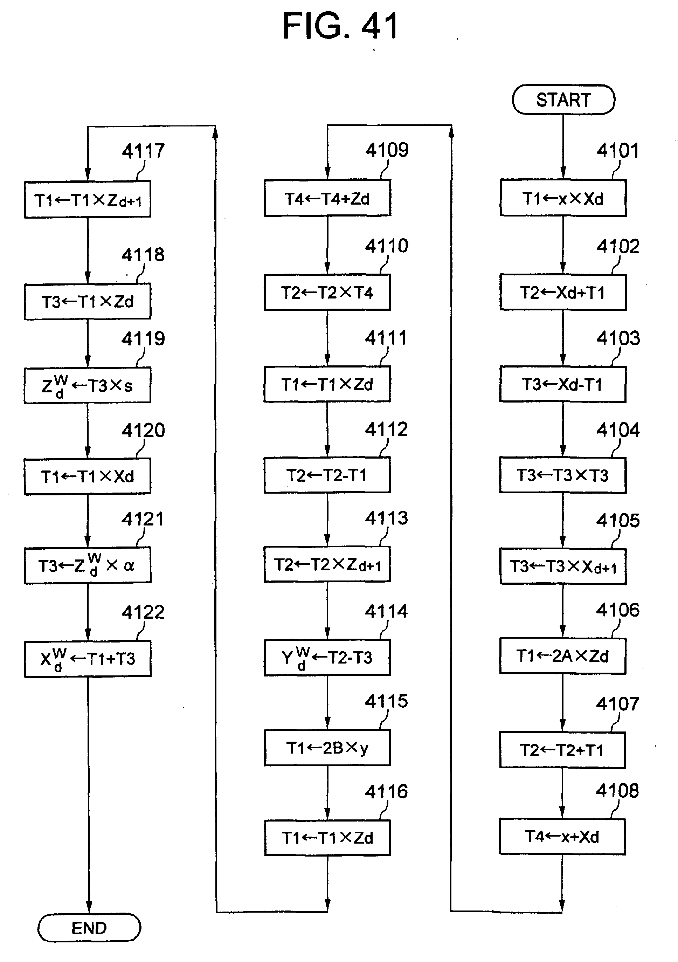

A processing of the coordinate recovering unit for outputting $X_d{}^w$, $Y_d{}^w$, $Z_d{}^w$ from the given coordinates x, y, $X_d$, $Z_d$, $X_{d+1}$, $Z_{d+1}$ will next be described with reference to FIG. 41.

The coordinate recovering unit 203 inputs $X_d$ and $Z_d$ in the coordinate of the scalar-multiplied point $dP=(X_d, Y_d, Z_d)$ represented by the projective coordinates in the Montgomery-form elliptic curve, $X_{d+1}$ and $Z_{d+1}$ in the coordinate of the point $(d+1)P=(X_{d+1}, Y_{d+1}, Z_{d+1})$ on the Montgomery-form elliptic curve represented by the projective coordinates, and (x,y) as representation of the point P on Montgomery-form elliptic curve inputted into the scalar multiplication unit 103 in the affine coordinates, and outputs the scalar-multiplied point $(X_d{}^w, Y_d{}^w, Z_d{}^w)$ with the complete coordinate given thereto in the projective coordinates on the Weierstrass-form elliptic curve in the following procedure. Here, the affine coordinate of the inputted point P on the Montgomery-form elliptic curve is represented by (x,y), and the projective coordinate thereof is represented by $(X_1, Y_1, Z_1)$. Assuming that the inputted scalar value is d, the affine coordinate of the scalar-multiplied point dP in the Montgomery-form elliptic curve is represented by $(x_d, y_d)$, and the projective coordinate thereof is represented by $(X_d, Y_d, Z_d)$. The affine coordinate of the point $(d+1)P$ on the Montgomery-form elliptic curve is represented by $(x_{d+1}, y_{d+1})$, and the projective coordinate thereof is represented by $(X_{d+1}, Y_{d+1}, Z_{d+1})$.

In step 4101, $x \times Z_d$ is calculated and stored in the register $T_1$. In step 4102 $X_d + T_1$ is calculated. Here, $xZ_d$ is stored in the register $T_1$, and therefore $xZ_d + X_d$ is calculated. The result is stored in the register $T_2$. In step 4103 $X_d - T_1$ is calculated, here the register $T_1$ stores $xZ_d$, and therefore $xZ_d - X_d$ is calculated. The result is stored in the register $T_3$. In step 4104 a square of the register $T_3$ is calculated. Here, $xZ_d - X_d$ is stored in the register $T_3$, and therefore $(X_d - xZ_d)^2$ is calculated. The result is stored in the register $T_3$. In step 4105 $T_3 \times X_{d+1}$ is calculated. Here, $(X_d - xZ_d)^2$ is stored in the register $T_3$, and therefore $X_{d+1}(X_d - xZ_d)^2$ is calculated. The result is stored in the register $T_3$. In step 4106 $2A \times Z_d$ is calculated, and stored in the register $T_1$. In step 4107 $T_2 + T_1$ is calculated. Here, $xZ_d + X_d$ is stored in the register $T_2$, $2AZ_d$ is stored in the register $T_1$, and therefore $xZ_d + X_d + 2AZ_d$ is calculated. The result is stored in the register $T_2$. In step 4108 $x \times X_d$ is calculated and stored in the register $T_4$. In step 4109 $T_4 + Z_d$ is calculated. Here, the register $T_4$ stores $xX_d$, and therefore $xX_d + Z_d$ is calculated. The result is stored in the register $T_4$. In step 4110 $T_2 \times T_4$ is calculated. Here the register $T_2$ stores $xZ_d + X_d + 2AZ_d$, the register $T_4$ stores $xX_d + Z_d$, and therefore $(xZ_d + X_d + 2AZ_d)(xX_d + Z_d)$ is calculated. The result is stored in the register $T_2$. In step 4111 $T_1 \times Z_d$ is calculated. Here, since the register $T_1$ stores $2AZ_d$, $2AZ_d^2$ is calculated. The result is stored in the register $T_1$. In step 4112 $T_2 - T_1$ is calculated. Here $(xZ_d + X_d + 2AZ_d)(xX_d + Z_d)$ is stored in the register $T_2$, $2AZ_d^2$ is stored in the register $T_1$, and therefore $(xZ_d + X_d + 2AZ_d)(xX_d + Z_d) - 2AZ_d^2$ is calculated. The result is stored in the register $T_2$. In step 4113 $T_2 \times Z_{d+1}$ is calculated. Here $(xZ_d + X_d + 2AZ_d)(xX_d + Z_d) - 2AZ_d^2$ is stored in the register $T_2$, and therefore $Z_{d+1}((xZ_d + X_d + 2AZ_d)(xX_d + Z_d) - 2AZ_d^2)$ is calculated. The result is stored in the register $T_2$. In step 4114 $T_2 - T_3$ is calculated. Here $Z_{d+1}((xZ_d + X_d + 2AZ_d)(xX_d + Z_d) - 2AZ_d^2)$ is stored in the register $T_2$, $X_{d+1}(X_d - xZ_d)^2$ is stored in the register $T_3$, and therefore $Z_{d+1}((xZ_d + X_d + 2AZ_d)(xX_d + Z_d) - 2AZ_d^2) - X_{d+1}(X_d - xZ_d)^2$ is calculated. The result is stored in the register $Y_d^w$. In step 4115 $2B \times y$ is calculated, and stored in the register $T_1$. In step 4116 $T_1 \times Z_d$ is calculated. Here, Since $2By$ is stored in the register $T_1$, $2ByZ_d$ is calculated. The result is stored in the register $T_1$. In step 4117 $T_1 \times Z_{d+1}$ is calculated. Here, since the register $T_1$ stores $2ByZ_d$, $2ByZ_dZ_{d+1}$ is calculated. The result is stored in the register $T_1$. In step 4118 $T_1 \times Z_d$ is calculated. Here, since the register $T_1$ stores $2ByZ_dZ_{d+1}$, $2ByZ_dZ_{d+1}Z_d$ is calculated. The result is stored in the register $T_3$. In step 4119 $T_3 \times s$ is calculated. Here, since the register $T_3$ stores $2ByZ_dZ_{d+1}Z_d$, $2ByZ_dZ_{d+1}Z_ds$ is calculated. The result is stored in the register $Z_d^w$. In step 4120 the $T_1 \times X_d$ is calculated. Here, since $2ByZ_dZ_{d+1}$ is stored in the register $T_1$, $2ByZ_dZ_{d+1}X_d$ is calculated. The result is stored in the register $T_1$. In step 4121 $Z_d^w \times \alpha$ is calculated. Here, since the register $Z_d^w$ stores $2ByZ_dZ_{d+1}Z_ds$, $2ByZ_dZ_{d+1}Z_ds\alpha$ is calculated. The result is stored in the register $T_3$. In step 4122 $T_1 + T_3$ is calculated. Here, since $2ByZ_dZ_{d+1}X_d$ is stored in the register $T_1$ and $2ByZ_dZ_{d+1}Z_ds\alpha$ is stored in the register $T_3$, $2ByZ_dZ_{d+1}X_d + 2ByZ_dZ_{d+1}Z_ds\alpha$ is calculated. The result is stored in $X_d^w$. Therefore, the register $x_d$ stores a value of $2ByZ_dZ_{d+1}X_d + 2ByZ_dZ_{d+1}Z_ds\alpha$. In the step 4114 since $Z_{d+1}((xZ_d + X_d + 2AZ_d)(xX_d + Z_d) - 2AZ_d^2) - X_{d+1}(X_d - xZ_d)^2$ is stored in $Y_d^w$, and is not updated thereafter, the value is held. In the step 4119 $2ByZ_dZ_{d+1}Z_ds$ is stored in the $Z_d^w$, and is not updated thereafter, and therefore the value is held. As a result, all the values of the projective coordinate $(X_d^w, Y_d^w, Z_d^w)$ in the Weierstrass-form elliptic curve are recovered.

A reason why all the values in the projective coordinates $(X_d^w, Y_d^w, Z_d^w)$ of the scalar-multiplied point in the Weierstrass-form elliptic curve are recovered from x, y, $X_d$, $Z_d$, $X_{d+1}$, $Z_{d+1}$ given by the aforementioned procedure is as follows. The point $(d+1)P$ is a point obtained by adding the point P to the point dP. The assignment to the addition formulae in the affine coordinates of the Montgomery-form elliptic curve results in Equation 6. Since the points P and dP are points on the Montgomery-form elliptic curve, $By_d^2 = x_d^3 + Ax_d^2 + x_d$ and $By^2 = x^3 + Ax^2 + x$ are satisfied. When the value is assigned to Equation 6, $By_d^2$ and $By^2$ are deleted, and the equation is arranged, Equation 64 is obtained. Here, $x_d = X_d/Z_d$, $x_{d+1} = X_{d+1}/Z_{d+1}$. The value is assigned and thereby converted to the value of the projective coordinate. Then, Equation 65 is obtained. Although $x_d = X_d/Z_d$, the reduction to the denominator common with that of $y_d$ is performed for the purpose of reducing the frequency of inversion, and Equation 66 is obtained. As a result, the following equation is obtained.

$$Y'_d = Z_{d+1}[(X_d + xZ_d + 2AZ_d)(X_dx + Z_d) - 2AZ_d^2] - (X_d - xZ_d)^2 X_{d+1} \qquad \text{Equation 81}$$

Then, the following equations are obtained.

$$X'_d = 2ByZ_dZ_{d+1}X_d \qquad \text{Eqiuation 82}$$

$$Z'_d = 2ByZ_dZ_{d+1}Z_d \qquad \text{Equation 83}$$

Then, $(X'_d, Y'_d, Z'_d) = (X_d, Y_d, Z_d)$. The correspondence between the point on the Montgomery-form elliptic curve and the point on the Weierstrass-form elliptic curve is described in K.Okeya, H.Kurumatani, K.Sakurai, Elliptic Curves with the Montgomery-form and Their Cryptographic Applications, Public Key Cryptography, LNCS 1751 (2000) pp.238-257. Thereby, when the conversion parameter is $s\alpha$, the relation is $Y_d^w = Y'_d$, $X_d^w = X'_d + \alpha Z_d^w$, and $Z_d^w = sZ'_d$. As a result, the following equations are obtained.

$$Y_d^W = Z_{d+1}[(X_d + xZ_d + 2AZ_d)(X_d x + Z_d) - 2AZ_d^2] - (X_d - xZ_d)^2 X_{d+1} \qquad \text{Equation 84}$$

$$X_d^W = 2ByZ_d Z_{d+1} X_d + \alpha Z_d^W \qquad \text{Equation 85}$$

$$Z_d^W = 2sByZ_d Z_{d+1} Z_d \qquad \text{Equation 86}$$

The values may be updated by the above. Here, $X_d^w, Y_d^w, Z_d^w$ are given by the processing of FIG. 41. Therefore, all the values of the projective coordinates $(X_d^w, Y_d^w, Z_d^w)$ in the Weierstrass-form elliptic curve are recovered.

For the aforementioned procedure, in the steps 4101, 4105, 4106, 4108, 4110, 4111, 4113, 4115, 4116, 4117, 4118, 4119, 4120, and 4121, the computational amount of multiplication on the finite field is required. Moreover, the computational amount of squaring on the finite field is required in the step 4104. The computational amounts of addition and subtraction on the finite field are relatively small as compared with the computational amounts of multiplication and squaring on the finite field, and may therefore be ignored. Assuming that the computational amount of multiplication on the finite field is M, and the computational amount of squaring on the finite field is S, the above procedure requires a computational amount of 14M+S. This is far small as compared with the computational amount of the fast scalar multiplication. For example, when the scalar value d indicates 160 bits, the computational amount of the fast scalar multiplication is estimated to be a little less than about 1500 M. Assuming that S=0.8 M, the computational amount of coordinate recovering is 14.8 M, and far small as compared with the computational amount of the fast scalar multiplication. Therefore, it is indicated that the coordinate can efficiently be recovered.

Additionally, even when the above procedure is not taken, but if the values of $X_d^w$, $Y_d^w$, $Z_d^w$ given by the above equation can be calculated, the values of $X_d^w$, $Y_d^w$, $Z_d^w$ can be recovered. Moreover, the scalar-multiplied point dP in the affine coordinates in the Weierstrass-form elliptic curve is set to $dP=(x_d^w, y_d^w)$. Then, the values of $X_d^w$, $Y_d^w$, $Z_d^w$ are selected so that $x_d^w$, $y_d^w$ take the values given by the above equations. When the values can be calculated, $X_d^w$, $Y_d^w$, $Z_d^w$ can be recovered. In this case, the computational amount required for recovering generally increases. Furthermore, when the value of A or B as the parameter of the Montgomery-form elliptic curve, or s as the transform parameter to the Montgomery-form elliptic curve is set to be small, the computational amount of multiplication in the step 4106, 4115, or 4119 can be reduced.

An algorithm for outputting $X_d$, $Z_d$, $X_{d+1}$, $Z_{d+1}$ from the scalar value d and the point P on the Weierstrass-form elliptic curve will next be described.

As the fast scalar multiplication method of the scalar multiplication unit 202 of the twenty-first embodiment, the fast scalar multiplication method of the ninth embodiment is used. Thereby, as the algorithm which outputs $X_d$, $Z_d$, $X_{d+1}$, $Z_{d+1}$ from the scalar value d and the point P on the Weierstrass-form elliptic curve, the fast algorithm can be achieved. Additionally, instead of using the aforementioned algorithm in the fast scalar multiplication unit 202, any algorithm may be used as long as the algorithm outputs $X_d$, $Z_d$, $X_{d+1}$, $Z_{d+1}$ from the scalar value d and the point P on the Weierstrass-form elliptic curve at high speed.

The computational amount required for recovering the coordinate of the coordinate recovering unit 203 in the scalar multiplication unit 103 is 14M+S, and this is far small as compared with the computational amount of (9.2k-3.6) M necessary for fast scalar multiplication of the fast scalar multiplication unit 202. Therefore, the computational amount necessary for the scalar multiplication of the scalar multiplication unit 103 is substantially equal to the computational amount necessary for the fast scalar multiplication of the fast scalar multiplication unit. Assuming that S=0.8 M, the computational amount can be estimated to be about (9.2k+11.2)M. For example, when the scalar value d indicates 160 bits (k=160), the computational amount necessary for the scalar multiplication is 1483 M. The Weierstrass-form elliptic curve is used as the elliptic curve, the scalar multiplication method is used in which the window method and the mixed coordinates mainly including the Jacobian coordinates are used, and the scalar-multiplied point is outputted as the Jacobian coordinates. In this case, the required computational amount is about 1600 M, and as compared with this, the required computational amount is reduced.

In a twenty-second embodiment, the Weierstrass-form elliptic curve is used as the elliptic curve for input/output, and the Montgomery-form elliptic curve which can be transformed from the Weierstrass-form elliptic curve is used for the internal calculation. The scalar multiplication unit 103 calculates and outputs the scalar-multiplied point

$(x_d{}^w, y_d{}^w)$ with the complete coordinate given thereto as the point of the affine coordinates in the Weierstrass-form elliptic curve from the scalar value d and the point P on the Weierstrass-form elliptic curve. The scalar value d and the point P on the Weierstrass-form elliptic curve are inputted into the scalar multiplication unit 103, and received by the scalar multiplication unit 202. The fast scalar multiplication unit 202 calculates $x_d$ in the coordinate of the scalar-multiplied point $dP=(x_d, y_d)$ represented by the affine coordinates in the Montgomery-form elliptic curve, $x_{d+1}$ in the coordinate of the point $(d+1)P=(x_{d+1}, y_{d+1})$ on the Montgomery-form elliptic curve represented by the affine coordinates from the received scalar value d and the given point P on the Weierstrass-form elliptic curve. The information is given to the coordinate recovering unit 203 together with the inputted point $P=(x,y)$ on the Montgomery-form elliptic curve represented by the affine coordinates. The coordinate recovering unit 203 recovers the coordinate $y_d{}^w$ of the scalar-multiplied point $dP=(x_d{}^w, y_d{}^w)$ represented by the affine coordinates in the Weierstrass-form elliptic curve from the given coordinate values $x_d$, $x_{d+1}$, and x. The scalar multiplication unit 103 outputs the scalar-multiplied point $(x_d{}^w, y_d{}^w)$ with the coordinate completely given thereto on the Weierstrass-form elliptic curve in the affine coordinates as the calculation result.

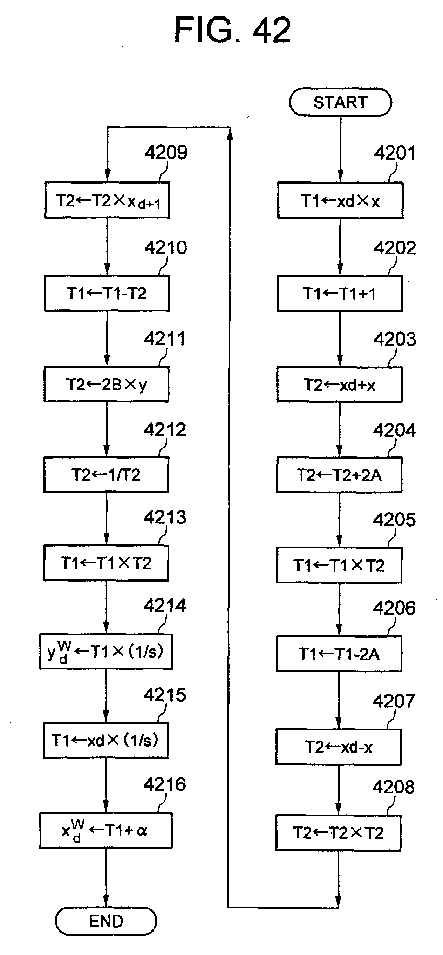

A processing of the coordinate recovering unit which outputs $x_d{}^w$, $y_d{}^w$ from the given coordinates x, y, $x_d$, $x_{d+1}$ will next be described with reference to FIG. 42.

The coordinate recovering unit 203 inputs $x_d$ in the coordinate of the scalar-multiplied point $dP=(x_d, y_d)$ represented by the affine coordinates in the Montgomery-form elliptic curve, $x_{d+1}$ in the coordinate of the point $(d+1)P=(x_{d+1}, y_{d+1})$ on the Montgomery-form elliptic curve represented by the affine coordinates, and (x,y) as representation of the point P on the Montgomery-form elliptic curve in the affine coordinates inputted into the scalar multiplication unit 103, and outputs the scalar-multiplied point $(x_d{}^w, y_d{}^w)$ with the complete coordinate given thereto in the affine coordinates in the following procedure.

In step 4201 $x_d \times x$ is calculated, and stored in the register $T_1$. In step 4202 $T_1+1$ is calculated. Here, since $x_d x$ is stored in the register $T_1$, $x_d x+1$ is calculated. The result is stored in the register $T_1$. In step 4203 $x_d+x$ is calculated, and stored in the register $T_2$. In step 4204 $T_2+2A$ is calculated. Here, since $x_d+x$ is stored in the register $T_2$, $x_d+x+2A$ is calculated. The result is stored in the register $T_2$. In step 4205 $T_1 \times T_2$ is calculated. Here since $x_d x+1$ is stored in the register $T_1$ and $x_d+x+2A$ is stored in the register $T_2$, $(x_d x+1)(x_d+x+2A)$ is calculated. The result is stored in the register $T_1$. In step 4206 $T_1-2A$ is calculated. Here, since $(x_d x+1)(x_d+x+2A)$ is stored in the register $T_1$, $(x_d x+1)(x_d+x+2A)-2A$ is calculated. The result is stored in the register $T_1$. In step 4207 $x_d-x$ is calculated, and stored in the register $T_2$. In step 4208 a square of $T_2$ is calculated. Here, since $x_d-x$ is stored in the register $T_2$, $(x_d-x)^2$ is calculated. The result is stored in the register $T_2$. In step 4209 $T_2 \times x_{d+1}$ is calculated. Here, since $(x_d-x)^2$ is stored in the register $T_2$, $(x_d-x)^2 x_{d+1}$ is calculated. The result is stored in the register $T_2$. In step 4210 $T_1-T_2$ is calculated. Here, since $(x_d x+1)(x_d+x+2A)-2A$ is stored in the register $T_1$ and $(x_d-x)^2 x_{d+1}$ is stored in the register $T_2$, $(x_d x+1)(x_d+x+2A)-2A-(x_d-x)^2 x_{d+1}$ is calculated. The result is stored in the register $T_1$. In step 4211 $2B \times y$ is calculated, and stored in the register $T_2$. In step 4212 the inverse element of $T_2$ is calculated. Here, since $2By$ is stored in the register $T_2$, $1/2By$ is calculated. The result is stored in the register $T_2$. In step 4213 $T_1 \times T_2$ is calculated. Here, since $(x_d x+1)(x_d+x+2A)-2A-(x_d-x)^2 x_{d+1}$ is stored in the register $T_1$ and $1/2By$ is stored in the register $T_2$, $\{(x_d x+1)(x_d+x+2A)-2A-(x_d-x)^2 x_{d+1}\}/2By$ is calculated. The result is stored in the register $T_1$. In step 4214 $T_1 \times (1/s)$ is calculated. Here, since $\{(x_d x+1)(x_d+x+2A)-2A-(x_d-x)^2 x_{d+1}\}/2By$ is stored, $\{(x_d x+1)(x_d+x+2A)-2A-(x_d-x)^2 x_{d+1}\}/2Bys$ is calculated. The result is stored in the register $y_d{}^w$. In step 4215 $x_d \times (1/s)$ is calculated, and stored in the register $T_1$. In step 4216 $T_1+\alpha$ is calculated. Here, since $x_d/s$ is stored in the register $T_1$, $(x_d/s)+\alpha$ is calculated. The result is stored in the register $x_d{}^w$. Therefore, the register $x_d{}^w$ stores $(x_d/s)+\alpha$. In step 4214 since $\{(x_d x+1)(x_d+x+2A)-2A-(x_d-x)^2 x_{d+1}\}/2Bys$ is stored in the register $y_d{}^w$, and is not updated thereafter, the value is held.

A reason why the y-coordinate $y_d$ of the scalar-multiplied point is recovered by the aforementioned procedure is as follows. The point $(d+1)P$ is obtained by adding the point P to the point $(d+1)P$. The assignment to the addition formulae in the affine coordinates of the Montgomery-form elliptic curve results in Equation 6. Since the points P and dP are points on the Montgomery-form elliptic curve, $By_d{}^2=x_d{}^3+Ax_d{}^2+x_d$ and $By^2=x^3+Ax^2+x$ are satisfied. When the value is assigned to Equation 6, $By_d{}^2$ and $By^2$ are deleted, and the equation is arranged, Equation 64 is obtained. The correspondence between the point on the Montgomery-form elliptic curve and the point on the Weierstrass-form elliptic curve is described in K.Okeya, H.Kurumatani, K.Sakurai, Elliptic Curves with the Montgomery-form and Their Cryptographic Applications, Public Key Cryptography, LNCS 1751 (2000) pp.238-257. Thereby, when the conversion parameters are s, $\alpha$, there are relations of $y_d{}^w=s^{-1}y_d$ and $x_d{}^w=s^{-1}x_d+\alpha$. As a result, Equations 87, 63 are obtained.

$$y_d^W = \{(x_d x+1)(x_d+x+2A)-2A-(x_d-x)^2 x_{d+1}\}/(2sBy) \qquad \text{Equation 87}$$

Here, $x_d{}^w$, $y_d{}^w$ are given by FIG. 42. Therefore, all the values of the affine coordinate $(x_d{}^w, y_d{}^w)$ are recovered.

For the aforementioned procedure, in the steps 4201, 4205, 4209, 4211, 4213, 4214, and 4215, the computational amount of multiplication on the finite field is required. Moreover, the computational amount of squaring on the finite field is required in the step 4208. Furthermore, the computational amount of the inversion on the finite field is required in the step 4212. The computational amounts of addition and subtraction on the finite field are relatively small as compared with the computational amounts of multiplication, squaring, and inversion on the finite field, and may therefore be ignored. Assuming that the computational amount of multiplication on the finite field is M, the computational amount of squaring on the finite field is S, and the computational amount of inversion on the finite field is I, the above procedure requires a computational amount of 7M+S+I. This is far small as compared with the computational amount of the fast scalar multiplication. For example, when the scalar value d indicates 160 bits, the computational amount of the fast scalar multiplication is estimated to be a little less than about 1500 M. Assuming S=0.8 M, I=40 M, the computational amount of coordinate recovering is 47.8 M, and far small as compared with the computational amount of the fast scalar multiplication. Therefore, it is indicated that the coordinate can efficiently be recovered.

Additionally, even when the above procedure is not taken, but if the values of the right side of the equation can be calculated, the value of $y_d{}^w$ can be recovered. In this case, the computational amount required for recovering generally increases. Furthermore, when the value of A or B as the parameter of the elliptic curve, or s as the transform parameter to the Montgomery-form elliptic curve is set to be small, the computational amount of multiplication in the step 4206, 4211, 4214, or 4215 can be reduced.

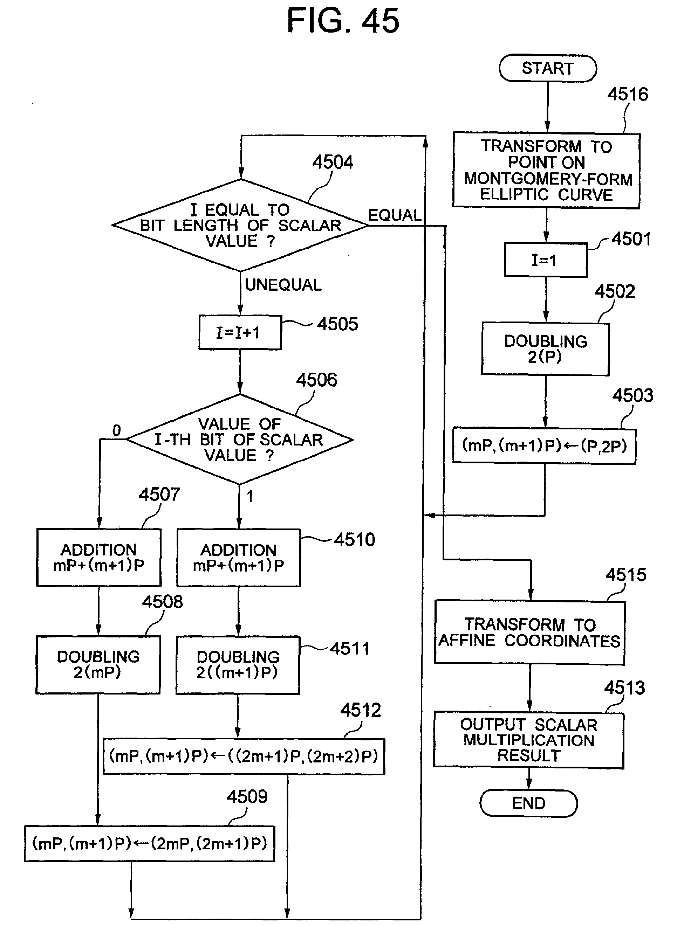

A processing of the fast scalar multiplication unit for outputting $x_d$, $x_{d+1}$ from the scalar value d and the point P on the Weierstrass-form elliptic curve will next be described with reference to FIG. 45.

The fast scalar multiplication unit 202 inputs the point P on the Weierstrass-form elliptic curve inputted into the scalar multiplication unit 103, and outputs $x_d$ in the scalar-multiplied point $dP=(x_d,y_d)$ represented by the affine coordinates in the Montgomery-form elliptic curve, and $x_{d+1}$ in the point (d+1) P= $(x_{d+1},y_{d+1})$ on the Montgomery-form elliptic curve represented by the affine coordinate by the following procedure. In step 4516, the given point P on the Weierstrass-form elliptic curve is transformed to the point represented by the projective coordinates on the Montgomery-form elliptic curve. This point is set anew to point P. In step 4501, the initial value 1 is assigned to the variable I. The doubled point 2P of the point P is calculated in step 4502. Here, the point P is represented as (x,y,1) in the projective coordinates, and the formula of doubling in the projective coordinate of the Montgomery-form elliptic curve is used to calculate the doubled point 2P. In step 4503, the point P on the elliptic curve inputted into the scalar multiplication unit 103 and the point 2P obtained in the step 4502 are stored as a set of points (P,2P). Here, the points P and 2P are represented by the projective coordinate. It is judged in step 4504 whether or not the variable I agrees with the bit length of the scalar value d. With agreement, the flow goes to step 4515. With disagreement, the flow goes to step 4505. The variable I is increased by 1 in the step 4505. It is judged in step 4506 whether the value of the I-th bit of the scalar value is 0 or 1. When the value of the bit is 0, the flow goes to the step 4507. When the value of the bit is 1, the flow goes to step 4510. In step 4507, addition mP+(m+1)P of points mP and (m+1)P is performed from the set of points (mP,(m+1)P) represented by the projective coordinate, and the point (2m+1)P is calculated. Thereafter, the flow goes to step 4508. Here, the addition mP+(m+1)P is calculated using the addition formula in the projective coordinates of the Montgomery-form elliptic curve. In step 4508, doubling 2(mP) of the point mP is performed from the set of points (mP,(m+1)P) represented by the projective coordinate, and the point 2mP is calculated. Thereafter, the flow goes to step 4509. Here, the doubling 2(mP) is calculated the formulae of doubling in the projective coordinates of the Montgomery-form elliptic curve. In step 4509, the point 2mP obtained in the step 4508 and the point (2m+1)P obtained in the step 4507 are stored as a set of points (2mP,(2m+1)P) instead of the set of points (mP,(m+1)P). Thereafter, the flow returns to the step 4504. Here, the points 2mP, (2m+1)P, mP, and (m+1)P are all represented in the projective coordinates. In step 4510, addition mP+(m+1)P of the points mP, (m+1)P is performed from the set of points (mP,(m+1)P) represented by the projective coordinates, and the point (2m+1)P is calculated. Thereafter, the flow goes to step 4511. Here, the addition mP+(m+1)P is calculated using the addition formulae in the projective coordinates of the Montgomery-form elliptic curve. In the step 4511, doubling 2((m+1)P) of the point (m+1)P is performed from the set of points (mP,(m+1)P) represented by the projective coordinates, and the point (2m+2)P is calculated. Thereafter, the flow goes to step 4512. Here, the doubling 2((m+1)P) is calculated using the formula of doubling in the projective coordinates of the Montgomery-form elliptic curve. In the step 4512, the point (2m+1)P obtained in the step 4510 and the point (2m+2)P obtained in the step 4511 are stored as a set of points ((2m+1)P,(2m+2)P) instead of the set of points (mP,(m+1)P). Thereafter, the flow returns to the step 4504. Here, the points (2m+1)P, (2m+2)P, mP, and (m+1)P are all represented in the projective coordinates. In step 4515, $X_m$ and $Z_m$ as $X_d$ and $Z_d$ from the point $mP=(X_m,Y_m,Z_m)$ represented by the projective coordinates, and $X_{m+1}$ and $Z_{m+1}$ as $X_{d+1}$ and $Z_{d+1}$ from the point $(m+1)P=(X_{m+1},Y_{m+1}, Z_{m+1})$ represented by the projective coordinates are obtained. Here, $Y_m$ and $Y_{m+1}$ are not obtained, because the Y-coordinate cannot be obtained by the addition and doubling formulae in the projective coordinates of the Montgomery-form elliptic curve. With $x_d=X_dZ_{d+1}/Z_dZ_{d+1}$, and $x_{d+1}$-$Z_dX_{d+1}/Z_dZ_{d+1}$, $x_d$ and $x_{d+1}$ are obtained from $X_d$, $Z_d$, $X_{d+1}$, $Z_{d+1}$. Thereafter, the flow goes to step 4513. In the step 4513, $x_d$ and $x_{d+1}$ are outputted. In the above procedure, m and scalar value d are equal in the bit length and bit pattern, and are therefore equal.

The computational amount of the addition formula in the projective coordinates of the Montgomery-form elliptic curve is 3M+2S with $Z_1$=1. Here, M is the computational amount of multiplication on the finite field, and S is the computational amount of squaring on the finite field. The computational amount of the doubling formula in the projective coordinates of the Montgomery-form elliptic curve is 3M+2S. When the value of the I-th bit of the scalar value is 0, the computational amount of addition in the step 4507, and the computational amount of doubling in the step 4508 are required. That is, the computational amount of 6M+4S is required. When the value of the I-th bit of the scalar value is 1, the computational amount of addition in the step 4510, and the computational amount of doubling in the step 4511 are required. That is, the computational amount of 6M+4S is required. In any case, the computational amount of 6M+4S is required. The number of repetitions of the steps 4504, 4505, 4506, 4507, 4508, 4509, or the steps 4504, 4505, 4506, 4510, 4511, 4512 is (bit length of the scalar value d)-1. Therefore, in consideration of the computational amount of doubling in the step 4502, and the computational amount of the transform to the affine coordinate in the step 4515, the entire computational amount is (6M+4S)k+3M-2S+I. Here, k is the bit length of the scalar value d. In general, since the computational amount S is estimated to be of the order of S=0.8 M, and the computational amount I is estimated to be of the order of I=40 M, the entire computational amount is approximately (9.2k+41.4)M. For example, when the scalar value d indicates 160 bits (k=160), the computational amount of algorithm of the aforementioned procedure is about 1513 M. The computational amount per bit of the scalar value d is about 9.2 M. In A. Miyaji, T. Ono, H. Cohen, Efficient elliptic curve exponentiation using mixed coordinates, Advances in Cryptology Proceedings of ASIACRYPT'98, LNCS 1514 (1998) pp.51-65, the scalar multiplication method using the window method and mixed coordinates mainly including Jacobian coordinates in the Weierstrass-form elliptic curve is described as the fast scalar multiplication method. In this case, the computational amount per bit of the scalar value is estimated to be about 10 M. Additionally, the computational amount of the transform to the affine coordinate is required. For example, when the scalar value d indicates 160 bits (k=160), the computational amount of the scalar multiplication method is about 1640 M. Therefore, the algorithm of the aforementioned procedure can be said to have a small computational amount and high speed.

Additionally, instead of using the aforementioned algorithm in the fast scalar multiplication unit 202, another algorithm may be used as long as the algorithm outputs $x_d$, $x_{d+1}$ from the scalar value d and the point P on the Weierstrass-form elliptic curve at high speed.

The computational amount required for recovering the coordinate of the coordinate recovering unit 203 in the scalar multiplication unit 103 is 7M+S+I, and this is far small as compared with the computational amount of (9.2k+41.4) M necessary for fast scalar multiplication of the fast scalar multiplication unit 202. Therefore, the computational amount necessary for the scalar multiplication of the scalar multiplication unit 103 is substantially equal to the computational amount necessary for the fast scalar multiplication of the fast scalar multiplication unit. Assuming I=40 M, S=0.8 M, the computational amount can be estimated to be about (9.2k+89.2)M. For example, when the scalar value d indicates 160 bits (k=160), the computational amount necessary for the scalar multiplication is about 1561 M. The Weierstrass-form elliptic curve is used as the elliptic curve, the scalar multiplication method is used in which the window method and the mixed coordinates mainly including the Jacobian coordinates are used, and the scalar-multiplied point is outputted as the affine coordinates. In this case, the required computational amount is about 1640 M, and as compared with this, the required computational amount is reduced.

The encryption/decryption processor shown in FIG. 1 has been described as the apparatus which performs a decryption processing in the first to twenty-second embodiments, but can similarly be used as the apparatus which performs an encryption processing. In this case, the scalar multiplication unit 103 of the encryption/decryption processor outputs the scalar-multiplied point by the point Q on the elliptic curve and the random number k, and the scalar-multiplied point by the public key aQ and random number k as described above. In this case, the scalar value d described in the first to twenty-second embodiments are used as the random number k, the point P on the elliptic curve is used as the point Q on the elliptic curve and the public key aQ, and the similar processing is performed, so that the respective scalar-multiplied points can be obtained.

Additionally, the encryption/decryption processor shown in FIG. 1 can perform both the encryption and the decryption, but may be constituted to perform only the encryption processing or the decryption processing.

Moreover, the processing described in the first to twenty-second embodiments may be a program stored in a computer readable storage medium. In this case, the program is read into the storage of FIG. 1, and operation units such as CPU as the processor performs the processing in accordance with the program.

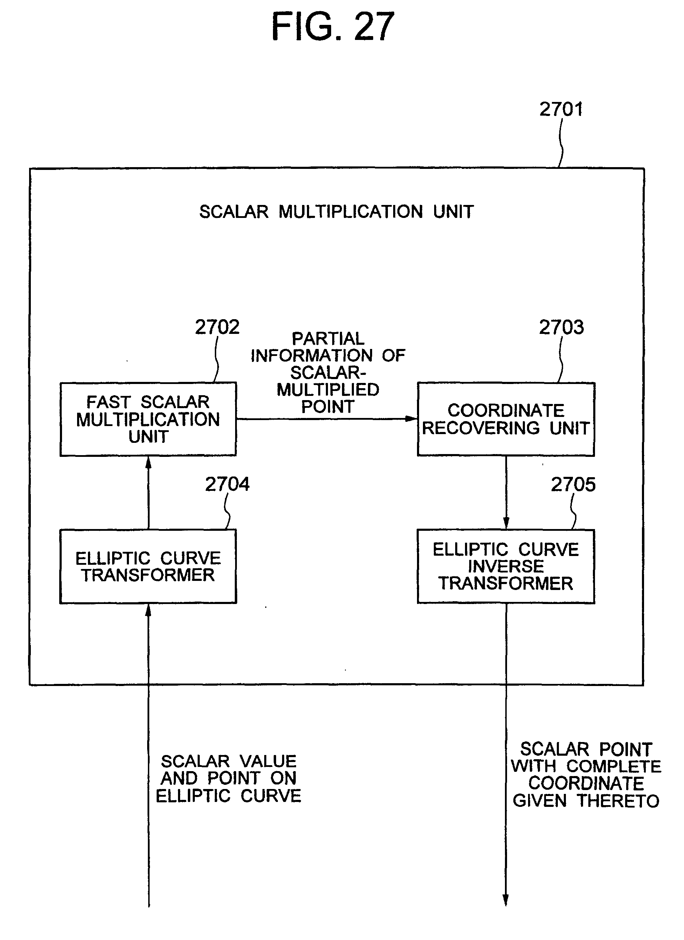

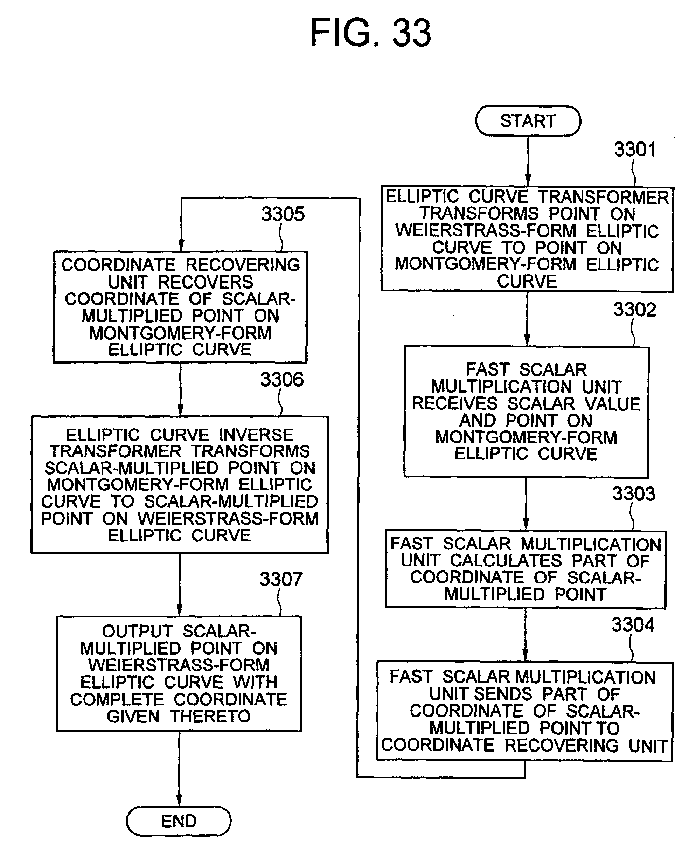

FIG. 27 is a diagram showing the example of the fast scalar multiplication method in which the complete coordinate of the scalar-multiplied point is given in the encryption processing using private information in the encryption processing system of FIG. 1. FIG. 33 is a flowchart showing a flow of the processing in the example of the scalar multiplication method of FIG. 27.

In FIG. 33, a scalar multiplication unit 2701 of FIG. 27 calculates and outputs the scalar-multiplied point with the complete coordinate given thereto on the Weierstrass-form elliptic curve from the scalar value and the point on the Weierstrass-form elliptic curve as follows. When the scalar value and the point on the Weierstrass-form elliptic curve are inputted into the scalar multiplication unit 2701, an elliptic curve transformer 2704 transforms the point on the Weierstrass-form elliptic curve to the point on the Montgomery-form elliptic curve (step 3301). A fast scalar multiplication unit 2702 receives the scalar value inputted into the scalar multiplication unit 2701 and the point on the Montgomery-form elliptic curve transformed by the elliptic curve transformer 2704 (step 3302). A fast scalar multiplication unit 2702 calculates some values of the coordinate of the scalar-multiplied point on the Montgomery-form elliptic curve from the received scalar value and the point on the Montgomery-form elliptic curve (step 3303), and gives the information to a coordinate recovering unit 2703 (step 3304). The coordinate recovering unit 2703 recovers the coordinate of the scalar-multiplied point on the Montgomery-form elliptic curve from the information of the given scalar-multiplied point on the processing elliptic curve and the point on the Montgomery-form elliptic curve transformed by the elliptic curve transformer 2704 (step 3305). An elliptic curve inverse transformer 2705 transforms the scalar-multiplied point on the Montgomery-form elliptic curve recovered by the coordinate recovering unit 2703 to the scalar-multiplied point on the Weierstrass-form elliptic curve (step 3306). The scalar multiplication unit 2701 outputs the scalar-multiplied point with the coordinate completely given thereto on the Weierstrass-form elliptic curve as the calculation result (step 3307).

For the scalar multiplication on the Montgomery-form elliptic curve executed by the fast scalar multiplication unit 2702 and coordinate recovering unit 2703 in the scalar multiplication unit 2701, the scalar multiplication method on the Montgomery-form elliptic curve described above in the first to fifth and fourteenth to sixteenth embodiments is applied as it is. Therefore, the scalar multiplication is the scalar multiplication method in which the complete coordinate of the scalar-multiplied point is given at the high speed.

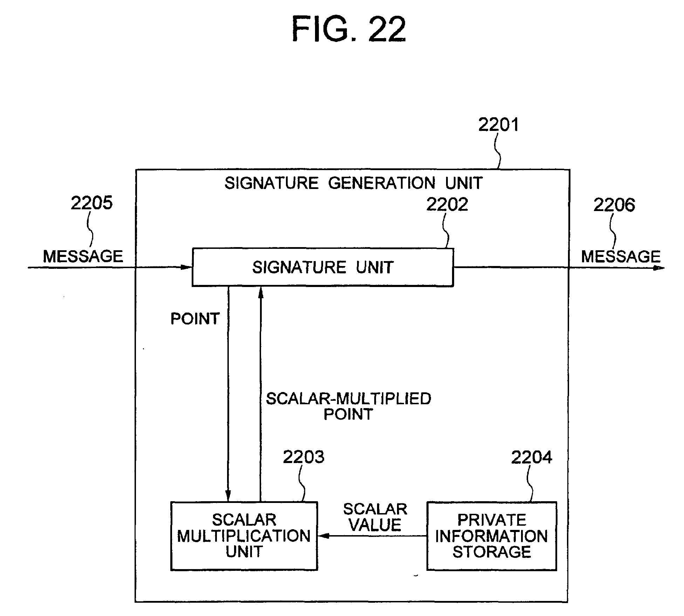

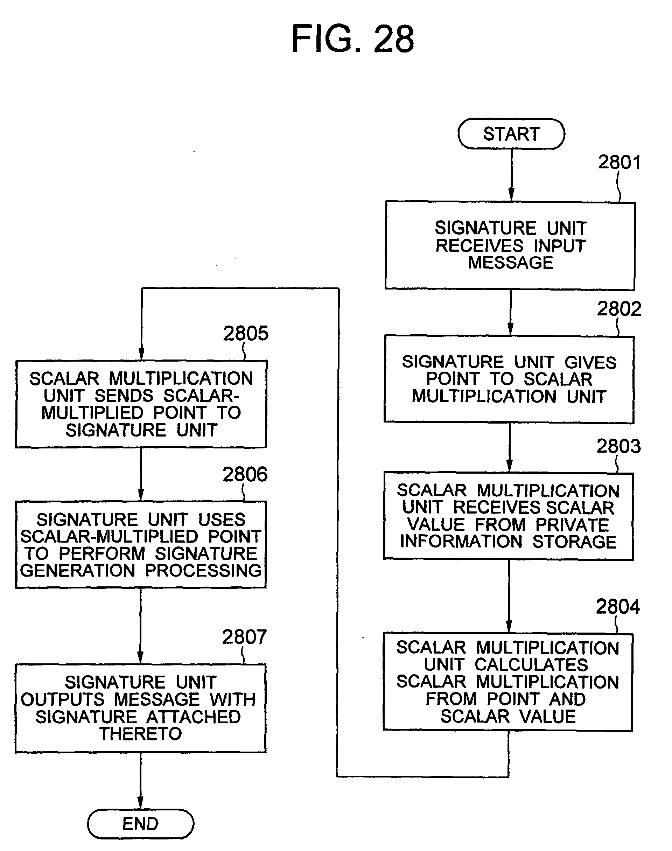

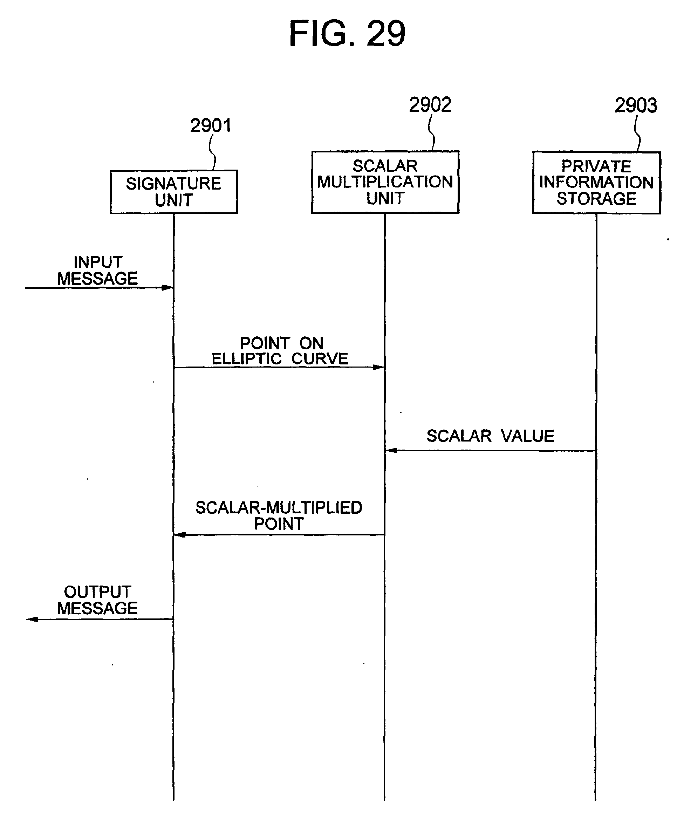

FIG. 22 shows a constitution in which the encryption processing system of the present embodiment of FIG. 1 is used as a signature generation unit. The cryptography processor 102 of FIG. 1 is a signature unit 2202 in a signature generation unit 2201 of FIG. 22. FIG. 28 is a flowchart showing a flow of the processing in the signature generation unit. FIG. 29 is a sequence diagram showing the flow of the processing in the signature generation unit of FIG. 22.

In FIG. 28, the signature generation unit 2201 outputs a message 2206 with the signature attached thereto from a given message 2205. The message 2205 is inputted into the signature generation unit 2201 and received by the signature unit 2202 (step 2801). The signature unit 2202 gives a point on the elliptic curve to a scalar multiplication unit 2203 in accordance with the received message 2205 (step 2802). The scalar multiplication unit 2203 receives the scalar value as private information from a private information storage 2204 (step 2803). The scalar multiplication unit 2203 calculates the scalar-multiplied point from the received point on the elliptic curve and the scalar value (step 2804), and sends the scalar-multiplied point to the signature unit 2202 (step 2805). The signature unit 2202 performs a signature generation processing based on the scalar-multiplied point received from the scalar multiplication unit 2203 (step 2806). The result is outputted as the message 2206 with the signature attached thereto (step 2807).

The processing procedure will be described with reference to the sequence diagram of FIG. 29. First, a processing executed by a signature unit 2901 (2202 of FIG. 22) will be described. The signature unit 2901 receives the inputted message. The signature unit 2901 selects the point on the elliptic curve based on the inputted message, gives the point on the elliptic curve to a scalar multiplication unit 2902, and receives the scalar-multiplied point from the scalar multiplication unit 2902. The signature unit 2901 uses the received scalar-multiplied point to perform the signature generation processing and outputs the result as the output message.

The processing executed by the scalar multiplication unit 2902 (2203 of FIG. 22) will next be described. The scalar multiplication unit 2902 receives the point on the elliptic curve from the signature unit 2901. The scalar multiplication unit 2902 receives the scalar value from a private information storage 2903. The scalar multiplication unit 2902 calculates the scalar-multiplied point and sends the scalar-multiplied point to the signature unit 2901 from the received point on the elliptic curve and scalar value by the fast scalar multiplication method which gives the complete coordinate.

Finally, a processing executed by the private information storage 2903 (2204 of FIG. 22) will be described. The private information storage 2903 sends the scalar value to the scalar multiplication unit 2902 so that the scalar multiplication unit 2902 can calculate the scalar multiplication.

For the scalar multiplication executed by the scalar multiplication unit 2203, the method described in the first to twenty-second embodiments are applied as they are. Therefore, the scalar multiplication is a fast scalar multiplication method in which the complete coordinate of the scalar-multiplied point is given. Therefore, when the signature generation processing is performed in the signature unit 2202, the complete coordinate of the scalar-multiplied point can be used, and the calculation can be executed at the high speed.

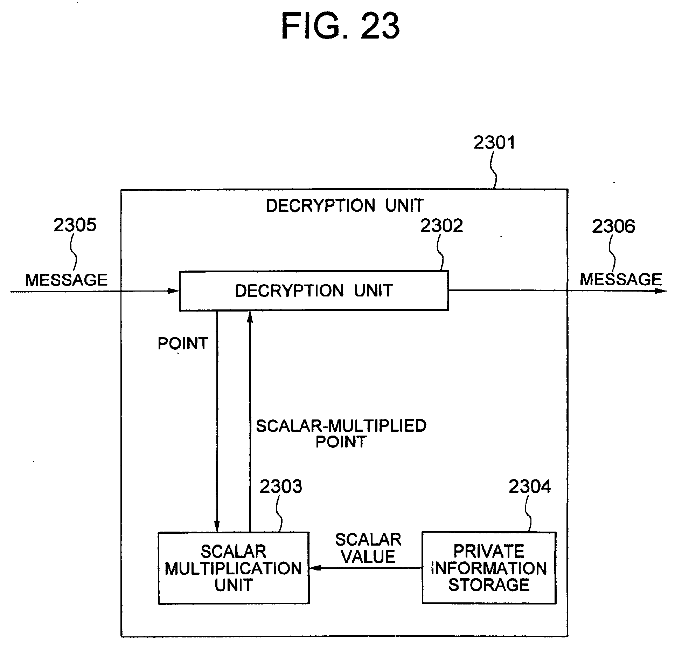

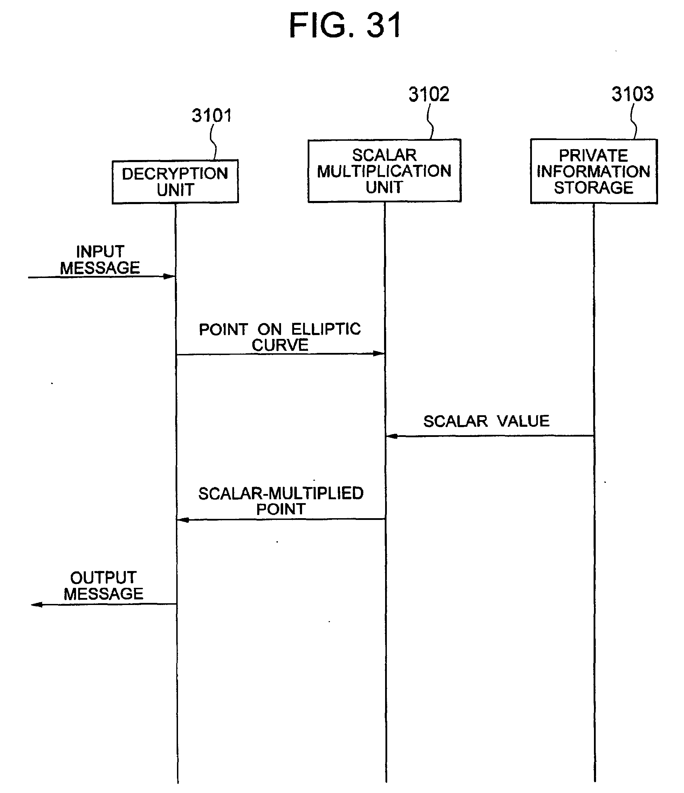

FIG. 23 shows a constitution in which the encryption processing system of the present embodiment of FIG. 1 is used as a decryption unit. The cryptography processor 102 of FIG. 1 is a decryption unit 2302 in a decryption apparatus 2301 of FIG. 23. FIG. 30 is a flowchart showing a flow of the processing in the decryption unit. FIG. 31 is a sequence diagram showing the flow of the processing in the decryption unit of FIG. 23.

In FIG. 30, the decryption unit 2301 outputs a decrypted message 2306 from a given message 2305. The message 2305 is inputted into the decryption unit 2301 and received by the decryption unit 2302 (step 3001). The decryption unit 2302 gives a point on the elliptic curve to a scalar multiplication unit 2303 in accordance with the received message 2305 (step 3002). The scalar multiplication unit 2303 receives the scalar value as private information from a private information storage 2304 (step 3003). The scalar multiplication unit 2303 calculates the scalar-multiplied point from the received point on the elliptic curve and the scalar value (step 3004), and sends the scalar-multiplied point to the decryption unit 2302 (step 3005). The decryption unit 2302 performs a decryption processing based on the scalar-multiplied point received from the scalar multiplication unit 2303 (step 3006). The result is outputted as the message 2306 with the decrypted result (step 3007).

The processing procedure will be described with reference to the sequence diagram of FIG. 31. First, a processing executed by a decryption unit 3101 (2302 of FIG. 23) will be described. The decryption unit 3101 receives the inputted message. The decryption unit 3101 selects the point on the elliptic curve based on the inputted message, gives the point on the elliptic curve to a scalar multiplication unit 3102, and receives the scalar-multiplied point from the scalar multiplication unit 3102. The signature unit 3101 uses the received scalar-multiplied point to perform the decryption processing and outputs the result as the output message.

The processing executed by the scalar multiplication unit 3102 (2303 of FIG. 23) will next be described. The scalar multiplication unit 3102 receives the point on the elliptic curve from the decryption unit 3101. The scalar multiplication unit 3102 receives the scalar value from a private information storage 3103. The scalar multiplication unit 3102 calculates the scalar-multiplied point from the received point on the elliptic curve and scalar value by the fast scalar multiplication method which gives the complete coordinate and sends the scalar-multiplied point to the decryption unit 3101.

Finally, a processing executed by the private information storage 3103 (2304 of FIG. 23) will be described. The private information storage 3103 sends the scalar value to the scalar multiplication unit 3102 so that the scalar multiplication unit 3102 can calculate the scalar multiplication.

For the scalar multiplication executed by the scalar multiplication unit 2303, the method described in the first to twenty-second embodiments are applied as they are. Therefore, the scalar multiplication is a fast scalar multiplication method in which the complete coordinate of the scalar-multiplied point is given. Therefore, when the decryption processing is performed in the decryption unit 2302, the complete coordinate of the scalar-multiplied point can be used, and the calculation can be executed at the high speed.

As described above, according to the present invention, the speed of the scalar multiplication for use in the cryptography processing using the private information in the cryptography processing system is raised, and a fast cryptography processing can be achieved. Moreover, since the coordinate of the scalar-multiplied point can completely be given, all cryptography processing can be performed.

**Claims**

**1.** A scalar multiplication method for calculating a scalar-multiplied point from a scalar value and a point on an elliptic curve in the elliptic curve defined on a finite field with characteristics of 5 or more in an elliptic curve cryptosystem, the method comprising:

a step of calculating partial information of said scalar-multiplied point; and a step of recovering a complete coordinate from the partial information of said scalar-multiplied point.

**2.** A scalar multiplication method for calculating a scalar-multiplied point from a scalar value and a point on an elliptic curve in the elliptic curve defined on a finite field with characteristics of 5 or more in an elliptic curve cryptosystem, the method comprising:

a step of calculating partial information of said scalar-multiplied point; and a step of recovering a complete coordinate in affine coordinates from the partial information of said scalar-multiplied point.

**3.** A scalar multiplication method for calculating a scalar-multiplied point from a scalar value and a point on an elliptic curve in the elliptic curve defined on a finite field with characteristics of 5 or more in an elliptic curve cryptosystem, the method comprising:

a step of calculating partial information of said scalar-multiplied point; and a step of recovering a complete coordinate in projective coordinates from the partial information of said scalar-multiplied point.

**4.** A scalar multiplication method for calculating a scalar-multiplied point from a scalar value and a point on a Montgomery-form elliptic curve in the Montgomery-form elliptic curve defined on a finite field with characteristics of 5 or more in an elliptic curve cryptosystem, the method comprising:

a step of calculating partial information of said scalar-multiplied point; and a step of recovering a complete coordinate from the partial information of said scalar-multiplied point.

**5.** A scalar multiplication method for calculating a scalar-multiplied point from a scalar value and a point on a Weierstrass-form elliptic curve in the Weierstrass-form elliptic curve defined on a finite field with characteristics of 5 or more in an elliptic curve cryptosystem, the method comprising:

a step of calculating partial information of said scalar-multiplied point; and a step of recovering a complete coordinate from the partial information of said scalar-multiplied point.

**6.** A scalar multiplication method for calculating a scalar-multiplied point from a scalar value and a point on a Montgomery-form elliptic curve in the Montgomery-form elliptic curve defined on a finite field with characteristics of 5 or more in an elliptic curve cryptosystem, the method comprising:

a step of calculating partial information of said scalar-multiplied point; and a step of giving X-coordinate and Z-coordinate of said scalar-multiplied point given as the partial information of said scalar-multiplied point in projective coordinates and X-coordinate and Z-coordinate of a point obtained by adding said scalar-multiplied point and the point on said Montgomery-form elliptic curve in the projective coordinates, and recovering a complete coordinate in affine coordinates.

**7.** A scalar multiplication method for calculating a scalar-multiplied point from a scalar value and a point on a Montgomery-form elliptic curve in the Montgomery-form elliptic curve defined on a finite field with characteristics of 5 or more in an elliptic curve cryptosystem, the method comprising:

a step of calculating partial information of said scalar-multiplied point; and a step of giving X-coordinate and Z-coordinate of said scalar-multiplied point given as the partial information of said scalar-multiplied point in projective coordinates and X-coordinate and Z-coordinate of a point obtained by adding said scalar-multiplied point and the point on said Montgomery-form elliptic curve in the projective coordinates, and recovering a complete coordinate in the projective coordinates.

**8.** A scalar multiplication method for calculating a scalar-multiplied point from a scalar value and a point on a Montgomery-form elliptic curve in the Montgomery-form elliptic curve defined on a finite field with characteristics of 5 or more in an elliptic curve cryptosystem, the method comprising:

a step of calculating partial information of said scalar-multiplied point; and a step of giving X-coordinate and Z-coordinate of said scalar-multiplied point given as the partial information of said scalar-multiplied point in projective coordinates, X-coordinate and Z-coordinate of a point obtained by adding said scalar-multiplied point and the point on said Montgomery-form elliptic curve in the projective coordinates, and X-coordinate and Z-coordinate of a point obtained by subtracting said scalar-multiplied point and the point on said Montgomery-form elliptic curve in the projective coordinates, and recovering a complete coordinate in affine coordinates.

**9.** A scalar multiplication method for calculating a scalar-multiplied point from a scalar value and a point on a Montgomery-form elliptic curve in the Montgomery-form elliptic curve defined on a finite field with characteristics of 5 or more in an elliptic curve cryptosystem, the method comprising:

a step of calculating partial information of said scalar-multiplied point; and a step of giving X-coordinate and Z-coordinate of said scalar-multiplied point given as the partial information of said scalar-multiplied point in projective coordinates, X-coordinate and Z-coordinate of a point obtained by adding said scalar-multiplied point and the point on said Montgomery-form elliptic curve in the projective coordinates, and X-coordinate and Z-coordinate of a point obtained by subtracting said scalar-multiplied point and the point on said Montgomery-form elliptic curve in the projective coordinates, and recovering a complete coordinate in the projective coordinates.

**10.** A scalar multiplication method for calculating a scalar-multiplied point from a scalar value and a point on a Montgomery-form elliptic curve in the Montgomery-form elliptic curve defined on a finite field with characteristics of 5 or more in an elliptic curve cryptosystem, the method comprising:

a step of calculating partial information of said scalar-multiplied point; and a step of giving x-coordinate of the scalar-multiplied point given as the partial information of said scalar-multiplied point in affine coordinates, x-coordinate of a point obtained by adding said scalar-multiplied point and the point on said Montgomery-form elliptic curve in the affine coordinates, and x-coordinate of a point obtained by subtracting said scalar-multiplied point and the point on said Montgomery-form elliptic curve in the affine coordinates, and recovering a complete coordinate in the affine coordinates.

11. A scalar multiplication method for calculating a scalar-multiplied point from a scalar value and a point on a Weierstrass-form elliptic curve in the Weierstrass-form elliptic curve defined on a finite field with characteristics of 5 or more in an elliptic curve cryptosystem, the method comprising:

a step of calculating partial information of the scalar-multiplied point; and a step of giving X-coordinate and Z-coordinate of the scalar-multiplied point given as the partial information of said scalar-multiplied point in projective coordinates, X-coordinate and Z-coordinate of a point obtained by adding said scalar-multiplied point and the point on said Weierstrass-form elliptic curve in the projective coordinates, and X-coordinate and Z-coordinate of a point obtained by subtracting said scalar-multiplied point and the point on said Weierstrass-form elliptic curve in the projective coordinates, and recovering a complete coordinate in affine coordinates.

12. A scalar multiplication method for calculating a scalar-multiplied point from a scalar value and a point on a Weierstrass-form elliptic curve in the Weierstrass-form elliptic curve defined on a finite field with characteristics of 5 or more in an elliptic curve cryptosystem, the method comprising:

a step of calculating partial information of the scalar-multiplied point; and a step of giving X-coordinate and Z-coordinate of said scalar-multiplied point given as the partial information of said scalar-multiplied point in projective coordinates, X-coordinate and Z-coordinate of a point obtained by adding said scalar-multiplied point and the point on said Weierstrass-form elliptic curve in the projective coordinates, and X-coordinate and Z-coordinate of a point obtained by subtracting said scalar-multiplied point and the point on said Weierstrass-form elliptic curve in the projective coordinates, and recovering a complete coordinate in the projective coordinates.

13. A scalar multiplication method for calculating a scalar-multiplied point from a scalar value and a point on a Weierstrass-form elliptic curve in the Weierstrass-form elliptic curve defined on a finite field with characteristics of 5 or more in an elliptic curve cryptosystem, the method comprising:

a step of calculating partial information of said scalar-multiplied point; and a step of giving x-coordinate of said scalar-multiplied point given as the partial information of said scalar-multiplied point in affine coordinates, x-coordinate of a point obtained by adding said scalar-multiplied point and the point on said Weierstrass-form elliptic curve in the affine coordinates, and x-coordinate of a point obtained by subtracting said scalar-multiplied point and the point on said Weierstrass-form elliptic curve in the affine coordinates, and recovering a complete coordinate in the affine coordinates.

14. A scalar multiplication method for calculating a scalar-multiplied point from a scalar value and a point on a Weierstrass-form elliptic curve in the Weierstrass-form elliptic curve defined on a finite field with characteristics of 5 or more in an elliptic curve cryptosystem, the method comprising:

a step of transforming said Weierstrass-form elliptic curve to a Montgomery-form elliptic curve; a step of calculating partial information of the scalar-multiplied point in the Montgomery-form elliptic curve; and a step of recovering a complete coordinate in the Weierstrass-form elliptic curve from the partial information of the scalar-multiplied point in said Montgomery-form elliptic curve.

15. A scalar multiplication method for calculating a scalar-multiplied point from a scalar value and a point on a Weierstrass-form elliptic curve in the Weierstrass-form elliptic curve defined on a finite field with characteristics of 5 or more in an elliptic curve cryptosystem, the method comprising:

a step of transforming said Weierstrass-form elliptic curve to a Montgomery-form elliptic curve; a step of calculating partial information of the scalar-multiplied point in said Montgomery-form elliptic curve; a step of recovering a complete coordinate in said Montgomery-form elliptic curve from the partial information of the scalar-multiplied point in the Montgomery-form elliptic curve; and a step of calculating the scalar-multiplied point in the Weierstrass-form elliptic curve from the scalar-multiplied point in which the complete coordinate is recovered in said Montgomery-form elliptic curve.

16. A scalar multiplication method for calculating a scalar-multiplied point from a scalar value and a point on a Weierstrass-form elliptic curve in the Weierstrass-form elliptic curve defined on a finite field with characteristics of 5 or more in an elliptic curve cryptosystem, the method comprising:

a step of transforming said Weierstrass-form elliptic curve to a Montgomery-form elliptic curve; a step of calculating partial information of the scalar-multiplied point in said Montgomery-form elliptic curve; and a step of giving X-coordinate and Z-coordinate of the scalar-multiplied point given as the partial information of the scalar-multiplied point in the Montgomery-form elliptic curve in projective coordinates in the Montgomery-form elliptic curve, and X-coordinate and Z-coordinate of a point obtained by adding said scalar-multiplied point and the point on the Montgomery-form elliptic curve in the projective coordinates, and recovering a complete coordinate in affine coordinates in the Weierstrass-form elliptic curve.

17. A scalar multiplication method for calculating a scalar-multiplied point from a scalar value and a point on a Weierstrass-form elliptic curve in the Weierstrass-form elliptic curve defined on a finite field with characteristics of 5 or more in an elliptic curve cryptosystem, the method comprising:

a step of transforming said Weierstrass-form elliptic curve to a Montgomery-form elliptic curve; a step of calculating partial information of the scalar-multiplied point in said Montgomery-form elliptic curve; and a step of giving X-coordinate and Z-coordinate of the scalar-multiplied point given as the partial information of the scalar-multiplied point in the Montgomery-form elliptic curve in projective coordinates in the Montgomery-form elliptic curve, and X-coordinate and Z-coordinate of a point obtained by adding said scalar-multiplied point and the point on the Montgomery-form elliptic curve in the projective coordinates, and recovering a complete coordinate in the projective coordinates in the Weierstrass-form elliptic curve.

18. A scalar multiplication method for calculating a scalar-multiplied point from a scalar value and a point on a Weierstrass-form elliptic curve in the Weierstrass-form elliptic curve defined on a finite field with characteristics of 5 or more in an elliptic curve cryptosystem, the method comprising:

a step of transforming said Weierstrass-form elliptic curve to a Montgomery-form elliptic curve; a step of calculating partial information of the scalar-multiplied point in said Montgomery-form elliptic curve; and a step of giving X-coordinate and Z-coordinate of the scalar-multiplied point given as the partial information of the scalar-multiplied point in the Montgomery-form elliptic curve in projective coordinates in the Montgomery-form elliptic curve, X-coordinate and Z-coordinate of a point obtained by adding said scalar-multiplied point and the point on the Montgomery-form elliptic curve in the projective coordinates, and X-coordinate and Z-coordinate of a point obtained by subtracting said scalar-multiplied point and the point on the Montgomery-form elliptic curve in the projective coordinates, and recovering a complete coordinate in affine coordinates in the Weierstrass-form elliptic curve.

19. A scalar multiplication method for calculating a scalar-multiplied point from a scalar value and a point on a Weierstrass-form elliptic curve in the Weierstrass-form elliptic curve defined on a finite field with characteristics of 5 or more in an elliptic curve cryptosystem, the method comprising:

a step of transforming said Weierstrass-form elliptic curve to a Montgomery-form elliptic curve; a step of calculating partial information of the scalar-multiplied point in said Montgomery-form elliptic curve; and a step of giving X-coordinate and Z-coordinate of the scalar-multiplied point given as the partial information of the scalar-multiplied point in the Montgomery-form elliptic curve in projective coordinates in the Montgomery-form elliptic curve, X-coordinate and Z-coordinate of a point obtained by adding said scalar-multiplied point and the point on the Montgomery-form elliptic curve in the projective coordinates, and X-coordinate and Z-coordinate of a point obtained by subtracting said scalar-multiplied point and the point on the Montgomery-form elliptic curve in the projective coordinates, and recovering a complete coordinate in the projective coordinates in the Weierstrass-form elliptic curve.

20. A scalar multiplication method for calculating a scalar-multiplied point from a scalar value and a point on a Weierstrass-form elliptic curve in the Weierstrass-form elliptic curve defined on a finite field with characteristics of 5 or more in an elliptic curve cryptosystem, the method comprising:

a step of transforming said Weierstrass-form elliptic curve to a Montgomery-form elliptic curve; a step of calculating partial information of the scalar-multiplied point in said Montgomery-form elliptic curve; and a step of giving x-coordinate of the scalar-multiplied point given as the partial information of the scalar-multiplied point in said Montgomery-form elliptic curve in affine coordinates in the Montgomery-form elliptic curve, x-coordinate of a point obtained by adding said scalar-multiplied point and the point on the Montgomery-form elliptic curve in the affine coordinates, and x-coordinate of a point obtained by subtracting said scalar-multiplied point and the point on the Montgomery-form elliptic curve in the affine coordinates, and recovering a complete coordinate in the affine coordinates in the Weierstrass-form elliptic curve.

21. A data generation method for generating second data from first data, comprising a step of using the scalar multiplication method according to any one of claims 1 to 20 to calculate scalar multiplication.

22. A signature generation method for generating signature data from data, comprising a step of using the scalar multiplication method according to any one of claims 1 to 20 to calculate scalar multiplication.

23. A decryption method for generating decrypted data from encrypted data, comprising a step of using the scalar multiplication method according to any one of claims 1 to 20 to calculate scalar multiplication.

24. A scalar multiplication apparatus which calculates a scalar-multiplied point from a scalar value and a point on an elliptic curve in the elliptic curve defined on a finite field with characteristics of 5 or more in an elliptic curve cryptosystem, the unit comprising:

a fast scalar multiplication unit which calculates partial information of said scalar-multiplied point; and a coordinate recovering unit which recovers a complete coordinate from the partial information of said scalar-multiplied point,

wherein said scalar multiplication apparatus calculates the partial information of the scalar-multiplied point by the fast scalar multiplication unit, recovers the complete coordinate from the partial information of the scalar-multiplied point by the coordinate recovering unit, and calculates the scalar-multiplied point.

25. A scalar multiplication apparatus for calculating a scalar-multiplied point from a scalar value and a point on a Weierstrass-form elliptic curve in the elliptic curve defined on a finite field with characteristics of 5 or more in an elliptic curve cryptosystem, the apparatus comprising:

an elliptic curve transform unit which transforms said Weierstrass-form elliptic curve to a Montgomery-form elliptic curve; a fast scalar multiplication unit which calculates partial information of said scalar-multiplied point; a coordinate recovering unit which recovers a complete coordinate from the partial information from said scalar-multiplied point; and an elliptic curve inverse transform unit which transforms the Montgomery-form elliptic curve to the Weierstrass-form elliptic curve,

wherein said scalar multiplication apparatus transforms said Weierstrass-form elliptic curve to the Montgomery-form elliptic curve by the elliptic curve transform unit, calculates the partial information of the scalar-multiplied point in the Montgomery-form elliptic curve by the fast scalar multiplication unit, recovers a complete coordinate in the Montgomery-form elliptic curve from the partial information of the scalar-multiplied point in said Montgomery-form elliptic curve by the coordinate recovering unit, calculates the scalar-multiplied point in the Weierstrass-form elliptic curve from the scalar-multiplied point with the complete coordinate recovered in the Montgomery-form elliptic curve by the elliptic curve by the elliptic curve inverse transform unit.

26. A storage medium wherein program relating to the scalar multiplication method according to any one of claims 1 to 20 is stored.

27. A coordinate recovering method for recovering a complete coordinate from a point on an elliptic curve given by an incomplete coordinate in the elliptic curve defined on a finite field with characteristics of 5 or more in an elliptic curve cryptosystem, said method comprising:

a step of calculating a coordinate of the point having said incomplete coordinate from the point having said incomplete coordinate and a point obtained by addition and subtraction of the point having said incomplete coordinate and a point having the complete coordinate.

28. A coordinate recovering method for recovering a complete coordinate from a point on an elliptic curve given by an incomplete coordinate in the elliptic curve defined on a finite field with characteristics of 5 or more in an elliptic curve cryptosystem, said method comprising:

a step of calculating a point obtained by subtraction of the point having said incomplete coordinate and a point having the complete coordinate from the point having said incomplete coordinate and a point obtained by addition of the point having said incomplete coordinate and the point having the complete coordinate; and a step of calculating the coordinate of the point having said incomplete coordinate.

29. A coordinate recovering method for recovering a complete coordinate in a Weierstrass-form elliptic curve from a point on a Montgomery-form elliptic curve given by an incomplete coordinate in the Montgomery-form elliptic curve defined on a finite field with characteristics of 5 or more in an elliptic curve cryptosystem, said method comprising:

a step of calculating a coordinate of the point having the incomplete coordinate in said Montgomery-form elliptic curve from the point having the incomplete coordinate in said Montgomery-form elliptic curve and a point obtained by addition and subtraction of the point having the incomplete coordinate in said Montgomery-form elliptic curve and a point having the complete coordinate; and a step of transforming the point of the Montgomery-form elliptic curve having said complete coordinate calculated to a point of the Weierstrass-form elliptic curve.

30. A coordinate recovering method for recovering a complete coordinate in a Weierstrass-form elliptic curve from a point on a Montgomery-form elliptic curve given by an incomplete coordinate in the Montgomery-form elliptic curve defined on a finite field with characteristics of 5 or more in an elliptic curve cryptosystem, said method comprising:

a step of calculating a point obtained by subtraction of a point having the incomplete coordinate in said Montgomery-form elliptic curve and a point having a complete coordinate from the point having the incomplete coordinate in said Montgomery-form elliptic curve and a point by addition of the point having the incomplete coordinate in said Montgomery-form elliptic curve and the point having the complete coordinate; a step of calculating a coordinate of the point having the incomplete coordinate in said Montgomery-form elliptic curve; and a step of transforming the point of the Montgomery-form elliptic curve having said complete coordinate calculated to a point of the Weierstrass-form elliptic curve.

# FIG. 1

101

ENCRYPTION/DECRYPTION PROCESSOR

PROCESSING UNIT

ENCRYPTION/
DECRYPTION
PROCESSING UNIT

102

SCALAR-MULTIPLICATION
UNIT

103

130
REGISTER
UNIT

STORAGE UNIT

CONSTANT

PRIVATE
INFORMATION

110

120

105

106

MESSAGE

# FIG. 2

103

SCALAR MULTIPLICATION UNIT

202

FAST SCALAR
MULTIPLICATION
UNIT

PARTIAL
INFORMATION OF
SCALAR-
MULTIPLIED
POINT

203

COORDINATE
RECOVERING
UNIT

SCALAR VALUE
AND POINT ON
ELLIPTIC CURVE

SCALAR-
MULTIPLIED
POINT HAVING
COMPLETE
COORDINATE

# FIG. 3

301 ENCRYPTION PROCESSOR

302 SCALAR MULTIPLICATION UNIT

303 PRIVATE INFORMATION STORAGE

INPUT MESSAGE

POINT ON ELLIPTIC CURVE

SCALAR VALUE

SCALAR-MULTIPLIED POINT

OUTPUT MESSAGE

# FIG. 4

START

401 — I=1

402 — DOUBLING 2(P)

403 — $(mP,(m+1)P) \leftarrow (P,2P)$

404 — I EQUAL TO BIT LENGTH OF SCALAR VALUE ?

EQUAL

UNEQUAL

405 — I=I+1

406 — VALUE OF I-TH BIT OF SCALAR VALUE ?

0

1

407 — ADDITION mP+(m+1)P

410 — ADDITION mP+(m+1)P

408 — DOUBLING 2(mP)

411 — DOUBLING 2((m+1)P)

412 — $(mP,(m+1)P) \leftarrow ((2m+1)P,(2m+2)P)$

409 — $(mP,(m+1)P) \leftarrow (2mP,(2m+1)P)$

413 — OUTPUT SCALAR MULTIPLICATION RESULT

END

# FIG. 5

START

I=1 — 501

DOUBLING 2(P) — 502

(mP,(m+1)P)←(P,2P) — 503

504
I EQUAL TO BIT LENGTH OF SCALAR VALUE ?

EQUAL

UNEQUAL

I=I+1 — 505

506
VALUE OF I-TH BIT OF SCALAR VALUE ?

0

1

507
ADDITION mP+(m+1)P

ADDITION mP+(m+1)P — 510

508
DOUBLING 2(mP)

DOUBLING 2((m+1)P) — 511

(mP,(m+1)P)←((2m+1)P,(2m+2)P) — 512

509
(mP,(m+1)P)←(2mP,(2m+1)P)

CALCULATE (m-1)P — 514

OUTPUT SCALAR MULTIPLICATION RESULT — 513

END

# FIG. 6

```
                                                          ┌─────────┐
                                                          │  START  │
                                                          └────┬────┘
                                                               │
                                                          ┌────▼────┐  601
                                                          │  I=1    │
                                                          └────┬────┘
        604                                                    │
   ╱─────────────╲                                        ┌────▼────────┐  602
  ╱  I EQUAL TO   ╲          EQUAL                         │  DOUBLING   │
 ╱ BIT LENGTH OF   ╲──────────────────────┐               │   2(P)      │
 ╲   SCALAR VALUE ? ╱                      │               └────┬────────┘
  ╲───────┬───────╱                        │                    │
          │ UNEQUAL                        │               ┌────▼──────────────┐  603
     ┌────▼────┐  605                       │               │ (mP,(m+1)P)←(P,2P) │
     │  I=I+1  │                            │               └────┬──────────────┘
     └────┬────┘                            │                    │
          │            606                  │                    │
     ╱─────────────╲                        │                    │
    ╱   VALUE OF     ╲                       │                    │
 0 ╱ I-TH BIT OF SCALAR╲                     │                    │
───╲    VALUE ?        ╱─────────────────────┘                    │
    ╲───────┬────────╱     1                                      │
    │               │                                             │
607 │               │  610                                        │
┌───▼──────┐   ┌────▼──────┐                               ┌──────▼──────────┐  614
│ ADDITION │   │ ADDITION  │                               │ CALCULATE (m-1)P │
│ mP+(m+1)P│   │ mP+(m+1)P │                               └──────┬──────────┘
└───┬──────┘   └────┬──────┘                                      │
    │ 608           │  611                                  ┌──────▼──────────────┐  615
┌───▼──────┐   ┌────▼──────┐                               │ TRANSFORM TO AFFINE  │
│ DOUBLING │   │ DOUBLING  │                               │   COORDINATES        │
│  2(mP)   │   │ 2((m+1)P) │                               └──────┬──────────────┘
└───┬──────┘   └────┬──────┘                                      │
    │               │  612                                  ┌──────▼──────────┐  613
    │          ┌────▼─────────────────────────┐             │ OUTPUT SCALAR    │
    │          │(mP,(m+1)P)←((2m+1)P,(2m+2)P) │             │ MULTIPLICATION   │
    │          └──────────────────────────────┘             │ RESULT           │
    │ 609                                                   └──────┬──────────┘
┌───▼──────────────────────────────┐                              │
│(mP,(m+1)P)←(2mP,(2m+1)P)         │                         ┌──────▼────┐
└──────────────────────────────────┘                         │   END     │
                                                             └───────────┘
```

# FIG. 7

START

716

TRANSFORM TO
POINT ON
MONTGOMERY-FORM
ELLIPTIC CURVE

704

I EQUAL TO
BIT LENGTH OF SCALAR
VALUE ?

EQUAL

UNEQUAL

I=1 — 701

I=I+1 — 705

DOUBLING
2(P) — 702

706

VALUE OF
I-TH BIT OF SCALAR
VALUE ?

703

$(mP,(m+1)P) \leftarrow (P,2P)$

0

1

707

ADDITION
mP+(m+1)P

710

ADDITION
mP+(m+1)P

708

DOUBLING
2(mP)

711

DOUBLING
2((m+1)P)

714

CALCULATE (m-1)P

712

$(mP,(m+1)P) \leftarrow ((2m+1)P,(2m+2)P)$

715

TRANSFORM TO
POINT ON
WEIERSTRASS-FORM
ELLIPTIC CURVE

709

$(mP,(m+1)P) \leftarrow (2mP,(2m+1)P)$

713

OUTPUT SCALAR
MULTIPLICATION
RESULT

END

# FIG. 8

START

TRANSFORM TO
POINT ON
MONTGOMERY-FORM
ELLIPTIC CURVE — 816

I = 1 — 801

DOUBLING
2(P) — 802

$(mP, (m+1)P) \leftarrow (P, 2P)$ — 803

804

I EQUAL TO
BIT LENGTH OF SCALAR
VALUE ?

EQUAL

UNEQUAL

$I = I + 1$ — 805

806

VALUE OF
I-TH BIT OF SCALAR
VALUE ?

0

1

ADDITION
$mP + (m+1)P$ — 807

ADDITION
$mP + (m+1)P$ — 810

DOUBLING
2(mP) — 808

DOUBLING
2((m+1)P) — 811

$(mP, (m+1)P) \leftarrow ((2m+1)P, (2m+2)P)$ — 812

$(mP, (m+1)P) \leftarrow (2mP, (2m+1)P)$ — 809

OUTPUT SCALAR
MULTIPLICATION
RESULT — 813

END

# FIG. 9

START

| | |
|---|---|
| **901** | $T1 \leftarrow Xd \times x$ |

$\downarrow$

| **902** | $T1 \leftarrow T1 - Zd$ |

$\downarrow$

| **903** | $T2 \leftarrow Zd \times x$ |

$\downarrow$

| **904** | $T2 \leftarrow Xd - T2$ |

$\downarrow$

| **905** | $T3 \leftarrow Z_{d+1} \times T1$ |

$\downarrow$

| **906** | $T4 \leftarrow X_{d+1} \times T2$ |

$\downarrow$

| **907** | $T1 \leftarrow T1 \times T1$ |

$\downarrow$

| **908** | $T2 \leftarrow T2 \times T2$ |

| **909** | $T2 \leftarrow T2 \times Zd$ |

$\downarrow$

| **910** | $T2 \leftarrow T2 \times X_{d+1}$ |

$\downarrow$

| **911** | $T2 \leftarrow T2 \times Z_{d+1}$ |

$\downarrow$

| **912** | $T2 \leftarrow T2 \times y$ |

$\downarrow$

| **913** | $T2 \leftarrow T2 \times B$ |

$\downarrow$

| **914** | $Xd \leftarrow T2 \times Xd$ |

$\downarrow$

| **915** | $Zd \leftarrow T2 \times Zd$ |

$\downarrow$

| **916** | $T2 \leftarrow T3 + T4$ |

| **917** | $T3 \leftarrow T3 - T4$ |

$\downarrow$

| **918** | $T1 \leftarrow T1 \times T2$ |

$\downarrow$

| **919** | $Yd \leftarrow T1 \times T3$ |

END

# FIG. 10

START

TRANSFORM TO POINT ON MONTGOMERY-FORM ELLIPTIC CURVE — 1016

$I=1$ — 1001

DOUBLING $2(P)$ — 1002

$(mP,(m+1)P) \leftarrow (P,2P)$ — 1003

I EQUAL TO BIT LENGTH OF SCALAR VALUE ? — 1004

EQUAL

UNEQUAL

$I=I+1$ — 1005

VALUE OF I-TH BIT OF SCALAR VALUE ? — 1006

0

1

ADDITION $mP+(m+1)P$ — 1007

ADDITION $mP+(m+1)P$ — 1010

DOUBLING $2(mP)$ — 1008

DOUBLING $2((m+1)P)$ — 1011

$(mP,(m+1)P) \leftarrow ((2m+1)P,(2m+2)P)$ — 1012

$(mP,(m+1)P) \leftarrow (2mP,(2m+1)P)$ — 1009

CALCULATE $(m-1)P$ — 1014

OUTPUT SCALAR MULTIPLICATION RESULT — 1013

END

# FIG. 11

START

1101
T1←Xd×x

1102
T1←T1-Zd

1103
T2←Zd×x

1104
T2←Xd-T2

1105
T3←$X_{d+1}$×T2

1106
T2←T2×T2

1107
T2←T2×$X_{d+1}$

1108
T2←T2×$Z_{d+1}$

1109
T2←T2×y

1110
T2←T2×B

1111
T2←T2×Zd

1112
T4←T2×Xd

1113
T2←T2×Zd

1114
T2←1/T2

1115
Xd←T2×T4

1116
T4←T1×$Z_{d+1}$

1117
T1←T1×T1

1118
T2←T1×T2

1119
T1←T3×T4

1120
T3←T3-T4

1121
T1←T1×T3

1122
yd←T1×T2

END

# FIG. 12

START

1209
$T2 \leftarrow T2 \times Z_{d+1}$

1210
$T2 \leftarrow T2 \times Z_{d-1}$

1211
$T2 \leftarrow T2 \times Zd$

1212
$T3 \leftarrow T2 \times Xd$

1213
$T2 \leftarrow T2 \times Zd$

1214
$T2 \leftarrow 1/T2$

1215
$xd \leftarrow T2 \times T3$

1216
$yd \leftarrow T1 \times T2$

END

1201
$T1 \leftarrow X_{d-1} \times Z_{d+1}$

1202
$T2 \leftarrow Z_{d-1} \times X_{d+1}$

1203
$T1 \leftarrow T1 - T2$

1204
$T2 \leftarrow Zd \times x$

1205
$T2 \leftarrow Xd - T2$

1206
$T2 \leftarrow T2 \times T2$

1207
$T1 \leftarrow T1 \times T2$

1208
$T2 \leftarrow 4B \times y$

# FIG. 13

START

1301 $T1 \leftarrow X_{d-1} \times Z_{d+1}$

1302 $T2 \leftarrow Z_{d-1} \times X_{d+1}$

1303 $T1 \leftarrow T1-T2$

1304 $T2 \leftarrow Zd \times x$

1305 $T2 \leftarrow Xd-T2$

1306 $T2 \leftarrow T2 \times T2$

1307 $Yd \leftarrow T1 \times T2$

1308 $T2 \leftarrow 4B \times y$

1309 $T2 \leftarrow T2 \times Z_{d+1}$

1310 $T2 \leftarrow T2 \times Z_{d-1}$

1311 $T2 \leftarrow T2 \times Zd$

1312 $Xd \leftarrow T2 \times Xd$

1313 $Zd \leftarrow T2 \times Zd$

END

# FIG. 14

START

1401
$$T1 \leftarrow X_{d-1} \times Z_{d+1}$$

1402
$$T2 \leftarrow Z_{d-1} \times X_{d+1}$$

1403
$$T1 \leftarrow T1 - T2$$

1404
$$T2 \leftarrow Z_d \times x$$

1405
$$T2 \leftarrow X_d - T2$$

1406
$$T2 \leftarrow T2 \times T2$$

1407
$$T1 \leftarrow T1 \times T2$$

1408
$$T2 \leftarrow 4 \times y$$

1409
$$T2 \leftarrow T2 \times Z_{d+1}$$

1410
$$T2 \leftarrow T2 \times Z_{d-1}$$

1411
$$T2 \leftarrow T2 \times Z_d$$

1412
$$T3 \leftarrow T2 \times X_d$$

1413
$$T2 \leftarrow T2 \times Z_d$$

1414
$$T2 \leftarrow 1/T2$$

1415
$$x_d \leftarrow T2 \times T3$$

1416
$$y_d \leftarrow T1 \times T2$$

END

# FIG. 15

START

1509
$T2 \leftarrow T2 \times Z_{d+1}$

1510
$T2 \leftarrow T2 \times Z_{d-1}$

1511
$T2 \leftarrow T2 \times Z_d$

1512
$X_d \leftarrow T2 \times X_d$

1513
$Z_d \leftarrow T2 \times Z_d$

END

1501
$T1 \leftarrow X_{d-1} \times Z_{d+1}$

1502
$T2 \leftarrow Z_{d-1} \times X_{d+1}$

1503
$T1 \leftarrow T1-T2$

1504
$T2 \leftarrow Z_d \times x$

1505
$T2 \leftarrow X_d-T2$

1506
$T2 \leftarrow T2 \times T2$

1507
$Y_d \leftarrow T1 \times T2$

1508
$T2 \leftarrow 4 \times y$

# FIG. 16

START

1601

$T1 \leftarrow xd - x$

1602

$T1 \leftarrow T1 \times T1$

1603

$T2 \leftarrow X_{d-1} \times Z_{d+1}$

1604

$T1 \leftarrow T1 \times T2$

1605

$T2 \leftarrow 4 \times y$

1606

$T2 \leftarrow 1/T2$

1607

$yd \leftarrow T1 \times T2$

END

# FIG. 17

```
                                                      START

1717                       1709                       1701
Xd←T4+α                    T2←T2×y                    T1←Xd×x

1718                       1710                       1702
T4←T1×Z_{d+1}              T2←T2×B                    T1←T1-Zd

1719                       1711                       1703
T1←T1×T1                   T2←T2×Zd                   T2←Zd×x

1720                       1712                       1704
T2←T1×T2                   T4←T2×Xd                   T2←Xd-T2

1721                       1713                       1705
T1←T3+T4                   T2←T2×Zd                   T3←X_{d+1}×T2

1722                       1714                       1706
T3←T3-T4                   T2←T2×s                    T2←T2×T2

1723                       1715                       1707
T1←T1×T3                   T2←1/T2                    T2←T2×X_{d+1}

1724                       1716                       1708
yd←T1×T2                   T4←T2×T4                   T2←T2×Z_{d+1}

END
```

# FIG. 18

START

$T1 \leftarrow Xd \times x$   1801

$T1 \leftarrow T1 - Zd$   1802

$T2 \leftarrow Zd \times x$   1803

$T2 \leftarrow Xd - T2$   1804

$T3 \leftarrow Z_{d+1} \times T1$   1805

$T4 \leftarrow X_{d+1} \times T2$   1806

$T1 \leftarrow T1 \times T1$   1807

$T2 \leftarrow T2 \times T2$   1808

$T2 \leftarrow T2 \times Zd$   1809

$T2 \leftarrow T2 \times X_{d+1}$   1810

$T2 \leftarrow T2 \times Z_{d+1}$   1811

$T2 \leftarrow T2 \times y$   1812

$T2 \leftarrow T2 \times B$   1813

$T5 \leftarrow T2 \times Xd$   1814

$T2 \leftarrow T2 \times Zd$   1815

$Z_d^W \leftarrow T2 \times s$   1816

$T2 \leftarrow \alpha \times Z_d^W$   1817

$X_d^W \leftarrow T2 + T5$   1818

$T2 \leftarrow T3 + T4$   1819

$T3 \leftarrow T3 - T4$   1820

$T1 \leftarrow T1 \times T2$   1821

$Y_d^W \leftarrow T1 \times T3$   1822

END

# FIG. 19

START

$T1 \leftarrow X_{d-1} \times Z_{d+1}$ — 1901

$T2 \leftarrow Z_{d-1} \times X_{d+1}$ — 1902

$T1 \leftarrow T1 \cdot T2$ — 1903

$T2 \leftarrow Z_d \times x$ — 1904

$T2 \leftarrow X_d - T2$ — 1905

$T2 \leftarrow T2 \times T2$ — 1906

$T1 \leftarrow T1 \times T2$ — 1907

$T2 \leftarrow 4B \times y$ — 1908

$T2 \leftarrow T2 \times Z_{d+1}$ — 1909

$T2 \leftarrow T2 \times Z_{d-1}$ — 1910

$T2 \leftarrow T2 \times Z_d$ — 1911

$T3 \leftarrow T2 \times X_d$ — 1912

$T2 \leftarrow T2 \times Z_d$ — 1913

$T2 \leftarrow T2 \times s$ — 1914

$T2 \leftarrow 1/T2$ — 1915

$T3 \leftarrow T2 \times T3$ — 1916

$xd \leftarrow T3 + \alpha$ — 1917

$yd \leftarrow T1 \times T2$ — 1918

END

93

# FIG. 20

START

T1←$X_{d-1}$×$Z_{d+1}$  — 2001

T2←$Z_{d-1}$×$X_{d+1}$  — 2002

T1←T1-T2  — 2003

T2←$Z_d$×x  — 2004

T2←$X_d$-T2  — 2005

T2←T2×T2  — 2006

$Y_d^W$←T1×T2  — 2007

T2←4B×y  — 2008

T2←T2×$Z_{d+1}$  — 2009

T2←T2×$Z_{d-1}$  — 2010

T2←T2×$Z_d$  — 2011

T1←T2×$X_d$  — 2012

T2←T2×$Z_d$  — 2013

$Z_d^W$←T2×s  — 2014

T2←$\alpha$×$Z_d^W$  — 2015

$X_d^W$←T1+T2  — 2016

END

# FIG. 21

START

2101
$T1 \leftarrow xd-x$

2102
$T1 \leftarrow T1 \times T1$

2103
$T2 \leftarrow x_{d-1} - x_{d+1}$

2104
$T1 \leftarrow T1 \times T2$

2105
$T2 \leftarrow 4B \times y$

2106
$T2 \leftarrow 1/T2$

2107
$T1 \leftarrow T1 \times T2$

2108
$y_d^W \leftarrow T1 \times (1/s)$

2109
$T1 \leftarrow xd \times (1/s)$

2110
$x_d^W \leftarrow T1 + \alpha$

END

# FIG. 22

2201

SIGNATURE GENERATION UNIT

2205                                        2202                    2206

MESSAGE → | SIGNATURE UNIT | → MESSAGE

POINT ↓↑ SCALAR-MULTIPLIED POINT

2203                    2204

| SCALAR MULTIPLICATION UNIT | ← SCALAR VALUE ← | PRIVATE INFORMATION STORAGE |

# FIG. 23

2301

DECRYPTION UNIT

2305

MESSAGE

2302

DECRYPTION UNIT

2306

MESSAGE

POINT

SCALAR-MULTIPLIED
POINT

2303

2304

SCALAR
MULTIPLICATION
UNIT

SCALAR
VALUE

PRIVATE
INFORMATION
STORAGE

# FIG. 24

START

TRANSFORM TO
POINT ON
MONTGOMERY-FORM
ELLIPTIC CURVE — 2416

I=1 — 2401

DOUBLING
2(P) — 2402

$(mP,(m+1)P) \leftarrow (P,2P)$ — 2403

I EQUAL TO
BIT LENGTH OF SCALAR
VALUE ? — 2404

EQUAL

UNEQUAL

I=I+1 — 2405

VALUE OF
I-TH BIT OF SCALAR
VALUE ? — 2406

0

1

ADDITION
mP+(m+1)P — 2407

ADDITION
mP+(m+1)P — 2410

DOUBLING
2(mP) — 2408

DOUBLING
2((m+1)P) — 2411

$(mP,(m+1)P) \leftarrow ((2m+1)P,(2m+2)P)$ — 2412

$(mP,(m+1)P) \leftarrow (2mP,(2m+1)P)$ — 2409

CALCULATE (m-1)P — 2414

TRANSFORM TO
AFFINE COORDINATES — 2415

OUTPUT SCALAR
MULTIPLICATION
RESULT — 2413

END

# FIG. 25

START

**2501**

FAST SCALAR MULTIPLICATION UNIT RECEIVES SCALAR VALUE AND POINT ON ELLIPTIC CURVE

**2502**

FAST SCALAR MULTIPLICATION UNIT CALCULATES A PART OF COORDINATE OF SCALAR-MULTIPLIED POINT

**2503**

FAST SCALAR MULTIPLICATION UNIT SENDS A PART OF COORDINATE OF SCALAR-MULTIPLIED POINT TO COORDINATE RECOVERING UNIT

**2504**

COORDINATE RECOVER UNIT RECOVERS COORDINATE OF SCALAR-MULTIPLIED POINT

**2505**

OUTPUT SCALAR-MULTIPLIED POINT WITH COMPLETE COORDINATE GIVEN THERETO

END

# FIG. 26

START

2601

$T1 \leftarrow xd-x$

2602

$T1 \leftarrow T1 \times T1$

2603

$T2 \leftarrow x_{d-1} - x_{d+1}$

2604

$T1 \leftarrow T1 \times T2$

2605

$T2 \leftarrow 4B \times y$

2606

$T2 \leftarrow 1/T2$

2607

$yd \leftarrow T1 \times T2$

END

# FIG. 27

2701

SCALAR MULTIPLICATION UNIT

2702

FAST SCALAR
MULTIPLICATION
UNIT

PARTIAL
INFORMATION OF
SCALAR-
MULTIPLIED
POINT

2703

COORDINATE
RECOVERING UNIT

2704

ELLIPTIC CURVE
TRANSFORMER

2705

ELLIPTIC CURVE
INVERSE
TRANSFORMER

SCALAR VALUE
AND POINT ON
ELLIPTIC CURVE

SCALAR POINT
WITH COMPLETE
COORDINATE
GIVEN THERETO

# FIG. 28

START

SIGNATURE UNIT
RECEIVES INPUT
MESSAGE
2801

SIGNATURE UNIT GIVES
POINT TO SCALAR
MULTIPLICATION UNIT
2802

SCALAR MULTIPLICATION
UNIT RECEIVES SCALAR
VALUE FROM PRIVATE
INFORMATION STORAGE
2803

SCALAR MULTIPLICATION
UNIT CALCULATES
SCALAR MULTIPLICATION
FROM POINT AND
SCALAR VALUE
2804

SCALAR MULTIPLICATION
UNIT SENDS SCALAR-
MULTIPLIED POINT TO
SIGNATURE UNIT
2805

SIGNATURE UNIT USES
SCALAR-MULTIPLIED POINT
TO PERFORM SIGNATURE
GENERATION PROCESSING
2806

SIGNATURE UNIT
OUTPUTS MESSAGE WITH
SIGNATURE ATTACHED
THERETO
2807

END

# FIG. 29

# FIG. 30

**3004**

SCALAR MULTIPLICATION UNIT SENDS SCALAR-MULTIPLIED POINT TO ENCRYPTION/ DECRYPTION PROCESSOR

**3005**

ENCRYPTION/DECRYPTION PROCESSOR USES SCALAR-MULTIPLIED POINT TO PERFORM ENCRYPTION PROCESSING

**3006**

ENCRYPTION/DECRYPTION PROCESSOR OUTPUTS DECRYPTED MESSAGE

END

START

**3001**

ENCRYPTION/DECRYPTION PROCESSOR RECEIVES INPUT MESSAGE

**3002**

ENCRYPTION/DECRYPTION PROCESSOR GIVES PUBLIC KEY, RANDOM NUMBER, AND POINT TO SCALAR MULTIPLICATION UNIT

**3003**

SCALAR MULTIPLICATION UNIT CALCULATES SCALAR MULTIPLICATION FROM POINT AND SCALAR VALUE

# FIG. 31

# FIG. 32

START

ENCRYPTION/DECRYPTION PROCESSOR RECEIVES INPUT MESSAGE — 3201

ENCRYPTION/DECRYPTION PROCESSOR GIVES POINT TO SCALAR MULTIPLICATION UNIT — 3202

SCALAR MULTIPLICATION UNIT RECEIVES SCALAR VALUE FROM STORAGE UNIT — 3203

SCALAR MULTIPLICATION UNIT CALCULATES SCALAR MULTIPLICATION FROM POINT AND SCALAR VALUE — 3204

SCALAR MULTIPLICATION UNIT SENDS SCALAR-MULTIPLIED POINT TO ENCRYPTION/ DECRYPTION PROCESSOR — 3205

ENCRYPTION/DECRYPTION PROCESSOR USES SCALAR-MULTIPLIED POINT TO PERFORM DECRYPTION PROCESSING — 3206

ENCRYPTION/DECRYPTION PROCESSOR OUTPUTS DECRYPTED MESSAGE — 3207

END

# FIG. 33

START

**3301**
ELLIPTIC CURVE TRANSFORMER TRANSFORMS POINT ON WEIERSTRASS-FORM ELLIPTIC CURVE TO POINT ON MONTGOMERY-FORM ELLIPTIC CURVE

**3302**
FAST SCALAR MULTIPLICATION UNIT RECEIVES SCALAR VALUE AND POINT ON MONTGOMERY-FORM ELLIPTIC CURVE

**3303**
FAST SCALAR MULTIPLICATION UNIT CALCULATES PART OF COORDINATE OF SCALAR-MULTIPLIED POINT

**3304**
FAST SCALAR MULTIPLICATION UNIT SENDS PART OF COORDINATE OF SCALAR-MULTIPLIED POINT TO COORDINATE RECOVERING UNIT

**3305**
COORDINATE RECOVERING UNIT RECOVERS COORDINATE OF SCALAR-MULTIPLIED POINT ON MONTGOMERY-FORM ELLIPTIC CURVE

**3306**
ELLIPTIC CURVE INVERSE TRANSFORMER TRANSFORMS SCALAR-MULTIPLIED POINT ON MONTGOMERY-FORM ELLIPTIC CURVE TO SCALAR-MULTIPLIED POINT ON WEIERSTRASS-FORM ELLIPTIC CURVE

**3307**
OUTPUT SCALAR-MULTIPLIED POINT ON WEIERSTRASS-FORM ELLIPTIC CURVE WITH COMPLETE COORDINATE GIVEN THERETO

END

# FIG. 34

3417
$$T1 \leftarrow T1 \times Z_{d+1}$$

3418
$$T3 \leftarrow T1 \times Z_d$$

3419
$$T3 \leftarrow 1/T3$$

3420
$$yd \leftarrow T2 \times T3$$

3421
$$T1 \leftarrow T1 \times Xd$$

3422
$$xd \leftarrow T1 \times T3$$

END

3409
$$T4 \leftarrow T4 + Zd$$

3410
$$T2 \leftarrow T2 \times T4$$

3411
$$T1 \leftarrow T1 \times Zd$$

3412
$$T2 \leftarrow T2 - T1$$

3413
$$T2 \leftarrow T2 \times Z_{d+1}$$

3414
$$T2 \leftarrow T2 - T3$$

3415
$$T1 \leftarrow 2B \times y$$

3416
$$T1 \leftarrow T1 \times Zd$$

START

3401
$$T1 \leftarrow x \times Xd$$

3402
$$T2 \leftarrow Xd + T1$$

3403
$$T3 \leftarrow Xd - T1$$

3404
$$T3 \leftarrow T3 \times T3$$

3405
$$T3 \leftarrow T3 \times X_{d+1}$$

3406
$$T1 \leftarrow 2A \times Zd$$

3407
$$T2 \leftarrow T2 + T1$$

3408
$$T4 \leftarrow x \times Xd$$

# FIG. 35

START

$T1 \leftarrow x \times Xd$    3501

$T2 \leftarrow Xd - T1$    3502

$T3 \leftarrow Xd - T1$    3503

$T3 \leftarrow T3 \times T3$    3504

$T3 \leftarrow T3 \times X_{d+1}$    3505

$T1 \leftarrow 2A \times Zd$    3506

$T2 \leftarrow T2 + T1$    3507

$T4 \leftarrow x \times Xd$    3508

$T4 \leftarrow T4 + Zd$    3509

$T2 \leftarrow T2 \times T4$    3510

$T1 \leftarrow T1 \times Zd$    3511

$T2 \leftarrow T2 - T1$    3512

$T2 \leftarrow T2 \times Z_{d+1}$    3513

$Yd \leftarrow T2 - T3$    3514

$T1 \leftarrow 2B \times y$    3515

$T1 \leftarrow T1 \times Zd$    3516

$T1 \leftarrow T1 \times Z_{d+1}$    3517

$Xd \leftarrow T1 \times Xd$    3518

$Zd \leftarrow T1 \times Zd$    3519

END

# FIG. 36

START

3601

$T1 \leftarrow xd \times x$

3602

$T1 \leftarrow T1 + 1$

3603

$T2 \leftarrow xd + x$

3604

$T2 \leftarrow T2 + 2A$

3605

$T1 \leftarrow T1 \times T2$

3606

$T1 \leftarrow T1 - 2A$

3607

$T2 \leftarrow xd - x$

3608

$T2 \leftarrow T2 \times T2$

3609

$T2 \leftarrow T2 \times x_{d+1}$

3610

$T1 \leftarrow T1 - T2$

3611

$T2 \leftarrow 2B \times y$

3612

$T2 \leftarrow 1/T2$

3613

$yd \leftarrow T1 \times T2$

END

# FIG. 37

START

3701: T1←x×Xd

3702: T2←Xd+T1

3703: T3←Xd-T1

3704: T3←T3×T3

3705: T3←T3×$X_{d+1}$

3706: T1←x×Xd

3707: T4←a+Zd

3708: T1←T1+T4

3709: T1←T1×T2

3710: T2←Zd×Zd

3711: T2←T2×2b

3712: T1←T1+T2

3713: T1←T1×$Z_{d+1}$

3714: T1←T1-T3

3715: T2←2y×Zd

3716: T2←T2×$Z_{d+1}$

3717: T3←T2×Zd

3718: T3←1/T3

3719: yd←T1×T3

3720: T2←T2×Xd

3721: xd←T2×T3

END

# FIG. 38

START

3801
$$T1 \leftarrow x \times Xd$$

3802
$$T2 \leftarrow Xd + T1$$

3803
$$T3 \leftarrow Xd - T1$$

3804
$$T3 \leftarrow T3 \times T3$$

3805
$$T3 \leftarrow T3 \times X_{d+1}$$

3806
$$T1 \leftarrow x \times Xd$$

3807
$$T4 \leftarrow a + Zd$$

3808
$$T1 \leftarrow T1 + T4$$

3809
$$T1 \leftarrow T1 \times T2$$

3810
$$T2 \leftarrow Zd \times Zd$$

3811
$$T2 \leftarrow T2 \times 2b$$

3812
$$T1 \leftarrow T1 + T2$$

3813
$$T1 \leftarrow T1 \times Z_{d+1}$$

3814
$$Yd \leftarrow T1 - T3$$

3815
$$T2 \leftarrow 2y \times Zd$$

3816
$$T2 \leftarrow T2 \times Z_{d+1}$$

3817
$$Xd \leftarrow T2 \times Xd$$

3818
$$Zd \leftarrow T2 \times Zd$$

END

# FIG. 39

START

3901
$T1 \leftarrow xd \times x$

3902
$T1 \leftarrow T1 + a$

3903
$T2 \leftarrow xd + x$

3904
$T1 \leftarrow T1 \times T2$

3905
$T1 \leftarrow T1 + 2b$

3906
$T2 \leftarrow xd - x$

3907
$T2 \leftarrow T2 \times T2$

3908
$T2 \leftarrow T2 \times x_{d+1}$

3909
$T1 \leftarrow T1 - T2$

3910
$T2 \leftarrow 1/2y$

3911
$yd \leftarrow T1 \times T2$

END

# FIG. 40

START

4001
$$T1 \leftarrow x \times Xd$$

4002
$$T2 \leftarrow Xd + T1$$

4003
$$T3 \leftarrow Xd - T1$$

4004
$$T3 \leftarrow T3 \times T3$$

4005
$$T3 \leftarrow T3 \times X_{d+1}$$

4006
$$T1 \leftarrow 2A \times Zd$$

4007
$$T2 \leftarrow T2 + T1$$

4008
$$T4 \leftarrow x + Xd$$

4009
$$T4 \leftarrow T4 + Zd$$

4010
$$T2 \leftarrow T2 \times T4$$

4011
$$T1 \leftarrow T1 \times Zd$$

4012
$$T2 \leftarrow T2 - T1$$

4013
$$T2 \leftarrow T2 \times Z_{d+1}$$

4014
$$T2 \leftarrow T2 - T3$$

4015
$$T1 \leftarrow 2B \times y$$

4016
$$T1 \leftarrow T1 \times Zd$$

4017
$$T1 \leftarrow T1 \times Z_{d+1}$$

4018
$$T3 \leftarrow T1 \times Zd$$

4019
$$T3 \leftarrow T3 \times s$$

4020
$$T3 \leftarrow 1/T3$$

4021
$$yd \leftarrow T2 \times T3$$

4022
$$T1 \leftarrow T1 \times Xd$$

4023
$$T1 \leftarrow T1 \times T3$$

4024
$$xd \leftarrow T1 + \alpha$$

END

114

# FIG. 41

START

**4101**
$T1 \leftarrow x \times Xd$

**4102**
$T2 \leftarrow Xd+T1$

**4103**
$T3 \leftarrow Xd-T1$

**4104**
$T3 \leftarrow T3 \times T3$

**4105**
$T3 \leftarrow T3 \times X_{d+1}$

**4106**
$T1 \leftarrow 2A \times Zd$

**4107**
$T2 \leftarrow T2+T1$

**4108**
$T4 \leftarrow x+Xd$

**4109**
$T4 \leftarrow T4+Zd$

**4110**
$T2 \leftarrow T2 \times T4$

**4111**
$T1 \leftarrow T1 \times Zd$

**4112**
$T2 \leftarrow T2-T1$

**4113**
$T2 \leftarrow T2 \times Z_{d+1}$

**4114**
$Y_d^W \leftarrow T2-T3$

**4115**
$T1 \leftarrow 2B \times y$

**4116**
$T1 \leftarrow T1 \times Zd$

**4117**
$T1 \leftarrow T1 \times Z_{d+1}$

**4118**
$T3 \leftarrow T1 \times Zd$

**4119**
$Z_d^W \leftarrow T3 \times s$

**4120**
$T1 \leftarrow T1 \times Xd$

**4121**
$T3 \leftarrow Z_d^W \times \alpha$

**4122**
$X_d^W \leftarrow T1+T3$

END

# FIG. 42

START

4201
T1←xd×x

4202
T1←T1+1

4203
T2←xd+x

4204
T2←T2+2A

4205
T1←T1×T2

4206
T1←T1-2A

4207
T2←xd-x

4208
T2←T2×T2

4209
T2←T2×$x_{d+1}$

4210
T1←T1-T2

4211
T2←2B×y

4212
T2←1/T2

4213
T1←T1×T2

4214
$y_d^W$←T1×(1/s)

4215
T1←xd×(1/s)

4216
$x_d^W$←T1+α

END

EP 1 445 891 A1

# FIG. 43

START

I=1  — 4301

DOUBLING
2(P)  — 4302

(mP,(m+1)P)←(P,2P)  — 4303

4304

I EQUAL TO
BIT LENGTH OF SCALAR
VALUE ?

EQUAL

UNEQUAL

I=I+1  — 4305

4306

VALUE OF
I-TH BIT OF SCALAR
VALUE ?

0

1

ADDITION
mP+(m+1)P  — 4307

ADDITION
mP+(m+1)P  — 4310

DOUBLING
2(mP)  — 4308

DOUBLING
2((m+1)P)  — 4311

(mP,(m+1)P)←((2m+1)P,(2m+2)P)  — 4312

(mP,(m+1)P)←(2mP,(2m+1)P)  — 4309

TRANSFORM TO
AFFINE COORDINATES  — 4315

OUTPUT SCALAR
MULTIPLICATION
RESULT  — 4313

END

117

# FIG. 44

START

TRANSFORM TO
POINT ON
MONTGOMERY-FORM
ELLIPTIC CURVE — 4416

I=1 — 4401

DOUBLING
2(P) — 4402

(mP,(m+1)P)←(P,2P) — 4403

I EQUAL TO
BIT LENGTH OF SCALAR
VALUE ? — 4404

EQUAL

UNEQUAL

I=I+1 — 4405

VALUE OF
I-TH BIT OF SCALAR
VALUE ? — 4406

0

1

ADDITION
mP+(m+1)P — 4407

ADDITION
mP+(m+1)P — 4410

DOUBLING
2(mP) — 4408

DOUBLING
2((m+1)P) — 4411

(mP,(m+1)P)←((2m+1)P,(2m+2)P) — 4412

(mP,(m+1)P)←(2mP,(2m+1)P) — 4409

TRANSFORM TO
POINT ON
WEIERSTRASS-FORM
ELLIPTIC CURVE — 4415

OUTPUT SCALAR
MULTIPLICATION
RESULT — 4413

END

# FIG. 45

START → 4516

TRANSFORM TO POINT ON MONTGOMERY-FORM ELLIPTIC CURVE → 4516

I=1 → 4501

DOUBLING 2(P) → 4502

$(mP,(m+1)P) \leftarrow (P,2P)$ → 4503

4504 — I EQUAL TO BIT LENGTH OF SCALAR VALUE ? — EQUAL

UNEQUAL

I=I+1 → 4505

4506 — VALUE OF I-TH BIT OF SCALAR VALUE ?

0 / 1

ADDITION $mP+(m+1)P$ → 4507

ADDITION $mP+(m+1)P$ → 4510

DOUBLING 2(mP) → 4508

DOUBLING $2((m+1)P)$ → 4511

$(mP,(m+1)P) \leftarrow ((2m+1)P,(2m+2)P)$ → 4512

$(mP,(m+1)P) \leftarrow (2mP,(2m+1)P)$ → 4509

TRANSFORM TO AFFINE COORDINATES → 4515

OUTPUT SCALAR MULTIPLICATION RESULT → 4513

END

# PATENT COOPERATION TREATY

# PCT

## DECLARATION OF NON-ESTABLISHMENT OF INTERNATIONAL SEARCH REPORT
(PCT Article 17(2)(a), Rules 13*ter*.1(c) and 39)

| Applicant's or agent's file reference<br>E6369-00 | **IMPORTANT DECLARATION** | Date of mailing *(day/month/year)*<br>11 December, 2001 (11.12.01) |
|---|---|---|
| International application No.<br>PCT/JP01/09781 | International filing date *(day/month/year)*<br>08 November, 2001 (08.11.01) | (Earliest) Priority Date *(day/month/year)*<br>08 November, 2000 (08.11.00) |

International Patent Classification (IPC) or both national classification and IPC

Int. Cl7    H04L9/30, G09C1/00

Applicant

Hitachi, Ltd.

---

This International Searching Authority hereby declares, according to Article 17(2)(a), that **no international search report will be established** on the international application for the reasons indicated below.

1. [X]  The subject matter of the international application relates to:

   a. [ ]  scientific theories.

   b. [X]  mathematical theories.

   c. [ ]  plant varieties.

   d. [ ]  animal varieties.

   e. [ ]  essentially biological processes for the production of plants and animals, other than microbiological processes and *the products of such processes.*

   f. [ ]  schemes, rules or methods of doing business.

   g. [ ]  schemes, rules or methods of performing purely mental acts.

   h. [ ]  schemes, rules or methods of playing games.

   i. [ ]  methods for treatment of the human body by surgery or therapy.

   j. [ ]  methods for treatment of the animal body by surgery or therapy.

   k. [ ]  diagnostic methods practised on the human or animal body.

   l. [ ]  mere presentations of information.

   m. [ ]  computer programs for which this International Searching Authority is not equipped to search prior art.

2. [ ]  The failure of the following parts of the international application to comply with prescribed requirements prevents a meaningful search from being carried out:

   [ ] the description      [ ] the claims      [ ] the drawings

3. [ ]  The failure of the nucleotide and/or amino acid sequence listing to comply with the standard provided for in Annex C of the Administrative Instructions prevents a meaningful search from being carried out:

   [ ] the written form has not been furnished or does not comply with the standard.

   [ ] the computer readable form has not been furnished or does not comply with the standard.

4. Further comments:

---

| Name and mailing address of the ISA/<br>  Japanese Patent Office | Authorized officer |
|---|---|
| Facsimile No. | Telephone No. |

Form PCT/ISA/203 (July 1998)